(19) Europäisches Patentamt
European Patent Office
Office européen des brevets

(11) EP 0 977 393 A1

(12) **EUROPEAN PATENT APPLICATION**
published in accordance with Art. 158(3) EPC

(43) Date of publication:
**02.02.2000 Bulletin 2000/05**

(21) Application number: **98914026.4**

(22) Date of filing: **15.04.1998**

(51) Int. Cl.$^7$: **H04J 13/00**

(86) International application number:
**PCT/JP98/01717**

(87) International publication number:
**WO 98/47253 (22.10.1998 Gazette 1998/42)**

(84) Designated Contracting States:
**DE FR GB IT SE**

(30) Priority: **16.04.1997 JP 11435697**

(71) Applicant:
**NTT MOBILE COMMUNICATIONS NETWORK INC.**
**Minato-ku, Tokyo 105-8436 (JP)**

(72) Inventors:
- **HIGASHI, Akihiro**
  **Yokosuka-shi, Kanagawa 238-0315 (JP)**
- **NAGATA, Kiyohito**
  **Yokohama-shi, Kanagawa 235-0036 (JP)**
- **YUNOKI, Kazufumi**
  **Yokosuka-shi, Kanagawa 239-0841 (JP)**
- **TAKAGI, Hirofumi**
  **Yokohama-shi, Kanagawa 235-0033 (JP)**
- **OGAWA, Shinsuke,**
  **1-14-15-2, Morigaoka,**
  **Yokohama-shi, Kanagawa 235-0024 (JP)**
- **OHNO, Koji**
  **Yokohama-shi, Kanagawa 235-0033 (JP)**
- **NAKAMURA, Takehiro**
  **Yokosuka-shi, Kanagawa 239-0841 (JP)**
- **HAGIWARA, Junichiro**
  **Yokohama-shi, Kanagawa 235-0041 (JP)**
- **NAKA, Nobuhiko**
  **Yokohama-shi, Kanagawa 235-0041 (JP)**
- **HIGUCHI, Kenichi**
  **Yokosuka-shi, Kanagawa 238-0313 (JP)**
- **HATTORI, Hiroyuki**
  **Yokohama-shi, Kanagawa 232-0066 (JP)**

(74) Representative: **HOFFMANN - EITLE**
**Patent- und Rechtsanwälte**
**Arabellastrasse 4**
**81925 München (DE)**

## (54) CDMA COMMUNICATION METHOD

(57) A mobile station MS regarding this invention is consists of a transmission and receiving amplifier unit AMP, a radio unit TRX, a baseband signal processing unit BB, a control unit MS-CNT and a terminal interface unit TERM-INT. In the multi-code-transmission, the efficiency in use of the frequency resources is enhanced and the improvement of the communication quality is realized by transmitting the control information (a pilot symbol and a TPC symbol), with increasing the transmission power by one designated dedicated physical channel only. It is possible to improve the efficiency in use of the frequency resources and the communication quality, and to reduce the power consumption, by determining the transmission/discard of the transmission information according to the communication quality or the communication status. Furthermore, it is possible to improve the efficiency in use of the frequency resources and to reduce the power consumption, by avoiding that the calling occurs frequently.

FIG. 2

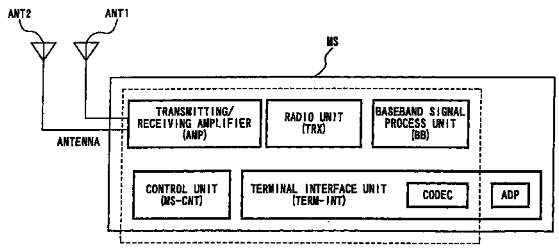


EP 0 977 393 A1

## Description

TECHNICAL FIELD

The present invention relates to a wide band CDMA (Code Division Multiple Access) communication method.

BACKGROUND ART

The use of mobile telephones has become wide spread in recent years. Conventionally, TDMA (Time Division Multiple Access) and FDMA (Frequency Division Multiple Access) have been employed as mobile telephone access methods. These days, however, CDMA is being adopted instead of TDMA and FDMA because of its various merits, such as highly efficient use of frequency bands, easy ability to change the transmission speed, and security from eavesdropping. It is also possible in CDMA to reduce the impact from fading by employing redundancy, and to carry out error correction coding. Further, communication quality is improved by a handover which does not involve frequency switching.

However, CDMA according to the prior art has a technical limitation in that its transmission speed is low since it is prepared mainly for voice transmission. Thus, due to the low transmission speed, CDMA is not suitable for data communication. With the development of multimedia in recent years, high-speed transmission has been desired because data to be transmitted includes not only voice data, but also various types of data that can be processed in a computer. Specifically, an extremely high transmission speed is required when image data is transmitted.

In mobile communications applying conventional CDMA, problems are encountered such as a narrow spreading band width, and a limited ability to reduce the effect of fading. Moreover, mobile communications employing conventional CDMA are also problematic because it is difficult to realize a seamless indoor/outdoor communication environment due to synchronization between base stations, and to realize high-accuracy control of the electrical power for transmission.

Additionally, in a mobile telephone, reduction of power consumption is a crucial issue, since a chargeable battery is used as the power supply.

DISCLOSURE OF THE INVENTION

It is therefore an object of the present invention to provide a wide band CDMA communication method that can solve the above-mentioned problems to set a frequency band to be used to width band basically. Furthermore, it is an object of the present invention to provide the reduction of the power consumption, the improving of the communication quality, and the utilization efficiency of the frequency resources. The present invention provides a wide band CDMA communication method which transmits spread information after spreading transmission information using predetermined codes; wherein when the transmission information different from one another are transmitted at the same time through a plurality of channels using common control information, the wide band CDMA communication method comprises the steps of: spreading various transmission information using codes, the codes being allocated to the channels, respectively; transmitting the spread transmission information through the channels; spreading the control information using a common code, the common code being common to the plurality of channels; and transmitting the spread control information.. By virtue of the above invention, it is possible to improve the efficiency in use of the frequency resources, because the same control information which is transmitted individually using a plurality of codes in conventional method, is transmitted by one code. Furthermore, it is possible to improve the receiving accuracy, that is, the communication quality, avoiding the unevenness of the receiving power level in the receiving side, if the control information is transmitted by one channel, and if the transmission power of the control information is the transmission power of the transmitted information multiplied by the number of the channels through which the spread transmission information are transmitted.

The present invention provides a wide band CDMA communication method which transmits spreaded information to a radio section after spreading the transmission information using a predetermined code; wherein the wide band CDMA communication method comprises the step of determining to transmit or to discard the transmission information on the basis of the communication quality of the radio section. By virtue of the above invention, a practical effective transmission speed of the transmission information is adjusted in accordance with the communication quality in the radio section, and information is transmitted efficiently. Therefore, it is possible to improve the efficiency in use of the frequency resources and the reduction of the power consumption.

Furthermore, the present invention provides a wide band CDMA communication method which transmits spreaded information to a radio section after spreading the transmission information using a predetermined code; wherein the wide band CDMA communication method comprises the step of: determining to transmit or to discard the transmission information on the basis of the communication status of the radio section. By virtue of the above invention, it is possible to prevent recalling for retransmitting the transmission information that the calling has been failed, and to improve the efficiency in use of the frequency resources and the reduction of the power consumption, if the transmission information to be transmitted is discarded, when the calling has been failed, for example.

Furthermore, the present invention provides a wide band CDMA communication method which transmits spreaded information to a radio section after spreading transmission information using a predetermined code; wherein the wide band CDMA communication method comprises the steps of: discarding the transmission information until a predetermined time passes after a call is released. By virtue of the above invention, it is possible to restrain the frequent calling result from the transmission information which occurs sporadically, and to improve the efficiency in use of the frequency resources and the reduction of the power consumption.

BRIEF DESCRIPTION OF THE DRAWINGS

Fig. 1 is a block diagram showing a system overview of a preferred embodiment in this invention.
Fig. 2 is a block diagram showing the constitution of a mobile station MS in the same preferred embodiment.
Fig. 3 is a block diagram showing the constitution of a transmitting/receiving amplifier AMP and a radio unit TRX.
Fig 4 is a block diagram showing the constitution of a base band-signal processing unit BB.
Fig. 5 is a block diagram showing the constitution of a terminal interface unit TERM-INT.
Fig. 6 is a diagram showing the constitution of a logical channel of the same preferred embodiment.
Fig. 7 is a diagram showing the constitution of a physical channel of the same preferred embodiment.
Fig. 8 is a conceptual diagram showing a signal format which is other than that for an uplink common control physical channel.
Fig. 9 is a conceptual diagram showing a signal format for an uplink common control physical channel.
Fig. 10 is a conceptual diagram showing the relationship between the physical channel and the logical channel to be mapped.
Fig. 11 is a conceptual diagram showing an example of a logical channel mapping onto a perch channel.
Fig. 12 is a conceptual diagram showing a mapping method for PCH.
Fig. 13 is a conceptual diagram showing a mapping method for FACH.
Fig. 14 is a conceptual diagram showing a method for mapping DTCH and ACCH onto an dedicated physical channel,
Fig. 15 is a conceptual diagram showing a method for mapping ACCH to the super frame of a dedicated physical channel at each symbol rate.
Fig. 16 is a conceptual diagram showing a coding method for BCCH1, BCCH2 (16 ksps).
Fig. 17 is a conceptual diagram showing a coding method for PCH (64 ksps).
Fig. 18 is a conceptual diagram showing a coding method for FACH-L (64 ksps).
Fig. 19 is a conceptual diagram showing a coding method for FACH-S (64 ksps) in normal mode.
Fig. 20 is a conceptual diagram showing a coding method for FACH-S (64 ksps) in ACK mode.
Fig. 21 is a conceptual diagram showing a coding method for RACH-L (64 ksps).
Fig. 22 is a conceptual diagram showing a coding method for RACH-S (64 ksps).
Fig. 23 is a conceptual diagram showing a coding method for SDCCH (32 ksps).
Fig. 24 is a conceptual diagram showing a coding method for ACCH (32/64 ksps).
Fig. 25 is a conceptual diagram showing a coding method for ACCH (128 ksps).
Fig. 26 is a conceptual diagram showing a coding method for ACCH (256 ksps).
Fig. 27 is a conceptual diagram showing a coding method for DTCH (32 ksps).
Fig. 28 is a conceptual diagram showing a coding method for DTCH (64 ksps).
Fig. 29 is a conceptual diagram showing a coding method for DTCH (128 ksps).
Fig. 30 is a conceptual diagram showing a coding method for DTCH (256ksps).
Fig. 31 is a conceptual diagram showing a coding method for DTCH (512 ksps).
Fig. 32 is a conceptual diagram showing a coding method for TCH (1024 ksps).
Fig. 33 is a conceptual diagram showing a coding method for UPCH (32 ksps).
Fig. 34 is a conceptual diagram showing a coding method for UPCH (64 ksps).
Fig. 35 is a conceptual diagram showing a coding method for UPCH (128 ksps).
Fig. 36 is a conceptual diagram showing a coding method for UPCH (256 ksps).
Fig. 37 is a conceptual diagram showing a usage method for a W-bit bit pattern.
Fig. 38 is a block diagram showing the constitution of a convolutional coding device.
Fig. 39 is a conceptual diagram showing the correspondence between SFN and sfn which is to be transmitted.
Fig. 40 is a timing chart showing the transmission timing and the long code phase in the perch channel and the common control physical channel.

Fig. 41 is a timing chart showing the transmission timing and the long code phase in the reverse common control physical channel.

Fig. 42 is a timing chart showing the transmitting/reception timing and the long code phase in a dedicated physical channel.

Fig. 43 is a timing chart showing the transmitting/reception timing and the long code phase in a dedicated physical channel.

Fig. 44 is a block diagram showing an example of the constitution of a forward long code generator.

Fig. 45 is a block diagram showing an example of the constitution of a reverse long code generator.

Fig. 46 is a conceptual diagram showing a short code generating method.

Fig. 47 is a block diagram showing an example of the constitution of the short code generator for the long code mask symbol.

Fig. 48 is a block diagram showing a spreading code generating method using the long code and the short code.

Fig. 49 is a block diagram showing an example of the constitution of a spreading unit.

Fig. 50 is a timing chart showing a random access transmission method.

Fig. 51 is a conceptual diagram showing a first example of a multi-code transmission method.

Fig. 52 is a conceptual diagram showing a second example of a multi-code transmission method.

Fig. 53 is a timing chart showing a transmitting pattern of the perch channel.

Fig. 54 is a timing chart showing a transmitting pattern of the downlink common control channel (for FACH).

Fig. 55 is a timing chart showing a transmitting pattern of the downlink common control channel (for PCH).

Fig. 56 is a timing chart showing a transmitting pattern of the uplink common control channel (for RACH).

Fig. 57 is a timing chart showing a transmitting pattern of the dedicated physical channel.

Fig. 58 is a block diagram showing the constitution of a logical network in a voice communication service.

Fig. 59 is a block diagram showing the constitution of a logical network in an unrestricted digital signal communication service.

Fig. 60 is a block diagram showing an example of the constitution of a logical network in a packet signal communication service.

Fig. 61 is a block diagram showing an example of the constitution of a logical network in a modem signal communication service.

Fig. 62 is a conceptual diagram showing each protocol stack for voice communication on the C-Plane (Control Plane) and U-Plane (User Plane) on the TE side interface of the ADP of a mobile station MS.

Fig. 63 is a block diagram showing an outline of voice CODEC processing.

Fig. 64 is a timing chart showing the transmission timing of a pre-postamble signal.

Fig. 65 is a conceptual diagram showing each protocol stack for unrestricted digital signal transmission on the C-Plane (Control Plane) and U-Plane (User Plane) on the TE side interface of the ADP of a mobile station MS.

Fig. 66 is a conceptual diagram showing each protocol stack for packet signal transmission under a PPP dial-up connection environment of the C-Plane and U-Plane on the TE side interface of the ADP of a mobile station MS.

Fig. 67 is a conceptual diagram showing each protocol stack for packet signal transmission under an Ethernet connection environment of the C-Plane and U-Plane on the TE side interface of the ADP of a mobile station MS.

Fig. 68 is a conceptual diagram showing each protocol stack for modem signal transmission of the C-Plane and U-Plane on the TE side interface of the ADP of a mobile station MS.

Fig. 69 is a block diagram showing an example of the constitution of the connection between a plurality of terminal interface units TERM-INT and the MS core in the C-Plane.

Fig. 70 is a conceptual diagram showing a concept of the detection of the connection of the terminal interface unit TERM-INT.

Figs. 71 and 72 are flowcharts respectively showing the detecting process of the connection of the terminal interface unit TERM-INT.

Fig. 73 is a conceptual diagram showing the details of the protocol stack.

Fig. 74 is a block diagram showing an example of the constitution of the connection between a plurality of terminal interface units TERM-INT and the MS core in the U-Plane.

Fig. 75 is a conceptual diagram showing the state of U-plane selection control.

Fig. 76 is a block diagram showing the constitution of the LAC-U frame.

Figs. 77 through 90 are conceptual diagrams respectively showing the format for PDU in an error control sub-layer.

Fig. 91 is a conceptual diagram showing a TPC bit soft decision in a preferred embodiment.

Fig. 92 is a timing chart showing the timing of transmission power control in the same preferred embodiment.

Fig. 93 is a sequence diagram showing an outline of synchronization establishment of dedicated physical channels in the same preferred embodiment.

Fig. 94 is a sequence diagram showing the procedure for establishing synchronization in a diversity handover between cells in the same preferred embodiment.

Fig. 95 is a sequence diagram showing switching control in a handover control in the same preferred embodiment.

Fig. 96 is a sequence diagram showing the handover control procedure between cells in the same preferred embodiment.

Fig. 97 is a conceptual diagram showing a concept of outer coding synchronization.

Fig. 98 is a flowchart showing the process for establishing synchronization.

Fig. 99 is a flowchart showing the process for monitoring whether the communication is out of synchronization or not.

Fig. 100 is a block diagram showing a concept of the connection between outer terminals and a mobile station MS in the same preferred embodiment.

BEST MODE FOR CARRYING OUT INVENTION

The best mode for carrying out the present invention will now be described with reference to the drawings.

## A: CONSTITUTION OF EMBODIMENT

### A-1: Overview

Fig. 1 is a block diagram showing an overview of the system according to a preferred embodiment of this invention. In Fig. 1, BS designates radio base stations that transmit and receive signals with a mobile station MS by radio waves. The base stations BS are connected to switching center MCC-SIM. Computer, telephone, LAN (Local Area Network) and the like are connected to switching center MCC-SIM.

In this discussion, the mobile station MS carries out radio communication with the base station BS, and comprises all the functions which are described below. However, it is also possible to construct a system in which the mobile station MS has only a portion of the functions (for example, a function to support voice communication) described below.

Fig. 2 is a block diagram showing the constitution of the mobile station MS shown in Fig. 1. In Fig. 2, ANT1 designates a receiving antenna and ANT2 designates a transmitting antenna. AMP designates a transmitting/receiving amplifier that amplifies transmitted and received signals. The transmitting/receiving amplifier AMP comprises a transmitting amplifier (described below) which amplifies a transmitted RF signal and a low noise amplifier (described below) which amplifies a received RF signal. The transmitting/receiving amplifier AMP multiplexes RF transmitting signals and extracts each RF receiving signal from others. TRX designates a radio unit which carries out D/A conversion on a baseband spread transmitting signal, transforms this result to an RF signal using quadrature modulation, and outputs this result to a transmitting amplifier. Furthermore, the radio unit TRX performs semi-synchronized detection of a received signal from the receiving amplifier, and supplies the result to baseband signal processing unit BB after A/D conversion.

A baseband signal processing unit BB carries out various processing for the baseband, such as error correction coding of the transmitting data, frame conversion, data modulation, spreading modulation, despreading of the received signal, chip synchronization, error correction decoding, separating of data, and diversity handover combining. A control unit MS-CNT controls each unit of the mobile station MS. A terminal interface unit TERM-INT has a voice CODEC, an adapter function (ADP) for data, and an interface function between the handset and image/data terminal. However, it is possible to realize the adapter function for data by outer circuits.

### A-2. Transmitting/receiving amplifier AMP and radio unit TRX

Fig. 3 is a block diagram showing the constitutions of transmitting/receiving amplifier AMP and radio unit TRX. In Fig. 3, 10b designates a transmitting amplifier which amplifies a signal from the radio unit TRX to the required power sufficient for the base station BS to receive the signal. 10a designates a low noise amplifier which amplifies the received RF signal to the power required for subsequent processing. In this case, the transmitting amplifier 10b controls its own gain on the basis of the transmission power designating signal supplied from the baseband signal processing unit BB. That is, transmitting power is controlled in accordance with the transmission power designating signal. 20 designates a local oscillator which generates a local oscillating signal for carrying out frequency conversion by oscillating in accordance with a frequency band designating signal supplied from the control unit MS-CNT. The oscillation frequency is revised by a frequency revising signal (AFC) supplied from the baseband signal processing unit BB. 21 designates a mixer for receiving which converts the received RF signal to the baseband signal by multiplying the received RF signal and the local oscillating signal. The output signal of the mixer 21 is converted to a digital signal by an A/D converter 22, and is outputted to baseband signal processing unit BB. 24 designates a D/A converter which converts the spread transmitting signal supplied from the baseband signal processing unit BB to an analog signal. The output signal of the D/A converter 24 is converted to a radio frequency band signal by multiplying with the local oscillating signal in the mixer 23 on the transmitting side.

A-3: Baseband signal processing unit BB

Fig. 4 is a block diagram showing the constitution of baseband signal processing unit BB. In order that the figures do not become overly complicated, a description of all or a portion of the names of the various parts has been omitted in Fig. 4 and in Fig. 5, which will be described below.

In Fig. 4, 31 designates a convolutional coding unit which carries out the predetermined convolutional coding for user data supplied from the terminal interface unit TERM-INT. The reason for carrying out such convolutional coding is so that an error can be corrected by Viterbi decoding at the time of reception, even when the information is incorrect in the transmission channel. A convolutional coded data is subjected to interleave processing in interleaving unit 32. After that, a TPC bit is added to the data in a TPC bit adding unit 33. Interleaving processing is carried out because it is possible to convert a burst error that has occurred in a transmission channel to a random error by arranging (interleaving) the data series properly on the transmitting side, and by reverting (de-interleaving) to the original data series on the receiving side. The convolutional coding and the Viterbi decoding processing can correct the random error effectively. The TPC bit will be explained later below.

A spreading unit 34 processes the signal to which the TPC bit has been added. That is, the signal is spread using a designated spreading code on the transmitting side, and the spread signal is reverted to the original signal by multiplying it by the designated spreading code on the receiving side. The spreading code for spreading is generated by multiplying the designated short code and long code. Specifically, the short code and the long code designated by the spreading-code-designating signal outputted from the control unit MS-CNT are generated in a short code generator 35 and a long code generator 36, respectively. The spreading code for spreading is then generated by multiplying the short code and the long code. The data spread by the spreading code is output to the radio unit TRX.

Next, the elements indicated by numeral 40 are despreading units which carry out despreading using a predetermined spreading code. The spreading code used in despreading is generated by multiplying the designated short and long codes. Specifically, the short code and the long code designated by the spreading-code-designating signal outputted from the control unit MS-CNT are generated in a short code generator 42 and a long code generator 41, and the spreading code for despreading is generated by multiplying the short code and the long code. A plurality of despreading units 40 is provided for RAKE combining processing which will be described later. The despreading processed data is processed by a RAKE combining unit 43. In RAKE combining processing, it is possible to obtain a diversity effect by exploiting the fact that multi-paths having different delay times can be separated in the despreading process, and synthesizing the separated paths appropriately. The effect of fading is decreased by RAKE combining processing.

45 designates a path-searching unit which measures the transmission delay and the amplitude of the multipath which are supplied to the mobile station MS, and informs spreading code unit 47 (the short code generator 42 and the long code generator 41) of the reception timing. 46 designates a cell/sector searcher which detects the level of the perch channel (described below) of the nearby cells and sectors when the initial synchronization establishment is carried out in the mobile station MS, and judges the cell/sector where the mobile station MS is located. 50 designates a frequency gap detector which detects the frequency gap based on the received signal on which RAKE combining has been carried out. The frequency gap detector 50 detects the frequency gap between the received radio signal and the standard frequency of the mobile station MS, and outputs a frequency revision signal AFC in accordance with the detected results. The frequency gap in the local oscillator 20 is revised on the basis of the frequency revision signal AFC.

53 designates a de-interleaving unit which carries out the de-interleaving process for the received signal, and supplies the result to Viterbi decoder 54. The received signal which is decoded with Viterbi decoding is outputted and supplied to terminal interface unit TERM-INT.

51 designates a TPC bit detector which detects the TPC bit including the received signal, and generates the transmission power designating signal in accordance with the detected result. This transmission power designating signal is used for gain control of transmitting amplifier 10b as described above. In this way, the transmitting power control on the mobile station MS side is controlled by the TPC bit (a command that designates power increase or the power decrease) which is transmitted through the downlink communication channel from the base station BS.

55 designates an FER measurement unit which measures the FER (Frame Error Rate) for a signal which is decoded with Viterbi decoding, generates a renew value for the target SIR value from the measured result, and supplies the renew value to the SIR measurement/comparing unit 52. The FER expresses the proportion of error frames present with respect to all frames within a predetermined measured time duration. In this embodiment, when an error of one or more bits is detected in a frame, the frame is considered to be an error frame. The SIR measurement/comparing unit 52 measures the SIR value of the received signal, and determines the value of the TPC bit by comparing the measured value and the renewed SIR value, and furthermore outputs the determined value to the TPC bit adder 33. The measurement of the above-mentioned SIR value and the FER value is carried out to estimate the communication quality. The TPC bit adder 33 adds the TPC bit, which corresponds to the determined value, to the transmitting signal. In other words, in this embodiment, the TPC bit is generated in order to control the transmitting power of the base station BS. As mentioned above, the communication quality can be constant even if the propagation environment varies because the transmitting power of the base station BS and the mobile station MS are controlled.

A-4: Terminal interface unit TERM-INT

Fig. 5 is a block diagram showing the constitution of terminal interface unit TERM-INT. In Fig. 5, each of 10a and 10b designates a switching means, which switches the signal transmitting line in accordance with a telephone/non-telephone switching signal supplied from the control unit MS-CNT. That is, switching means 10a supplies a signal supplied from the baseband signal processing unit BB to a voice decoding unit 70, when calling. As a result, the voice signal is decoded, and is supplied to the receiver of the hand set after the signal is converted to an analog signal by a D/A convener 71. The voice signal outputted from the mouthpiece of the hand set is convened to a digital signal by a A/D converter 73, and is coded by a voice coding unit 72. The coded voice signal is supplied to the convolutional coding unit 31 of the baseband signal processing unit BB through switching means 10b. In the voice decoding unit 70 and the voice coding unit 72, decoding and coding are carried out for transmitting the voice data with lower bits.

On the other hand, in non-calling, the switching means 10a supplies the received signal which is outputted from the Viterbi decoding unit 54 of the baseband signal processing unit BB to the deinterleaving unit 60. As a result, deinterleaving processing is carried out on the received signal, and RS decoding is carried out in the RS decoding unit 61 for that signal. This signal is then outputted to an external apparatus such as an ISDN terminal and a personal computer (PC). The signal outputted from the external apparatus is coded with RS coding in the RS coding unit 63, and subjected to interleave processing in the interleaving unit 62. Furthermore, this signal is supplied to the convolutional coding unit 31 of baseband processing unit BB through the switching means 10b. In the RS coding unit 61 and the RS decoding unit 63, the coding and decoding of the RS code as an outer code for error correction are carried out. In other words, in this embodiment, not only is convolutional coding/Viterbi decoding (refer to the convolutional coding unit 31 and the Viterbi decoding unit 54 in Fig. 4) carried out in order to achieve higher quality communications (low error rate), but coding and decoding of the RS code is also performed.

A-5: Main parameters

Table 1 shows an example of the main parameters of the radio interface in this embodiment. The notation for the item "symbol rate" in Table 1 means that it is possible to freely set the symbol rate from 16 ksps (kilo-symbols per second) to 1024 ksps.

Table 1

| Radio interface main parameter | | |
|---|---|---|
| No. | Item | Parameter |
| 1 | Radio access method | DS-CDMA FDD |
| 2 | Frequency | 2 GHz band width |
| 3 | Modulation/demodulation method | Information: QPSK, pilot symbol synchronization<br>Detecting wave RAKE<br>Spreading: QPSK |
| 4 | Coding/decoding | Inside coding: convolutional coding (R=1/3 or 1/2, K=9)/Viterbi soft decision decoding<br>Outside coding: Reed Solomon code (for data transmission) |
| 5 | Symbol rate | 16 ksps - 1024 ksps |
| 6 | Information transmission rate | Variable |
| 7 | Synchronization between base stations | Asynchronous |

B: DETAIL AND FUNCTION OF EACH UNIT OF SYSTEM

B-1: Channel constitution

The constitution of the radio channels in this embodiment will now be described.

In this embodiment, the radio channels may be classified into logical channels shown in Fig. 6 according to logical features and classified into physical channels shown in Fig. 7 according to physical features.

B-1-1: Logical channel

First, the logical channels shown in Fig. 6 will be described. The logical channels can be classified as shown in the tree diagram in Fig. 6. The function of each channel which makes up the tree will be listed as follows.

(1) Broadcasting channel1 and 2 (BCCH1 and BCCH2)

Each of broadcasting channels 1 and 2 (BCCH1 and BCCH2) is a unidirectional channel for broadcasting systematic control information for each cell or for each sector from the base station BS to the mobile stations MS, respectively. Broadcasting channels 1 and 2 (BCCH1 and BCCH2) transmit information the content of which changes over time, such as SFN (System Frame Number), the uplink interference power amount and the like.

(2) Paging channel (PCH)

A paging channel (PCH) is a unidirectional channel which broadcasts the same information from the base station BS to the mobile stations MS over a wide area. The PCH is used for paging.

(3) Forward access channel - long (FACH-L)

A forward access channel - long (FACH-L) is a unidirectional channel for transmitting control information or user packet data from the base station BS to the mobile station MS. The FACH-L is used in the case where the network recognizes a cell where the mobile station MS is located. Basically, this channel is used when a comparatively numerous amount of information is transmitted.

(4) Forward access channel - short (FACH-S)

A forward access channel - short (FACH-S) is a unidirectional channel for transmitting control information or user packet data from the base station BS to the mobile station MS. The FACH-S has a mode in which an ACK (acknowledgment signal) is transmitted for random access reception. This logical channel is used in the case where the network recognizes a cell where the mobile station MS is located. Basically, this channel is used in the case where comparatively little information is transmitted.

(5) Random access channel - long (RACH-L)

A random access channel - long (RACH-L) is a unidirectional channel for transmitting control information or user packet data from the mobile station MS to the base station BS. The RACH-L is used in the case where the mobile station MS recognizes a cell where the mobile station MS is located. Basically, this channel is used when a comparatively numerous amount of information is transmitted.

(6) Random access channel - short (RACH-S)

A random access channel - short (RACH-S) is a unidirectional channel for transmitting control information or user packet data from the mobile station MS to the base station BS. The random access channel - short (RACH-S) is used in the case where the mobile station MS recognizes a cell where the mobile station MS is located. Basically, this channel is used in the case where a comparatively little information is transmitted.

(7) Stand-alone dedicated control channel (SDCCH)

A stand-alone dedicated control channel (SDCCH) is a point-to-point bi-directional channel. This channel is used for transmitting control information. This logical channel occupies one physical channel.

(8) Associated control channel (ACCH)

An associated Control Channel (ACCH) is a point-to-point bi-directional channel. This channel is used for transmitting control information. This logical channel is the control channel associated with DTCH that will be described next.

(9) Dedicated traffic channel (DTCH)

A dedicated traffic channel (DTCH) is a point-to-point bi-directional channel, and is used for transmitting user information.

(10) User packet channel (UPCH)

A user packet channel (UPCH) is a point-to-point bi-directional channel, and is used for transmitting user packet data.

B-1-2: Physical channel

Next, the constitution of the physical channels shown in Fig. 7 will be described. As shown in Fig. 7, the physical channels are classified into common physical channels and dedicated physical channels. The common physical channels are further classified into perch channels and a common control physical channel. The perch channels are further classified into a first perch channel and a second perch channel. The characteristic of each physical channel is shown in Table 2. Note that, as shown in Table 2, closed-loop transmission power control of each time slot within one frame is not carried out in the common control physical channel in this embodiment.

Table 2

| Characteristic of each physical channel | | | |
|---|---|---|---|
| | Perch channel | Common control channel | Dedicated physical channel |
| Symbol rate | 16 ksps | Downlink: 64 ksps<br>Uplink: 16.64 ksps | 32 - 1024 ksps |
| characteristics | The transmission power control is not adopted. There is a first perch channel wherein symbols are transmitted constantly and a second perch channel wherein a portion of the symbols are transmitted. | • Only radio frames having transmission information are transmitted. No symbols, including pilot symbols, are transmitted in radio frames which do not have transmission information. The PD (Paging Display) portion of PCH is always transmitted.<br>• High rate closed loop transmission power control is not carried out.<br>• All symbols are transmitted at constant power. | High rate closed loop transmission power control can be carried out.. |

Next, the functions of each of the physical channels will be described.

(1) Perch channel

The perch channel is a physical channel, the reception level of which is subject to measurement, for cell selection of the mobile stations MS. The perch channel is also the physical channel that is initially captured when power supply to the mobile stations MS is started up. This perch channel consists of a first perch channel and a second perch channel. In the first perch channel, the symbols are spread by the sole short code of the system and are transmitted constantly so that a cell can be selected quickly when the power supply to the mobile station MS is started. In the second perch channel, a portion of the symbols are spread by the short code in correspondence with the downlink long code. These perch channels are unidirectional physical channels from the base station BS to the mobile stations MS.

(2) Common control physical channel

The common control physical channel is a physical channel which is used by a plurality of the mobile stations MS that are present in the same sector. Uplink of the common control physical channel can be randomly accessed.

(3) Dedicated physical channel

The dedicated physical channel is a physical channel which is set in a point-point manner between the base station BS and the mobile station MS.

B-1-3: Signal format of physical channel

Next, the signal format of the physical channel will be described with reference to Figs. 8 and 9. Fig. 8 is a conceptual diagram showing a signal format other than the uplink common control physical channel, and Fig. 9 is a conceptual diagram showing the signal format of the uplink common control physical channel. The numbers shown in the figures designate the symbol number in the field.

As shown in the figures, all physical channels consist of three layers. From the top layer sequentially, these are: a super frame, a radio frame and a time slot (time slot is designated simply as "slot" in the figures). The constitution of the radio frame or the time slot differs according to the type and the symbol rate of the physical channel. Each unit shown in Figs. 8 and 9 will now be described.

(1) Super frame

A super frame consists of 64-block radio frames. The radio frame at the head position and the radio frame at the tail position are determined based on the SFN, which will be described below. Concretely, the radio frame at the head position and the radio frame at the tail position are as follows:.

radio frame at head position: the radio frame where SFN mod 64 = 0
radio frame at tail position: radio frame where SFN mod 64 = 63

"Mod" is a modulo operator, and the "SFN mod 64" designates a remainder obtained by dividing SFN by 64. In the following description, *n* block frames or units will be described as "n frames" or "n units" in order to avoid complicating the description.

(2) Pilot symbol and SW (Synchronization Word)

In this embodiment, the first and third symbols of the pilot symbol in each time slot are designated as SW, and the modulation method is QPSK so that each bit forming the pilot symbol is spread into I and Q. When the pilot symbol pattern of a time slot in an uplink common control physical channel in which the symbol rate is 16 ksps (kilo-symbols per second) is 11110101, the order of separating becomes, for example, I = 1, Q = 1, I = 1, Q = 1, I = 0, Q = 1, I = 0, Q = 1 in order from the left.

In the downlink common control physical channel, burst transmission of a plurality of radio frames is permitted. In this case, the pilot symbol is added to the end of the burst signal. On the contrary, since there is one burst in one radio frame in the uplink common control physical channel, the pilot symbol is added to the end of one radio frame as shown in Fig. 9.

(3)TPC symbol

The relationship between the TPC symbol pattern and the transmitting power control amount is shown in Table 3. As shown in Table 3, the TPC symbol pattern is used to control transmitting power. In this embodiment, the content of the received TPC symbol is judged by soft decision which will be described later. In the case where the TPC bit is not received because the communication is out of synchronization or the like, the transmitting power does not change in this embodiment.

Table 3

| Relationship between TPC symbol pattern and transmitting power control amount | |
|---|---|
| TPC symbol | TRANSMITTING POWER CONTROL AMOUNT |
| 11 | + 1.0 dB |
| 00 | - 1.0 dB |

(4) Long code masking symbol

The long code masking symbols are spread using only the short code. Therefore, the long code is not used to spread the long code masking symbols. With the exception of the long code mask symbol, the symbols of the perch channel are spread using the short code of the layered orthogonal code series shown in Fig. 46. The long code mask symbols are spread using the short code of an orthogonal Gold code which has a code length of 256.

Furthermore, only one symbol of the long code mask symbols is included per time slot in the first and second perch channels only. This symbol pattern is "11" in the first perch channel and the second perch channel. In the perch channel, two spreading codes are used. The long code mask symbol is transmitted in each of the first and second perch channels. As is clear from Fig. 8, only a portion of the long code mask symbol is transmitted, while the other symbols are not transmitted.

B-1-4: Mapping onto physical channel of logical channel

Next, mapping onto the physical channel of the logical channel will be described.

Fig. 10 is a conceptual diagram showing the correspondence between the physical channel and the logical channel mapped to the physical channel. The mapping with regard to each channel will now be described with reference to this figure.

B-1-4-1: Mapping with regard to perch channel

Fig. 11 is a conceptual diagram showing an example of the mapping of the logical channel to the perch channel. The mapping rules for realizing the example shown in Fig. 11 are as follows.

(1) The perch channel is divided into a plurality of blocks within one super frame. Only BCCH1 and BCCH2 are mapped to the perch channel.
(2) BCCH1 is mapped from the head frame in the dividing unit (block) of the super frame, but does not overlap the dividing unit. BCCH2 is mapped onto the remaining frame within the dividing units. BCCH2 is recognized based on the structure information of the perch channel included in BCCH1.
(3) With respect to BCCH1 and BCCH2, one radio unit is comprised of two radio frames. Therefore, BCCH1 and BCCH2 are transmitted by continuously transmitting 2 x N radio frames, so that one layer 3 information is transmitted. The layer 3 information which is transmitted by BCCH1 and BCCH2 does not overlap the super frame.
(4) The sfn, which is generated in the base station BS and will be described in detail later, and the uplink interference power amount are set each 20 ms in each radio unit of the perch channel. The uplink interference power amount is the newest measured result measured at the base station BS. The transmitting content of this information changes over time.

B-1-4-2: Mapping for common control physical channel

The rules for mapping the logical channel to the common control physical channel are described below.

(1) PCH and FACH are mapped to a downlink control physical channel which has a symbol rate of 64 ksps.
(2) Only RACH is mapped to an uplink common control physical channel which has a symbol rate of 16 ksps.
(3) Either FACH or PCH is mapped to one downlink common control physical channel.
(4) One downlink common control physical channel in which FACH is mapped and one uplink common control physical channel are used as a pair. The pair is designated by the base station BS as the spreading code pair. The designation of the pair corresponds to the physical channel, and is not limited to a correspondence with the size (S: short or L: long) of FACH and RACH. FACH of the downlink control physical channel and RACH of the uplink control physical channel, which form a pair, are used as the FACH and RACH received and transmitted respectively by one mobile station MS. In an ACK transmission from the base station BS in response to the RACH from the mobile station MS, the ACK is transmitted via FACH-S of the downlink control physical channel which is paired with the uplink common control physical channel which transmits the RACH.

B-1-4-3: Mapping of PCH to downlink common control physical channel

The method for mapping PCH to the downlink common control physical channel is shown in Fig. 12. As clear from Fig. 12, the mobile stations MS in this embodiment are classified into several groups by a predetermined method. The mobile stations MS are called as a group. The details of how mobile stations MS operate in these groups will be described below. Basically, the mobile stations MS judge whether or not there is an incoming call at any of the mobile station MS that are present in the same group, based on the result of a soft decision in the PD part, which will be described below. When the mobile stations MS judge that a call has come, the mobile stations MS operate so as to receive the I portion (described below) of the PCH equivalent to the PD part.

The rules for mapping PCH to the downlink common control physical channel are described below.

(1) The PCH is divided into several groups in one super frame, and layer 3 information is transmitted in each group. In this embodiment, there are 256 groups per one common control physical channel. Each group in PCH has an information quantity equivalent to 4 time slots, and consists of a total of 6 information parts: two paging display parts (PD-parts) - for indicating whether there are incoming calls or not, and four termination user identification number parts (I-parts) - for indicating the paged mobile user. In each group, PD-parts precede I-parts in transmission.

(2) In each group, six information parts are allocated in a certain pattern within a twenty-four time slot range. By shifting each pattern by four time slots, a plurality of groups are allocated on one downlink common control physical channel.

(3) The PCH of the first group is allocated so that the head symbol of the super frame becomes the head symbol of the PD-part in PCH of the first group. Furthermore, by shifting each pattern by four time slots, PCH of the second group, PCH of the third group, ... are allocated in the radio frame for PCH. The group of the last number is allocated to overlap with the super frame.

B-1-4-4: Mapping of FACH to downlink common control physical channel

An example of the mapping of FACH to the downlink common control physical channel is shown in Fig. 13. The rules of this mapping are as follows.

(1) The optional radio frame for FACH on one downlink common physical channel can be used for either logical channels of FACH-L and FACH-S. The logical channel having the earliest transmitting request is transmitted by the radio frame for FACH. The FACH-L is used when the information length to be transmitted by the FACH is longer than the prescribed value, while FACH-S is used when it is shorter. In the FACH-S mapping, 4 FACH-S are time multiplexed in one FACH radio frame and transmitted. Therefore, when the information length is shorter, it is possible to multiplex many logical channels.

(2) One FACH-S consists of four time slots. Each time slot is allocated in one radio frame at four time slots intervals. Furthermore, four sequential FACH-S are allocated by shifting by one time slot. In the example shown in Fig. 13, the time slots used by each FACH-S are described as follows.

First FACH-S: 1st, 5th, 9th, 13th time slots
Second FACH-S: 2nd, 6th, 10th, 14th time slots
Third FACH-S: 3rd, 7th, 11th, 15th time slots
Fourth FACH-S: 4th, 8th, 12th, 16th time slots

(3) When the logical channel having the earliest transmitting request is a FACH-S, the base station BS can transmit other FACH-Ss stored in the buffer at that time, by multiplexing a maximum of four other FACH-Ss into the same radio frame for FACH. At that time, FACH-Ls are also stored, so that the base station BS can transmit FACH-Ss for which the transmitting request occurred later than the transmitting request timing of FACH-L after multiplexing.

(4) The mobile stations MS can receive FACH-L and all FACH-Ss on one downlink common control physical channel at the same time. It is acceptable that the mobile station MS receive one downlink common control physical channel, even when the base station BS transmits a plurality of downlink common control physical channels for FACH. The determination of which downlink common control physical channel for FACH transmission from among a plurality thereof is received is arranged at the application level in the mobile stations MS and the base station BS.

(5) There are transmission formats for two modes in FACH-S. One mode is a format (layer 3 transmission mode) that transmits layer 3 or higher information, and the other mode is a format (ACK mode) that transmits an ACK for reception of RACH. FACH-S in the ACK mode carries ACKs for a maximum of seven mobile stations MS. FACH-S in ACK mode sure to be transmitted by the first FACH-S, and is transmitted with the highest priority, even when the transmission request timing is later than other FACHs.

(6) When the quantity of information present in the upper Common Part Sub-layer (CPS) transmitted in the FACH radio unit is equivalent to a plurality of FACH radio units, continuous transmission is guaranteed. In other words, interruption by and transmission of other CPS does not occur. This also applies for FACH-S in ACK mode.

(7) When one CPS is transmitted by a plurality of FACH radio units, only FACH-L or FACH-S is used, i.e., FACH-L and FACH-S are not both used at the same time. When one CPS is transmitted continuously using a plurality of FACH-S radio units, the *n* FACH-S radio unit is followed by the *n+1* FACH-S radio unit. However, in the case of an interruption by an ACK mode FACH-S, the fourth FACH-S radio unit is followed by the second FACH-S radio unit. When an ACK mode FACH-S interruption does not interrupt, the fourth FACH-S radio unit is followed by the first FACH-S radio unit.

B-1-4-5: Mapping of RACH to uplink common control physical channel

As shown in Fig. 10, the RACH-S is mapped to the 16ksps uplink common control physical channel. The RACH-L is mapped to the 64ksps uplink common control physical channel. As shown in Fig. 9, the RACH-S and RACH-L consists of one radio frame (10ms) respectively. The RACH-S and RACH-L are transmitted after the four symbols worth of pilot symbols in time slot #1 are added to the last frame of the radio frame at the time of radio section transmission. When the mobile station MS transmits RACH, RACH-L and RACH-S can be freely used in accordance with the amount of information transmitted.

The base station BS transmits ACK to the mobile station MS by FACH-S when it correctly receives RACH-L or RACH-S. The transmission frame timing of RACH in the mobile station MS is delayed only by a predetermined offset with respect to the frame timing of the downlink common control physical channel on to which the FACH which transmits ACK is mapped. In this embodiment, 16 types of offsets are provided. The mobile station MS selects at random one offset from the 16 offset types, and transmits RACH at a timing in accordance with the selected offset. The base station BS must have a means for simultaneously receiving RACH-L and RACH-S at a timing in accordance to all the offset types.

B-1-4-6: Mapping to dedicated physical channel

The rules for mapping the logical channel to a dedicated physical channel are as follows. Fig. 14 is a conceptual diagram showing a method for mapping DTCH and ACCH to a dedicated physical channel. Fig. 15 is a conceptual diagram showing the method for mapping ACCH to the super frame of the dedicated physical channel, for each symbol rate. The following description will refer to Figs. 14 and 15.

SDCCH and UPCH each monopolize one dedicated physical channel. On the dedicated physical channel for which the symbol rate is 32 - 256ksps, DTCH and ACCH share one dedicated physical channel by means of time multiplexing. On dedicated physical channels for which the symbol rate is 512 and 1024ksps, ACCH is not multiplexed, and only DTCH monopolizes the dedicated physical channel. For each time slot, the time multiplexing for DTCH and ACCH is realized by dividing the symbols for the logical channel in the time slot as shown in Fig. 14. The ratio of the dividing differs for each symbol rate of the dedicated physical channel.

As shown in Fig. 15, the radio frame number which forms the radio units of ACCH differs according to the symbol rate of the dedicated physical channel. In the following description, the radio units of ACCH will be described as "ACCH radio units" or "ACCH units", and will be noted simply by the term "unit" in the figures. ACCH radio units are allocated in synchronization with the super frame. In all time slots in one radio frame or a plurality of radio frames, ACCH radio units are divided according to the time slot number, and are allocated. In multi-code transmission, ACCH radio units do not overlap between dedicated physical channels, and are transmitted with only a specified code (one dedicated physical channel) designated by the base station BS.

B-1-5: Coding of logical channel

Next, the coding of the logical channel will be described.

B-1-5-1: Overview

Figs. 16 through 36 show the coding method for each logical channel, i.e., the frame disassembly and reassembly process in baseband processing unit BB. This process will be described first with reference to the figures, followed by descriptions of each of the units such as CRC, PAD and the like shown in the figures.
Figs. 16 through 20 show the coding method of each logical channel in the downlink. The downlink procedure will be described with reference to these figures. Note that while the physical channels for mapping differ depending on the logical channel, in Figs. 16 through 20, the physical channels are designated as "reception physical channels." That is, the substance of the reception physical channel differs depending on the figure.
Fig. 16 is a conceptual diagram showing the coding method for signals transmitted through BCCH1 and BCCH2 at 16 ksps. The reception physical channel in Fig. 16 is a perch channel, which permits transmission at 16 ksps. First, 10 bits of data, excluding the pilot symbol and LC masking symbol (the total symbol number is five-symbols/time slot), are extracted from each time slot of each radio frame received by the reception physical channel. When the extraction procedure over 32 time slots is completed, a BCCH radio unit (BCCH1 radio unit in the figures) is generated by combining 32 data units (the total length is 320 bits). Furthermore, bit de-interleaving and soft decision Viterbi decoding are performed on the BCCH radio unit, and 96 bits of data, excluding the table bit and the like which will be described later, are extracted from the obtained data. A plurality of 96 bit data is obtained by repeating this process, and combined. Layer 3 information is then obtained by extracting CPS PDU from the combined data.
Other logical channels of the downlink are clear from the above mentioned descriptions for Fig. 16, which deals with BCCH1, BCCH2 (16ksps), and Figs. 17 through 20, which deal with the other logical channels. Therefore, in order to avoid complicating the description, a disclosure of the subject of each figure will substitute for descriptions.
Fig. 17 shows the coding method for signals transmitted through PCH at 64 ksps. Fig. 18 shows the coding method for signals transmitted through FACH-L at 64ksps. Fig. 19 shows the coding method for signals transmitted through the normal mode of FACH-S at 64ksps. Fig. 20 shows the coding method for signals transmitted through ACK mode of FACH-S at 64ksps. Figs. 21 through 36 show the coding methods for signals transmitted through various uplink or reverse logical channels. The procedures in the uplink will be described with reference to these figures.
Fig. 21 shows the coding method of RACH-L (64ksps). As shown in Fig. 21, in the coding of RACH-L (64ksps), first, layer 3 information (user information/control information) is stored in CPS PDU, and data including this CPS PDU is partitioned to the inner coding units (66oct). Convolutional coding and bit interleaving are performed for the inner coding units after the table bit etc,. is added to each inner coding unit. The data obtained by such procedures is divided into 16 time slots, and the pilot symbol (4 symbols/time slot) is added to each of 16 time slots. These 16 time slots are mapped to the physical channel. These types of procedures are carried out for each inner coding unit.
Other logical channels of the uplink are clear from the above mentioned descriptions for Fig. 21, which deals with RACH-L (64ksps), and Figs. 22 through 36, which deal with the other logical channels. Therefore, in order to avoid complicating the description, a disclosure of the subject of each figure will substitute for descriptions.
Fig. 22 shows the coding method for RACH-S (16ksps). Fig. 23 shows the coding method for SDCCH (32ksps). Fig. 24 shows the coding method for ACCH (32ksps/64ksps). Fig. 25 shows the coding method for ACCH (128ksps). Fig. 26 shows the coding method for ACCH (256ksps). Fig. 27 shows the coding method for DTCH (32ksps). Fig. 28 shows the coding method for DTCH (64ksps). Fig. 29 shows the coding method for DTCH (128ksps). Fig. 30 shows the coding method for DTCH (256ksps). Fig. 31 shows the coding method for DTCH (512ksps). Fig. 32 shows the coding method for TCH (1024ksps). Fig. 33 shows the coding method for UPCH (32ksps). Fig. 34 shows the coding method for UPCH (64ksps). Fig. 35 shows the coding method for UPCH (128ksps). Fig. 36 shows the coding method for UPCH (256ksps).
Next, each part shown in Figs. 16 through 36 will be described in detail.

B-1-5-2: Error detection code (CRC)

The error detection code (CRC) is added to each CPS PDU (Common Part Controller Protocol Data Unit), each inner coding unit, and each selecting synthesis unit (for example, refer to Fig. 24). The generating polynomials (1) - (4) are shown as follows.

(1) 16 bit CRC (CRC16)

16 bit CRC is applied to CPS PDUs on all logical channels excluding DTCH and PCH, inner coding units transported through UPCH at any symbol rate, selecting synthesis units transported through DTCH at 32 ksps, and inner coding units transported through SDCCH, FACH-S/L, and RACH-S/L. The generating polynomial of this is shown as follows.

$$G_{CRC16}(X) = X^{16}+X^{12}+X^{5}+1 \quad (1)$$

(2) 14 bit CRC (CRC14)

14 bit CRC is applied to ACCH of all symbol rates. This generating polynomial is shown as follows.

$$G_{CRC14}(X) = X^{14}+X^{13}+X^{5}+X^{3}+X^{2}+1 \quad (2)$$

(3) 13 bit CRC (CRC13)

13 bit CRC is applied to each of the selecting synthesis units of 64/128/256/512/1024ksps DTCH. This generating polynomial is shown as follows.

$$G_{CRC13}(X) = X^{13}+X^{12}+X^{7}+X^{6}+X^{5}+X^{4}+X^{2}+1 \quad (3)$$

(4) 8 bit CRC (CRC8)

8 bit CRC is applied to CPS PDU of PCH. This generating polynomial is shown as follows.

$$G_{CRC8}(X) = X^{8}+X^{7}+X^{2}+1 \quad (4)$$

The applicability of the CRC computation mentioned above is as follows.

CRC for each CPS PDU: entire CPS PDU.
CRC for each the selecting synthesis unit of ACCH • DTCH: all bits except tale bit.
CRC for each the inner coding unit of SDCCH, UPCH, FACH, RACH: all bits except tale bit.

The range of applicability of the CRC computation and CRC bit are hatched in Figs. 16 through 36.
The results of the above-mentioned CRC checks are used as follows.

CRC for each CPS PDU: Judge whether retransmission with the retransmission protocol of the upper layer (SSCOP, layer 3 retransmission) is necessary or not.
CRC for each selecting synthesis unit of ACCH • DTCH: (i) the outer loop transmission power control, (ii) reliability for selecting synthesis.
CRC for each of the inner coding units of UPCH: outer loop transmission power control.
CRC for each of the inner coding units of RACH: layer 1 retransmission.
CRC for each of the inner coding units of SDCCH: (i) outer loop transmission power control, (ii) judgment of necessity of wire transmission.

B-1-5-3: Each function of PAD, Length and W bit

(1) PAD

The PAD is applied to CPS PDU of logical channels other than DTCH. PAD is included in CPS PDU to make the length of CPS PDU an integer multiple of the length of the inner coding unit or the length of the selecting synthesis unit. PAD is included in CPS PDU in 1 octet units, and all bits of PAD are "0."

(2) Length

The length is applied to CPS PDU of logical channels other than DTCH, and designates the padding information amount (octet number) within the CPS PDU unit.

(3) W bit

W bit designates the header, continuation and termination of CPS PDU for each of the inner coding units or the selecting synthesis units. The correspondence between the bit pattern and designating contents of the W bit is shown in Table 4, and an example of the method of use of W bit is shown in Fig. 37.

Table 4

| Correspondence between bit pattern and designating contents of W bit | |
|---|---|
| W bit | Designating contents |
| 00 | Continuation & continuation |
| 01 | Continuation & termination |
| 10 | Start & continuation |
| 11 | Start & termination |

B-1-5-4: Inner coding

Inner coding will now be described. Inner coding is a convolutional coding that is carried out in convolutional coding unit 31 in this embodiment. Fig. 38 shows the constitution of the convolutional coding unit. In this case, the output order of the convolutional coding unit becomes: output 0, output 1 and output 2. However, for a coding ratio 1/2, the convolutional coding unit outputs until output 1. The initial value of the shift register of the convolutional coding unit is "0" for all bits.

The parameters of the inner coding of each logical channel are shown in Table 5. Radio characteristics change in accordance with the interleaving depth. Thus, in this embodiment, as shown in Table 5, the interleaving depth is changeable so that the radio characteristics can be improved.

Table 5

| Inner coding Parameters of each logical channel | | | |
|---|---|---|---|
| Logical channel type | Coding scheme | Coding rate | Interleaving depth |
| BCCH1 | 9 | 1/2 | 10 |
| BCCH2 | | | 10 |
| PCH | | | 12 |
| FACH-L | | | 72 |
| FACH-S | | | 72 |
| RACH-L | | | 72 |
| RACH-S | | | 32 |
| SDCCH | | | 30 |
| ACCH(32/64ksps) | | | 6 |
| ACCH(128ksps) | | | 10 |
| ACCH(256ksps) | | | 26 |
| DTCH(32ksps) | | 1/3 | 24 |
| DTCH(64ksps) | | | 64 |
| DTCH(128ksps) | | | 140 |
| DTCH(256ksps) | | | 278 |

B-1-5-5: Outer coding

Next, outer coding will be described.

(1) Reed-Solomon coding and decoding (the process of RS coding unit 63 and RS decoding unit 61 shown in Fig. 5)

The coding form is reduced code RS (36, 32), which has been reduced from primitive RS code (255, 251) defined on GALOA GF ($2^8$). The primitive polynomial is expressed by equation (5), and the code generating polynomial is expressed by equation (6), as follows.

$$p = X^8+X^7+X^2+X+1 \quad (5)$$

$$G(X) = (X+1)(X+\alpha)(X+\alpha^2)(X+\alpha^3) \quad (6)$$

The outer coding process is adopted only at the time of unrestricted digital transfer in the line switching mode. The outer coding process is carried out every 64kbps (1B), independent of transmission speed.

(2) Symbol interleaving (functions of interleaving unit 32)

In this embodiment, interleaving is carried out at each 8 bit symbol. The depth of the interleaving is 36 symbols, irrespective of the symbol rate of DTCH.

(3) Outer code processing synchronization

Every 80 ms of data is designated as an outer code processing unit. The outer code processing is carried out synchronizing with radio frames. The ordering number is added to each radio frame in the outer code processing unit, i.e., numbers 0 - 7 are added in order of transmission. Outer code processing synchronization is established in accordance with this order.

B-1-5-6: Informing interference power

Next, the process for informing of the uplink interference power will be described. The interference power is informed by BCCH1 and BCCH2. The informed contents is a measured value of a newest uplink interference power, which is the total reception power including the thermal noise, of each sector. Table 6 shows an example of the relationship between the bit value and the value of the uplink interference power. Each of the bit patterns shown under the "Bit value" column in Table 6 is transmitted from the left side bit, respectively.

Table 6

| Relationship of the uplink interference power and the bit value | |
|---|---|
| Bit value | Uplink interference power |
| 1010 0001 | Equal to or more than 60.0 dBμ |
| 1010 0000 | Equal to or more than 59.5 dBμ, equal to or less than 60.0dBμ |
| : | : |
| 0000 0001 | Equal to or more than -20.0 dBμ, equal to or less than -19.5dBμ |
| 0000 0000 | Equal to or less than -20.0 dBμ |

B-1-5-7: Functions of SFN

Next, the SFN (System Frame Number) will now be described. This information is informed by BCCH1 and BCCH2. The value of the SFN has a 1-to-1 correspondence with the radio frame. Furthermore, the SFN is incremented by at every 10 ms radio frame. This information will be expressed in the capital letters "SFN."

The SFN is transmitted by BCCH1 and BCCH2 by using the head radio frame from among the two radio frames in the transmitting timing of BCCH1 and BCCH2. This SFN transmitted in the transmission timing of BCCH1 and BCCH2 is expressed as small letters "sfn." Fig. 39 shows the relationship of SFN and sfn which is to be transmitted.

When SFN and sfn have the relationship shown in Fig. 39, the base station BS generates a count value on the basis of the timing designated by the transmission channel. The mobile station MS calculates a modulo of SFN, and recognizes the super frame by the result. SFN takes a value in the range from 0 to $2^{16}$ - 1. When the radio frame takes

SFN=$2^{16}$ - 1, the next radio frame takes SFN = 0. The sfn is transmitted every 16 bits.

The usage of SFN will be described as follows.

(1) Uplink long code phase calculation

The mobile station MS generates the long code by calculating an uplink long code phase at the time of a call setup due to call origination or incoming call acceptance and diversity handover, according to the description at section B-2 entitled "Base station BS transmitting/receiving timing" and also in Figs. 40 - 43.

(2) Super frame synchronization

The radio frame that is SFN mod 64=0 becomes the head frame of the super frame, and the radio frame that is SFN mod 64=63 becomes the termination frame of the super frame.

B-1-5-8: Functions of PID

Next, PID (Packet ID) will be described as follows. This information is adopted for RACH-S/L and FACH-S/L. PID functions as a call in connection with transmission information, or as an identifier for identifying the mobile station MS, on the common control physical channel. The length of information is 16 bits. There are two applications for this information, as follows. Note that the following functions belong to the application software (software for controlling).

(1) SDCCH setting request and setting response

PID is used for a SDCCH (Stand-alone Dedicated Control Channel) setting request in RACH (Random Access Channel) from the mobile station MS to the base station BS and the setting response in FACH (Forward Access Channel) from the base station BS to the mobile station MS. PID in FACH which transmits the setting response is the same as PID in RACH which transmits the setting request. The value of PID in this usage takes a value selected at random by the mobile station MS.

(2) Packet data transmission

PID is used in a packet data transmission by RACH and FACH. The value of PID in this usage is determined in the base station BS. The base station BS selects a unique value for each sector.

The main usages are as mentioned above. PID is data of 16 bits, with the value of PID ranging from 0 to 65535. The range of PID values is divided to a plurality of ranges for each usage, and employed. Table 7 shows the range of PID values in each usage. PID is transmitted from MSB side.

Table 7

| Range of PID value | |
|---|---|
| Usage | Range of values |
| SDCCH setting request directly before SDCCH setting and setting response | 0 - 63 |
| Packet transmission | 64 - 65535 |

B-1-5-9: Functions of other bits

(1) U/C

Next, information U/C will be described. With the exception of FACH-S ACK mode, this information U/C is adopted in the RACH-S/L, FACH-S/L, and in the UPCH of all symbol rates. Information U/C is used as an identifier for identifying whether information included in CPS SDU (CPS Service Data Unit) is the user information or the control information. Table 8 shows the constitution of the U/C bit.

Table 8

| U/C bit constitution | |
|---|---|
| bit | Identifying contents |
| 0 | User information |
| 1 | Control information |

(2) TN

Next, information TN will be described. With the exception of the FACH-S ACK mode, this information TN is adopted in RACH-S/L, FACH-S/L and UPCH of all symbol rates. Information TN is used as identifier for identifying whether information included in CPS SDU indicates the termination node of the base station BS or not. Table 9 shows the constitution of the TN bit.

Table 9

| U/C bit constitution | | |
|---|---|---|
| Bit | Identified contents | |
| | RACH, uplink UPCH | FACH, downlink UPCH |
| 0 | MCC-SIM termination | Transmission from MCC-SIM |
| 1 | Base station termination | Transmission from base station |

(3) Sequence Number

**[0108]** Next, the sequence number (S bit) will be described. This information is adopted in RACH. Its objective is to reassemble CPS PDU with high efficiency, while taking into consideration the retransmission (layer 1 retransmission) between mobile stations MS and the base station BS with RACH. The range of the sequence number values is 0 - 15. A CPS PDU is reassembled on the basis of the result of CRC. The sequence number value in the head radio unit of CPS PDU is "0."

(4) Mo

Next, information Mo will be described. This information is adopted in FACH-S, and is a bit for identifying the mode of FACH-S. Table 10 shows the constitution of the Mo bit.

Table 10

| Mo bit constitution | |
|---|---|
| bit | Identified contents |
| 0 | Normal mode |
| 1 | ACK mode |

(5) CPS SDU

Next, the maximum length of CPS SDU will be described. In this embodiment, the maximum length is Lcps, independent of the logical channel. Lcps is recorded as a system parameter.

B-2: Transmission and reception timing of the base station BS

The transmission and reception timing of the base station BS will now be described.

A concrete example of the radio frame transmission and reception timing and a long code phase for each physical channel is shown in Figs. 40 though 43. As clear from these figures, sfn is not added to any physical channels other than the perch channel. However, the frame number FN corresponding to SFN is considered in all physical channels. The correspondence between SFN and frame number FN is shown in Figs. 40 through 43.

The base station BS generates the frame timing (standard SFN of the base station BS) that is used as a standard on the transmission channel. The radio frame transmission and reception timing of the various physical channels is set as a timing offset with respect to the standard SFN of the base station BS.

The phase in which the head chip of the frame timing of the base station BS standard SFN=0 is "long code phase" = 0 is designated as the base station BS standard long code phase. "Chip" is the minimum pulse of the spreading code series. The long code phase of various physical channels is set as a phase that is offset with respect to the standard long code phase of the base station BS.

The radio frame transmission and reception timing and the long code phase for each physical channel will be described with reference to Figs. 40 through 43. The parameters employed in the explanation will be described later.

The radio frame transmission and reception timing and the long code phase for each physical channel will be described with reference to Figs. 40 through 43. The parameters employed in the explanation will be described later.

Fig. 40 is a timing chart showing the transmission timing and the long code phase of the perch channel and the common control physical channel. As shown in Fig. 40, the transmission timing and long code phase of the radio frame in the perch channel are offset by $T_{SECT}$ chip (offset in each sector) with respect to BTS standard SFN. The variable $T_{SECT}$ varies according to the sector. The transmission timing of the radio frame in the forward common control channel is offset by $T_{CCCH}$ chip (time slot offset) with respect to the transmission timing of the perch channel. The long code phase of the forward common control channel coincides with the long code phase of the perch channel.

Fig. 41 is a timing chart showing the transmission timing and the long code phase in the reverse common control physical channel. As shown in Fig. 41, the receiving radio frame of the MS common control physical channel is delayed with respect to the transmission radio frame of the BTS common control physical channel. This delay is caused by the transmission delay. The offset of the transmission timing of the radio frame and the long code phase in each transmission timing (transmission timing 0 through transmission timing 15) of RACH take the value which results when a predetermined value (2560 chips) is added in order to the reception timing of the radio frame of the MS common control physical channel. For example, the transmission timing of the radio frame and the long code phase in transmission timing 0 of RACH are offset by 2560 chips for the reception timing of the radio frame in the MS common control physical channel, the transmission timing of the radio frame and the long code phase in transmission timing 1 are offset by 5120 chips, .... and the transmission timing of the radio frame and the long code phase in transmission timing 15 are offset by 38400 chips.

Fig. 42 is a timing chart showing the transmission and reception timing and the long code phase in a dedicated physical channel. As shown in Fig. 40, the transmission radio frame of the BTS perch channel is offset by $T_{SECT}$ chip for BTS standard SFN. As shown in Fig. 42, the transmission timing of the radio frame in the BTS dedicated physical channel is offset by $T_{FRAME}$ (frame offset) + $T_{SLOT}$ for the transmission radio frame in BTS perch channel. The long code phase of the BTS dedicated physical channel coincides with the transmission timing of the radio frame in the BTS perch channel.

The receiving radio frame on the MS perch channel lags behind the transmission timing of the radio frame on the BTS perch channel because of the transmission delay. The reception timing on the radio frame in the MS forward dedicated physical channel is offset by $T_{FRAME}$ + $T_{SLOT}$ chips with respect to the reception timing of the radio frame on the MS perch channel. The transmission timing of the radio frame on the MS reverse dedicated physical channel is offset by 1280 chips with respect to the reception timing of the radio frame on the MS forward dedicated physical channel. On the other hand, the long code phase of the radio frame in the. MS reverse dedicated physical channel coincides with the reception timing of the radio frame on the MS perch channel, its value beginning at zero when SFN=0, beginning at 40960 when SFN=2, ..., and beginning at 40960 x $2^{16}$-1 when SFN = $2^{16}$- 1.

The reception timing of the radio frame in the BTS reverse dedicated physical channel is offset by $T_{FRAME}$ + $T_{SLOT}$ + 1280 + TRANSMISSION DELAY x 2 chips with respect to the transmission timing of the radio frame in the BTS perch channel.

Fig. 43 is a timing chart showing the transmission timing and the long code phase in the dedicated physical channel for DHO. "DHO" means "diversity hand over." In DHO, the call connection is handed over to the base station BS toward which the mobile station MS is moving in such a manner that the new call connection is established while the previous call connection is still maintained between the mobile station MS and the base station BS from which the mobile station MS is moving away. In the following description, "new" channel and "new" BTS indicates that they are newly adopted for the new call connection due to DHO and "previous" channel and "previous" BTS indicates that they have been utilized for the previous call connection prior to DHO.

As shown in Fig. 43, the transmission timing of a radio frame on a new perch channel by a new BTS is offset by $T_{SECT2}$ chips (offset in each sector) with respect to the new BTS standard SFN for DHO. The reception timing of a radio frame on a new perch channel by the mobile station lags behind the transmission timing of the radio frame by the new BTS because of path delay.

On the other hand, the transmission timing of a radio frame on a reverse dedicated physical channel by the mobile station is offset by 1280 + β chips with respect to the reception timing of the radio frame on the previous reverse dedicated physical channel by the mobile station. The difference between the transmission timing of a radio frame on the reverse dedicated physical channel by the mobile station and the transmission timing of a radio frame on the new perch channel by the mobile station is a frame time difference measurement value designated as $T_{DHO}$.

The reception timing of a radio frame on the new reverse dedicated physical channel by the new BTS lags behind the transmission timing of the radio frame by the mobile station by the path delay, and is offset by C + 1280 chips with respect to the long code phase of a radio frame on the reverse dedicated physical channel transmitted by the new BTS. The value of the long code phase of the radio frame on the reverse dedicated physical channel transmitted by the new BTS begins at zero when SFN = $2^{16}$- 1, begins at 40960 when SFN = 0, ..., and begins at '40960 x $2^{16}$ - 1' when SFN = $2^{16}$ - 2. The transmission timing of a radio frame on the forward dedicated physical channel by the new BTS is offset by $T_{DHO}$ - 1280 - α chips with respect to the transmission timing of a radio frame on the perch channel by the new BTS. The long code phase on the new forward dedicated physical channel by the new BTS coincides with the transmission timing of the radio frame on the new perch channel by the new BTS. The reception timing of a radio frame on the new forward dedicated physical channel by the mobile station lags behind the transmission timing of the radio frame on the forward dedicated physical channel by the new BTS because of path delay.

Table 11 shows the offset value of the transmission and reception timing of the radio frame and the long code offset value in various physical channels.

Table 11

| Physical channel transmission/reception offset value (chip number) | | |
|---|---|---|
| Physical channel | Radio frame transmission/Reception timing | Long code phase |
| Perch channel | $T_{SECT}$ | $T_{SECT}$ |
| Forward common control physical channel | $T_{SECT}$+ $T_{CCCH}$ | $T_{SECT}$ |
| Forward dedicated physical channel (non-DHO) | $T_{SECT}$+ $T_{FRAME}$+ $T_{SLOT}$ | $T_{SECT}$ |
| Forward dedicated physical channel (as of new base station at the time of DHO) | $T_{SECT}$+ 〈$T_{DHO}$〉 -340 x C | $T_{SECT}$ |
| Reverse common control physical channel (RACH) | (1)$T_{SECT}$+ $T_{CCCH}$<br>(2)$T_{SECT}$+ $T_{CCCH}$+ 640 x C<br>(3)$T_{SECT}$+ $T_{CCCH}$+ 1280 x C<br>:<br>(16)$T_{SECT}$+ $T_{CCCH}$+ 9600 x C | (1)$T_{SECT}$+ $T_{CCCH}$<br>(2)$T_{SECT}$+ $T_{CCCH}$+ 640 x C<br>(3)$T_{SECT}$+ $T_{CCCH}$+ 1280 x C<br>:<br>(16)$T_{SECT}$+ $T_{CCCH}$+ 9600 x C |
| Reverse dedicated physical channel (non-DHO) | $T_{SECT}$+ $T_{FRAME}$+ $T_{SLOT}$ + 340 x C | $T_{SECT}$ |
| Reverse dedicated physical channel (as of new base station at the time of DHO) | $T_{SECT}$+ $T_{DHO}$ | $T_{SECT}$+ $T_{DHO}$+ $T_{FRAME}$+ $T_{SLOT}$ -340 x C |

In Table 11, [ 〈〉] means to cut chip unit value $T_{DHO}$ to a symbol unit value, and "DHO" means "diversity hand over." In DHO, the call connection is handed over to the base station BS toward which the mobile station MS is moving in such a manner that the new call connection is established while the previous call connection is still maintained between the mobile station MS and the base station BS from which the mobile station MS is moving away. In contrast, in non-DHO, the previous call connection between the mobile station MS and the base station BS from which the mobile station is moving away is terminated temporally and then the new call connection is established between the mobile station MS and the base station BS toward which the mobile station is moving. In Table 11, '340 x C' is the chip number corresponding to 1/2 of a time slot. Thus, 'C' varies according to chip rate. In this embodiment, C = 4, 8, and 16 and chip rate = 4.096, 8.192, and 16.384 Mcps (megachips per second).

The offset values $T_{SECT}$, $T_{DHO}$, $T_{CCCH}$, $T_{FRAME}$, and $T_{SLOT}$ in Table 11 will now be described.

(1) $T_{SECT}$

The offset value $T_{SECT}$ varies according to the sector. The same offset value is adopted to all physical channels in each sector. The value $T_{SECT}$ is less than or equal to the value of the time slot interval and is represented in chip unit. The long code phase of the forward dedicated physical channel is unified with the offset value $T_{SECT}$, so that a reduction in the amount of interference due to forward quadrature may be anticipated. It is possible to avoid the long code masking symbol from becoming the same timing between the sectors by differing the offset value $T_{SECT}$ between the sectors, so that more appropriate cell selection by mobile station MS is achieved.

(2) $T_{CCCH}$

$T_{CCCH}$ is an offset value used for the radio frame timing of the common control physical channel. This offset value $T_{CCCH}$ can be set in each common control physical channel. Thus, it is possible to reduce the frequency with which transmission patterns in different common control physical channels coincide with each other with respect to a single sector. Accordingly, it is possible to make the amount of forward interference even. The value $T_{CCCH}$ is less than or equal to the value of the time slot interval and is represented in chip unit.

(3) $T_{FRAME}$

$T_{FRAME}$ is an offset value used for the radio frame timing of the dedicated physical channel. This offset value $T_{FRAME}$ can be set in each dedicated physical channel. Thus, it is possible to plan for uniformity in the transmission traffic for higher efficiency in the wired ATM transmission. The value $T_{FRAME}$ is less than or equal to the value of the radio frame interval and is represented in chip unit.

(4) $T_{SLOT}$

$T_{SLOT}$ is an offset value for the radio frame timing of the dedicated physical channel. This offset value $T_{SLOT}$ can be set in each dedicated physical channel. Thus, it is possible to avoid coinciding transmission patterns and to uniformize the amount of interference. The value $T_{SLOT}$ is less than or equal to the value of the time slot interval and is represented in chip unit.

(5) $T_{DHO}$

$T_{DHO}$ is an offset value for the radio frame timing and the reverse long code phase in the dedicated physical channel. This offset value $T_{DHO}$ is a measured value of the difference between the reverse transmission time at the mobile station MS and the perch reception time at the new base station measured by the mobile station MS. The value $T_{DHO}$ is less than or equal to the value of the recerse long code phase and is represented in chip unit. However, for hardware, one radio frame interval is sufficient to enable measurement.

In the base station BS, although the reception timing with respect to the reverse physical channel roughly coincides with that shown in Table 11, a difference results from the transmission delay between the mobile station MS and the base station BS, and changes in the transmission delay. The base station BS adopts a reception method that can cancel the above differences. In the radio frame timing of the dedicated physical channel, the reverse channel transmission is controlled to lag behind the forward channel transmission by half of one time slot interval (for example, it is 1280 chips when the chip rate is 4.096 Mcps). In this way, the transmission power control delay becomes 1 time slot. Accordingly it is possible to plan for a decrease in control error. The specific setting method for the timing difference is shown in Figs. 42 and 43.

The reverse common control physical channel (RACH) will be described as follows. First of all, the radio frame timing of RACH takes an offset timing with respect to the radio frame timing of the corresponding forward common control physical channel (FACH). In this case, this offset value takes 16 steps of the time slot interval (for example, it is 2560 chips when the chip rate is 4.096Mcps), as shown in Figs. 42 and 43, for example. The head of the radio frame is adjusted to the initial value of the long code phase. Therefore, the long code phase also has 16 types of offset values. The mobile station MS can transmit a signal by selecting an optional timing among the 16 types of offset values. Thus, the base station BS in this embodiment can constantly receive RACH signal which is transmitted with all types of offset timings simultaneously.

B-3: Spreading code

Next, the methods for generating spreading codes at the long code generating units 36 and 41 and the short code generating units 35 and 42 and the method for arranging each generated spreading code will be described. The spreading code includes a forward long code, a reverse long code and a short code. Each code will be described below. The generation and arrangement of the spreading code is carried out at the base station BS in the same manner as at the mobile station MS.

B-3-1: Generating method

(1) Forward long code

The forward long code generated in the long code generating unit 41 is, for example, generated by the forward long code generating device shown in Fig. 44. In this embodiment, this forward long code is a Gold code in which an M series which is obtained from the generating polynomial expressions (7) and (8) below is used.

$$\text{Shift register 1 : } X^{18}+X^{7}+1 \qquad (7)$$

$$\text{Shift register 2 : } X^{18}+X^{10}+X^{7}+X^{5}+1 \qquad (8)$$

In Fig. 44, the state in which the value of the shift register 1 is a long code number and the value of the shift register 2 is all '1', is designated as the initial state in the long code number. In this case, the range of the long code number is 00000h - 3FFFFh in hexadecimal notation. The MSB side of the long code number is input into the right side of the shift register 1.

The forward long code has one radio frame period. Thus, the output of the long code generating device is terminated by the output after 10 ms progress, and repeats in a pattern from phase 0 to a phase corresponding to the 10 ms progress. The range of the phase is different according to the chip rate as shown in Table 12.

Table 12

| Correspondence between chip rate and forward long code phase range | | |
|---|---|---|
| Chip rate (Mcps) | Range of phase (chip) | |
| | For in-phase component | For quadrature component |
| 4.096 | 0 - 40959 | 1024 - 41983 |
| 8.192 | 0 - 81919 | 1024 - 82943 |
| 16.384 | 0 - 163839 | 1024 - 164863 |

Table 12 shows the range of the phase for the in-phase component and the quadrature component. The long code phase is shifted by a predetermined shift quantity (shift: 1024 chips) in the in-phase component and the quadrature component. The shift quantity is not required to be 1024, but may be a value that allows recognition of the delay signal and the quadrature component. The shift quantity is fixed irrespective of the chip rate, so that the constitution of the mobile station MS can be simplified. Thus, the shift quantity may be changed according to the chip rate.

The long code generating device shown in Fig. 44 can create a state wherein the phase is shifted by any clock from the initial phase state.

(2) Reverse long code

The reverse long code which is generated in the long code generating unit 36 is generated by the reverse long code generating device shown in Fig. 45, for example, and, in this embodiment, is a Gold code in which an M series that is obtained from generating polynomial expressions (9) and (10) below is used.

$$\text{Shift register 1 : } X^{41}+X^{3}+1 \qquad (9)$$

$$\text{Shift register 2 : } X^{41}+X^{20}+1 \qquad (10)$$

In Fig. 45, the state wherein the value of the shift register 1 is a long code number, and the value of the shift register 2 is all '1', is designated as the initial state in the long code number. In this case, the range of the long code number is 00000000000h - 1FFFFFFFFFFh in hexadecimal notation. The MSB side of the long code number is input into the right side of shift register 1.

The reverse long code has a period corresponding to the total time for transmitting $2^{16}$ radio frames ($2^{10}$ super frames). Thus, the output of the long code generating device is terminated by the output of the $2^{16}$ radio frames, and is repeated in a pattern from phase 0 to a phase of $2^{16}$ radio frames. The range of the phase varies according to the chip rate as shown in Table 13.

Table 13

| Correspondence between chip rate and reverse long code phase range | | |
|---|---|---|
| Chip rate (Mcps) | Range of phase (chip) | |
| | For in-phase component | For quadrature component |
| 4.096 | 0 to $2^{16}$x 40960 -1 | 1024 to $2^{16}$x 41960 + 1023 |
| 8.192 | 0 to $2^{16}$x 81920 - 1 | 1024 to $2^{16}$x 82920 + 1023 |
| 16.384 | 0 to $2^{16}$x 163840 - 1 | 1024 to $2^{16}$x 164840 + 1023 |

Table 13 shows the range of the phase for the in-phase component and the quadrature component. The long code phase is shifted by a predetermined shift quantity (shift: 1024 chips) in the in-phase component and the quadrature component. The shift quantity is not required to be 1024 fixed as above described. The long code generating device shown in Fig. 45 can generate a state wherein the phase is shifted by any clock from the state of the initial phase.

(3) Short code

Next, the methods for generating short codes in the short code generating units 35 and 42 will be described. Two methods are provided: one is for generating the short codes for the long code mask symbol on the perch channel and the other is for generating other short codes. The hierarchical quadrature code series shown below is used for the symbols of all physical channels other than the perch channel, and for the symbols other than the long code mask symbols of the perch channel.

The short code which consists of the hierarchical quadrature code series is designated by the code type number (Class) and the code number (Number). The period of the short code differs for each code type number.

Fig. 46 shows the method for generating the short code, where the short code is indicated as $C_{Class}$ (number) in the figure.

The period of the short code is set as the symbol period. Thus, if the chip rate (spreading band) is the same, the period of the short code and the code number which can be used differ according to the symbol rate. Table 14 shows parameters of various short codes.

Table 14

| Parameters of various short codes | | | | | | | |
|---|---|---|---|---|---|---|---|
| Code Type number | Short code period (chip) | Short code number | Code number | Symbol rate (ksps) | | | |
| | | | | chip rate 1.024 Mcps | 4.096 Mcps | 8.192 Mcps | 16.384 Mcps |
| 2 | 4 | 4 | 0 to 3 | 256 | 1024 | | |
| 3 | 8 | 8 | 0 to 7 | 128 | 512 | 1024 | |
| 4 | 16 | 16 | 0 to 15 | 64 | 256 | 512 | 1024 |
| 5 | 32 | 32 | 0 to 31 | 32 | 128 | 256 | 512 |
| 6 | 64 | 64 | 0 to 63 | 16 | 64 | 128 | 256 |

Table 14 (continued)

| Parameters of various short codes | | | | | | | |
|---|---|---|---|---|---|---|---|
| Code Type number | Short code period (chip) | Short code number | Code number | Symbol rate (ksps) | | | |
| | | | | chip rate 1.024 Mcps | 4.096 Mcps | 8.192 Mcps | 16.384 Mcps |
| 7 | 128 | 128 | 0 to 127 | | 32 | 64 | 128 |
| 8 | 256 | 256 | 0 to 255 | | 16 | 32 | 64 |
| 9 | 512 | 512 | 0 to 511 | | | 16 | 32 |
| 10 | 1024 | 1024 | 0 to 1023 | | | | 16 |

In Table 14, the short code period, the number of the short code (short code number) expressed by the same code type number, the number (code number) given to the short code in the same code type number, and the symbol rate for various chip rates, are indicated according to the code type number. As described above, the short code number system consists of the code type number and the code number. The code type number is expressed in a binary 4 bit and the code number is expressed in a binary 12 bit. The short code phase is synchronized with a modulation and demodulation symbol. Thus, the short code phase is zero in the head chip of the symbol. Note that it is also acceptable to specify the short code by the code number only, without dividing it into the code number and the code type.

Next, the short code for the long code mask symbol will be described. The short code for the long code mask symbol of the perch channel differs from the case of other symbols. For example, the short code is generated by the short code generating device shown in Fig. 47. In this embodiment, the short code is a quadrature Gold code in which an M series which is obtained from generating polynomial expressions (11) and (12) below is used

$$\text{Shift register 1: } X^8+X^4+X^3+X^2+1 \quad (11)$$

$$\text{Shift register 2: } X^8+X^6+X^5+X^3+1 \quad (12)$$

In Fig.47, the initial value of the shift register 1 is short code number $N_{LMS}$ ($0 \le N_{LMS} \le 255$) for the long code masking symbol. The MSB side of $N_{LMS}$ is input to the left side of the shift register 1. On the other hand, the initial value of the shift register 2 is all '1'. When all values of the shift register 2 are detected as '1', the shifting procedure is terminated, and '0' is inserted. The first chip of the short code output becomes '0'. The period is one symbol (256 chips) of the perch channel.

B-3-2: Method for arranging spreading code

Next, the method for arranging the spreading code will be described.

(1) Forward long code

In the forward long code, the one long code number common to all sectors in one cell is arranged for the forward long code under system operation. Note, however, that when the base station BS apparatus is constructed, it is possible for different long code numbers to be arranged in each sector. The forward long code, which is used by a plurality of forward physical channels of the various types transmitted in a sector, uses the same long code number in all physical channels.

The long code phase is the same as that described at section B-2 entitled "Transmission and reception timing of the base station BS."

(2) Reverse long code

In the reverse long code, the long code number is arranged for every reverse physical channel. The dedicated physical channel which is mapped with DTCH, ACCH and UPCH, uses the reverse long code that was arranged for each mobile station MS. The dedicated physical channel and the common physical channel which are mapped with other logical channels use the reverse long code that was arranged for each base station BS.

The long code phase is the same as that described described at section B-2 entitled "Transmission and reception timing of the base station BS."

(3) Short code

The short code for physical channels other than the perch channel is arranged for each physical channel, and for each reverse/forward.

On the other hand, the short code for the perch channel is arranged as follows.

The short code number for symbols other than the long code mask symbol of the first perch channel is common with all the cells, and is C8(0). As hardware constitution, it is possible to use any short code as the first perch channel.

The short code number for the long code mask symbol of the first perch channel is common over all the cells, and is $N_{LMS}$ = 1. As hardware constitution, it is possible to use any short code number $N_{LMS}$ for the long code mask symbol of the first perch channel.

The short code number for the long code mask symbol of the second perch channel uses one of the plurality of predetermined short codes in each sector under the system. The short code number for the predetermined short code is recorded in the mobile station MS and the applications of the BSC (Base Station Controller) included in the base station BS. As hardware constitution, it is possible to use any long code masking short code for the second perch channel.

One short code number for long code masking of the second perch channel corresponds to a plurality of forward long codes used in the same sector. Table 15 shows an example of the above-mentioned corresponding relationship. The information about the corresponding relationship is stored by the applications of the BSC and the mobile station MS. As hardware constitution, it is possible to use any long code masking symbol short code and the forward long code in the same sector.

Table 15

| Correspondence between second perch channel short code and forward long code | |
|---|---|
| Short code number $N_{TPC}$ for second perch channel long code mask symbol | Forward long code |
| 2 | 00001h - 00020h |
| 3 | 00021h - 00040h |
| 4 | 00041h - 00060h |
| 5 | 00061h - 00080h |

B-4. Spreading modulation signal generating method

Next, the spreading modulation signal generating method in the spreading unit 34 will be described. The spreading modulation signal is generated in the base station BS in the same manner as for the mobile station MS.

(1) Spreading modulation method

QPSK is adopted in both the reverse and forward channels as the spreading modulation method. However, it is also possible to adopt BPSK as the spreading modulation method.

(2) Short code assignment method

The short code assignment method assigns the same short codes to the short code SCi for the in-phase component and the short code SCq for the quadrature component according to the designated short code number system (code type number: Class, code number: Number).

Namely, the short code SCi becomes as follows.

$$SCi = SCq = C_{Class}(Number) \qquad (13)$$

In the reverse and forward channels, the short code number system is assigned separately so that it is possible to use the different short code in the reverse and forward channels.

(3) Long code assignment method

Assume that the long code number is LN and the output value of the long code generating device at the point at which the long code generating device has been activated by the clock shift number 'Clock' from an initial state (i.e., the state in which the long code number is set into the shift register 1, and all '1's are set into the shift register 2) is designated $G_{LN}$ (Clock). In this case, the output value LCi(PH) of the long code generating device for the in-phase component (PH is the long code phase) and the output value LCq(PH) of the long code generating device for the quadrature component in the long code phase shown in Fig. 40 through Fig. 43 is expressed by the following equations (14) and (15) in both forward channel and reverse channel.

$$LCi(PH) = G_{LN}(PH) \quad (14)$$

$$LCq(PH) = G_{LN}(PH+1024) \text{ (LCq(PH) is '0' in the case of BPSK)} \quad (15)$$

The range of the long code phase in the in-phase component and the quadrature component is shown in Tables 12 and 13.

(4) Long code + short code generating method

The method for generating the spreading code Ci for the in-phase component and the spreading code Cq for the quadrature component using the long code and the short code are as shown in Fig.48.

(5) Constitution of spreading unit 34

The constitution of the spreading unit 34, which spreads the in-phase component Di and the quadrature component Dq of the transmitting data by using the spreading codes Ci, Cq so as to generate the in-phase component Si and the quadrature component Sq of the spread signal, is as shown in Fig. 49.

B-5: Random access control

An example of the random access transmission method is shown in Fig. 50. In Fig. 50, the mobile station MS transmits an RACH frame at a time which is delayed randomly with respect to the receiving the frame on the forward common control channel. The random delay quantity is an offset timing of the 16 types shown in Fig. 41. The mobile station MS selects the offset timing randomly whenever RACH is transmitted. For the RACH, frame transmission method is employed.

On the other hand, when an RACH frame in which the results of the CRC checks of the inner coding units are OK is detected, the base station BS transmits a PID of RACH in which the CRC check is OK by using the ACK mode of FACH-S, with the next FACH radio frame of the FACH radio frame which is transmitted at the detected time,

The mobile station MS transmits the next radio frame after receiving an ACK for the prior radio frame by ACK mode of FACH-S, when there are a plurality of RACH radio frames to be transmitted. The mobile station MS uses the same PID value for all RACH radio units, when one CPS information to be transmitted consists of a plurality of RACH radio units. The mobile station MS does not use both RACH-L and RACH-S simultaneously, but uses only either RACH-L or RACH-S for transmitting one CPS information.

The mobile station MS retransmits the same RACH radio unit when it cannot receive the PID value of previously transmitted RACH radio unit by ACK mode of FACH-S for a predetermined time $T_{RA}$ ms after the RACH has been transmitted previously. In this case, the PID value employs the same value, and the maximum retransmission number is $N_{RA}$. Thus, the same RACH radio unit is transmitted at most $N_{RA}$ + 1 times, including the first transmission. A maximum of up to 7 PIDs of RACH, in winch OK was detected for the CRC, can be contained in the ACK mode of FACH-S.

On the other hand, when there is a mobile station MS which does not return an ACK by RACH in which OK was detected on the basis of CRC checks by a point directly before the transmission timing of the radio frame for FACH, the base station BS transmits ACK mode FACH-S by the first FACH-S giving priority to old timings at which OK was received on the basis of CRC checks. A mobile station MS which does not return an ACK within the specified time $T_{ACK}$ ms after OK was detected on CRC is excluded as a transmission target for ACK mode FACH-S.

B-6: Multi-code transmission

Next, multi-code transmission will be described. When one RL-ID (Radio Link ID: identification information assigned with one hand over branch for each one call) consists of a plurality of dedicated physical channels (spreading code), the one RL-ID is transmitted as shown below, and pilot synchronous detection and transmission power control etc,. are carried out by arrangement in all dedicated physical channels in the one RL-ID. In the case where a plurality of RL-ID is assigned to one mobile station MS, the pilot synchronous detection and the transmission power control are carried out independently for each RL-ID. The frame timing and the long code phase coincide with each other in all dedicated physical channels in the one RL-ID.

Either or both of the two examples shown below are used as the transmission method for the pilot symbol and the TPC symbol, so that it is possible to anticipate an improvement in the quality of synchronous detection and a decrease in the error rate of the TPC symbol.

A first example is shown in Fig. 51. In the example, the pilot symbol and the TPC symbol are transmitted with only one dedicated physical channel which is designated from among a plurality of dedicated physical channels in one RL-ID. In other dedicated physical channels, the pilot symbol and the TPC symbol are not transmitted. In the dedicated physical channel through which the pilot symbol and the TPC symbol are transmitted, the pilot symbol and the TPC symbol are transmitted at a transmission power which is the number of the dedicated channels in one RL-ID times the transmission power for symbols other than the pilot symbol and the TPC symbol. The reason for this is as follows.

Ordinarily, the same information is transmitted as the pilot symbol in each dedicated physical channel when a plurality of codes is transmitted. Thus, the final result is obtained by synthesizing the received signal by the receiver for each dedicated physical channel. In this method, each receiver receives the pilot symbol and the TPC symbol that were transmitted at low transmission power. In this case, it is necessary to improve the quality of each receiver to improve the precision of the final result. In the system according to the present invention, the pilot symbol and the TPC symbol are transmitted in only one dedicated physical channel at the higher transmission power than the other transmission period, and are received by only one receiver. Consequently, it is unnecessary to enhance the quality that is demanded of the receiver. That is, it is possible to comparatively easily decrease the error rate of the TPC symbol. The transmission power of the above period is made be a multiple of the dedicated channel number of the transmission power for each dedicated physical channel in other periods, so that the power in the final result becomes constant.

A second example is shown in Fig. 52. In the example, in all dedicated physical channels in one RL-ID, the short code used in one specified dedicated physical channel is used only in the pilot symbol and the TPC symbol. Since common phase portions of the pilot symbol and the TPC symbol are combined with each other, it is desirable to control the transmission power of each dedicated physical channel, so that the transmission power of the pilot symbol and TPC symbol becomes:

[transmission power of other portions] x 1/[square root of the dedicated physical channel number]

For example, in the case of the example shown in Fig. 52, it is desirable that the transmission power of each dedicated physical channel becomes a half of the transmission power for other portions since the number of the dedicated physical channel is '4'.

B-7: Transmission power control

The transmission pattern of each physical channel is shown in Figs. 53 through Fig. 57. The transmission power control in each physical channel will be described with reference to these figures.

(1) Perch channel

As shown in Fig. 53, in the first perch channel, symbols other than the long code mask symbol which is included in each time slot are constantly transmitted at the designated transmission power $P_{P1}$. On the other hand, the long code mask symbol which is included in each time slot is transmitted at the transmission power which is obtained by taking the designated value $P_{down}$ from the above transmission power $P_{P1}$. Since the transmission power for the first perch channel is constant irrespective of the existence of transmission information of BCCH1 and BCCH2 that are mapped, the idle pattern (the PN pattern) is transmitted when there is no transmission information on the first perch channel.

In the second perch channel, only the long code mask symbol part that is included in each time slot is transmitted, and other symbols are not transmitted. The long code mask symbol in the second perch channel is transmitted at the same timing as the long code mask symbol in the first perch channel. The transmission power is a designated value $P_{P2}$ which is constant. The values $P_{P1}$, $P_{down}$ and $P_{P2}$ are determined at the base station BS so that the mobile stations MS which presents in a neighboring sector can determine a sector.

(2) Forward common control physical channel (for FACH)

As shown in Fig. 54, in a radio frame in which there is no transmission information in either FACH-L and FACH-S, the transmission becomes OFF over all periods of the radio frame including the pilot symbol. In a radio frame in which there is transmission information in FACH-L, the radio frame is transmitted at a designated transmission power value $P_{FL}$ over all periods of the radio frame. The transmission power value is designated for each transmission information. Therefore, the transmission power value is able to become variable for each radio frame. In the radio frame, the transmission power is constant at the designated transmission power value $P_{FL}$.
In the case where there is transmission information only in the first FACH-S from among four FACH-Ss in the radio frame, only the time slot of the first FACH-S is transmitted at the designated transmission power value ($P_{FS1}$). That is, the transmission power value becomes $P_{FS1}$ every four time slots. When the transmission information occurs in the first and second FACH-S, the time slots of the first and second FACH-S are transmitted at the transmission power values ($P_{FS1}$ and $P_{FS2}$) which are designated. When the transmission information occurs in the first and third FACH-S, the time slots of the first and third FACH-S have the transmission power values ($P_{FS1}$, $P_{FS3}$) which are designated. Fig. 54 shows an example in which the mobile station MS corresponding to the first FACH-S is located closer to the base station BS than the mobile station MS corresponding to the second and third FACH-S.
The transmission power of FACH-S of the ACK mode is always the same value, and the transmission information is transmitted at the designated transmission power $P_{ACK}$.
As clear from Fig. 54, in this embodiment, in the time slot of FACH-L or FACH-S in which there is transmission information, the pilot symbol is transmitted without fail on both sides of the symbol part for the logical channel. Therefore, for example, in the case where the time slot of a FACH with no transmission information is located adjoining the rear of the time slot of a FACH which has transmission information, only the pilot symbol that is located near the time slot of the FACH having the transmission information must be transmitted, even in the time slot of the FACH without transmission information. The transmission power value of this pilot symbol becomes the transmission power value of the time slot of the adjoining FACH-S having the transmission information.
When there are two adjoining time slots of FACH having transmission information, the transmission power of the pilot symbol in the time slot at the later side (that is, the pilot symbol adjoining the prior time slot) becomes the higher one among the transmission powers of the adjoining time slots.
The values $P_{FL}$, $P_{FS1}$ - $P_{FS3}$ are determined by an application based on the SIR value, which is obtained by the mobile station MS receiving the perch channel, and is included in RACH.

(3) Forward common control physical channel (for PCH)

As shown in Fig. 55, the PD part, of which there are two in each group, is constantly transmitted with all groups. The transmission power is made to be the transmission power value $P_{PCH}$ that was designated. When the PD part is transmitted, the pilot symbol in the time slot to which the PD part was mapped is also transmitted. The pilot symbol in the later-adjoining time slot is not transmitted.
The I part of each group is divided into four time slots (I1 - I4). Only the I part of a group which has calling information is transmitted, while the I part of a group which does not have calling information is not transmitted. The transmission power is made to be the transmission power value $P_{PCH}$ that was designated by a macro. Here, "macro" means a command that is issued by the control program of the base station BS.
In the time slot in which the I part of a group which has calling information is mapped, the pilot symbol is transmitted without fail on both sides of the symbol part for the logical channel. For example, in the case where the time slot of the I part of a group which does not have calling information adjoins the rear of a time slot of the I part of a group which has calling information, only the pilot symbol must be transmitted, even in the time slot of the I part of a group which does not have calling information.
The value of $P_{PCH}$ is determined at the base station BS so that almost all mobile stations MS in a sector can receive the pilot symbol.

(4) Reverse common control physical channel (RACH)

As shown in Fig. 56, a signal is transmitted from the mobile station MS via this channel only in the case where there is transmission information. Each signal is contained in one radio frame. The transmission power $P_{RL}$ of RACH-L and the transmission power $P_{RS}$ of RACH-S are determined by open loop control at the mobile station MS, and are constant in a radio frame. The pilot symbol is added to the end of the radio frame, and is transmitted. The transmission power of this pilot symbol is the same as the transmission power of the preceding radio frame.

(5) Forward dedicated physical channel

Fig. 57 shows a transmission pattern of the dedicated physical channel. When the initial setting of the forward dedicated physical channel is carried out, the transmission is started at a designated transmission power value $P_D$, irrespective of the time of the call setup due to call origination or incoming call acceptance or diversity hand over. The transmission is continuously carried out at the constant transmission power $P_D$, until the establishment of synchronous reception for the reverse dedicated physical channel is finished, and the decoding of the reverse TPC symbol becomes possible. The value $P_D$ is determined by a method similar to the method in case of FACH at the base station BS.

When the establishment of synchronous reception for the reverse dedicated physical channel is finished and the decoding of the reverse TPC symbol becomes possible, high speed closed loop transmission power control is carried out in accordance with the result of decoding of the TPC symbol. In high speed closed loop transmission power control, the transmission power is adjusted in a 1 dB control step directly before each time slot on the basis of the decoding result of the TPC symbol.

(6) Reverse dedicated physical channel

On the other hand, at the time of the call setup due to call origination or incoming call acceptance, the mobile station MS starts transmission of the reverse dedicated physical channel, after the processing to establish synchronous reception for the forward dedicated physical channel has satisfied specified conditions. The transmission power value of the first time slot at the time of starting transmission is determined by the open loop control similar to that in case of RACH, and the high speed closed loop transmission power control is carried out for the transmission power value of a subsequent time slot in accordance with the decoding result of the TPC symbol in a forward dedicated physical channel.

At the time of diversity hand over, it is not necessary to newly set up the reverse dedicated physical channel. The transmission power is controlled for every time slot by the high speed closed loop transmission power control at the time of diversity hand over.

B-8: Variable rate transmission control

The variable rate transmission that is matched to ITU-T (International Telecommunication Union-Telecommunications Sector) Recommendation G. 729 or EVRC is carried out only for the dedicated physical channel for the voice service. Regarding the dedicated physical channel (128ksps over) for data transmission, the variable rate transmission is not carded out. Rate information is not transmitted, but rather the rate decision is carried out using a blind rate decision method on the receiving side that is described later.

B-9: Bit transmission method

The CRC bit is output in order from high dimension to low dimension, and the traffic channel (TCH) is output in the order of input. Bit value '0' is output for all tail bits, and bit value '1' is output for all dummy bits. Furthermore, the idle pattern is made to be an optional PN pattern. However, in the case where a dummy or idle pattern is transmitted, CRC coding is also carried out.

B-10: Incoming call acceptance control

Next, incoming call acceptance control will be described by separating into the base station BS operations and the mobile station MS operations.

B-10-1: Operation of base station BS

The mobile stations MS in this embodiment are divided into several groups by a predetermined method. When a call attempt identifying a mobile station occurs, a call attempt message is sent to all mobile stations belonging to the group which the identified mobile station belongs to.

The group division has been already carried out by an application in the base station. In the base station, the called party information, which includes the identification number of the mobile station MS that is identified by the call attempt, and the group number, which corresponds to the group of the identified mobile station MS, are designated through the macro. The base station BS transmits the called party information using the I parts (I1 - I4) of PCH corresponding to the designated group number.

The base station BS transmits two PD parts (PD1 and PD2) in PCH all of which is set as '0,' and does not transmit the I parts on the PCH corresponding to groups which do not relate to called party information.

When the transmission of the called party information is instructed by the macro, the base station BS sets '1' for all of PD1 and PD2 of the PCH corresponding to the designated group number, and transmits the called party information using the designated I parts in the same PCH.

B-10-2: Operation of mobile station MS

On the other hand, the mobile station MS ordinarily receives only PD1 consists of 8 bits. In other words, the mobile station MS carries out the synchronous detecting reception using the pilot symbols which consists of four symbols adjoining the front side of PD1.

The mobile station MS carries out a soft decision of majority operation for PD1. The calculated result of this operation takes a value of '0' when all of the PD parts are '0', in a state where there is no deterioration in the reception quality, and takes a predetermined positive maximum value when all of the PD parts are '1'. The mobile station MS operates as follows based on the thresholds M1 and M2 (M1 > M2) for the decision and the processing result.

(1) If the processing result is equal or more than the threshold M1, the mobile station MS decides that call attempt has reached identifying a mobile station MS of the group to which the mobile station itself belongs, and receives the I part of the same PCH.

(2) If the processing result is less than the threshold M2, the mobile station MS decides that a call attempt identifying a mobile station in the group to which the mobile station itself belongs has not reached, and sets reception off (receiving OFF) until the reception timing of PD1 in the group to which its own station belongs after receiving one super frame.

(3) If the processing result is less than the threshold value M1 but equal to or greater than the threshold value M2, the mobile station MS receives PD2 in the same PCH, and carries out the above-decribed processing (1) and (2). When the processing result is less than the threshold value M1 but equal to or greater than the threshold value M2 in PD2, the mobile station MS receives the I part of the same PCH.

(4) In the case that it does not fall under in the above-described case (1), the mobile station MS receives the I part by the above-mentioned processing (2) or (3), and decides whether or not the mobile station is called in accordance with the called party information included in the I part.

B-11: Terminal interface

Next, the terminal interface will be described. An interface (TE side interface) with an outside terminal which is connected to the mobile station MS, and an interface (MS core side interface) with a core part ("MS core" hereinafter) of the mobile station MS, in the terminal interface unit TERM-INT of the mobile station MS, will be described.

B-11-1: Overview of interface for each service

A total of four types of services are offered in this embodiment: the voice communication service, the unrestricted digital signal transmission service, the packet signal transmission service and the modem signal transmission service. The mobile station MS comprises the terminal interface unit TERM-INT corresponding to all the services on ADP (adapter). First of all, the construction of the network in each service will be described with reference to Figs. 58 through 61. In these drawings, MS CODEC in the mobile station MS indicates the voice CODEC, MS core indicates the functions other than ADP of the mobile station MS, and BTS indicates a base station.

Fig. 58 is a block diagram showing the logical constitution of the network in the voice service. In the voice communication according to the constitution shown in Fig. 58, a calling from the handset is transferred to the destination TE (terminal equipment) via the MS core, the base station BS, the switching center and the public switched telephone network (PSTN). In the case where the destination is a mobile station MS, the calling from the handset is transferred to the handset of the destination mobile station via the MS core, the base station BS, the switching center and another base station. The terminal interface unit TERM-INT is adapted such that both forward and reverse signal speed between it and the MS core is a speed corresponding to a peak speed that is determined for both forward and reverse directions in the voice communication service. When there is a possibility that the signal speed exceeds the speed corresponding to the peak speed, speed alignment by buffering is carried out. The speed corresponding to the peak speed means the transmission speed before the CODEC processing which takes into consideration a reduction in redundancy by CODEC. In the case where the buffer overflows, the signal for the overflow is quashed.

Fig. 59 is a block diagram showing the logical constitution of the network in a unrestricted digital signal transmission service. In the unrestricted digital signal transmission according to the constitution shown in Fig. 59, the calling from a TE is transferred to the destination TE via the ADP, the MS core, the base station BS, the switching center and the public network (ISDN). In the case where the destination TE is connected to a mobile station, the calling from the TE is transferred to the destination TE through the ADP, the MS core, the base station BS, the switching center, another base station, and the MS core and ADP of another mobile station. The terminal interface unit TERM-INT is adapted such that both forward and reverse signal speed in the interface between the ADP and MS core is a speed corresponding to a peak speed that is determined for both forward and reverse directions in the unrestricted digital signal transmission service. When there is a possibility that the signal speed exceeds the speed corresponding to the peak speed, speed alignment by the buffering is carried out. In the case where the buffer overflows, the signal for the overflow is quashed, as in the same manner as in the voice communication service. The ADP is made such that it is able to transmit and distinguish a signal while the order of a plurality of 6B-ch is maintained in between the external interface unit and the SPU at the time of the bulk transmission. Furthermore, in the signal processing unit in the ADP, the signal speed between the MS core is set to become a speed corresponding to the peak speed that is set up for both the forward and reverse. "The speed corresponding to the peak speed" is the speed which takes into consideration redundancy part by FEC etc. For example, in the case where a FEC is carried out by half rate, a speed which is 2-fold greater than the peak speed that is set up in the external interface unit must to be secured as "the speed corresponding to peak speed."

Fig. 60 is a block diagram showing the logical constitution of the network in a packet signal transmission service. In the packet signal transmission according to the constitution shown in Fig. 60, the IP packet from the TE and ADP is transmitted to the TE of the destination side on the Internet via the mobile station MS, the base station BS, the switching center and the Internet. In the case where the TE of the destination side is connected to a mobile station, the IP packet from the TE and ADP is transmitted to the TE and ADP of the destination side through the mobile station MS, the base station BS, the switching center, (another) base station and other mobile station. In this embodiment, a LAN that is forming the Internet is also a part of the Internet. The terminal interface unit TERM-INT is adapted such that both forward and reverse signal speed at the interface output on the NW (network) side between the MS core and the terminal interface unit TERM-INT is a peak speed that is determined for both forward and reverse directions in the packet signal transmission service. In the case where there is a possibility that the signal speed exceeds the peak speed, speed alignment by buffering is carried out. In the case where the buffer overflows, the signal for the overflow is quashed. In the signal processing unit of ADP, the signal speed between the MS core is set to become a speed corresponding to the peak speed that is set for both the reverse and forward. "The speed corresponding to the peak speed" is the speed that takes into consideration the redundancy part by FEC etc.. Furthermore, in this embodiment, "peak speed" is set before communication by control unit MS-CNT, and the initial value is 64 kbps for both forward and reverse directions. The release of the call condition (CC) is carried out according to an indication from the switching center side which has detected that the time duration during which an IP packet was neither transmitted nor received has exceeded the time value described below. Alternatively, the release of the call condition is carried out according to a control command (for example AT command) from the TE based on the will of the user. The transmission and the reception state may be observed in the ADP of the mobile station MS.

Fig. 61 is a block diagram showing the logical constitution of the network in a modem signal transmission service. In the modem signal transmission according to the constitution shown in Fig. 61, the calling from the TE is transferred to the destination TE via the ADP, the MS core, the base station BS, the switching center, the modem, the public switching telephone network and other modem. In the case where the destination is a mobile station, the calling from the TE is transferred to the destination TE via the ADP, the MS core, the base station BS, the switching center, another base station and another mobile station. The terminal interface unit TERM-INT is adapted such that forward and reverse signal speed between it and the MS core is a peak speed that is determined for both forward and reverse directions in the modem signal transmission service. In the case where there is a possibility that the signal speed exceeds the peak speed, speed alignment by buffering is carried out. In the case where the buffer overflows, the signal for the overflow is quashed. The signal speed between the signal processing unit in the ADP and the MS core is set to become a speed corresponding to the peak speed that is set for both the forward and reverse.

The conditions which the ADP of the mobile station MS is satisfying in order to realize the four types of services described above will be described in detail for each service. Note that the interface that is provided to ADP includes the interface of the TE side and the interface of the MS core side, so that the items will be described for each interface. Since there is no difference in each of the 4 types of services, the interface of the MS core side will be described in common for all the service.

<u>B-11-2: Interface of TE side</u>

<u>B-11-2-1: Interface for voice communication</u>

<u>B-11-2-1-1: Overview</u>

Fig. 62 is a diagram showing each protocol stack for voice communication of C-Plane (control plane) and U-Plane (user plane) in the TE side interface of the ADP in the mobile station MS. In this figure, each stack is arranged to the location that corresponds with each portion of the mobile station MS. As described above, in this embodiment, CODEC (voice CODEC) is realized on the ADP.

As clear from Fig. 62, data transmitted by U-Plane is an analog voice data, and data related to other HMI (Human Machine Interface) is transmitted by C-Plane. In this figure and each figure that is described later, each of L1, L2, L3, ... designates layer 1, layer 2, layer 3, ... of the OSI reference model. As shown in Fig. 62, although L1b-C and L2b-C are formulated in the C-Plane in this embodiment, a design is also acceptable in which data is not transmitted and received between the TE and the C-Plane by deleting these L1b-C and L2b-C. Although HMI is provided on the mobile station MS in this embodiment, HMI may be provided on an external handset. Although a microphone and a loud speaker are provided on the mobile station MS in this embodiment, the microphone and the loud speaker may be provided to only an external handset, and the L2b-U may be removed.

B-11-2-1-2: HMI (Human Machine Interface)

HMI is provided to carry out basic operations of the mobile station MS such as call origination, incoming call acceptance, and so on, and is realized as an operating unit and a display unit. A keypad for calling and answering and a display that can display simple information, are prepared on the mobile station MS. The mounting site therefor is on the mobile station MS or on an externally attached handset.

B-11-2-1-3: Voice coding method

Next, the coding method in the voice coding unit 72 will be described.

B-11-2-1-3-1: Voice coding

The voice coding algorithm of the voice CODEC in this embodiment conforms to ITU-T recommendation G. 729 (8 kbps CS-ACELP). Regarding the mobile station MS, another coding method may be added, and each method may be used by switching.

B-11-2-1-3-2: Channel coding

In this embodiment, in the case where an ITU-T recommendation G. 729 (CS-ACELP) is used for the voice coding algorithm, a signal is transmitted after the channel coding described below is performed, to protect coding data from an error in the channel.

In this embodiment, two types of error control methods for protecting coding data are prescribed: error control method 1 in which a CRC is added on the transmission side and only error detection based on this is performed, and error control method 2 in which error correction using convolutional coding is combined with an error detection by CRC. It is acceptable that the mobile station MS be able to use only error control method 1, or that the mobile station MS be able to use two types of error control methods by switching between the error control method 1 and the error control method 2 as in the case of the mobile station MS in this embodiment.

(1) Error control method 1 (in case of transmission)

Fig. 63 shows the processing outline for voice CODEC. As shown in Fig. 63, in the error control method 1, CRC of eight bits is obtained from generating polynomial expression (16) below by using the 40 bits subject to protection shown in Table 17 among 80 bits of the coded voice data of one frame part (10ms) which is output from CS-ACELP (CODER). This 8 bits CRC is transmitted by combining with the coded voice data of one frame, so that the total transmission bit rate as voice data becomes 8.8 kbps.

$$G(X) = X^8+X^7+X^4+X^3+X+1 \quad (16)$$

Table 17

| Itemization of bits subject to protection in data for CS-ACELPone frame part | | |
|---|---|---|
| Parameter | All bit number | Number of bits subject to protection |
| LSP flag (L0) | 1 | 1 |
| LSP first layer (L1) | 7 | 7 |
| LSP second layer upper (L2) | 5 | 5 |
| LSP second layer lower (L3) | 5 | 0 |
| First sub frame LAG (P1) | 8 | 8 |
| Parity (P0) | 1 | 1 |
| First sub frame CODE (C1,S1) | 17 | 0 |
| First sub frame GAIN (GA1,GB1) | 7 | 7 |
| Second sub frame LAG (P2) | 5 | Upper 4 |
| Second sub frame CODE (C2,S2) | 17 | 0 |
| Second sub frame GAIN (GA2,GB2) | 7 | 7 |
| Total | 80 | 40 |

In Table 17, the terms inside of brackets in the parameter column are equivalent to the notations in the ITU-T recommendation G. 729.

(2) Error control method 2 (in case of transmission)

As shown in Fig. 63, in the aforementioned error control method 2, first, CRC of eight bits is obtained from the same generating polynomial expression (16) as in error control method 1 by using the 40 bits subject to protection shown in Table 17 from among 80 bits of the coded voice data of one frame part (10 ms) which is output from CS-ACELP. Next, 6 bits of tail bit is added to the 48 bits which result when the CRC of 8 bits is added to 40 bits subject to protection, and convolutional coding is carried out. The convolutional coding device takes as conditions a rate of 1/2 and an arresting length of 7, and uses generating polynomial expressions (17), (18). Finally, the result of the convolutional coding and the coded voice data excluding that subject to protection are combined, and are transmitted after frame inner interleaving (8x19). Thus, the total transmission bit rate of the voice data becomes 14.8kbps.

$$G1(D) = 1+D^2+D^3+D^5+D^6 \tag{17}$$

$$G2(D) = 1+D+D^2+D^3+D^6 \tag{18}$$

B-11-2-1-3-3: Channel decoding

The decoding processing for the error detection code or the error correction code corresponding to the error control methods 1, 2 performed on the transmission side is carried out on the reception side.

(1) Error control method 1 (in case of reception)

When processing of the error control method 1 is carried out on the transmission side, a CRC code series of 8 bits is obtained from data from which the CRC of 8 bits that was added on the transmission side has been excluded, by using the aforementioned generating polynomial expression (16), after the voice data of one frame part is received. The CRC code series and the CRC bit series which have been added on the transmission side are compared, and a frame in which both bit series do not accord is recognized as an error frame.

(2) Error control method 2 (in case of reception)

When the processing of the error control method 2 is carried out on the transmission side, on the receiving side, first, the de-interleaving processing is carried out after the voice data of one frame part is received. Next, the error correction decoding is carried out to bit series on which convolutional coding had been performed. In order to carry out effective error correction decoding, a Viterbi algorithm or a decoding method having a capacity equal thereto is used. After this error correction processing, the CRC bit series are compared by the same method as in the case of error control method 1, and the frame in which both bit series do not accord is recognized as an error frame.

B-11-2-1-3-4: Error frame interpolating

It is desirable to carry out the interpolation processing on the error frame, in order to improve the decoded voice quality when a coding error has occurred. The specific interpolation process is optional. Although decoded voice quality is not prescribed, it should be of a quality which does not present a problem with respect to hearing. In this embodiment, in the case where an interpolation processing function is included, it is possible to switch between the state where interpolation operation is enabled and the state where it is disenabled by the setting of maintenance terminal (MT).

B-11-2-1-3-5: Voice decoding

Next, the decoding method in the voice decoding unit 70 will be described. The voice decoding algorithm used as the standard in this embodiment, conforms to ITU-T recommendation G. 729 (8 kbps CS-ACELP). However, in the mobile station MS, in the case where a coding method other than the aforementioned methods is added, the decoding method corresponding to the coding method is installed.

B-11-2-1-4: VOX control

In this embodiment, the base station BS and the mobile station MS have the VOX function which controls on/off of TCH transmission according to the existence of the transmission voice during the voice communication. It is possible to change whether or not, the VOX control exists optionally by the setting by MT etc. The VOX control in the case that G.729 8kbps CS-ACELP is used as voice coding algorithm will be described below.

B-11-2-1-4-1: Voice presence/silence decision

The voice CODEC in this embodiment carries out the voice presence/silence decision during voice communication, and outputs the coded voice data when the voice presents, or terminates the output of the coded data except for the periodical output of background noise information, that will be described later, when voice does not present. Although the specific voice presence/silence decision algorithm is optional, a structure is employed in the mobile station MS in this embodiment that enables the threshold value for the voice presence/silence decision to be changed by setting by MT etc.

B-11-2-1-4-2: Radio transmission processing

The mobile station MS detects the silence state in the voice CODEC during voice communication. When the mobile station MS terminates the output of the coded data with the exception of during transmission of background noise information, the mobile station MS transmits only the pilot symbol and the ACCH part while it terminates the transmission of the TCH part in the radio physical channel for the voice transmission. The controls during switchover from the voice presence to the silence state, during the silence state, and during switchover from the silence to voice presence state will be explained below with reference to Fig. 64. Fig. 64 shows the transmission timing of the preamble and post amble signal. Fig. 64 shows the cases where (i) from voice presence to silence, (ii) during silence, (iii) from silence to voice presence. In Fig. 64, the same reference number is added to each corresponding frame of 10 ms and output of the encoder.

(1) Transition from voice present state to voice silent state

In the case of transition from a voice present state to a voice silent state, the encoder side of the voice CODEC provides notification in advance of the termination of TCH transmission suspension by the post-amble when silence is detected in the voice present state. The encoder suspends the transmission after the background noise information is transmitted following the post-amble. In the example in Fig. 64, a "voice present" decision results for the transmission timing of the first to second frame of 10ms, and a "voice silent" decision results for the transmission timing of the third to sixth frame of 10ms. Thus, the output of the encoder becomes the coded voice 0 - 2 in the transmission timing of the first to third frame of 10ms, becomes the post-amble in the transmission timing of the fourth frame of 10ms, becomes the coding noise (background noise information) in the transmission timing of the fifth frame of 10ms, and then terminates in the transmission timing of the sixth frame of 10ms.

When the decoder side of the voice CODEC detects the transmission termination of TCH by receiving the post-amble, it enters into the background noise generation processing, and carries out interpolation processing for the frame that received with the post-amble,

(2) Continuing silent state

In the continuing silent state, the encoder side periodically carries out the coding of the background noise, and transmits this coded background noise. When transmitting the background noise information, the encoder side transmits the post-amble prior to the background noise information. The transmission interval can be set by using a parameter, and the initial value of the parameter is 1 second. In the example of Fig. 64, the result of the voice existence decision is "silent" in the transmission timing of each frame of 10ms. Accordingly, an operation is repeated in which the encoder continuously outputs the post-amble (10ms) and the coded noise (10ms), and, after doing so, then terminates the transmission for 980ms.

Furthermore, the decoder side renews the generated background noise by using the background noise information which is transmitted periodically in the continuing silent state.

<u>(3) Transition from voice silent state to voice present state</u>

In the case of transition from a voice silent state to a voice present state, the encoder side provides notice in advance of the TCH transmission start by the preamble when the voice is detected in the silent state. The encoder side starts the transmission of the regular coded voice data after the preamble. In the example of Fig. 64, the result of the voice present/silent decision becomes "silent" in the transmission timing of the first to third frame of 10ms, and becomes "voice present" in the transmission timing of the fourth and fifth frame of 10ms. Thus, the output of the encoder stops at the transmission timing of the first to the third frame of 10ms, becomes the preamble in the transmission timing of the fourth frame of 10ms, and becomes the coded voices 4 - 5 in the transmission timing of the fifth and sixth frames of 10ms.

When the decoder side detects a TCH transmission start by receiving of the preamble in the continuing silent state, it stops the background noise generation from next frame of the preamble, and performs regular voice decoding operations.

An example of the unique word pattern of the preamble and post-amble signals is shown in Table 18. Table 18a shows a unique word pattern of the preamble for 8.8 kbps, 18b shows a unique word pattern of the preamble for 14.8kbps, 18c shows a unique word pattern of the post-amble for 8.8 kbps, and 18d shows a unique word pattern of the post-amble for 14.8 kbps. The preamble and post-amble signals are transmitted without being subject to channel coding. The unique word pattern must be a pattern such that speech CODEC does not incorrectly recognize the unique word as a voice. The patterns shown in Table 18 are preferred examples.

Table 18

| | | | | | | | | | | | | | | | | | | | | | | | | |
|---|---|---|---|---|---|---|---|---|---|---|---|---|---|---|---|---|---|---|---|---|---|---|---|---|
| Examples of unique word patterns<br>a. Preamble (for 8.8 kbps)<br>Transmission order -> | | | | | | | | | | | | | | | | | | | | | | | | |
| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | | | | | | | | | | | | |
| b. Preamble (for 14.8 kbps)<br>Transmission order -> | | | | | | | | | | | | | | | | | | | | | | | | |
| 1 | 1 | 0 | 0 | 0 | 0 | 0 | 0 | 0 | 0 | 0 | 0 | 0 | 0 | 0 | 0 | 0 | 0 | 0 | 1 | 0 | 0 | 1 | 0 | 0 |
| 0 | 0 | 0 | 0 | 0 | 0 | 0 | 0 | 0 | 0 | 0 | 0 | 0 | 1 | 0 | 0 | 1 | 0 | 0 | 0 | 0 | 0 | 0 | 0 | 0 |
| 0 | 0 | 0 | 0 | 0 | 0 | 0 | 0 | 0 | 1 | 1 | 0 | 0 | 0 | 0 | 0 | 0 | 0 | 0 | 0 | 0 | 0 | 0 | 0 | 0 |
| 0 | 0 | 1 | 1 | 0 | 0 | 0 | 0 | 0 | 0 | 0 | 0 | 0 | 0 | 0 | 0 | 0 | 0 | 0 | 1 | 1 | 0 | 0 | 0 | 0 |
| 0 | 0 | 0 | 0 | 0 | 0 | 0 | 0 | 0 | 0 | 0 | 0 | 1 | 1 | 0 | 0 | 0 | 0 | 0 | 0 | 0 | 0 | 0 | 0 | 0 |
| 0 | 0 | 0 | 0 | 0 | 0 | 1 | 1 | 0 | 0 | 0 | 0 | 0 | 0 | 0 | 0 | 0 | 0 | 0 | 0 | 0 | 0 | 0 | | |
| c. Post-amble (for 8.8 kbps)<br>Transmission order -> | | | | | | | | | | | | | | | | | | | | | | | | |
| 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 1 | 1 | 1 | 0 | 0 | 0 | 1 | 0 | 0 | 0 | 1 | 1 | 1 |
| 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 1 | | | | | | | | | | | | |
| d. Post-amble (for 14.8 kbps)<br>Transmission order -> | | | | | | | | | | | | | | | | | | | | | | | | |
| 1 | 0 | 0 | 1 | 1 | 1 | 1 | 1 | 1 | 1 | 1 | 1 | 0 | 0 | 1 | 1 | 1 | 1 | 1 | 1 | 1 | 0 | 1 | 1 | 1 |
| 1 | 1 | 1 | 1 | 1 | 1 | 1 | 0 | 1 | 1 | 1 | 1 | 1 | 1 | 0 | 1 | 1 | 1 | 1 | 1 | 1 | 1 | 1 | 1 | 1 |
| 0 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| 1 | 0 | 0 | 0 | 1 | 1 | 1 | 1 | 1 | 1 | 1 | 1 | 1 | 1 | 1 | 1 | 1 | 1 | 1 | 0 | 0 | 1 | 1 | 1 | 1 |
| 1 | 1 | 1 | 1 | 1 | 1 | 0 | 1 | 1 | 1 | 1 | 1 | 0 | 1 | 0 | 1 | 1 | 1 | 1 | 1 | 1 | 1 | 1 | 1 | 0 |
| 1 | 1 | 1 | 1 | 1 | 1 | 1 | 0 | 1 | 1 | 1 | 1 | 1 | 1 | 1 | 1 | 1 | 1 | 1 | 1 | 1 | 1 | 1 | | |

B-11-2-1-4-3: Background noise

The background noise of one frame part coded by the encoder is used as the background noise. The background noise in the decoder is generated by using the received background noise information. The specific generation method is optional. Whether or not there is background noise generation in the decoder can be changed by the setting of MT etc.

B-11-2-2: Interface for unrestricted digital signal transmission

The TE side interface for unrestricted digital signal transmission connects the mobile station MS and the terminal for ISDN. This interface is mounted on the body in the mobile station MS, and may also be mounted on an externally attached ADP. Fig. 65 shows each protocol stack for a unrestricted digital signal transmission-of C-Plane (Control Plane) and U-Plane (User Plant) in TE side interface of the ADP of the mobile station MS. In this figure and subsequent figures showing the protocol stack, each stack is shown arranged at a site that corresponds with each unit and TE in the mobile station MS.

As clear from Fig. 65, the ADP comprises one or more interfaces (basic interface(s)) satisfying ITU-T recommendation I.430 and one or more interfaces (first group speed interface(s)) conforming to ITU-T recommendation I.431. In this embodiment, the ADP comprises two ITU-T recommendation I.430 conforming interfaces and one ITU-T recommendation I. 431 conforming interface. Thus, in this embodiment, a maximum of two callings can be treated simultaneously when the ITU-T recommendation I. 430 conforming interface is used, while a maximum of six callings can be treated simultaneously when the ITU-T recommendation I. 431 conforming interface is used. However, it is also acceptable to provide only one of either the ITU-T recommendation I. 430 conforming interface or the ITU-T recommendation I. 431 conforming interface, or to provide neither of the interfaces.

B-11-2-3: Interface for packet signal transmission

B-11-2-3-1: Physical interface

The mobile station MS has an interface (interface for outside data terminal) on ADP for connecting an outside data terminal such as a PC (personal computer) etc. for the packet signal transmission. The number of interfaces for outside data terminals which are mounted on the mobile station MS is optional. Furthermore, the interface may be mounted to an externally attached ADP. As the interface for the outside data terminal, it is possible to use any interface or combination of interfaces such as an interface like RS-232C that can connect easily to commercially available PCs etc., an infrared interface that can connect directly to an outside terminal, or connect with wireless though a predetermined interface adapter, or an Ethernet interface that can carry out high speed data transfer of 128kbps or more.

This embodiment employs Ir-DA ver. 1.1 which enables a higher speed data transfer, and not Ir-DA ver. 1.0, for the infrared interface. Easy to handle 10 Base-T is adopted to the Ethernet interface in this embodiment.

B-11-2-3-2: PPP dial up connection

Fig. 66 is a block diagram showing each protocol stack for packet signal transmission under a PPP dial up connection environment of the C-Plane and U-Plane on the TE side interface of ADP in the mobile station MS.

As clear from Fig. 66, in packet signal transmission under a PPP dial up connection environment, the PPP is provided at 12 of ADP. In this embodiment, the protocol field value that is permitted with the PPP of L2 is only the IP-related protocol and the protocol (the LCP, IPCP etc.) that is used to control between links. A PPP frame having other protocol field values is quashed in the ADP. In this embodiment, the LCP setting options ACCM, RFC and ACFC can be set by request from the TE side. The presence or absence of Van Jacobson TCP/IP header compression (RFC1144) from the MT can be set up for IP-Compression-Protocol in the IPCP setting options. Even in the case where a static IP address is assigned to TE, a setting which enables communication is possible.

In the C-Plane, the transmission protocol of a signal conforming to Hayes-AT is provided at L3 of ADP.

In the U-Plane, the ADP is set to transmit/receive only the information field in the PPP frame between LAC-Us. Note that the ADP does not thaw for the IP packet of which TCP/IP header has compressed by TE.

B-11-2-3-3: Ethernet connection

Fig. 67 is a diagram showing each protocol stack for the packet signal transmission under an Ethernet connection environment of the C-Plane and U-Plane on the TE side interface of the ADP in the mobile station MS.

As clear from Fig. 67, in packet signal transmission under an Ethernet connection environment, DIX is provided at L2 of ADP. In the C-Plane, DIX is designed such that the MT notifies ADP of the called party number of the destination. DIX is constructed to issue a call attempt command that is for the pre-designated destination having the called party number to the CNC when the IP packet from the TE is received on the U-Plane in reception stand-by state. DIX quashes the IP packet from the buffer in the case where the calling fails. Furthermore, when calling to the switching center is released (in case of normal/semi-normal), DIX views this as a failure compulsorily and does not carry out calling processing for calling to the switching center side during Tccblk [s] since release processing is completed. This is to avoid the situation in which calling to the switching center side occurs frequently. Note that in this embodiment, Tccblk can be optionally set within a predetermined range (for example, 0 [s]-3600 [s]) by control unit MS-CNT.

In the U-Plane, DIX supports ARP (refer to RFC826), and provides a proxy response of the hardware address of its own ADP to all ARP requests. In other words, the ARP packet is not transmitted to network side. The IP address is not added to the ADP. In DIX, the hardware address of the TE is stored to memory in its own ADP when the Ethernet frame from the TE is received. DIX constructs the Ethernet frame from the IP packet and the TE/ADP hardware address that is known from the network side, and transmits the Ethernet frame to the TE. Furthermore, in the case where a padding Ethernet frame is received from the TE side, only the IP packet part excluding the padding part is delivered to LAC-U. When the length of the IP packet from the MS core side is short, the Ethernet frame is constructed by carrying out the padding processing, and is transmitted to the TE. In the case where the forward IP packet to be transmitted is presents in the ADP and the hardware address of the TE is unknown, DIX transmits an ARP request to the TE. In the case where the hardware address of the TE is obtained from the ARP response that is obtained as the result of the ARP request, DIX transmits the forward IP packet by capsuling the forward IP packet to be transmitted in the Ethernet frame. When there is no ARP response from the TE, DIX quashes the IP packet. In this embodiment, only IP and ARP are permitted as the type field value in the Ethernet frame. When an Ethernet frame of a type field value other than IP and ARP is received, the frame is quashed.

B-11-2-4: Interface for modem signal transmission

Fig. 68 shows each protocol stack for the modem signal transmission of C-Plane and U-Plane in TE side interface of the ADP in the mobile station MS. As clear from Fig. 68, ADP complies with a Hayes-AT conforming protocol. The contents of L2b-C and L2b-U are the items which should be designed as appropriate.

B-11-3: Interface of MS core side

B-11-3-1: C-Plane

B-11-3-1-1: Overview

Fig. 69 shows an example of connection between a plurality of terminal interface units TERM-INT and the MS core in the C-Plane. As shown in Fig. 69, the MS core is able to connect to a plurality of terminal interface units TERM-INT through a bus. Independent identification information TEmID (which may also be written as TEm#) is added to each terminal interface unit TERM-INT. A plurality of function blocs such as CNC, SYC and etc. exist in the MS core, and a unique Function ID (Function #) is added to each block. TLP canies out link control that employs the TEmID and Function ID. The link control includes the management (adding of dynamic ID) of TEmID and the monitoring of connection with the terminal interface unit TERM-INT.

B-11-3-1-2:Lla-C

Lla-C shown in Fig. 69 is a physical interface for transmitting data that is on the C-Plane between the MS core and the terminal interface unit TERM-INT, and satisfies the following conditions.

(1) Condition 1: A plurality of terminal interface units TERM-TNT can be connected to the MS core. It is possible to realize communication between terminal interface units TERM-INT, and communication between any of the terminal interface units TERM-INT and the MS core.
(2) Condition 2: It is possible to monitor all communications described above in MT.
(3) Condition 3: The terminal interface unit TERM-INT side can detect that the terminal interface unit TERM-INT is connected to the MS core, and this information can be notified to the TLP (Terminal Link Protocol) of the terminal interface unit TERM-INT.
(4) Condition 4: The transmission of TLP frame units can be carried out in an asynchronous transmission.

B-11-3-1-3: Detection concept of terminal interface unit connection

Fig. 70 shows the detection concept of the terminal interface unit TERM-INT connection, and Figs. 71 and 72 show flowcharts of the detection processing. As shown in these figures, when a new terminal interface unit TERM-INT is connected, a assignment request of the TEmID and a notification signal of the connection is transmitted from the terminal interface unit TERM-INT to the MS core side. The release of the terminal interface unit TERM-INT is observed periodically by the MS core.

B-11-3-1-4: TLP

The TLP (Terminal Link Protocol) is a L2 protocol for connecting a plurality of terminal interface units TERM-INT to an MS core. The TLP is formulated for the purpose of discriminating between a plurality of terminal interface units TERM-INT which are connected to an MS core, and enabling communication between the terminal interface unit TERM-INT and an MS core (function block), a terminal interface unit TERM-INT and a terminal interface unit TERM-INT, and an MS core (function block) and an MS core (function block). In this embodiment, it is impossible to realize communication between a terminal interface unit TERM-INT and a terminal interface unit TERM-INT, and between each function block. However, the TLP itself is designed to enable the above communication, and is made so that it can expand easily.

B-11-3-1-5: Layer 3 (CNC SYC)

Fig. 73 shows the details of the protocol stack. CNC and SYC will be described below.

(1) CNC

CNC (Call Connection Control) is a layer 3 protocol between an MS core and a terminal interface unit TERM-INT for carrying out calling control. CNC is formulated for the purpose of providing the different calling control protocol (for example, Hayes-AT or ITU-T recommendation Q.931) for each service that is connected to the terminal interface unit TERM-INT as the common procedure to the MS core, reducing the load of on the MS core, and providing expandability.

At the calling origination, the terminal interface unit TERM-INT that received the calling request from the TE transforms the calling request to the calling set request message of the CNC protocol, and notifies this to the CNC Function of the MS core. The MS core that received the calling set request message starts the calling origination processing in the radio section. At the incoming call acceptance, the terminal interface unit TERM-INT starts the incoming call acceptance processing when it receives the calling set display message of the CNC protocol that is transmitted from the MS core which received the incoming call acceptance request in the radio section. The calling set display message is notified to all the terminal interface units TERM-INT that are capable of the reception.

(2) SYC

SYC (System Control) is a layer 3 protocol between an MS core and a terminal interface unit TERM-INT for carrying out the radio control. SYS is formulated for the purpose of notifying information regarding the radio control of the reception signal level etc, which is detected by the MS core, to the terminal interface unit TERM-INT. Furthermore, although it is not realized in this embodiment, the control request may be able to be transmitted from the terminal interface unit TERM-INT to the MS core.

MS core that detected the reception signal level of the perch channel and information concerning channel quality etc., notifies this information to the terminal interface unit TERM-INT by SYC protocol. The terminal interface unit TERM-INT that receives this information can notify this information to the TE with the layer 3 protocol according to the TE that is connected thereto.

B-11-3-2: U-Plane

B-11-3-2-1: Overview

Fig. 74 shows an example of connection constitutions for a plurality of terminal interface units TERM-INT and the MS core in U-Plane. As shown in Fig. 74, the MS core can connect to a plurality of terminal interface units TERM-INT through a bus.

B-11-3-2-2: Lla-U

The Lla-U shown in Fig. 74 is a physical interface for transmitting user data (U-Plane) between the MS core and the terminal interface unit TERM-INT, and satisfies the following conditions.

(1) Condition 1: A plurality of terminal interface units TERM-INT can connect to the MS core. It is possible to realize communication between each terminal interface unit TERM-INT, and communication between the terminal interface unit TERM-INT and the MS core.
(2) Condition 2: Synchronous transmission can be carried out in the transmission procedure of the voice communication service or the unrestricted digital communication service.
(3) Condition 3: A plurality of terminal interface units TERM-INT is connected to the MS core. Since it is possible that these may be used simultaneously (multi-call), a plurality of U-Plane buses is provided between the MS core and the terminal interface unit TERM-INT, and the L1a-U of the terminal interface unit TERM-INT has the capability to select one U-Plane designated from among the plurality of U-Planes.

The arrangement for selection control of the U-Plane is shown in Figure 75. CC number (CC #) is added to a plurality of U-Planes by the MS core. The terminal interface unit TERM-INT (CNC of C-Plane) receives a command from the MS core (CNC of the C-Plane), and selects the U-Plane in actuality.

B-11-3-2-3: LAC-U

B-11-3-2-3-1: Overview

In this embodiment, the protocol (LAC-U) that extends and modifies the ITU-T recommendation Q. 2110 (SSCOP) is used in the U-Plane of layer 2 of the radio interface. In LAC-U, the embodiment is different from standard SSCOP in the PDU format and parameter in the error control sublayer.

The maximum length of the PDU in the U-Plane is 16 - 4096 bytes (variable by 16 byte units) on the transmission side, and is 4096 bytes on the receiving side. The maximum length of the PDU on the receiving side is inevitably determined according to the upper limit value of the maximum length of the PDU on the transmission side. All of the octets including the PDU Type field are moved to the last octet of the PDU to facilitate analysis. Furthermore, the bit length of the PDU Type field is changed to 5 bits according to the addition of SDwithPOLL PDU. Note that while the use of SDwithPOLL PDU in U-Plane is not realized in this embodiment, the format of the PDU is common to the C-Plane in consideration of future extension.

B-11-3-2-3-2: Frame constitution

The frame constitution of LAC-U is shown in Fig. 76. As shown in Fig. 76, LAC-U consists of a layer-3-convergence sublayer and an error control sublayer. The LAC-U (Link Access Control for U-Plane) shown in Fig. 76 transmits a variable length service data unit (SDU) with high reliability between layer 2 users. The layer-3-convergence sublayer carries out segmentation/reassembly of the PDU, and performs layer-3-convergence of the layer 3 PDU and the primitive/parameter mapping for layer 3 and LAC-U. The error control sublayer provides a high reliability transfer function that uses the functions of error control, flow control, and so on.

B-11-3-2-3-3: Functions

B-11-3-2-3-3-1: Functions of layer-3-convergence sublayer

The layer-3- convergence sublayer has functions described below.

(1) Segmentation/reassembly function of the layer 3 PDU

(2) Link control function

(3) Code type identification function

(1) The segmentation/reassembly function of the layer 3 PDU is a function that segments/reassemblies a layer 3 PDU into/from layer-3- convergence PDUs. (2) The link control function is a function that specifies the layer 3 entity which processes the SDU of LAC-U in accordance with SAPI. (3) The code type identification function is a function that identifies the code type when a hybrid ARQ is adapted

B-11-3-2-3-3-2: Function of error control sublayer

The error control sublayer has the functions described below.

(1) Transfer order alignment function (function that aligns the order of LAC-U SDU that is transferred by this layer).
(2) Error correction function by selective retransmission (by numbering, the receiving LAC-U entity can detect the LAC-U SDU that is not received. This function corrects detected sequence error by retransmission.).
(3) Flow control function (function that enables the LAC-U receiving sides to control the speed at which information can be transmitted by the peer entities on the LAC-U transmission side).
(4) Function to notify layer management of error (function that notifies the layer management of an error occurrence when an error is generated).
(5) Keep alive function (function that confirms that two peer LAC-U entities that forms a connection are maintained in a link connection state even when there has been no data transfer for a long time).

(6) Local data recovery function (function that makes it possible for the local LAC-U user to recover the continuous SDU that has not been released yet from the LAC-U entities).

(7) Connection control function (function that carries out the setting, release and resynchronization of the LAC-U connections. This function enables information transfer between users of variable length without delivery guarantee).

(8) User data transfer function (function used in user data transfer between LAC-U users. This function supports either confirmation type data transmission or non-confirmation type data transmission).

(9) Protocol error detection/recovering function (function to detect/recover the error in the protocol).

(10) State notice function (function that enables the peer entities of the calling side and called side to carry out the exchange of condition information).

B-11-3-2-3-4: Primitive

B-11-3-2-3-4-1: List

Next, the primitives that are used in the layer 2 protocol, and the parameters that are used for each primitive, are shown in Table 19. In Table 19, "-" in the boxes means that parameters do not exist or are undefined for the primitive.

Table 19

| Parameters used by layer 2 primitive and each primitive | | | | |
|---|---|---|---|---|
| Primitive | Type | | | |
| | Request | Indication | Response | Confirmation |
| AA-ESTABLISH | LAC-UU BR | LAC-UU | LAC-UU BR | LAC-UU |
| AA-RELEASE | LAC-UU | LAC-UU Source | - | - |
| AA-DATA | MU | MU SN | - | - |
| AA-RESYNC | LAC-UU | LAC-UU | - | - |
| AA-RECOVER | - | - | - | - |
| AA- UNITDATA | MU | MU | - | - |
| AA-RETRIEVE | RN | MU | - | - |
| AA-RETRIEVE COMPLETE | - | - | - | - |
| MAA-ERROR | - | Code Count | - | - |
| MAA-UNITDATA | MU | MU | - | - |

B-11-3-2-3-4-2: Definition of primitives

The definition of the primitives shown in Table 19 will be described as follows.

(1) AA-ESTABLISH: Used in the setting of the point-to-point connection for confirmation type information transfer between two peer user entities.

(2) AA-RELEASE: Used in the termination of the point-to-point connection of confirmation type information transfer between peer user entities.

(3) AA-DATA: Used in confirmation type point-to-point transfer of LAC-U SDU between peer user entities.

(4) AA-RESYNC: Used in the re-synchronous setting of LAC-U connection.

(5) AA-RECOVER: Used during the interval from protocol error to recovery.

(6) AA-UNITDATA: Used in the broadcast type transfer and the point-to-point transfer of non-confirmation type of SDU between peer user entities.

(7) AA-RETRIEVE: Used in the recovery of SDU that is not released from the transmission side yet but is being committed from a user to transmit.

(8) AA-RETRIEVE COMPLETE: Used to provide notice that the SDU which is to be returned to the LAC-U user has disappeared.

(9) MAA-ERROR: Used to provide notice to the layer management of particular events or an error in the LAC-U protocol.

(10) MAA-UNITDATA: Used in the broadcast type of non-confirmation type and the point-to-point transfer between LAC-U and the peer layer management entity.

B-11-3-2-3-4-3: Definition of primitive parameters

The definition of parameters in EC primitives will be described as follows.

(1) Message unit (MU): Used in the information transfer that carries the variable length messages. In the AA-DATA request, AA-UNITDATA request, and MAA-UNITDATA request, this parameter is mapped transparently to the information field of the LAC-U PDU. In the AA-DATA indication, AA-UNITDATA indication, and MAA-UNITDATA indication, the contents of the information field of the received LAC-U PDU is mapped to this parameter. In the AA-RETRIEVE indication, information to be returned to the LAC-U user from the transmission queue (data has not yet been transmitted) or transmission buffer is mapped to this parameter. The length of MU is an integer multiple of 1 octet.

(2) Information between LAC users (LAC-UU): Used to transfer messages between users of variable length during connection control. LAC-UU may be contained in the BGN, BGAK, BGREJ, RS, and END PDUs, but reception is not guaranteed. In request/indication, this parameter is mapped transparently to the LAC-UU field of the LAC-U PDU. In request/indication, the contents of the LAC-UU field of the received LAC-U PDU are mapped to this parameter. The LAC-UU may be null (not exist), but if LAC-UU exists, the length is an integer multiple of 1 octet.

(3) Sequence number (SN): Used to indicate the value of N(S) of the receiving SD PDU, and to support the data recovery operation.

(4) Recover number (RN): Used to support data recovery. RN+1 indicates the value of the N(S) of the first SD PDU to be recovered. A value representing "Unknown" indicates that only the SD PDU which have not been transmitted yet should be recovered. The value representing "Total" indicates that all SD PDUs which exist in both of the transmission buffer and the transmission queue should be recovered.

(5) Buffer release (BR): Indicates whether or not the transmission buffer is released in the subsequent release connection. This parameter permits the release of a selectively confirmed message, even during data transfer. A value representing "Yes" indicates that the transmission buffer and the transmission queue may be released, and a value representing "No" indicates that the transmission buffer and the transmission queue must not be released.

(6) Code: Indicates the type of protocol error which has occurred.

(7) Source: Indicates which of the LAC-U layer or the peer LAC-U user has started a connection release. This parameter takes the value representing either "LAC-U" or "USER." When "LAC-U" is indicated, the user must ignore it even if the LAC-UU parameters exist.

(8) Count: Indicates the number of retransmission of the SD PDU.

B-11-3-2-3-5: Format and parameter

B-11-3-2-3-5-1: Layer-3-convergence sublayer

First, the details of the parameters in the layer-3-convergence sublayer will be described.

SAPI (Service Access Point Identifier) identifies the layer-2 service type which is provided for layer 3, and indicates the service type with 3 data bits. In this embodiment, it is not used.

The W bit of two bits is used in segmentation and reassembly for keeping the correspondence between the layer 3-frame and layer-3-convergence sublayer frames.

The code type indication index designates the type of code when a hybrid ARQ is applied. Whether or not the hybrid ARQ is applied is discerned on the basis of the version of the layer-3-convergence sublayer. In this embodiment, it is not used.

The reservation indicates the version etc. of the layer-3-convergence sublayer with 2 bits. In this embodiment, it is not used.

B-11-3-2-3-5-2: Error control sublayer

B-11-3-2-3-5-2-1: List and format of PDU

Table 20 shows the list of the protocol data unit (PDU) that this embodiment supports.

Table 20

| List of PDU in error control sublayer | | | | |
|---|---|---|---|---|
| Function | Name of PDU | PDU Type field | Description | Retransmissio n number |
| Setting | BGN | 00001 | Initial request | Prescribed with MaxCC |
| | BGAK | 00010 | Acknowledgment response request | - |
| | BGREJ | 00111 | Connection rejection | - |
| Release | END | 00011 | Disconnection command | - |
| | ENDA K | 00100 | Disconnection acknowledgment response | - |
| Re-synchronization | RS | 00101 | Re-synchronization command | Prescribed with MaxCC |
| | RSAK | 00110 | Re-synchronization acknowledgment response | - |
| Recovery | ER | 01001 | Recover command | - |
| | ERAK | 01111 | Recover acknowledgment request | - |
| Acknowledgment type data Transfer | SD<br>POLL | 01000<br>01010 | Order preservation connection type data<br>Transmission status information accompanying request for receiving status information | -<br>- |
| | STAT | 01011 | Solicitation type receiving status information | - |
| | USTAT | 01100 | Un-solicited type receiving status information | - |
| Non-acknowledgment type data transfer Management data transfer | UD | 01101 | Non-number system user data | - |
| | MD | 01110 | Non-number system management data | - |

The definitions and the formats of PDUs shown in Table 20 will be described as follows.

(1) BGN PDU (Begin PDU): Used in the LAC-U link setting between two peer entities. This requests the initialization of the transmission and receiving status variable and the clearing of the transmission and receiving buffer of the peer entity. The format of this PDU is shown in Fig. 82.
(2) BGAK PDU (Begin acknowledgment PDU): Used in the acknowledgment response which indicates that a connection request from the peer entity has been received. The format of this PDU is shown in Fig. 83.

(3) BGREJ PDU (Begin Reject PDU): Used in the rejection of the connection from the peer LAC-U entity. The format of this PDU is shown in Fig. 84.

(4) END PDU (End PDU): Used in the release of an LAC-U connection between two peer entities. The format of this PDU is shown in Fig. 85.

(5) ENDAK PDU (End acknowledgment PDU): Used in the acknowledgment of an LAC-U connection release. The format of this PDU is shown in Fig. 86.

(6) RS PDU (Re-synchronization PDU): Used in the re-synchronization of the buffer and the data transfer status variable. The format of this PDU is shown in Fig. 87.

(7) RSAK PDU (Re-synchronization acknowledgment PDU): Used in the response acknowledging reception of the re-synchronization which is requested by the peer LAC-U entity. The format of this PDU is shown in Fig. 88.

(8) ER PDU (Error Recovery PDU): Used in the recovery from protocol error. The format of this PDU is shown in Fig. 89.

(9) ERAK PDU (Error Recovery Acknowledgment PDU): Used in the acknowledgment response of the recovery from protocol error. The format of this PDU is shown in Fig. 90.

(10) SD PDU (Sequenced Data PDU): Used to transfer PDU with the serial number including the information field that is given from the LAC-U users via the LAC-U connections. The format of this PDU is shown in Fig. 77.

(11) POLL PDU (Poll PDU): Used to request status information in regard to peer LAC-U entity through LAC-U connection. The format of this PDU is shown in Fig. 78.

(12) STAT PDU (Solicited status PDU): Used in the response to the status request which is received from peer LAC-U entity. The information relating to the receiving state of the SD PDU and SDwithPOLL PDU, the credit information for the transmission side of the peer entity, and the sequence number (N(PS)) of POLL PDU or SDwithPOLL PDU that solicitated this PDU are included in this PDU. The format of this PDU is shown Fig. 79.

(13) USTAT PDU (Unsolicited status PDU): Used when the SD PDU loss, which is equal to or more than 1, is newly detected based on the sequence number inspection of SD PDU. The information relating to the receiving status of the SD PDU and the credit information for the transmission side of the peer entity are included in this PDU. The format of this PDU is shown in Fig. 80.

(14) UD PDU (Unit data PDU): Used in an non-acknowledgment type data transfer between two LAC-U data. Although the UD PDU is used when the LAC-U user requests a non-acknowledgment type data transfer, the condition and variable of the LAC-U are not effected in this case. The UD PDU does not carry the sequence number, so that the lost is not recognized. The format of this PDU is shown in Fig. 81.

(15) MD PDU (Management data PDU): Used in a non-acknowledgment type management data transfer between two management entities. Although the MD PDU is used when the management entity requests a non-acknowledgment type management data transfer, the condition and variable of the LAC-U are not effected in this case. The format of this PDU is shown in Fig. 81.

In this embodiment, a PDU that has a PDU Type code that is not prescribed, and a PDU which does not have an appropriate length for the type of PDU displayed, are defined as invalid PDUs. The invalid PDUs is quashed without notifying the transmission side. As the result, no operations are carried out. However, a violation is reported to layer management for a PDU which is not an appropriate length for the PDU of the type which in indicated.

In Figs. 77 through 90, the maximum length k of the information octet and the maximum length j of the LAC-UU are values that satisfy the PDU maximum length which is defined under (1) in section 12-3-1-2-3.

B-11-3-2-3-5-2-2: Characteristics of each PDU format

As described above, the reservation field (R, Rsvd, Reserved) exists in each PDU. The function of the reservation field is to carry out 8 bit alignment, and this field is ignored on the receiving side. The maximum length of the information field in each SD, UD, and MD PDU is a k octet. The value of the k is set by both negotiation procedures which LAC-U does not participate in, and is able to be proscribed by other recommendations which uses LAC-U. Alternatively, the k value can be conducted from the maximum PDU length of the protocol which uses LAC-U. Furthermore, the minimum value of the k is 0 octet.

The coding of STAT, USTAT PDU will now be described.

The USTAT PDU includes two list elements, and there is a case in which the STAT massage which is transmitted is divided to a plurality of STAT PDU. The processing procedure of one STAT PDU is not related to information in the other STAT PDU. This case materializes even when a plurality of STA PDU are generated as the response of one POLL PDU, and several STAT PDU of the generated STA PDUs were quashed.

The list elements in each PDU of STAT, USTAT are odd or even number elements of the list that is used for the selection retransmission request. The odd number element expresses the first PDU of the loss part, and the even number element expresses the first PDU of the receiving sequence (excluding the case where the list is last).

B-11-3-2-3-5-2-3: ch indication index for MAC switching

The ch indication index for MAC switching indicates the type of desirable logical channel to be applied according to traffic, and is used to back-up the MAC switching that is carried out by the MS core. For example, the applied logical channel becomes RACH/FACH in the case where the value of the ch indication index for MAC switching is "00000000", and becomes UPCH in the case where the value of the ch indication index for MAC switching is "00000001."

B-11-3-2-3-5-2-4: States of LAC-U protocol entities

Next, the states of the LAC-U entities will be described. These states are used to prescribe the peer-to-peer protocol. These states are conceptual ideas, so that the duplication will be avoided by showing the general condition of the LAC-U entities in the signal that is exchanged with the user and the sequence of the PDU that is exchanged with the peer entity. The basic states are as follows. (1) State 1: Idle

Each LAC-U entity is initialized to the idle state (state 1) conceptually, and returns to this idle state by connection release.

(2) State 2: connection start-up on output side

The LAC-U entity which requests the connection setting to the peer entity is in the output side connection start-up state (state 2) until receiving the acknowledgment response from the peer entity.

(3) State 3: Input side connection start-up

The LAC-U entity that receives the connection setting request from the peer entity and has a response from the user is in the input side connection start-up state (state 3).

(4) State 4: Output side disconnection start-up

The LAC-U entity which requests a connection release between peers is in the output side disconnection start-up state (state 4) until receiving the acknowledgment that the peer entity has released the connection and shifted to the idle state (state 1). The LAC-U shifts to the idle state after receiving the acknowledgment.

(5) State 5: Output side re-synchronization start-up

The LAC-U entity which requests the re-synchronization of the connection to the peer entity, is in the output re-synchronization start-up state (state 5).

(6) State 6: Input side re-synchronization start-up

The LAC-U entity which receives the re-synchronization request from the peer entity and is waiting for a response from the user is in the input side re-synchronization start-up state (state 6).

(7) State 7: Output side recovery start-up

The LAC-U entity which requests error recovery of the connection with respect to the peer entity is in the output side recovery start-up state (state 7).

(8) State 8: Recovery response start-up

The LAC-U entity which is waiting for the response from the user after notifying user that error recovery is finished is in the recovery response start-up state (state 8).

(9) State 9: Input side recovery start-up

The LAC-U entity which receives the recovery request from the peer entity and is waiting for a response from the user is in the input recovery starting state (state 9).

(10) State 10: Data transfer possible

When the establishment of the connection, the re-synchronization, or the error recovery procedure is finished normally, both of the LAC-U entities are in the data transfer possible state (state 10), and an acknowledgment type data transfer becomes possible.

B-11-3-2-3-5-2-5: State variable of LAC-U

Next, the state variable used in peer-to-peer protocol prescriptions will be described.
The SD PDU and the POLL PDU are numbered independently and sequentially, and have a value in the range from 0 to n-1 (n is a modulus of the sequence number). The modulus is $2^8$, and the sequence number circulates over the whole range from 0 to $2^8$-1. All of the operation methods relating to the state variables VT(S), VT(PS), VT(A), VT(PA), VT(MS), VR(R), VR(H), VR(MR) and the sequence number use the modulo. When the comparison operation of the transmission side variable is carried out, it views VT(A) as the standard. The state variables VT(SQ) and VR(SQ) use the modulo 256 operation.

B-11-3-2-3-5-2-5-1: State variable which transmission side LAC-U is waiting for

(1) VT(S): Transmission state variable

This state variable has the sequence number (in the case of retransmission, the number that is given first) of the new SD PDU which is transmitted next. One is added to the VT(S) after transmitting the new SD PDU (excluding retransmission).

(2) VT(PS): Poll transmission state variable

This state variable has the present value of the poll sequence number. One is added to VT(PS) before transmitting the next POLL PDU.

(3) VT(A): Acknowledgment state variable

This state variable is the sequence number of the SD PDU for which delivery acknowledgment is be carried out next, and is equivalent to the minimum value of the receiving acknowledgment window. The VT(A) is renewed by sequential SD PDU acknowledgment.

(4) VT(PA): Poll acknowledgment state variable

This state variable is the poll sequence number of the next STAT PDU to be received, and is equal to the minimum value of the N(PS) window which can receive the STAT PDU. In the case where a STAT PDU which includes invalid N(PS) outside the window that is sandwiched between VT(PA) and VT(PS) is received, the recovery procedure is started, and the release is carried out. In the case where the STAT PDU is received, VT(PA) is renewed by N(PS) in the STAT PDU.

(5) VT(MS): Maximum transmission state variable

This state variable is the sequence number of the first SD PDU which is not permitted in the peer receiving side. That is, this state variable is permitted through VT(MS) - 1 on the receiving side. On the transmission side, when VT(S) = VT(MS) , a new SD PDU must not be transmitted. This state variable is renewed whenever USTAT, STAT, BGN, BGAK, RS, RSAK, ER and ERAK PDUs are received.

(6) VT(PD): Poll data state variable

This state variable is equal to the number of SD PDU which are transmitted during the time that two POLL PDU are transmitted, or the number of SD PDU which are transmitted until the first POLL PDU is transmitted after Timer_POLL starts. One is added to the VT(PD) in SD PDU transmission including retransmission, and the VT(PD) is initialized to "0" in the one POLL PDU transmission.

(7) VT(CC): Connection control state variable

This state variable has the PDU number of unacknowledged BGN, END, and ER, or the PDU number of RS. One is added to the VT(CC) in the transmission of each PDU of BGN, END, ER or RS. In the case where the END PDU is transmitted by the occurrence of the protocol error, the LAC-U is not waiting for ENDAK PDU (that is, LAC-U shifts directly to state 1 (idle)), and VT(CC) is not added.

(8) VT(SO): Transmission side connection sequence state variable

This state variable is used to identify whether each PDU of BGN, ER and RS is due to retransmission or not. This state variable is initialized to zero at the time of the start of the LAC-U process, and is mapped to N(SQ) field after adding 1 before transmission of each BGN, ER and RS PDU.

B-11-3-2-3-5-2-5-2: State variable which receiving side LAC-U is waiting for

(1) VR(R): Receiving state variable

This state variable is the sequence number of SD PDU of the youngest number which is expected to be received next. When the SD PDU having the expected sequence number is received, this state variable is renewed by the sequence number of SD PDU of the youngest number that is expected anew.

(2) VR(H): Maximum receiving expectation state variable

This state variable is the sequence number of the maximum SD PDU which is expected to be received next. This state variable is renewed in the two case described below.

1) New (not retransmission) SD PDU receiving
2) POLL PDU receiving

(3) VR(MR): Maximum receiving possible state variable

This state variable is the sequence number of the first SD PDU which is not permitted on the receiving side, i.e., the SD PDU is permitted through VR(MR)-1. The receiving side quashes SD PDU of N(S)≥ VR(MR) (This type of SD PDU may also cause a USTAT PDU). Note that if it is not greater than or equal to VR(HO), VR(MR) may not be set to a smaller value.

(4) VR(SQ): Receiving connection sequence state variable

This variable is used to discriminate whether or not each BGN, ER and RS PDU is due to retransmission. When each BGN, ER and RS PDU is received, the value of N(SQ) and this state variable are compared, and the value of N(SQ) is assigned to this state variable. If both values are different, PDU is processed normally, without retransmission being considered, and VR (SQ) is renewed with N (SQ). On the other hand, if both values are equal, PDU is recognized as a retransmission and the simplified process is carried out. In this case, the value of VR(SQ) is not renewed. This state variable is initialized to zero when LAC-U processing is started.

B-11-3-2-3-5-2-6: PDU parameter of LAC-U

Next, the PDU parameter of LAC-U will be described.

(1) N(S)

Whenever each PDU of a new SD or POLL is generated, the VT(S) is mapped to the N(S).

(2) Information field

The information field of each PDU of SD, MD or UD is mapped respectively from the message unit parameter of each request primitive of AA-DATA, MAA-UNITDATA, or AA-UNITDATA. Each are mapped respectively from the message unit parameters of each display primitive of AA-DATA, MAA-UNITDATA, or AA-UNITDATA.

(3) N(PS)

Each time POLL PDU is generated on the transmitting side, VT(PS) is mapped to N(PS) (VT(PS) is a value after addition). The receiving side of POLL PDU maps directory N(PS) of POLL PDU which is received to N(PS) field of the STAT PDU. In order to make the error recovery process simple, each time the transmission side transmits SD PDU, the transmission side stores the present value of VT(PS) as N(PS) to the transmission buffer after correlating the present value with the correspondent SD PDU.

(4) N(R)

Each time a PDU of STAT or USTAT is generated on the receiving side, VR(R) is mapped to N(R).

(5) N(MR)

Each time each PDU of STAT, USTAT, RS, RSAK, ER, ERAK, BGN or BGAK is generated, the VR(R) is mapped to N(MR). This value becomes the standard value of the credit which is permitted on the receiving side.

(6) LAC-UU

LAC-UU in each PDU of BGN, BGAK, BGREJ, END or RS is mutually mapped between the LAC-UU parameter value of the corresponding LAC-U signal.

(7) S (Source) bit

The S bit notifies which of LAC-U self/LAC-U user started the connection release in END PDU. In the case where the transmission of END PDU is started by LAC-U user, the S bit is set to "0." In contrast, when the END PDU is started by LAC-U self, the S bit is set to "1." This bit is mapped to the Source field of the AA-RELEASE indication primitive.

(8) N(SO)

This field transmits the sequence number relating to the connection control. Each time each PDU of new BGN, RS or ER is transmitted, VT(SQ) is mapped to N(SQ). This field is used together with VR(SQ) on the receiving side to identify whether each PDU of BGN, RS or ER is a retransmission or not.

(9) PDU Type field

The coding of a PDU Type field is shown in Table 20.

B-11-3-2-3-5-2-7: Timer

The timer used with the error control sub-sublayer is shown in Table 21. As shown in Table 21, a variable width is provided to the time value in this embodiment. An arrangement is also acceptable, however, in which a variable width is not provided.

Table 21

| List of timers used by LAC-U | | | | |
|---|---|---|---|---|
| Timer name | Default | Timer Value | | |
| | | Min/max value | Step | Number of steps |
| Timer_POLL | 750 msec | 300 ms - 1000 ms | 50 msec | 15 |
| Timer_NO-RESPONSE | 7 sec | 300 ms - 10 sec | 100 msec | 98 |
| Timer_KEEP-ALIVE | 2 sec | 300 ms - 5 sec | 100 msec | 48 |
| Timer_IDLE | 10 sec | 1 sec - 10 sec | 1 sec | 10 |

Table 21 (continued)

| List of timers used by LAC-U | | | | |
|---|---|---|---|---|
| Timer name | Default | Timer Value | | |
| | | Min/max value | Step | Number of steps |
| Timer_CC | 1 sec | 300 ms - 5 sec | 100 msec | 48 |

B-11-3-2-3-5-2-8: LAC-U parameter

The value of LAC-U protocol parameter depends on the application. Each parameter will be described below.

(a) MaxCC

MaxCC is the maximum value of the state variable VT(CC), and coincides with the maximum transmission number of each BGN, END, ER or RS PDU. In this embodiment, the initial value of MaxCC is 4, and the minimum/maximum values are 1/10 respectively.

(b) MaxPD

MaxPD is the maximum possible value of the state variable VT(PD) until VT(PD) is reset to zero after POLL PDU is transmitted, and also the maximum value of counter VT(PD). VT(PD) is a counter for transmitting POLL PDU for each SD PDU of a MaxPD piece. In this embodiment, the initial value of MaxPD is 25, and the minimum/maximum values are 1/255 respectively.

(c) MaxSTAT

MaxSTAt is the maximum permission list element number in STAT PDU. In the case where the list element number becomes more than MaxSTAT, the STAT message must be divided. All of the PDU which carry the divided STAT message include the list terms of the MaxSTAT piaces (there is a case that the last one is not so). This parameter is not used to check the length on the receiving side of the STAT PDU, and is used to divide STAT message on the transmission side only. The MaxSTAT should be an odd number which is equal to or more than three. In this embodiment, the initial value of MaxSTAT is 67, and the minimum/maximum values are 3/255 respectively. The initial value can be set to an optional value, but should not be set to a value exceeding the maximum length of SD PDU.

(d) Clear-buffers

This parameter is set when the connection is established. This parameter holds either of two values, "Yes" or "No." In the case where this parameter is set to "Yes", the LAC-U can release the transmission buffers and the transmission queues when the connection is released. On the other hand, in the case where this parameter is set to "No", the LAC-U cannot release the transmission buffers and the transmission queues when the connection is released. In the case where this parameter is set to "No" during data transfer, if the past message than set up is in the delivery acknowledgment wait state, the LAC-U cannot release the message that was confirmed selectively from the sending buffer.

(e) Credit

This parameter is used to provide credit notice to the layer manager. In the case where the LAC-U is prevented from new SD PDU transmission because credit is lacking, the set value of this parameter becomes "No." In the case where the LAC-U is permitted new SD PDU transmission, this parameter is set to "Yes." This parameter is assigned to "Yes" at the time of initialization.

B-11-3-2-3-5-2-9: LAC-U credit and flow control

(1) Credit and flow control between peer entities

Between peer entities, the receiving side LAC-U provides credit in order to allow transmission of a new SD PDU to the transmitting side LAC-U of peer entities of other side. Note that the process by which the receiving entity determines credit is set appropriately after taking into consideration the amount of usable buffer, the connection band, and the round trip delay.

The credit value is stored in the N(MR) field of each of BGN, BGAK, RS, RSAK, ER, ERAK, STAT, and USTAT PDUs, and then communicated to the transmitting side. N(MR) is mapped to the VT(MS) on the transmitting side. The credit value which is transmitted to the transmitting side indicates the sequence number of the initial SD PDU which is not received at the receiving side.

On the transmitting side, any SD PDU which exceeds the permitted limits based on the credit is not transmitted, while on the receiving side, all SD PDU exceeding the permitted limits based on the credit are discarded. However, depending on the situation, it is also acceptable to carry out USTAT PDU transmission using this type of SD PDU.

A previously allowed credit can be reduced on the receiving side, however, the settings are such that the credit variable VR(MR) on the receiving side is not made smaller than the current VR(H) value. In other words, the settings are such that credit value VR(MR) takes a value greater than VR(H) in the case where the receiving side accepts a SD PDU reception having number of VR(H)-1 and carries out delivery acknowledgment.

The lower limit value for the active window of the protocol on the transmitting side is prescribed by VT(A), while the upper limit value therefor is prescribed by the credit which was informed (VT(MS)-1). In addition, the active window is limited to 28-1 by the protocol modulus. Thus, the credit determined using modulo calculations on the receiving side must take a value between VR(H) and VR(R)-1. For example, if VR(MR) = VR(R) = VR(H) , then the active window is "0", while if VR(MR) = VR(R)-1 , then the active window assumes a maximum value.

On the LAC-U receiving side, buffer is assigned for maintaining the respective connections. As a general rule, in order to avoid discarding normally transmitted data, the usable buffer on the receiving side should be assigned a capacity which is the same or greater than the credit permitted on the transmitting side. However, when the buffer which can be used per connection is limited, it is acceptable to permit a credit which surpasses the usable buffer capacity. While there is a possibility that it will be necessary to discard data in the event that an error occurs, this approach allows a higher though-put to be obtained as compared to a method in which the credit value is restricted by the amount of usable buffer.

Although reception and delivery acknowledgment are completed on the receiving side, it is not possible to discard SD PDU that have not been transferred to a user of superior standing. Thus, in this embodiment, excluding the case where VR(R)=VR(H)=VR(MR) , a buffer capacity is assigned on the receiving side that is sufficient for receiving the SD PDU having the VR(MR) number and transferring it to a user of superior standing. Note that in a method which provides notification of a credit which exceeds the buffer capacity, the usable buffer allotted for maintaining the connection is limited. This type of method should be used only in the case where a LAC-U receiving side using this type of method can maintain the quality of service (QoS) which is demanded by the connection.

(2) Local flow control

A PDU or outer through inner signal reception LAC-U event is typically processed in the order generated. However, events related to the exchange of the connection state information of the LAC-U have a higher priority than data transmission. For example, a mounting arrangement may be considered in which the congestion (long queuing delay, for example) on a lower protocol layer is detected. When congestion is detected in this type of arrangement, data transmission should be temporarily postponed in order to give priority to the connection control message.

The LAC-U entity in this embodiment has a function to postpone each of the primitive services AA-DATA request, AA-UNITDATA request, and MAA-UNITDATA request, when this type of local congestion (lower layer busy) is detected. This LAC-U entity also has a function to postpone a requested SD PDU retransmission. The data transmission order employed in this embodiment realizes the above-described functions without causing a protocol error.

Because of the above-described circumstances, this embodiment provides that in relation to PDU transmissions to the receiving peer entity, the highest degree of priority is awarded to all types of PDUs, excluding SD PDU, MD PDU, and UD PDU. Note that SD PDU, MD PDU, and UD PDU all have the same degree of priority. In this embodiment, in the case where there is both a SD PDU retransmission and a new SD PDU transmission that have not been transmitted yet, the SD PDU retransmission is given priority for transmission. However, this degree of priority is effective only within LAC-U.

B-11-3-3: Example of communication when connecting MS core and a plurality of terminal interface units

A Global ID is employed for notifying a call acceptance display of CNC or reception level information displayed using SYC. The Global ID is notified to all terminal interface units TERM-INT simultaneously. Reception messages in which a self-TEmID is not set are ignored at each terminal interface TERM-INT, and are not transferred to TE. However, all messages received at an MT terminal interface TERM-INT are transferred to TE (i.e., MT). Messages from other terminal interfaces TERM-INT to the MS core are also received at each terminal interface TERM-INT, however, but are ignored at all terminal interfaces TERM-INT other than those for MT use, and not transfer to TE. The preceding discussion is the same in the case of transmission between terminal interfaces TERM-INT.

B-12: Packet transmission control

Packet transmission control will now be explained.

B-12-1: Overview

Packet transmission control in this embodiment has the objective of transmitting data having diverse traffic characteristics, from low density light traffic to high density large capacity traffic, while at the same time planning for high efficiency use of radio and equipment resources. The main characteristics of this packet transmission control will be discussed below.

B-12-2: Switching access methods

With causing a reduction in service quality, this embodiment periodically switches the access method employed in response to the amount of traffic, which varies over time, so that efficient use of radio and equipment resources can be anticipated. Note that "switching access methods" means switching the physical channel/media access control method in response to traffic.

The decision to switch physical channels is carried out autonomously at the base station BS. The following three reasons may be considered as reasons for switching the physical channel. Which of these reasons is employed is based on the settings in the application.

Reason 1: in-band information (information for the physical channel which is desired for use) from ADP of the switching center and ADP of the mobile station MS

Reason 2: monitoring of the amount of reverse/forward traffic by the base station BS

Reason 3: layer 3 information from the mobile station MS to the base station BS requesting switching of employed channel

Switching of the physical channel is determined by a control unit at the base station BS which compares information notified based on reasons 1~3 with a preset threshold value. The specific switching sequence will be explained below.

The allotment of functions relating to switching access methods in this embodiment is shown in Table 16.

Table 16

| Function allotment for switching access methods | | | | |
|---|---|---|---|---|
| ADP | | MS core | | |
| Traffic monitoring | Switching indicator augmentation | Indicator from ADP | Traffic monitoring | Execution of switching |
| performed on layer 2 of U-Plane | • layer 3 of C-Plane is used<br>• LAC-U traffic of layer 2 of U-Plane is used | • layer 3 of C-Plane considered<br>• LAC-U traffic of layer 2 of U-Plane ignored | not performed | performed |

The operation of terminal interface TERM-INT relating to access method switching will now be explained.

(1) In MAC switching (physical channel switching), the following decisions 1,2 (comparison of threshold and average traffic in layer 2 of U-Plane) are performed during transmission, and the type of logic channel desired for use is determined. This decision is carried out independently in reverse and forward channels.

Decision 1: average traffic > threshold → dedicated channel

Decision 2: average traffic < threshold → common channel

The above decisions are carried out each decision cycle. The average traffic value (E) is determined for the interval from the point in time of the decision back through an averaged time period (E=CPS-SDU length/CPS-SDU generation interval). When the averaged time period has not elapsed by the time of decision, the decision is omitted. Moreover, the decision is also omitted in the case where, even if the averaged time period has elapsed, it is within a specific holding time for the initial decision, and there are two or more CPS-SDU within the averaged,time period. Note that average traffic value=0 in the initial value settings in this embodiment.

(2) The result of the current decision is compared to the immediately preceding result. The current result is communicated to the MS core AP as a MAC switching request only in the case where the two results are different. This communication is carried out independently in reverse and forward channels. Note that the AP of the MS core performs MAC switching based on this request. Final MAC switching is carried out simultaneously in reverse and forward channels, so that setting of different physical channels in reverse and forward channels does not occur.

For example, when setting the ch indicator used for MAC switching in a reverse frame, the following decisions 3,4 (comparison of average traffic and threshold) are performed during communication, and the type of logic ch desired for use is set. Once set, the value is preserved and employed until the next comparison is performed. Note that the ch indicator used for MAC switching is equal to UPCH in the initial value settings.

Decision 3: Reverse average traffic > threshold → ch indicator for forward MAC switching=UPCH
Decision 4: forward average traffic < threshold → ch indicator for forward MAC switching=RACH/FACH

Note that there may be a plurality of algorithms, and that algorithm selection and parameter settings are performed according to the directives from controller MS-CNT at ADP start-up. Of course, the aforementioned setting is also possible when calling occurs or during communication, provided that there is a directive from controller MS-CNT. In the setting of initial values, the initial decision holding time is 10s, the decision cycle is 1s, the averaged time period is 10s, the threshold value is 0.1 traffic, and the measured algorithm number is a number showing the algorithms below.

In this embodiment, it is possible to use MT to set the presence or absence of MAC switching control on the C-Plane, and the method for setting the ch indicator used for MC switching in MAC switching control on the U-Plane (setting in response to traffic values/setting of specific values by indicating the ch indicator used for MAC switching).

<u>B-12-3: Control of physical channel switching between mobile station MS and base station BS</u>

It is possible that control of physical channel switching is carried out frequently. Accordingly, in this embodiment, switching control is executed between the mobile station MS and the base station BS, so that switching control does not extend to the control of wire transmissions. In other words, in this embodiment, control of physical channel switching does not require a wire transmission control and a base station control device, or a network control device. Note that it is acceptable to control the phenomenon of overhead increase by providing a plurality of decision threshold values in the control for physical channel switching, and frequently switching the physical channel.

<u>B-12-4: High-speed HHO (Hard Hand Over) between cells</u>

In this embodiment, a diversity hand over is not performed when employing a physical channel used for common control. In other words, the use of a diversity hand over is limited to dedicated physical channels (UPCH) only.

In this embodiment, a Hard Hand Over (HHO) is used as the method in packet transmission, without employing the usual DHO in the dedicated physical channel. In order to avoid an increase in the amount of interference power in a Hard Hand Over, the HHO is carried out with high frequency. However, the wire sections are subjected to a diversity hand over state, with only the radio sections subject to HHO. In this way, the increase in the radio transmission control load due to high frequency HHO can be restrained. In other words, HHO control is executed between the mobile station MS and the base station BS, and a radio transmission control and base station BS control device, and control of a network control device are not necessary.

<u>B-12-5: Hand over control between cells</u>

The order for processing a hand over between cells will now be explained.

(1) As in the case of a regular DHO, the mobile station MS selects the sector which satisfies the initial conditions for a diversity hand over from the perch channel reception level in the surrounding sectors, and informs this to BSC via the base station BS.

(2) BSC sets the link for the wire circuit with respect to the base station BS receiving the diversity hand over, and connects a plurality of links to the DHT (diversity hand over trunk), thereby creating a DHO state between the wire sections.

(3) The mobile station MS constantly measures and compares the propagation loss between the mobile station MS to the base station BS for each base station BS from the perch channel reception level in the surrounding sectors and the perch channel reception levels of other sectors during hand over (HO). When the propagation loss in other sectors during HO is smaller than the propagation loss in the surrounding sectors, and when the difference between the propagation losses is above a specific value, the mobile station MS outputs a request to the surrounding sectors to stop the transmission/reception of packet data.

(4) When the base station BS in the sector surrounded by the mobile station MS receives a request from the mobile station MS to stop the transmission/reception of packet data, it transmits a response signal to the mobile station MS. Thereafter, transmission/reception of packet data between radio sections is halted. However, the wire link settings do not change.

(5) After receiving the response signal from the base station BS in the surrounded sector, the mobile station MS releases the radio circuit with the base station BS in the surrounded sector, and sends a signal to the base station BS in the sector receiving the HO requesting the transmission/reception of the packet data using RACH.

(6) The base station BS which is receiving the HO sets the physical channel which is to be set for packet data transmission from the information received via RACH. The base station BS receiving the HO designates the connection between the wire link and the radio link without changing the link setting for the wire.

B-12-6: Hand over control between sectors

The DHO between sectors can be controlled at the base station BS. For this reason, the DHO between sectors is performed during packet transmission as well, using the maximum ratio combining in the same way as in the case of the line switching mode.

B-12-7: Packet discard

The quality of the communications path tends to become unstable in a mobile communications environment. The ADP in this embodiment is designed to determine packet transmission/discard in response to the communication state. Specific discard processing is as described in section "B-11. Terminal interface unit TERM-INT."

C: Examples

Examples will now be explained in which suitable constants and the like have been decided in the above-described embodiments.

C-1: Antenna ANT1 and ANT2

Efficiency and other such properties of antenna ANT1 and ANT2 are set appropriately on the basis of the above description.

C-2: Radio unit TRX and transmission/reception amplifier AMP

C-2-1: Transmission characteristics

The transmission characteristics of radio unit TRX and transmission/reception amplifier AMP are set appropriately on the basis of the above description.

C-2-2: Reception characteristics

The reception characteristics of the radio unit TRX and the transmission/reception amplifier AMP are set appropriately on the basis of the above description..

C-2-3: Conditions for measuring characteristics

The conditions for measuring the various characteristics are set appropriately on the basis of the above description..

C-2-4: Pilot synchronized detection RAKE combining

Next, pilot synchronized detection RAKE combining in the RAKE combining unit 43 will be explained.

(1) Structure

Pilot synchronized detection RAKE combining in this embodiment is composed of the functions of RAKE combining, searcher, pilot synchronized detection channel estimate, and AFC (automatic frequency control).

(2) RAKE combining

In this embodiment, paths are selected for RAKE combining so that sufficient characteristics are obtained for each diversity branch. The combining method is maximum ratio combining.

(3) RAKE finger function

The RAKE finger number in this embodiment is 6. Each RAKE finger receives the path indicated from the path search function described below. Each finger can receive an optional path for each antenna diversity branch.

(4) Pilot synchronized detection channel estimate

In this embodiment, synchronized detection is performed using a pilot symbol received on a 0.625 ms cycle. The channel estimating algorithm is set as appropriate.

(5) AFC

AFC synchronizes the frequency of the standard signal oscillator for the carrier frequency of the reception signal.

C-3: Base band signal processing unit BB

C-3-1: Transmission power control

C-3-1-1: Overview

(1) RACH transmission power control

The base station BS provides notification of the reverse interference power and the transmission power in the perch channel. The mobile station MS determines the RACH transmission power based on the information provided by the base station BS (open loop control). This control is equivalent to the case where RACH is used in packet transmission.

(2) FACH transmission power control

The perch channel reception EB/IO measured by the mobile station MS is included in RACH. The base station BS determines the FACH transmission power corresponding to the received RACH.

(3) Reverse/forward transmission power control for dedicated physical channel (UPCH)

The UPCH initial transmission power is determined in the same way as the transmission power for RACH and FACH. Thereafter, the base station BS and the mobile station MS shift to Eb/IO base high-speed closed loop control, and open loop control is halted. In high-speed closed loop control, a comparison is made cyclically on the receiving side between the measured value of reception Eb/IO and the target value therefor. The results of this comparison are notified to the transmission side in TPC bits. On the transmission side, relative control of the transmission power is performed based on the TPC bits. In other words, both the base station BS and the mobile station MS have an outer loop function for renewing the target value of the reception Eb/IO in response to the reception quality, so as to satisfy the required reception quality.

(4) Transmission power control during packet transmission

The UPCH initial transmission power is determined by open loop control in the same manner as described under (1) above. Thereafter, high-speed closed loop control as described above under (3) is performed in the state where the pilot symbol and TPC symbol are being transmitted.

An explanation will now be made of transmission power control in the case where transmission of the pilot symbol and TPC symbol are halted in accordance with "C-3-12: DTX control" described below. In this case, the mobile station MS carries out high-speed closed loop control as described above under (3) in the state where the pilot symbol and TPC symbol are being received from the base station BS. In the case where there is a forward asynchronous (see "C-3-5-3-2: Determination of asynchronous") is detected due to a halt in transmission of the pilot symbol and TPC symbol from the base station BS, the mobile station MS renders the reverse transmission power constant from the time of detection of the asynchronous until the point in time when reverse transmission is halted.

Next, an explanation will be made of transmission power control in the case where transmission is reopened after there has been a halt in the transmission of the pilot symbol and TPC symbol. In this case, the initial transmission power value at the mobile station MS when transmission is reopened becomes the value which results when δ dB is added to the transmission power value immediately preceding the halting of pilot symbol and TPC symbol transmission. Note that δ may assume a negative value. At the base station BS and the mobile station MS, the side which first reopens transmission of the pilot symbol and TPC symbol transmission increases the transmission power from the initial transmission power by XdB for each S slot (where, the upper limit of the transmission power is YdBm). Transmission is subsequently initiated from the partner side, and high-speed closed loop control as described under (3) begins once the conditions for determining frame synchronization described below (see (1) under "C-3-5-3-1: Determination of synchronization establishment" below) have been satisfied.

Note that the values for the aforementioned δ, S, X and Y are designated as parameters within the mobile station MS, and may be optionally set, for example, within the following range. The value of Y may be set for each symbol rate.

δ: -10 through +10 dB
S: 1 through 256
X: 1 through 5dB
Y: Max (maximum transmission power for each UPCH) through Min (Max-35 dB)

Note that transmission power control at the mobile station MS can be halted based on the settings from MT (i.e., the transmission power is set to a specific value).

C-3-1-2: SIR base high speed closed loop transmission power control

C-3-1-2-1: Basic operation

The mobile station MS carries out the measurement of the reception Eb/IO at each cycle (0.625 ms) for transmission power control. When the measured result is larger than a standard Eb/IO value, TPC bit "00" is transmitted to the base station BS, while when the measured result is smaller than a standard Eb/IO value, TPC bit "11" is transmitted to the base station BS. The mobile station MS performs a soft decision such as shown in FIG. 91 for the received TPC bit. In the case of a region A shown in the figure, the transmission power is reduced to 1.0 dB, while in the case of a region B shown in the figure, the transmission power is raised to 1.0 dB. The timing for changing the transmission power is timed to be immediately before the pilot symbol. The maximum transmission power is designated for the reverse channel, while maximum and minimum transmission powers are each designated for the forward channel, with control carried out within these limits. The mobile station MS continues this control through the forward synchronization preservation interval described in section "C-3-5-3-2: Determination of asynchronous." Thereafter, once a determination has been made that the preservation steps have been exceeded and a deviation in synchronization has occurred, the reverse transmission power value is rendered constant and the TPC bit is assigned to always be "11."

C-3-1-2-2: Reverse/forward frame timing

The frame timing for a reverse/forward communications channel is designed to enable transmission power control for 1 time slot control delay, so that the pilot symbol position shifts by 1/2 time slot as shown in FIG. 92. As a result, immediate transmission power control is realized.

C-3-1-2-3: Initial operation

The method for shifting from the initial state to closed loop control is shown below.

(1) When the initial transmission power value is designated, the base station BS increases the transmission power at specific time intervals continually for a specific number of times, as a first transmission power increase process. The point in time where this first transmission power increase process is completed is defined as the designated initial transmission power value. These specific values are set in advance as system parameters. This first transmission power increase process has the objective of avoiding a sharp increase in interference power to other mobile stations MS by rapidly transmitting a large transmission power. The specific values set in the system parameters are set so that other mobile stations MS carry out a stepped increase in the transmission power to a degree which permits following of changes in the amount of interference power by the transmission power control. The TPC bit transmitted by the reverse channel at this time has a set pattern so that the transmission power of the mobile station MS gradually increases (00, 11, 11, 00, 11, 11, 00, 11, 11,..., for example). This pattern is preset as a system parameter.
(2) As a second transmission power increase process, the base station BS increases the transmission power control by a specific amount in each specific interval until reverse frame synchronization has been confirmed. These specific values are preset as system parameters, separately from the specific values in the first transmission power increase process. This second transmission power control increase process is a process for guaranteeing establishment of forward radio frame synchronization by gradually increasing the transmission power even when the initial transmission power value is not sufficient for the mobile station MS to establish forward radio frame synchronization. The specific time intervals in this process are comparatively long, on the order of 1 to several seconds.
(3) On the other hand, when the mobile station MS establishes forward frame synchronization, the transmission power value determined by open loop is designated as the initial value, and relative control of transmission power is performed in accordance with the TPC bit received from the base station BS. The TPC bit transmitted by the reverse channel at this time is determined based on the results of measurement of the forward Eb/IO.
(4) When the reverse frame synchronization is established, the base station BS carries out relative control of the transmission power in accordance with the TPC bit received from the mobile station MS. The TPC bit transmitted by the reverse channel is determined based on the results of measurement of the reverse Eb/IO.

C-3-1-3: Transmission power control during diversity hand over between sectors

In a diversity hand over between sectors, measurement of reception Eb/IO and modulation of the TPC bit are carried out after maximum ratio combining between sectors for both reverse and forward channels. The forward TPC bit transmits the same value from a plurality of sectors. Accordingly, the same transmission power control is performed as in the case where diversity hand over is not performed.

C-3-1-4: Transmission power control during diversity hand over between cells

C-3-1-4-1: Reverse transmission power control

(1) Operation of base station BS

As in the case where diversity hand over is not performed, the base station BS measures the reverse reception Eb/IO and, based on the results of this measurement, transmits the determined TPC bit to the mobile station MS.

(2) Operation of mobile station MS

The mobile station MS independently receives the TPC bit in the base station BS units (where diversity between sectors is performed). Namely, the mobile station MS measures the reliability (reception Eb/IO) of the TPC bit for each base station simultaneously, and lowers the transmission power by 1 dB if there is even one "0" in the numerous results of soft decision on TPC bits which satisfy the required reliability. In contrast, the transmission power is increased by 1 dB in the case where there are all "1"s in these results.

C-3-1-4-2: Forward transmission power control

(1) Base station BS operation

The base station BS controls the transmission power in accordance with the received TPC bit in the same way as when diversity hand over is not carried out. When there is a deviation in the reverse synchronization, so that the TPC bit cannot be received, the base station BS renders the transmission power value constant.

(2) Operation of mobile station MS

The mobile station MS measures the reception Eb/IO after site diversity combining, and transmits the TPC bit determined based on these measured results to each base station BS.

C-3-1-5: Outer loop

The mobile station MS has an outer loop function for renewing the standard target Eb/IO for high speed closed loop transmission power control in response to quality information, so that a specific reception quality (average FER) is satisfied.

C-3-1-6: Method for correcting standard target Eb/IO

The initial value of standard target Eb/IO is designated by control unit MS-CNT. Thereafter, the mobile station MS renews standard target Eb/IO based on the results of measurement of the reception quality.

Specifically, when the control unit MS-CNT specifies to the mobile station MS the quality monitoring (FER monitoring, etc.) which is to be initiated, the mobile station MS executes the designated quality monitoring, and communicates the results of this quality monitoring to the control unit MS-CNT. The control unit MS-CNT determines whether or not standard Eb/IO is renewed in accordance with the quality monitoring results communicated by the mobile station MS. The standard Eb/IO is renewed when a determination is made that renewal be performed.

C-3-2: Multicode transmission and multicall

C-3-2-1: Overview

In this embodiment, multicall is performed in which a plurality of independent calls are set in one mobile station MS.

C-3-2-2: Parameters for multicall

The definition of multicall in this embodiment is as shown below.

(1) One mobile station MS is designed to support communications between two different terminal devices. This includes communications concluded between mobile station MS such as voice communications. Thus, when a plurality of external terminals are connected to the mobile station MS, simultaneous communications between two terminals (one terminal in the case voice communications) can be carried out. Control items are shown in (2)~(5) below.

(2) In the case of unrestricted digital communications, the communication between one pair of terminals is as follows.

> Communications between terminals using interfaces comforming to ITU-T recommendation I.430 of up to 2B (64 kbps x 2).
>
> Communications between terminals using interfaces comforming to ITU-T recommendation I.431 of up to 6B (64 kbps x 6).

(3) Multi-call between unrestricted digital communications is controlled as follows.

Multi-call is not carried out between terminals using ITU-T recommendations I.431 and I.430.

(4) Independent dual calling is not set up in packet communications.
(5) When multi-calling between voice communications and unrestricted digital communications, the unrestricted digital communications is up to 2B (64 kbps x 2).

When a new call using 128 ksps occurs during 128 ksps communications (user rate of 64 kbps), there is a shift up to a 256 ksps physical channel.

C-3-2-3: Parameters for multicode transmission

When one call is composed of a plurality of dedicated physical channels (diffuse code), the mobile station MS performs pilot synchronization detection and transmission power control and the like for all the dedicated physical channels within one call.

When a plurality of calls are independently generated at one mobile station MS, and a plurality of spreading codes (short code) are assigned, the mobile station MS performs transmission power control and pilot synchronization detection independently for each spreading code. However, when a plurality of calls are superimposed on one dedicated physical channel, as in the case where two 64 kbps unrestricted digital calls are independently generated and data transmission is carried out in one 256 ksps dedicated channel using shift up control, pilot synchronization detection and transmission power control are carried out in spreading code units.

C-3-3: Variable rate transmission control

Blind rate determination using liklihood during Vertibi decoding and the reception SIR difference between the pilot symbol unit and the symbol unit for the logical channel are carried out as variable rate transmission control.

C-3-4: Synchronized processing

C-3-4-1: At start-up of mobile station MS

The mobile station MS performs cell/sector selection upon start-up, and establishes perch channel synchronization.

In this embodiment, each sector is designed to transmit a perch channel in which a portion of the long code is masked. The long code mask symbol of the first perch channel is spread over through the common short codes of all cells. Thus, the mobile station MS can detect slot timings using this common short code. The long code mask symbol of the second perch channel is spread over the short code associated with the long code within a specific range. Accordingly, mobile station MS can close in on long code candidates sought using the short code.

The self-sector number and long code number of the surrounding cells are notified over the perch channel. Based on the reported information, the mobile station MS establishes perch channel synchronization in other sectors in the same cell and sectors in the surrounding cells, and measures the reception level of the perch channel. The mobile station MS can perform a cell/sector shift decision during the waiting state by comparing the perch channel reception level.

C-3-4-2: During random access

The mobile station MS transmits a RACH during location registration, calling origination, or incoming call acceptance. The base station BS establishes the synchronization of a plurality of RACH transmitted by frame offset, and receives the signal.

C-3-4-3: During establishment of dedicated channel synchronization

A summary of the procedure for establishing synchronization of SDCCH and TCH is shown in FIG. 93. In FIG. 93, the base station BS first initiates transmission of the forward channel in which an idle pattern is set.

Based on perch channel synchronization information, and the time slot offset group and frame offset group communicated from the network, the mobile station MS establishes frame synchronization and chip synchronization of the forward channel. Note that a portion of the pilot symbol pattern is used as the synchronization word. The mobile station MS begins transmission of the reverse channel at a frame timing which is delayed by 1/2 time slot with respect to the forward channel. An idle pattern is set in the reverse channel at this time. Thereafter, the mobile station MS detects and waits for the usual transmission of the forward channel.

The base station BS establishes reverse channel chip and frame synchronization of the reverse channel based on the frame offset and time slot offset groups designated by the switching device. Following establishment of synchronization, the base station BS begins regular transmission of the forward channel, and wafts for regular transmission of the reverse channel.

After detecting the regular transmission of the forward channel, the mobile station MS begins regular transmission of the reverse channel. The base station BS detects the regular transmission of the reverse channel, and subsequently begins transmission to the wire section.

C-3-4-4: During diversity hand over between cells

A summary of the procedure for establishing synchronization during initiation of diversity hand over between cells is shown below, while the flow for synchronization establishment during diversity hand over between cells is shown in FIG. 94.

(1) The mobile station MS measures the difference between frame times for equivalent frame numbers between radio frames of reverse dedicated physical channels during transmission and radio frames of perch channels transmitted by the base station receiving the hand over. The mobile station MS communicates this measured value to the network. This measured value is the chip unit. The measured value is the time difference between the frame timing of the reverse dedicated physical channels with respect to the frame timing of perch channels. The measured value is always indicated by a positive value, and is in the range of 0~[forward long code cycle-1] chip.

(2) The mobile station MS communicates the measured value for the frame time difference to the base station BS control device via the diversity hand over origination of the base station BS.

(3) The base station BS control device notifies the measured value for the frame time difference which is notified to the diversity hand over termination of the base station BS, along with the time slot offset and the frame offset set which are set at the time of the calling origination and the incoming call acceptance. The base station BS control device also notifies to the mobile station MS radio parameters such as the spreading code used in the BTS of the hand over termination, via the base station BS of the hand over origination.

(4) The mobile station MS begins processing to establish chip synchronization for the forward channel from the base station BS of the hand over origination, using the radio parameters that were notified. The reverse channel being transmitted continues to be transmitted without modification.

(5) The base station BS of the hand over origination receives the measured value of the frame time difference, and notice of the frame offset and time slot offset. Using this information, this base station BS begins transmission of the dedicated physical channel, and begins processing to establish synchronization of the reverse dedicated physical channel being transmitted by the mobile station MS.

(6) The mobile station MS establishes chip synchronization of the forward channel from the base station BS of the hand over termination, based on the reception timing for the perch channel of the hand over termination. As chip synchronization is established, the mobile station MS begins maximum ratio combining with the forward channel from the base station BS of the hand over origination.

Note that the transmission timing for the forward dedicated physical channel and the method for establishing synchronization of the reverse dedicated physical channel are as explained in section "B-2: Base station BS transmission and reception timing." Channel setting in the UPCH is carried out according to the same procedure for establishing synchronization as the procedure described above. Refer to the following section "C-3-12-3: Dedicated physical channel for UPCH" for the control carried out after establishing synchronization.

C-3-4-5: Perch channel synchronization of other sectors within same cell

A perch channel spread over the same long code and same short code by a phase difference determined by the system is transmitted in each sector within the same cell. The mobile station MS receives the reported information from the sector which is in the waiting state once initial synchronization is completed. The mobile station MS obtains the self sector number and the sector number with the same cell that are included in the reported information. The mobile station MS can specify the long code phase in other sectors within the same cell based on this information, and can establish perch channel synchronization of other sectors in the same cell.

C-3-5: Initial synchronization establishing function

C-3-5-1: Overview

The synchronization establishing function is for shifting to a waiting state once short code, long code, frame and super frame synchronization have been established for the reception radio channel.

C-3-5-2: Request characteristics

The mobile station MS according to this embodiment can shift to a waiting state within 10s after introduction of the power source under the following conditions (1)~(3).

(1) The transmission path condition is equivalent to that prescribed for reception sensitivity.
(2) The cell/sector search indicated in "C-3-6: Pass search function" described below is performed.
(3) Perch channel detection operation is completed.

C-3-5-3: Synchronization decision

C-3-5-3-1: Decision to establish synchronization

Next, the decision to establish synchronization in the dedicated physical channel (frame synchronization establishment decision and super frame synchronization establishing decision) will be explained.

(1) Decision to establish frame synchronization

The decision to establish frame synchronization for dedicated physical channels is performed by SW detection. The decision to establish frame synchronization is made when radio frames in which the SW non-coinciding bit number is Nb or less continues for $S_R$ frames or more. Note that the values of Nb and $S_R$ can be optionally set, and are suitably set to be within the range of 0~255 for example.

(2) Decision to establish super frame synchronization

Since bits showing the frame number are not present in the dedicated physical channel, the mobile station MS tacitly determines the frame number and establishes super frame synchronization. Note that the frame number is a SFN modulo 64 value in which the frame number of an dedicated physical channel radio frame having a timing which deviates by a specific time interval with respect to the frame timing of the perch channel can be determined from the system frame number (SFN) which is notified through the perch channel.

C-3-5-3-2: Determination of asynchronous

Next, an explanation will be made of the determination of asynchronous with respect to the dedicated physical channel.

In a determination of asynchronous with respect to the dedicated physical channel, monitoring of each radio frame is conducted to determine whether or not the SW non-coinciding bit number is Nb or less.

The determination of the aforementioned conditions is carried out for one specific spreading code (short code) in the case of a multicode transmission in which one calling consists of a plurality of spreading codes. On the other hand, during a multicode transmission by means of a plurality of independent calls, the determination of this condition is carried out for each dedicated physical channel.

The mobile station MS determines that there is a state of asynchronous when the number of radio frames not satisfying the aforementioned conditions is continuous for $S_F$ frames or more (forward synchronization preservation step number: $S_F$). If the number of radio frames satisfying the aforementioned conditions is then continuous for $S_R$ frames or more in this state of asynchronous, then the mobile station MS determines that there is a state of synchronization maintenance (forward synchronization preservation step number: $S_R$). Note that the value of $S_F$ can be optionally set, and is suitably within the range of 0~255, for example.

C-3-6: Pass search function

Next, the path search function in path searcher unit 45 will be explained.

(1) Overview

This function is for measuring the delay profile of a radio transmission path using RAKE finger or the path searcher unit 45 of this embodiment, and indicating the path for reception at the RAKE combining unit.

(2) Average time interval of delay profile

The delay profile average time interval, which is a parameter within the mobile station MS, is the time interval over which instantaneous changes in phasing are averaged, and is obtained by determining the moving average over 10ms through 10s (set in units of 10 ms) or the index weighted average according to corresponding time constants.

(3) RAKE reception path switching cycle

The RAKE reception path switching cycle, which is a parameter within the mobile station MS, is the cycle for selecting the required number of paths in the RAKE combining unit from the averaged delay profile. The RAKE reception path switching cycle can be set to a cycle of 10 ms through 10s (set by units of 10 ms).

(4) Pass search limits

The position where the multi-path is strongest on average is designated as the reception timing in this embodiment, and path searcher unit 45 carries out path search over a ±31 μs range for the reception timing.

C-3-7: Cell/sector search function

The cell/sector search function in cell/sector searcher 46 will now be explained.

(1) Overview

This function is for measuring the reception level of the perch channel in surrounding cells/sectors using the designated short code and long code and reading out the BCCH content.

(2) Search/level measuring code number

**[0421]** In the codes shown in Table 15, measurement of the path level and path search are possible for maximum 128 codes.

(3) Channel number read out from BCCH contents

The content of BCCH, of maximum 20, is read out from code channel with the high reception level.

C-3-8: RSSI, ISSI measurement function

This function is for measuring the signal level (RSSI) of the perch channel or the channel during communications, and for measuring interference power (ISSI) other than that described above.

C-3-8-1: Measurement values by type

The items measured by this function are as follows.

(1) Desired wave level (RSSI)
(2) Interference wave level (ISSI)
(3) Ratio of interference signal power to desired wave (Eb/IO)

C-3-8-2: Range of measurement level

This function enables measurement of level ranging from the prescribed sensitivity point to the prescribed sensitivity point +70dB.

C-3-8-3: Measurement accuracy

The following measurement accuracy is satisfied in this function.

(1) Averaged time interval is 4 pilot symbols: ±3dB
(2) Averaged time interval is 1 frame or greater: ±1dB

Note that these prescribed conditions are for one wave static channel.

C-3-9: Function for generating transmission/reception timing

This function is for generating the transmission timing for the mobile station MS with respect to the reception timing generated by the above-described path search function. The reception timing varies according to changes in the delay profile of the transmission path, however, the amount of change in the transmission timing is limited to 1/4 chip over 10ms and 2 chips over 1s. Discrete control is limited to just the frame head.
The accuracy of the transmission timing is set to within ±0.5 chips at the antenna terminal with respect to the reception timing. However, this accuracy is premised on a normal state in which the delay profile of the transmission path does not change.

C-3-10: Hand over control

Hand over control is carried out in DTCH (including ACCH), UPCH and the FACH/RACH during packet transmission.

(1) Forward channel

- Maximum ratio combining (diversity hand over) of the signal from each sector and cell is carried out at the mobile station MS for DTCH (including ACCH).
- The control described under section "C-3-11: Packet transmission control" is carried out for UPCH and FACH/RACH during packet transmission.

(2) Reverse channel

- Maximum ratio combining at the base station BS is carried out between sectors, and selection at the switching center is carried out between cells, for DTCH (including ACCH).
- The control described under section "C-3-11: Packet transmission control" is carried out for UPCH and FACH/RACH during packet transmission.

(3) Branch number

**[0433]** When the mobile station MS carries out a diversity hand over, the connecting branch number is a maximum of 3, irrespective of the cell interval, sector interval and the mixture thereof. "Branch number" as used here means the number of cells or sectors with which the mobile station MS is communicating.

C-3-11: Packet transmission control

C-3-11-1: Overview

The main characteristics of packet transmission control are as follows. A detailed description of these characteristics is as noted under section "B-12: Packet transmission control."

(1) Channel switching in employed physical channel in response to traffic and other transmission characteristics
(2) Physical channel switching control between the mobile station MS and the base station BS
(3) High speed HHO between cells

(4) Packet discard

C-3-11-2: Physical channel switching control

(1) Switching determination node

A switching determination is carried out based on the following factors at the base station BS which has authority over the sectors surrounding mobile station MS.

(2) Factors for switching determination

The following factors may be employed. Which factors are employed may be optionally set at the base station.

Factor 1: in-band information from the switching center ADP and the mobile station MS ADP
Factor 2: monitoring ofreverse/forward traffic amount by the base station BS
Factor 3: layer 3 information requesting switch in employed channel made from the mobile station MS to the base station BS

(3) Method for determining switching

The information reported based on factor (2) above and a preset threshold are compared, and a determination is made at the base station BS control unit.

(4) Switching control method

The switching processing sequence is shown in FIGS. 95 (a) and (b). FIG. 95(a) shows the switching from the common control physical channel to the dedicated physical channel. FIG. 95(b) shows the sequence for switching from the dedicated physical channel to the common control physical channel. Switching control is processed only between the mobile station MS and the base station BS, and is not related to the base station BS control device and wire section. The control signal between the mobile station MS and the base station BS is layer 3 information, and is processed at the base station BS.

C-3-11-3: Hand over control between cells

The process for hand over control between cells is as shown in section "B-12-5: Hand over control between cells." An example of the processing sequence is shown in FIG. 96.

This processing sequence is the same irrespective of the physical channel employed (physical channel for common control/dedicated physical channel). In setting/release of a radio link, processing to set/release the physical channel is necessary for dedicated physical channels, but is not necessary for common control physical channels.

C-3-11-4: Hand over control between sectors

As indicated in the section "B-12-6: Hand over control between sectors," DHO between sectors can be control at the base station BS. For this reason, inter-sector DHO using maximum ratio combining can be carried out during packet transmission in the same way as in the case of a line switching mode.

Since transmission/reception timing cannot be freely set in the case of a common physical channel (FACH, RACH), maximum ratio combining for both reverse and forward is not possible. Thus, switching control is carried out between the base station BS and the mobile station MS in accordance with propagation loss in the perch channel, so that transmission/reception is carried out only in one sector. The switching control method is the same as the processing for hand over between cells shown in FIGS. 95(a) and (b).

C-3-12: DTX control

This control is applied only to dedicated physical channels.

C-3-12-1: DTCH, ACCH for dedicated physical channels

(1) Transmission

Under DTX control in dedicated physical channels used for voice communications, DTCH symbol transmission is ON when voice information is present, and OFF when voice information is absent (VOX function). The specific operations for the VOX function and the determination of whether or not voice information is present are as described above. For ACCH during voice communications, when voice information is present and there is no information being transmitted using ACCH, then a dummy bit is transmitted. Transmission is halted only when there is no voice information and there is no information transmitted using ACCH. When voice information is present and there is no information transmitted using ACCH, a dummy bit is inserted into the W bit and the CPS PDU portion, so that reassembly of CPS PDU in error can be avoided.

The pilot symbol and the TPC symbol are constantly transmitted, irrespective of the presence or absence of voice information and whether or not there is control information. The power ratio between transmission power (Pon) when transmission is ON and the transmission power (Poff) when transmission is OFF is set to satisfy specific conditions. The transmission ON/OFF patterns are the same for all 16 time slots within the radio frame. DTX control is carried out in radio frame (10ms) units. DTX control is not carried out for dedicated physical channels used for data transmission, but rather they are constantly transmitted. However, when there is no information to be transmitted in the ACCH of the aforementioned channel, then transmission with a dummy bit inserted in the CPS PDU portion and the W bit is carried out in the same way as during voice communications. Information for communicating the presence or absence of voice information and the presence or absence of control information is not transmitted (excluding pre/post amble for providing notice that transmission has started or ended in VOX control).

(2) Reception

The method for determining the presence or absence of reception user information (voice information) and control information is shown in Table 22. The symbol average reception power in the table indicates the average value of the reception power for all corresponding symbols within 1 radio frame. $P_{DTX}$dB is a parameter within the mobile station MS and here is optionally set to be within the range of -30~0dB.

Table 22

| Method to determine presence or absence of reception user information and control information | | |
|---|---|---|
| Type of Information | Information present | Information absent |
| voice information | Coding unit CRC in DTCH OK, or power ratio of average reception power for pilot and TPC symbol to average reception power of DTCH symbol is $P_{DTX}$dB or less. | Coding unit CRC in DTCH NG, and power ratio of average reception power for pilot and TPC symbol to average reception power of DTCH symbol is $P_{DTX}$dB or more. Where, when a determination is made that voice information is absent, DTCH data is transmitted to voice CODEC. |
| control information | Coding unit CRC in ACCH OK. | Determination based on W bit or coding unit CRC NG in ACCH. |

C-3-12-2: Dedicated physical channel for SCCCH

The dedicated physical channel for SDCCH is placed in the SDCCH symbol transmission ON state when there is control information to be transmitted, and is placed in the SDCCH symbol transmission OFF state when there is no control information to be transmitted. The pilot symbol and TPC symbol are constantly transmitted irrespective of the presence or absence of control information. The power ratio between transmission power (Pon) during ON transmission and transmission power (Poff) during OFF transmission is set to satisfy specific conditions. The ON/OFF transmission pattern is the same for all 16 time slots within the ratio frame. In addition, DTX control is carried out in radio frame (10ms) units.

C-3-12-3: Dedicated physical channel for UPCH

The dedicated physical channel for UPCH is placed in the UPCH symbol transmission ON state when there is control information or user information to be transmitted, and is placed in the UPCH symbol transmission OFF state when there is no control information or user information to be transmitted. Transmission of the pilot symbol and TPC symbol are controlled as described below at the base station BS and the mobile station MS in response to the presence or absence of control information or user information to be transmitted.

C-3-12-3-1: Function for halting transmission of pilot symbol and TPC symbol

C-3-12-3-1-1: Base station BS control method

The base station BS determines the necessity for transmitting a pilot symbol and TPC symbol for each radio frame. When both of the following conditions 1,2 are satisfied in the state where the base station BS is transmitting the pilot symbol and TPC symbol, then transmission of the pilot symbol and the TPC symbol in all radio frames is halted. Even in an interval which does not have control information or user information to be transmitted, the base station BS transmits all pilot symbols and TPC symbols until the following conditions 1,2 are satisfied, and halts transmission of the UPCH symbol.

(1) Condition 1: Passage of $F_{NDATA\text{-}b}$ radio frames or more once there is no more control or user information to be transmitted
(2) Condition 2: Result of CRC check of forward reception radio frame is continuous, with $F_{CRC\text{-}b}$ radio frames or more NG

C-3-12-3-1-2: Operation of mobile station MS

The mobile station MS determines the necessity for transmitting a pilot symbol and TPC symbol for each radio frame. When both of the following conditions 3,4 are satisfied in the state where the mobile station MS is transmitting the pilot symbol and TPC symbol, then transmission of the pilot symbol and the TPC symbol in all radio frames is halted. Even in an interval which does not have control information or user information to be transmitted, the mobile station MS transmits all pilot symbols and TPC symbols until the following conditions 3,4 are satisfied, and halts transmission of the UPCH symbol.

(1) Condition 3: Passage of $F_{NDATA\text{-}m}$ radio frames or more once there is no more control or user information to be transmitted
(2) Condition 4: Detection of deviation in reverse radio channel synchronization

The value of $F_{NDATA\text{-}m}$ is optional, and is suitably set here to be in the range of 0~255.

C-3-12-3-2: Control of reopening pilot symbol and TPC symbol transmission

Once one of the following conditions 5 and 6 is satisfied in the state where both the mobile station MS and the base station BS have each halted transmission of the pilot symbol and TPC symbol, then transmission of the pilot symbol and TPC symbol is reopened for all radio frames.

(1) Condition 5: Generation of control information or user information to be transmitted
(2) Condition 6: Detection of OK for result of CRC check when reception frame synchronization has been established

When both the base station BS and the mobile station MS make a determination to reopen transmission of the pilot symbol and TPC symbol, the W bit, U/C bit, TN bit, and CPS-SDU bit are all designated in advance as dummy bits, and a CRC coded radio frame is transmitted with a $F_{Dummy}$ frame. Thereafter, the radio frame in which control information or user information to be transmitted is relayed. Of course, the pilot symbol and TPC symbol are also transmitted from the radio frame in which the dummy bit has been inserted. The $F_{Dummy}$ value is optional, and here is suitably set to be in the range of 0~255.

C-3-12-3-3: When DTX control is OFF

The following transmission control is performed when OFF is indicated for UPCH DTX control.

In radio frames in which the pilot symbol and TPC symbol are being transmitted following execution of the above-described transmission stop/start control, and which do not have control information or user information to be transmitted, all bits (W bit, U/C, TN, inner coding units) within the UPCH CRC coding limits are set to continuous transmission ON within the radio frame. When there is no transmission information and transmission of the pilot symbol and TPC symbol are halted, transmission of the UPCH symbol is also halted and a designation of continuous transmission OFF is made in the radio frame.

The power ratio between the transmission power (Pon) during ON transmission and the transmission power (Poff) during OFF transmission for the UPCH symbol, pilot symbol and TPC symbol is set to satisfy specific conditions. The transmission ON/OFF pattern is the same for all 16 time slots in the radio frame. The DTX control is carried out in radio frame (10ms) units.

C-3-13: Function for synchronizing outer coding synchronization processing

In outer coding, 80ms of data constitutes one processing unit. The outer coding processing is carried out in synchronization with the radio frame (10ms). Sequence number (S) is assigned to each inner coded unit in the outer coding processing units, with S used to synchronize outer coding processing. A concept of outer coding synchronization is shown in FIG. 97. FIG. 98 shows the processing flow to establish synchronization and FIG. 99 shows the processing flow to monitor for synchronization deviations in the processing to maintain synchronization in outer coded synchronization. Note that the initial values for the forward preservation step number (NF) and the reverse preservation step number (NR) are both 2.

C-3-13: Bit transmission method

In this embodiment, the dummy bit is subjected to CRC coding, with all dummy bits being '0'.

The idle pattern is inserted in all CRC coded fields in the inner coding units, and includes the CRC check bit. This pattern is an optional PN pattern, and constitutes the same pattern in all the inner coding units for each logical channel. In addition, this pattern is one such that the result of the CRC check is NG when there is no error in this pattern on the receiving side.

C-4: Overview of terminal service

A connection concept for an external terminal with respect to the mobile station MS for this embodiment is shown in FIG. 100. As shown in this figure, a data terminal having an infrared interface (Ir IF) can communicate with the mobile station MS in this embodiment. In addition, if an adapter for translating IrDA, RS-232C, the Ethernet, and ITU-T recommendation 1.430 to one another is provided to the outside, a data terminal or an ISDN not having Ir IF can communicate with the mobile station MS.

C-4-1: Voice

Voice signals introduced from an external hand set or inner housed microphone are A/D converted in voice CODEC and coded at each mobile station MS in this embodiment. On the other hand, the coded signal is decoded in voice CODEC, A/D converted and output from the external handset or inner stored speaker of the mobile station MS.

C-4-2: Packet signal transmission

(1) Overview

Packet transmission in this embodiment is for carrying out TCP/IP (Transmission Control Protocol/Internet Protocol) packet service communications through radio sections. Packet transmission control as described under section "B-12: Packet transmission control" is employed for transmission control for this radio section.

As described in the section "C-3: Base band signal processing unit BB," in this embodiment, the forward interference power and the transmission power of the perch channel is informed by the base station BS through BCCH. Based on this information, the mobile station MS is able to know the quality of the forward communications. Thus, the L2 DIX of the ADP may be designed to determine transmission/discard of the packet based on this communications quality. The method for selecting the packet to be discarded is optional. For example, a design is acceptable in which a packet to be retransmitted is priority discarded, so that repeating a retransmission can be avoided. A design is also acceptable in which a number of untransmitted packets corresponding to the communications quality is interpolated from the buffer, so that an anticipated buffer overflow can be avoided. Note that a design is also acceptable in which, when the forward and reverse communications quality is roughly the same, the forward communications quality is measured at the mobile station MS, and packet transmission/discard based on this communications quality is performed.

(2) Offered service

The packet transmission service in this embodiment permits changes in quality in response to traffic. The mobile station MS in this embodiment enables packet transmission up to 256 ksps (user rate 472.8 kbps), however, it is not necessary that all mobile stations be capable of a packet transmission of this speed. Namely, mobile stations may exist which do not support packet transmission itself.

C-4-3: Unrestricted digital signal transmission

(1) Overview

In this embodiment, unrestricted digital signal transmission is supported in order to carry out communications which is suitable for fixed ISDN service.

(2) Offered service

The unrestricted digital signal transmission in this embodiment offers service suitable to the Bch service in current fixed N-ISDN. This service is realized by connecting an existing ISDN terminal to the mobile station MS. The mobile station MS in this embodiment enables packet transmission of up to 1024 ksps (user rate: 384 kbps).

C-4-4: Modem signal transmission

(1) Overview

Modem signal transmission in this embodiment is for carrying out personal computer communications or other such non-telephone communications, excluding packet applications. Transmission control in the radio section uses the packet transmission control described above.

(2) Offered service

The above-described modem signal transmission is provided for communication with an existing modem (MODEM) which performs data compression based on ITU-T recommendation V.42 bis or the like, error control based on ITU-T recommendation V.42 or the like, and modulation/demodulation based on ITU-T recommendation V.34 or the like.

C-5: Human-machine interface

The location of the keypad and display are optional.

C-6: Control unit MS-CNT

The control unit MS-CNT for the mobile station MS in this embodiment carries out radio control (radio unit TRX, base band signal processing unit BB), device inner signal control, terminal interface control (terminal interface unit TERM-INT), and the like.

## Claims

1. A wide band CDMA communication method which transmits spread information after spreading transmission information using predetermined codes; wherein when the transmission information different from one another are transmitted at the same time through a plurality of channels using common control information, the wide band CDMA communication method comprises the steps of:

spreading various transmission information using codes, the codes being allocated to the channels, respectively;

transmitting the spread transmission information through the channels;

spreading the control information using a common code, the common code being common to the plurality of channels; and

transmitting the spread control information.

**2.** A wide band CDMA communication method according to claim 1, wherein the spread control information is transmitted through only one channel among the channels.

**3.** A wide band CDMA communication method according to claim 2, wherein the transmission power of the control information is the transmission power of the transmitted information multiplied by the number of the channels through which the spread transmission information are transmitted.

**4.** A wide band CDMA communication method which transmits spread information to a radio section after spreading transmission information using a predetermined code; wherein the wide band CDMA communication method comprises the step of:

determining to transmit or to discard the transmission information on the basis of the communication quality of the radio section.

**5.** A wide band CDMA communication method which transmits spread information to a radio section after spreading transmission information using a predetermined code; wherein the wide band CDMA communication method comprises the step of:

determining to transmit or to discard the transmission information on the basis of the communication status of the radio section.

**6.** A wide band CDMA communication method according to claim 5, wherein the transmission information is discarded when calling fails.

**7.** A wide band CDMA communication method which transmits spread information to a radio section after spreading transmission information using a predetermined code; wherein the wide band CDMA communication method comprises the steps of:

discarding the transmission information until a predetermined time passes after a calling is released.

FIG. 1

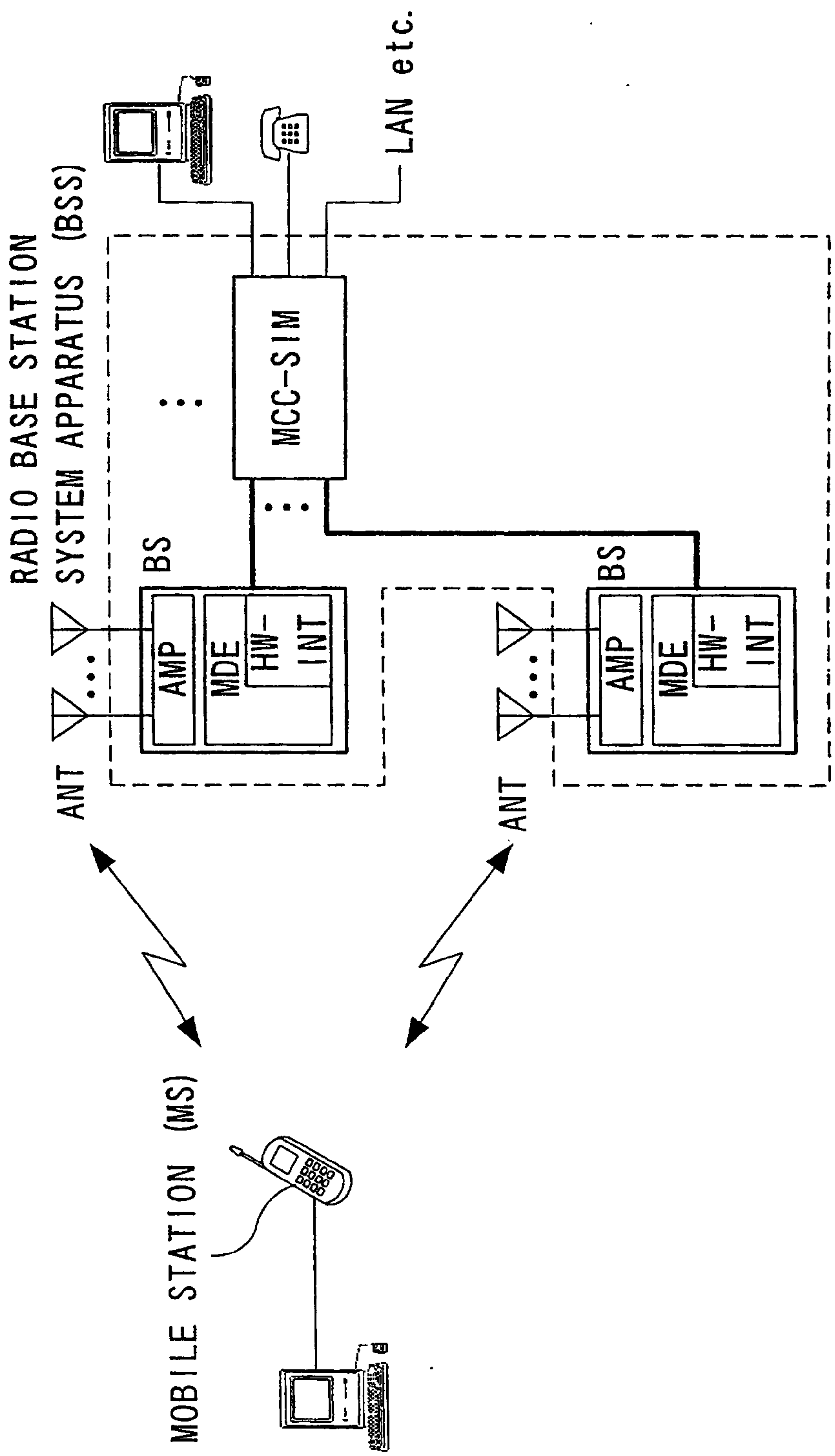
RADIO BASE STATION
SYSTEM APPARATUS (BSS)
LAN etc.
MCC-SIM
BS
AMP
MDE
HW-
INT
ANT
BS
AMP
MDE
HW-
INT
ANT
MOBILE STATION (MS)

FIG. 2

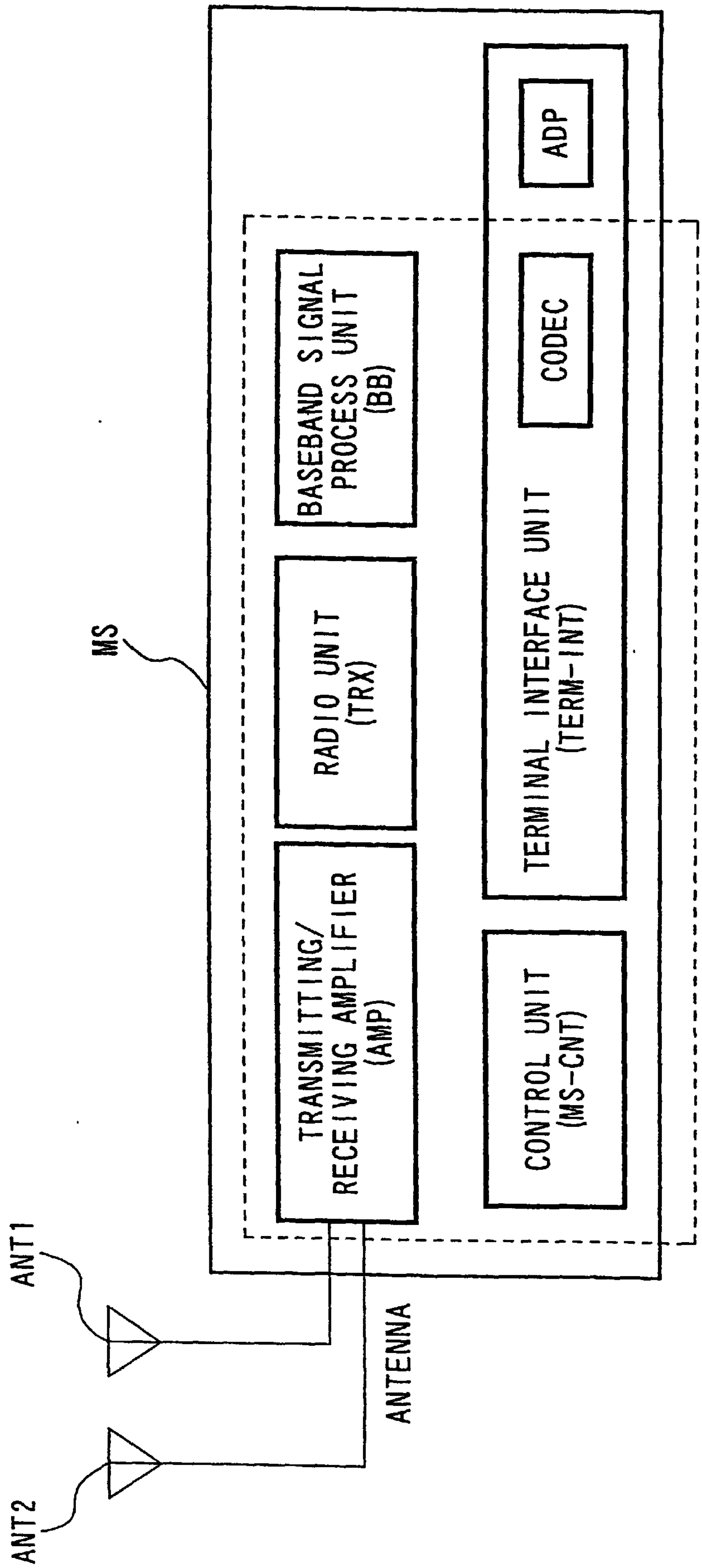
MS
TRANSMITTING/
RECEIVING AMPLIFIER
(AMP)
RADIO UNIT
(TRX)
BASEBAND SIGNAL
PROCESS UNIT
(BB)
CONTROL UNIT
(MS-CNT)
TERMINAL INTERFACE UNIT
(TERM-INT)
CODEC
ADP
ANT1
ANTENNA
ANT2

FIG. 3

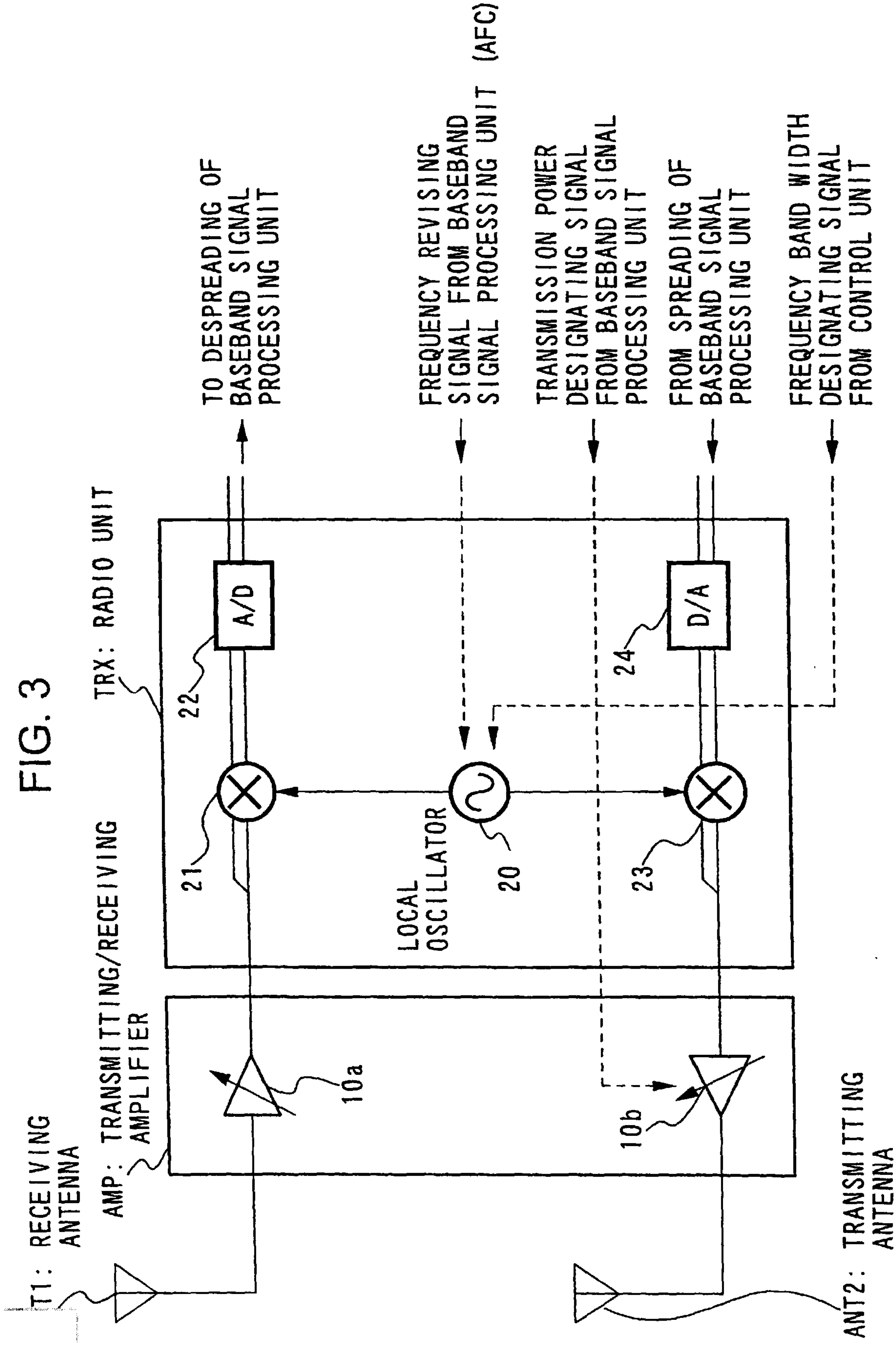
T1: RECEIVING ANTENNA
AMP: TRANSMITTING/RECEIVING AMPLIFIER
TRX: RADIO UNIT
10a
10b
21
22
A/D
20
LOCAL OSCILLATOR
23
24
D/A
ANT2: TRANSMITTING ANTENNA
TO DESPREADING OF BASEBAND SIGNAL PROCESSING UNIT
FREQUENCY REVISING SIGNAL FROM BASEBAND SIGNAL PROCESSING UNIT (AFC)
TRANSMISSION POWER DESIGNATING SIGNAL FROM BASEBAND SIGNAL PROCESSING UNIT
FROM SPREADING OF BASEBAND SIGNAL PROCESSING UNIT
FREQUENCY BAND WIDTH DESIGNATING SIGNAL FROM CONTROL UNIT

FIG. 4

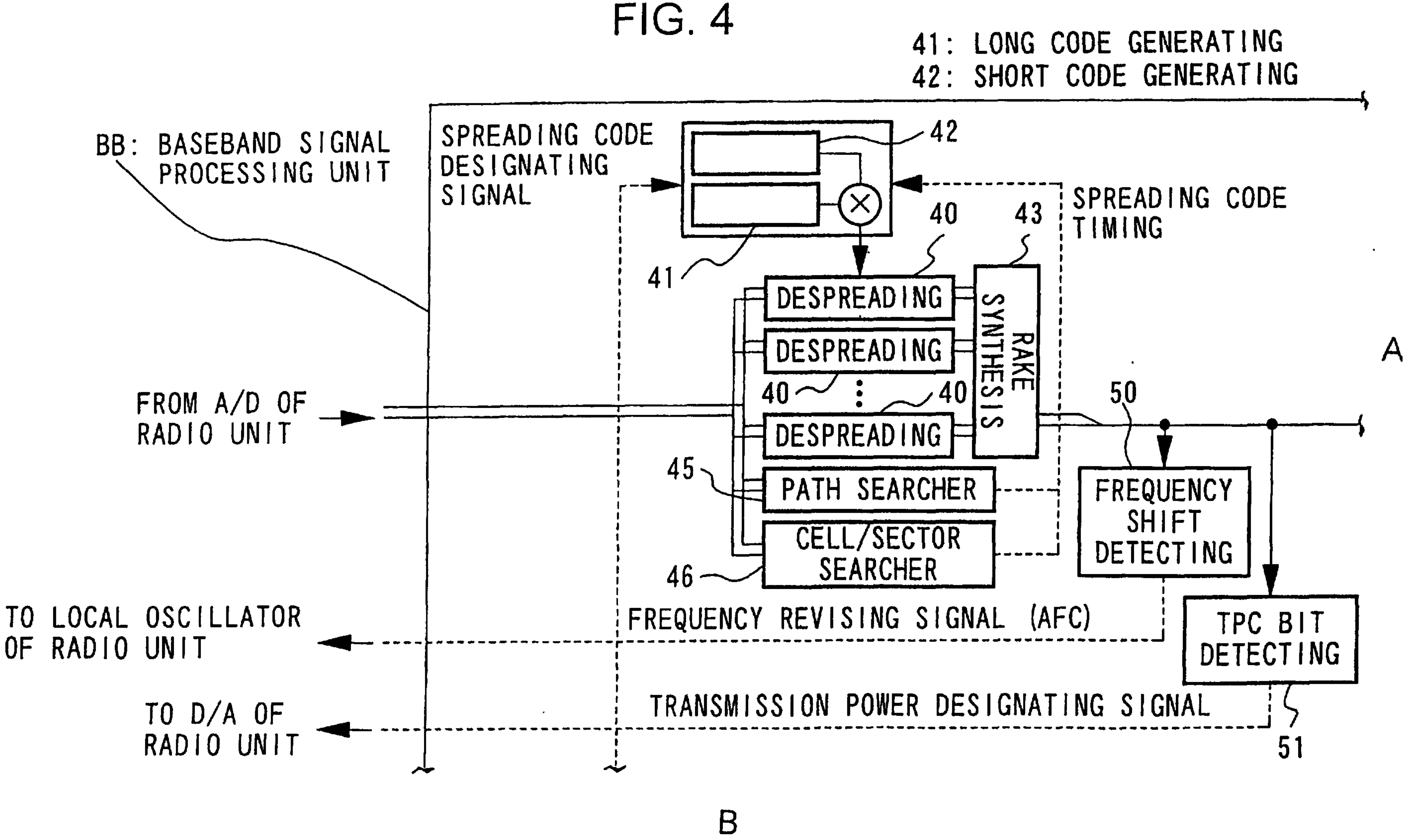
41: LONG CODE GENERATING
42: SHORT CODE GENERATING
BB: BASEBAND SIGNAL PROCESSING UNIT
SPREADING CODE DESIGNATING SIGNAL
SPREADING CODE TIMING
42
41
40
43
DESPREADING
DESPREADING
40
40
DESPREADING
RAKE SYNTHESIS
FROM A/D OF RADIO UNIT
45
PATH SEARCHER
CELL/SECTOR SEARCHER
46
50
FREQUENCY SHIFT DETECTING
TPC BIT DETECTING
51
A
TO LOCAL OSCILLATOR OF RADIO UNIT
FREQUENCY REVISING SIGNAL (AFC)
TO D/A OF RADIO UNIT
TRANSMISSION POWER DESIGNATING SIGNAL
B

CONTINUANCE OF FIG. 4

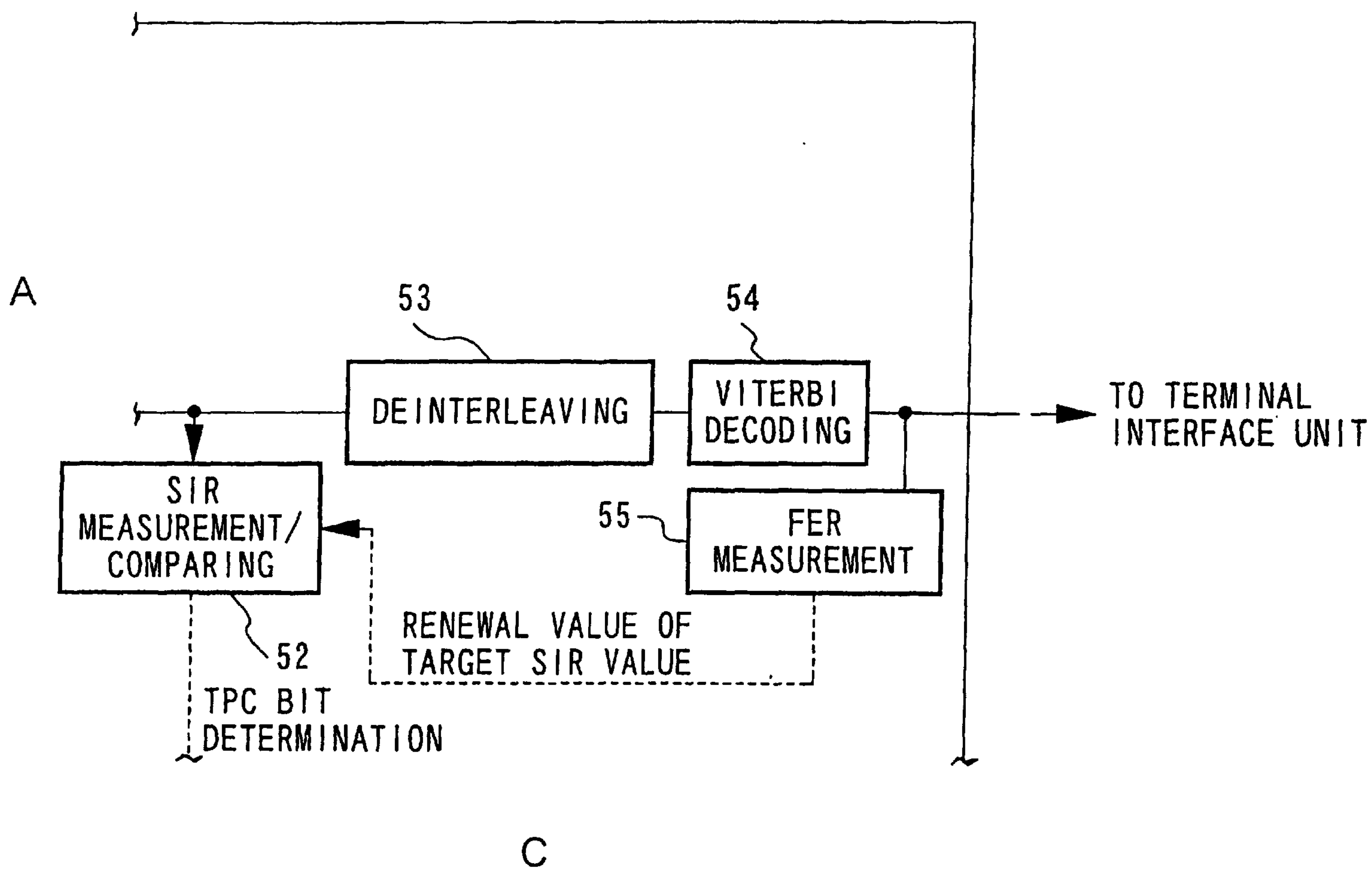

CONTINUANCE OF FIG. 4

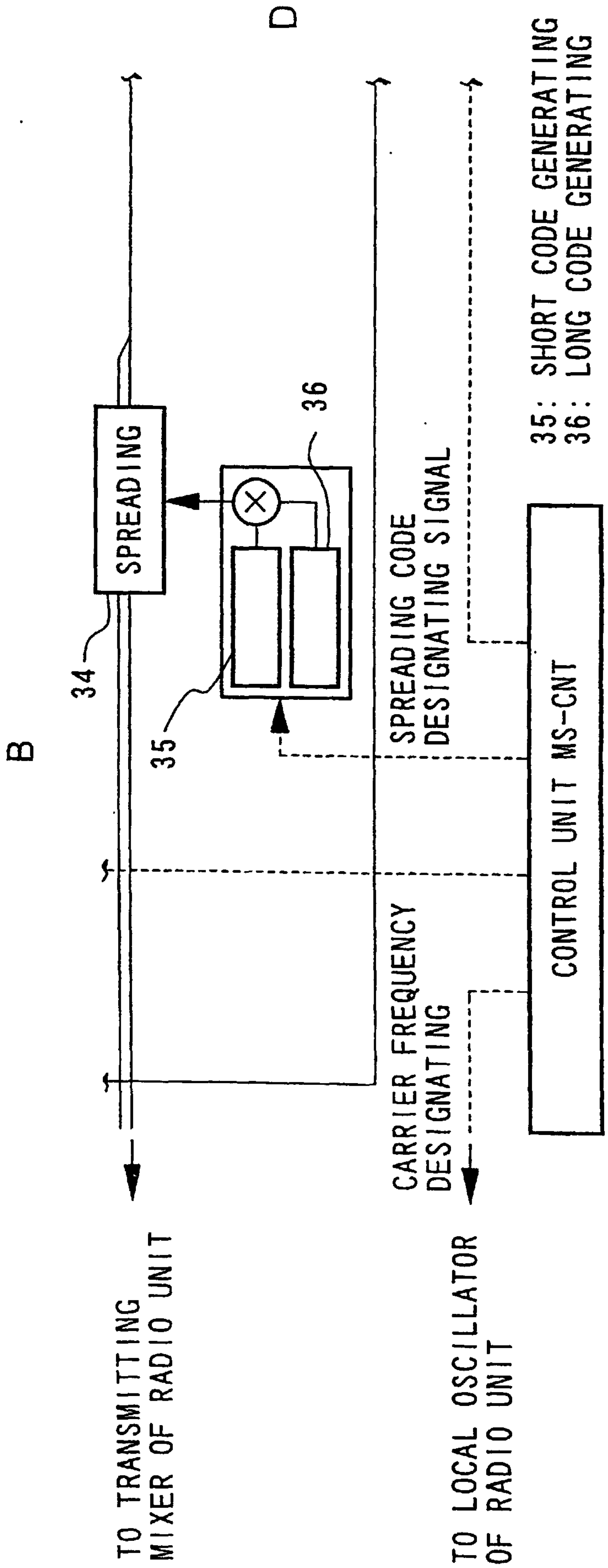

CONTINUANCE OF FIG. 4

C

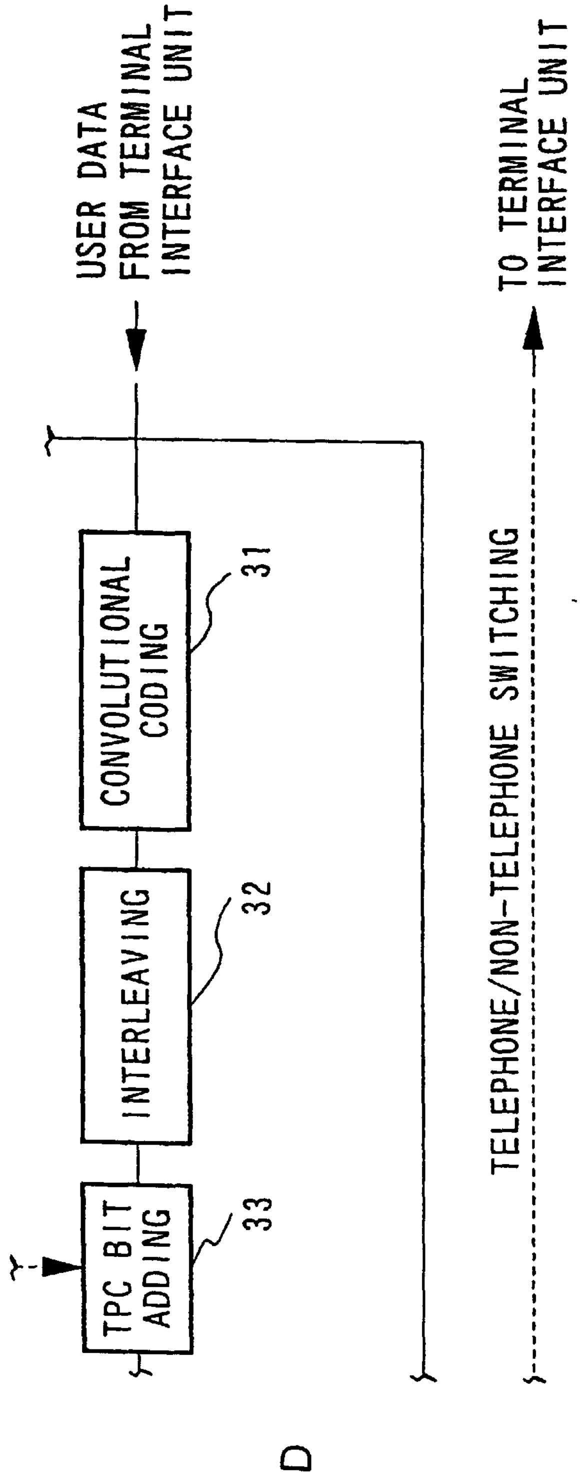

FIG. 5

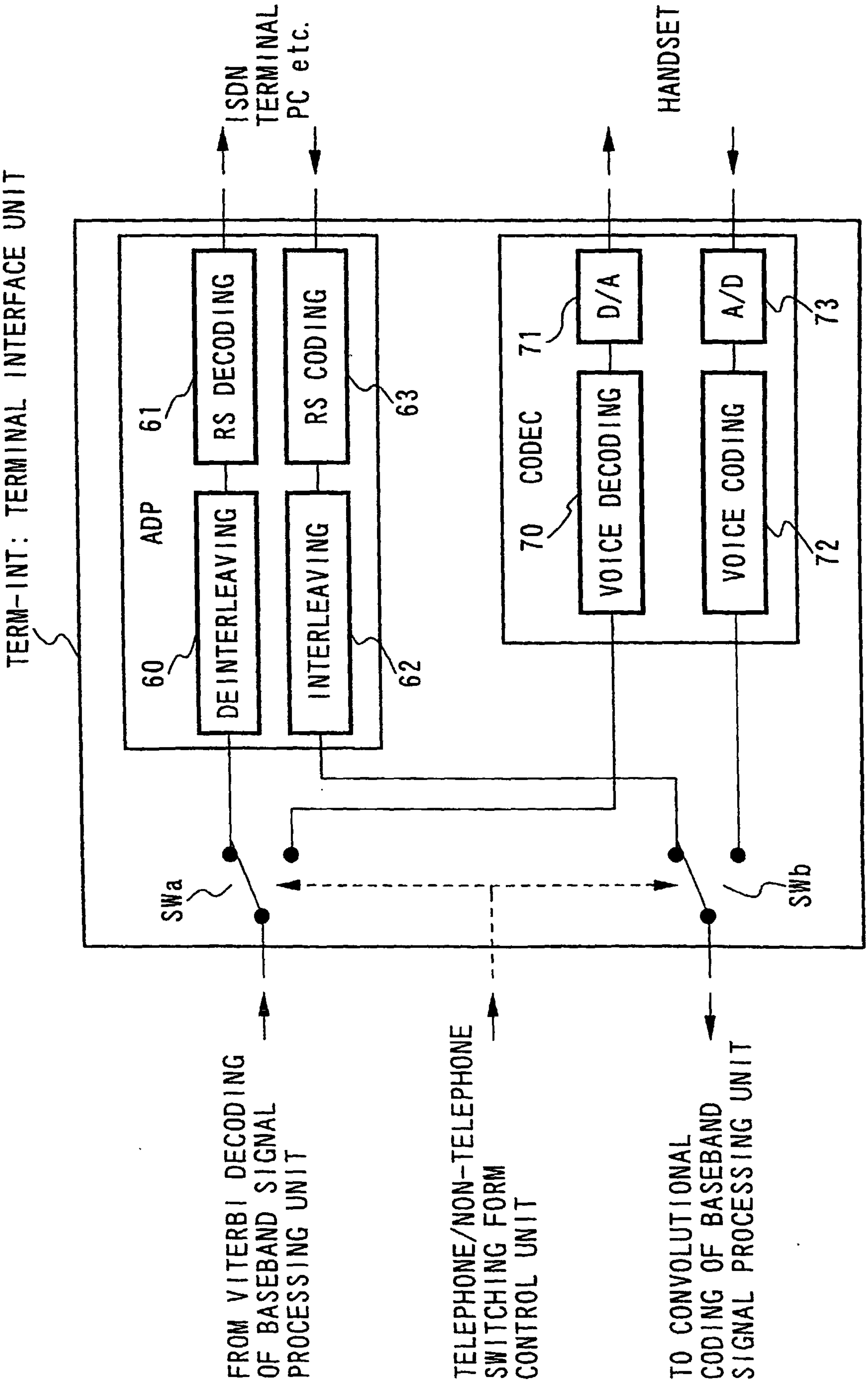
TERM-INT: TERMINAL INTERFACE UNIT
ADP
60
DEINTERLEAVING
61
RS DECODING
INTERLEAVING
62
RS CODING
63
ISDN TERMINAL PC etc.
CODEC
70
VOICE DECODING
71
D/A
VOICE CODING
72
A/D
73
HANDSET
SWa
SWb
FROM VITERBI DECODING OF BASEBAND SIGNAL PROCESSING UNIT
TELEPHONE/NON-TELEPHONE SWITCHING FORM CONTROL UNIT
TO CONVOLUTIONAL CODING OF BASEBAND SIGNAL PROCESSING UNIT

FIG. 6

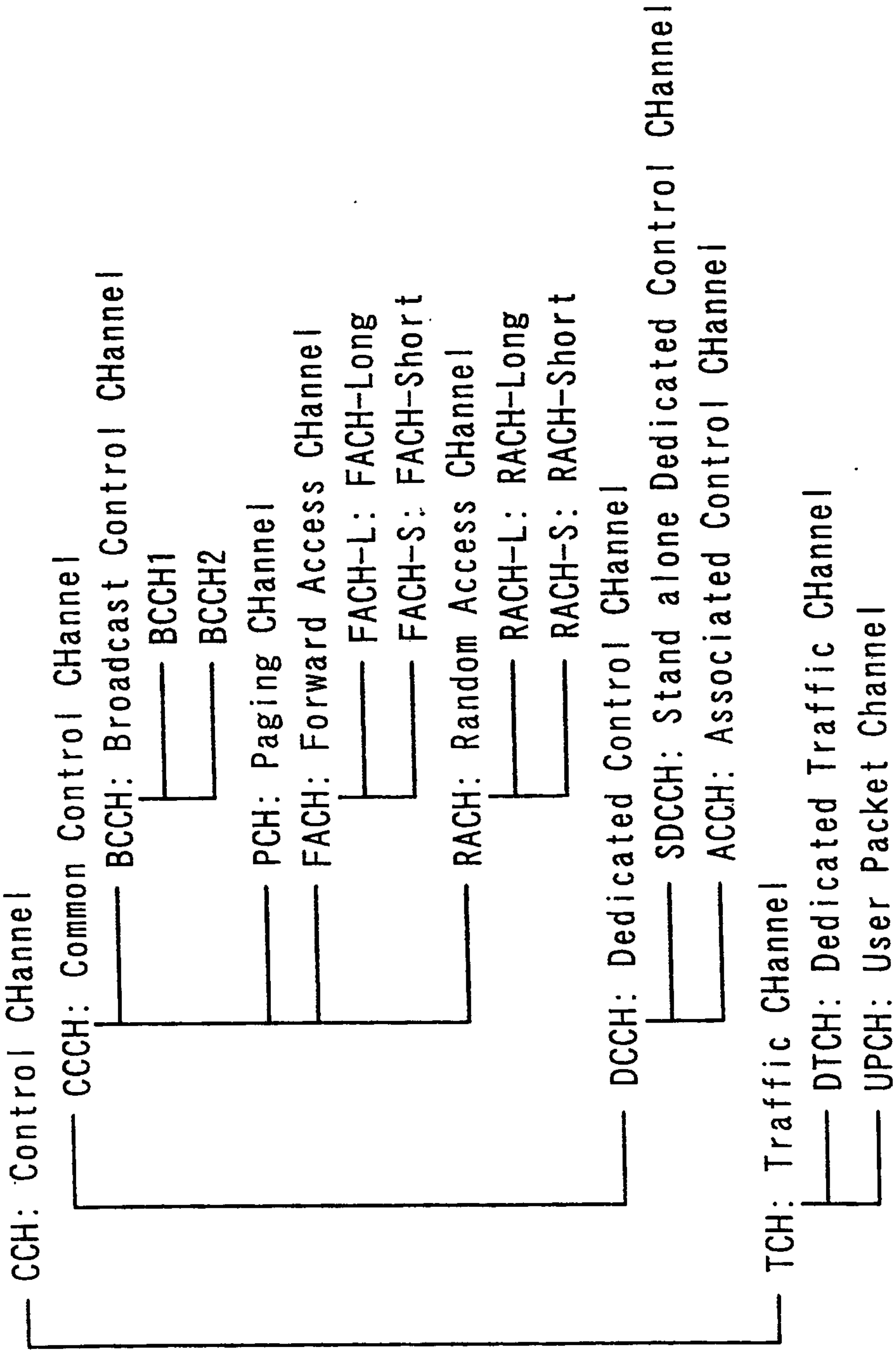
CCH: Control CHannel
CCCH: Common Control CHannel
BCCH: Broadcast Control CHannel
BCCH1
BCCH2
PCH: Paging CHannel
FACH: Forward Access CHannel
FACH-L: FACH-Long
FACH-S: FACH-Short
RACH: Random Access CHannel
RACH-L: RACH-Long
RACH-S: RACH-Short
DCCH: Dedicated Control CHannel
SDCCH: Stand alone Dedicated Control CHannel
ACCH: Associated Control CHannel
TCH: Traffic CHannel
DTCH: Dedicated Traffic CHannel
UPCH: User Packet Channel

FIG. 7

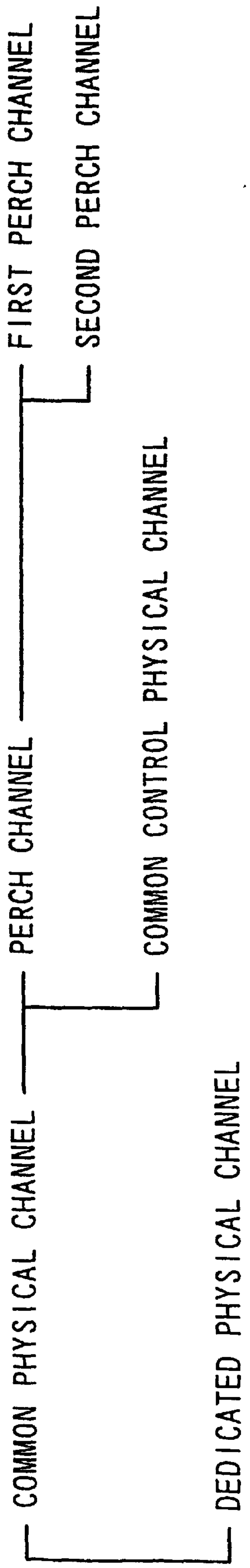
COMMON PHYSICAL CHANNEL
PERCH CHANNEL
FIRST PERCH CHANNEL
SECOND PERCH CHANNEL
COMMON CONTROL PHYSICAL CHANNEL
DEDICATED PHYSICAL CHANNEL

FIG. 8

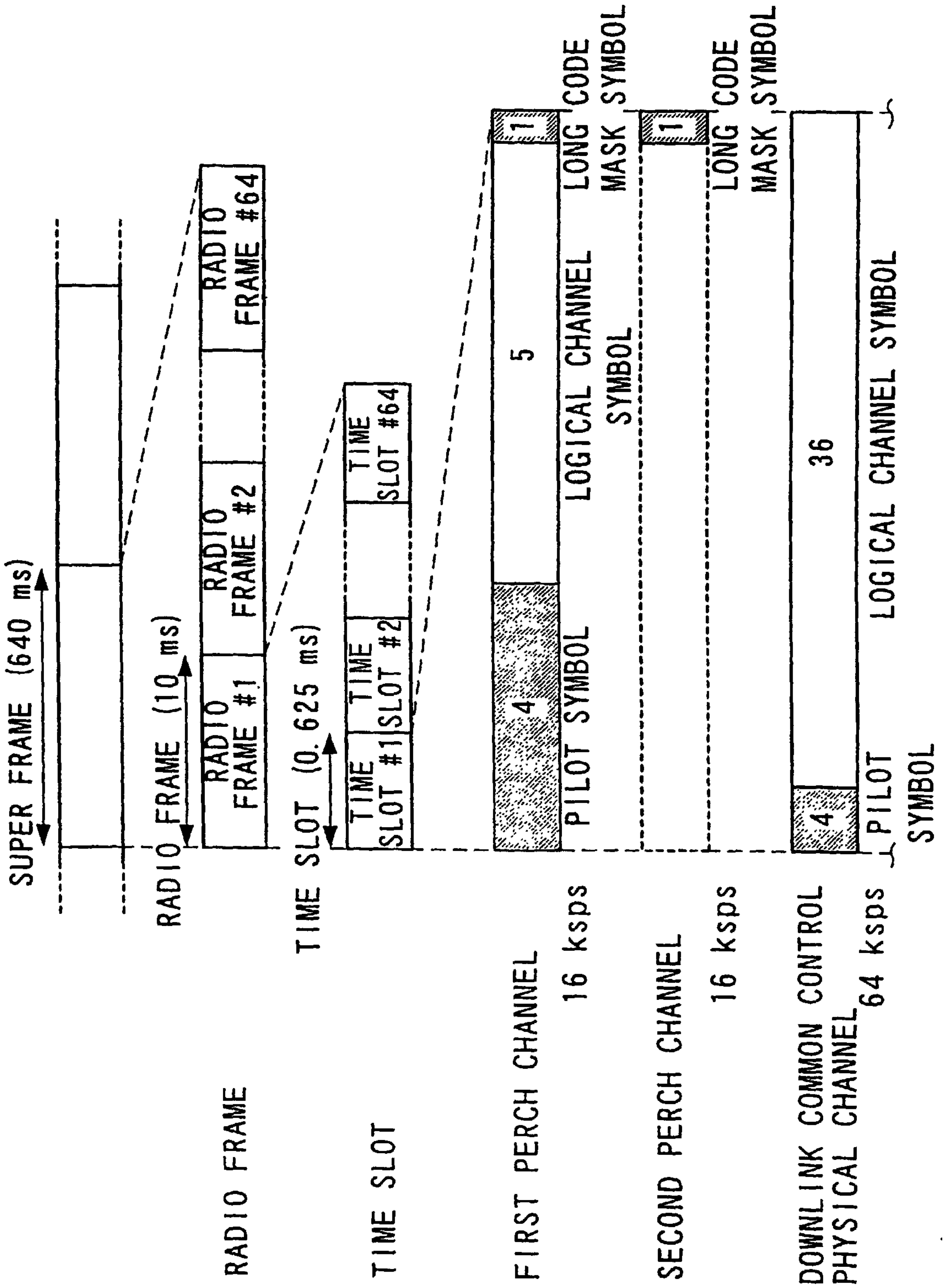
SUPER FRAME (640 ms)
RADIO FRAME
RADIO FRAME (10 ms)
RADIO FRAME #1
RADIO FRAME #2
RADIO FRAME #64
TIME SLOT
TIME SLOT (0.625 ms)
TIME SLOT #1
TIME SLOT #2
TIME SLOT #64
FIRST PERCH CHANNEL
16 ksps
4
PILOT SYMBOL
5
LOGICAL CHANNEL SYMBOL
1
LONG CODE MASK SYMBOL
SECOND PERCH CHANNEL
16 ksps
1
LONG CODE MASK SYMBOL
DOWNLINK COMMON CONTROL PHYSICAL CHANNEL
64 ksps
4
PILOT SYMBOL
36
LOGICAL CHANNEL SYMBOL

CONTINUANCE OF FIG. 8

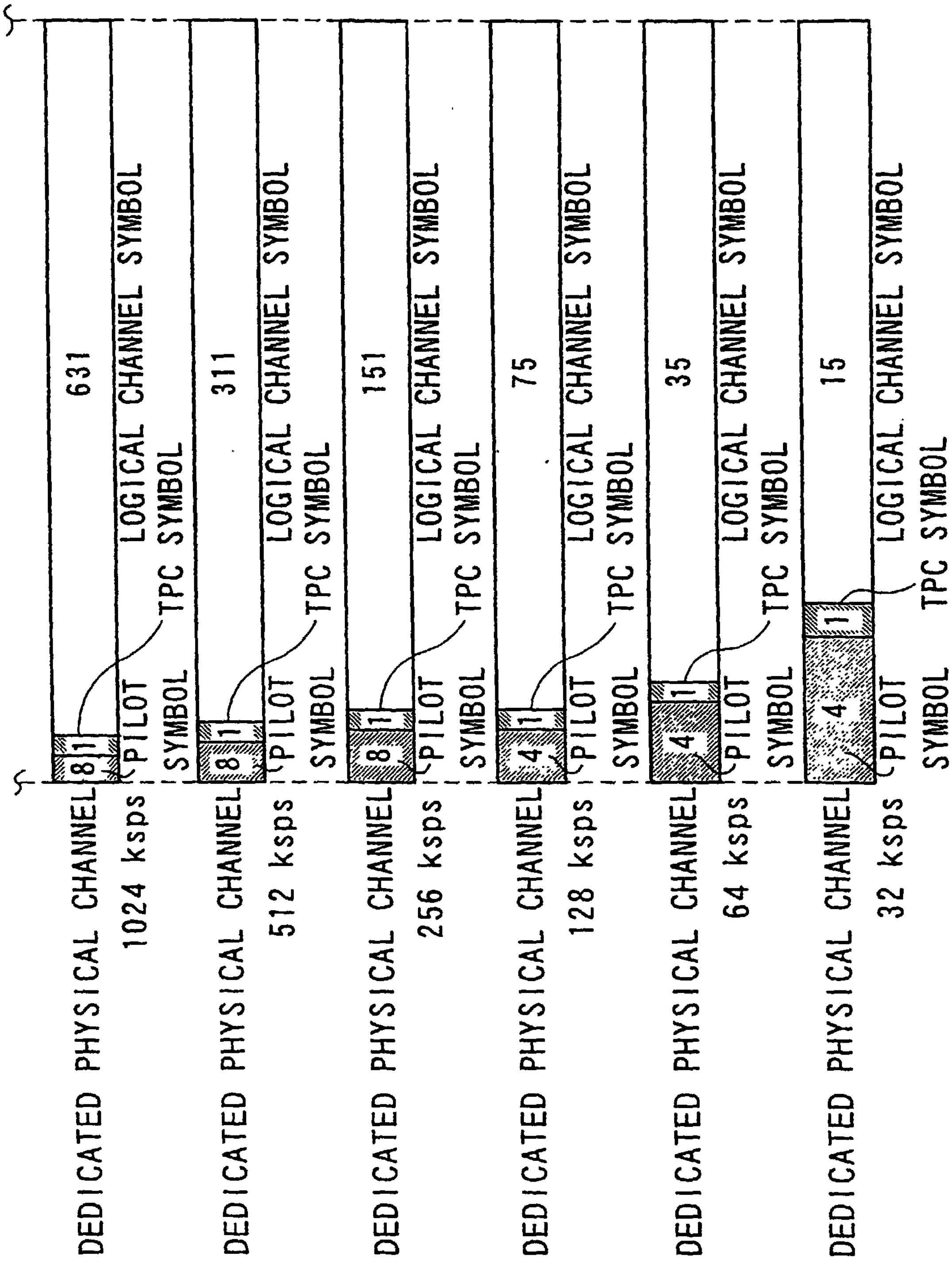

FIG. 9

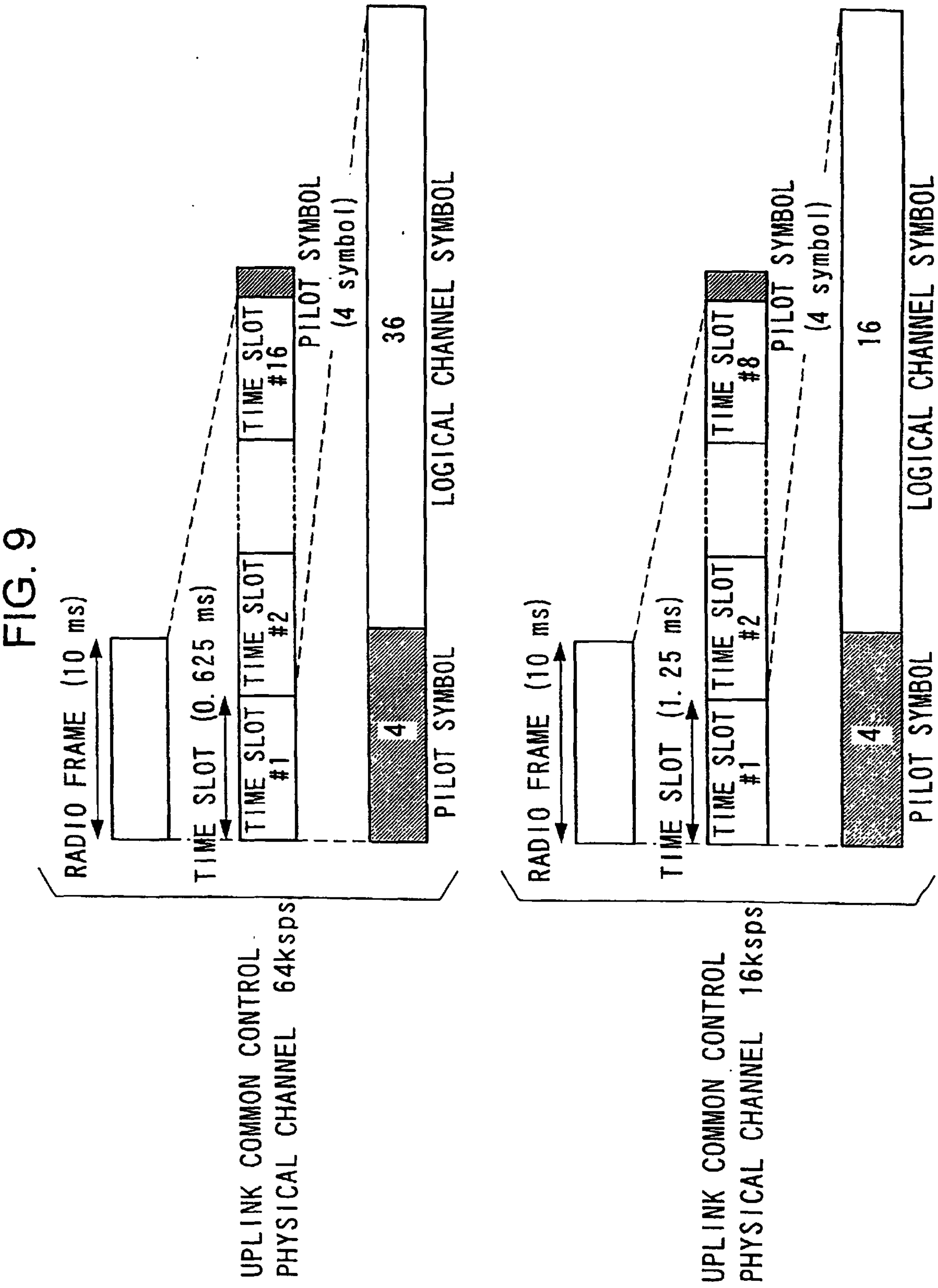
UPLINK COMMON CONTROL
PHYSICAL CHANNEL 64ksps
RADIO FRAME (10 ms)
TIME SLOT (0. 625 ms)
TIME SLOT #1
TIME SLOT #2
TIME SLOT #16
PILOT SYMBOL
(4 symbol)
4
36
PILOT SYMBOL
LOGICAL CHANNEL SYMBOL
UPLINK COMMON CONTROL
PHYSICAL CHANNEL 16ksps
RADIO FRAME (10 ms)
TIME SLOT (1. 25 ms)
TIME SLOT #1
TIME SLOT #2
TIME SLOT #8
PILOT SYMBOL
(4 symbol)
4
16
PILOT SYMBOL
LOGICAL CHANNEL SYMBOL

FIG. 10

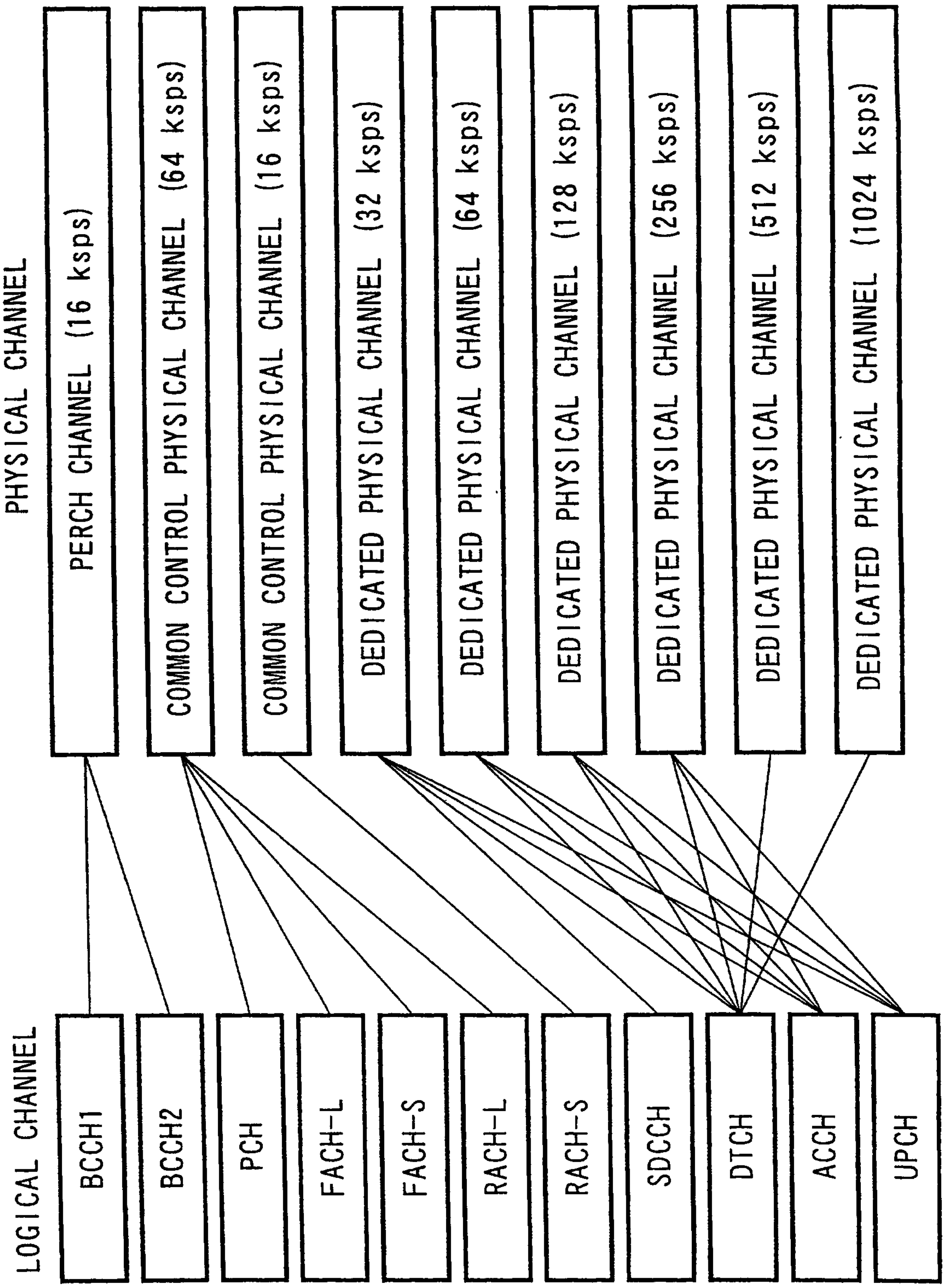

PHYSICAL CHANNEL
PERCH CHANNEL (16 ksps)
COMMON CONTROL PHYSICAL CHANNEL (64 ksps)
COMMON CONTROL PHYSICAL CHANNEL (16 ksps)
DEDICATED PHYSICAL CHANNEL (32 ksps)
DEDICATED PHYSICAL CHANNEL (64 ksps)
DEDICATED PHYSICAL CHANNEL (128 ksps)
DEDICATED PHYSICAL CHANNEL (256 ksps)
DEDICATED PHYSICAL CHANNEL (512 ksps)
DEDICATED PHYSICAL CHANNEL (1024 ksps)
LOGICAL CHANNEL
BCCH1
BCCH2
PCH
FACH-L
FACH-S
RACH-L
RACH-S
SDCCH
DTCH
ACCH
UPCH

FIG. 11

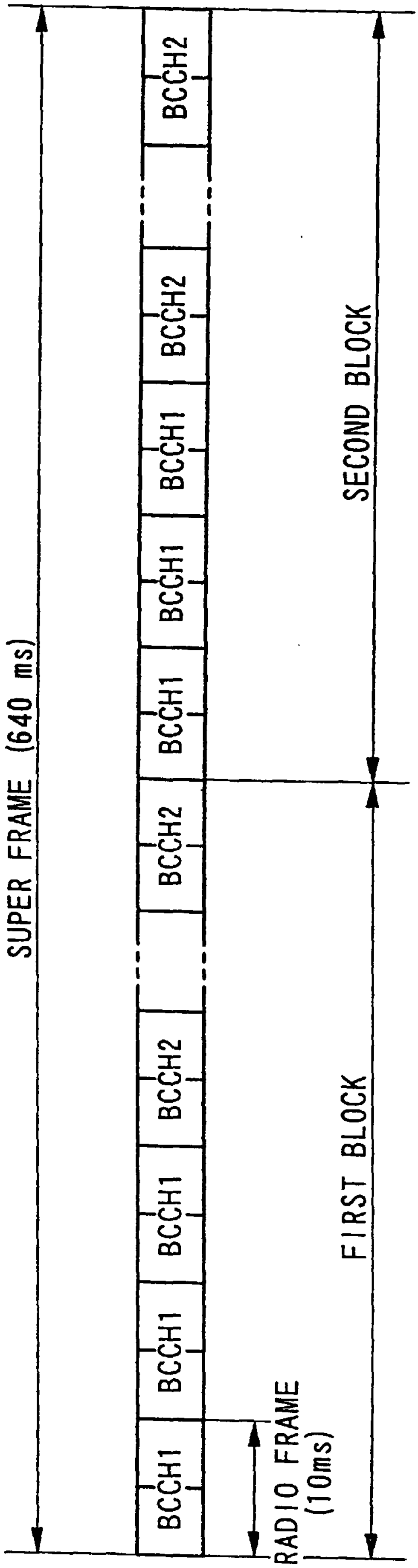
SUPER FRAME (640 ms)
BCCH1
BCCH1
BCCH1
BCCH2
BCCH2
BCCH1
BCCH1
BCCH1
BCCH2
BCCH2
RADIO FRAME (10ms)
FIRST BLOCK
SECOND BLOCK

FIG. 12

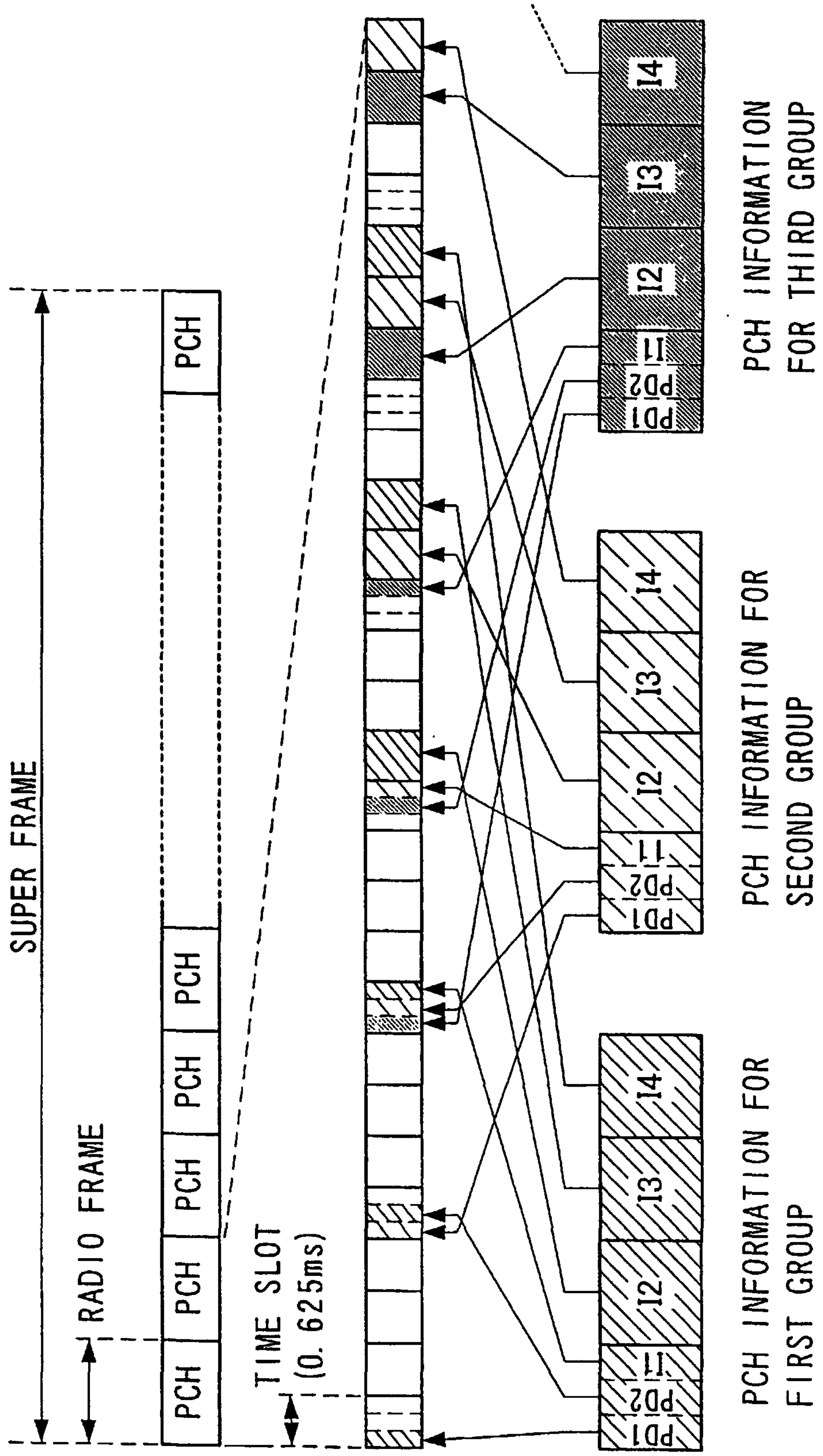
SUPER FRAME
RADIO FRAME
PCH
TIME SLOT
(0. 625ms)
PD1
PD2
I1
I2
I3
I4
PCH INFORMATION FOR FIRST GROUP
PCH INFORMATION FOR SECOND GROUP
PCH INFORMATION FOR THIRD GROUP

FIG. 13

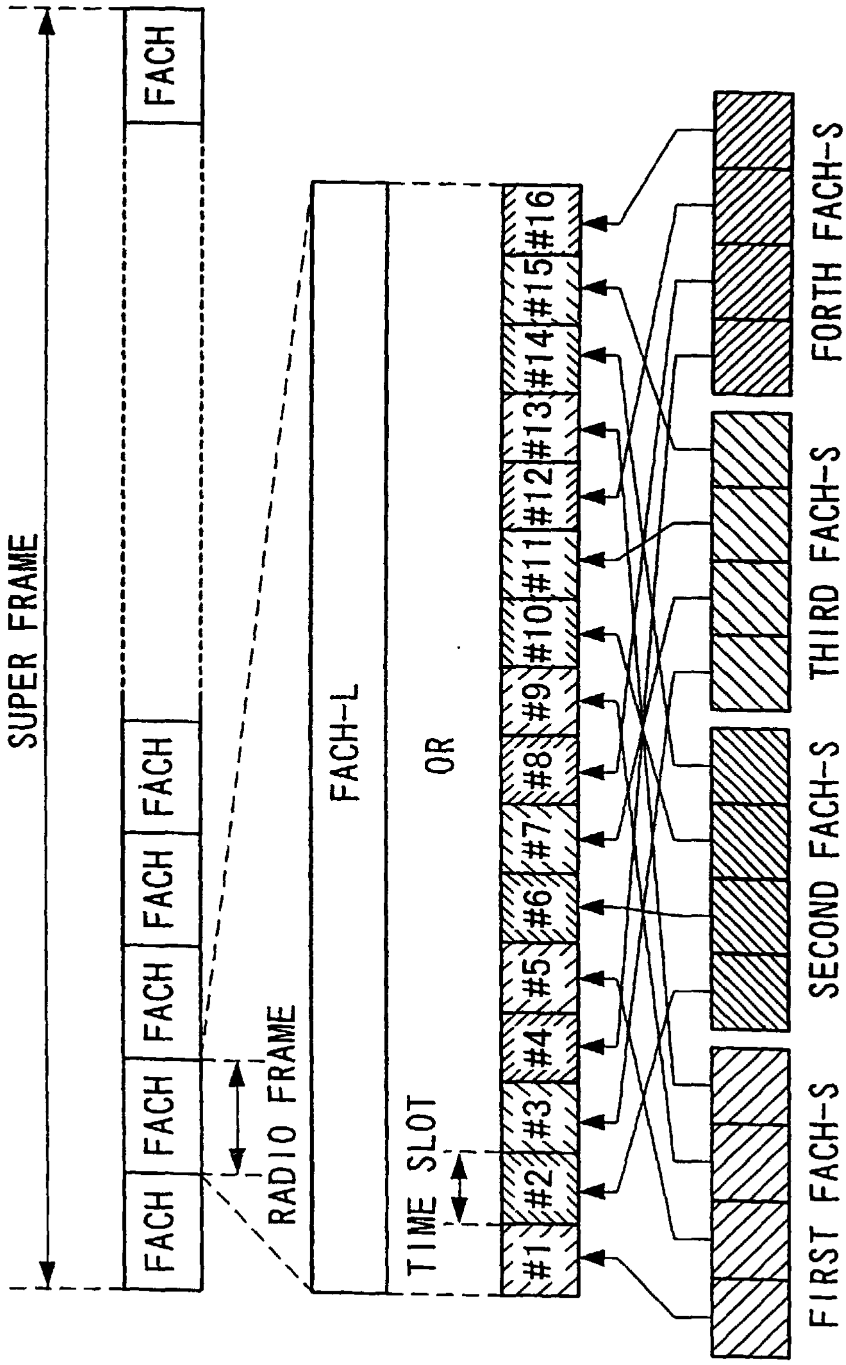
SUPER FRAME
FACH
FACH
FACH
FACH
FACH
FACH
FACH
RADIO FRAME
FACH-L
OR
TIME SLOT
#1
#2
#3
#4
#5
#6
#7
#8
#9
#10
#11
#12
#13
#14
#15
#16
FIRST FACH-S
SECOND FACH-S
THIRD FACH-S
FORTH FACH-S

FIG. 14

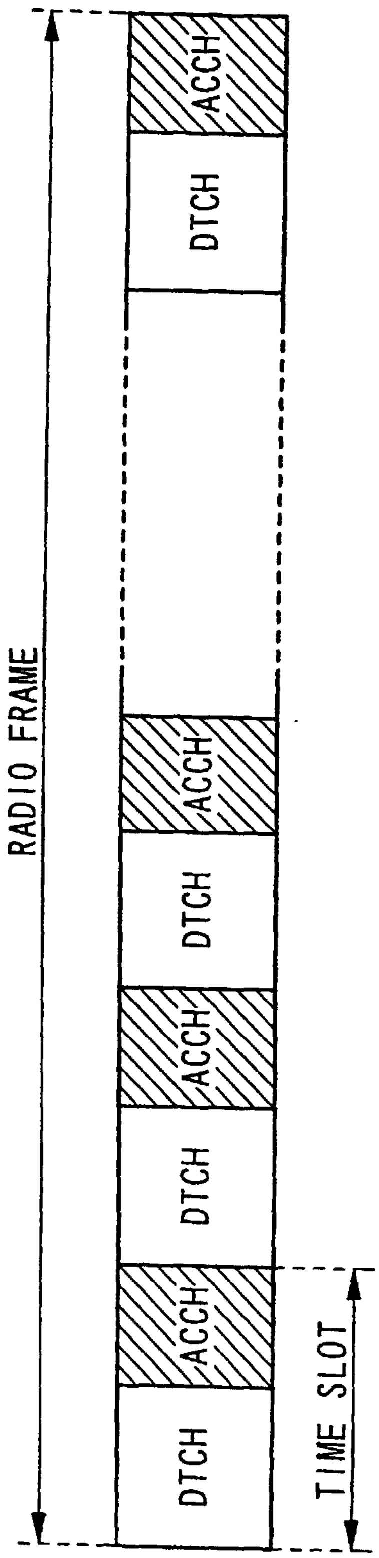
RADIO FRAME
ACCH
DTCH
ACCH
DTCH
ACCH
DTCH
ACCH
DTCH
TIME SLOT

# FIG. 15

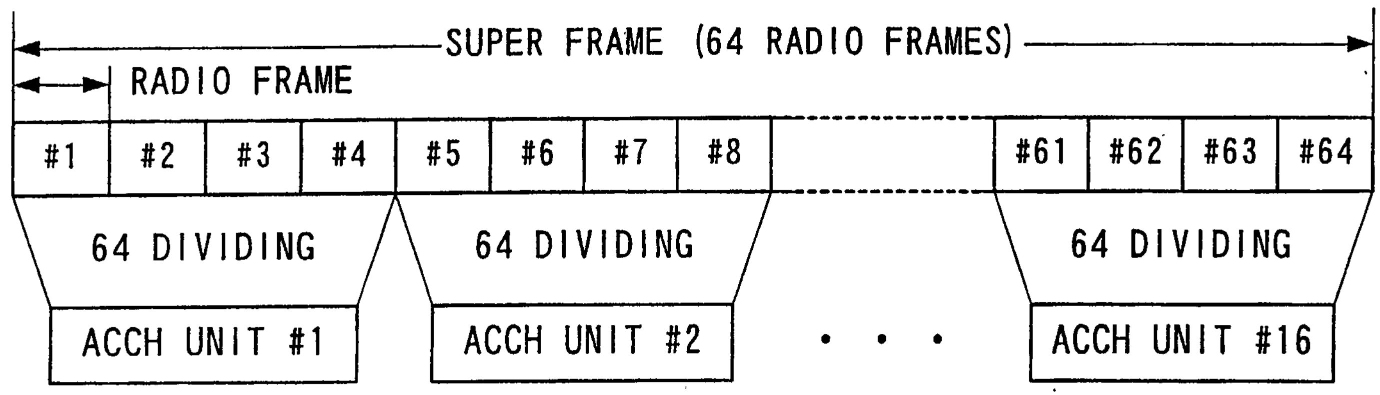


(a) MAPPING TO 32, 64 ksps DEDICATED PHYSICAL CHANNEL

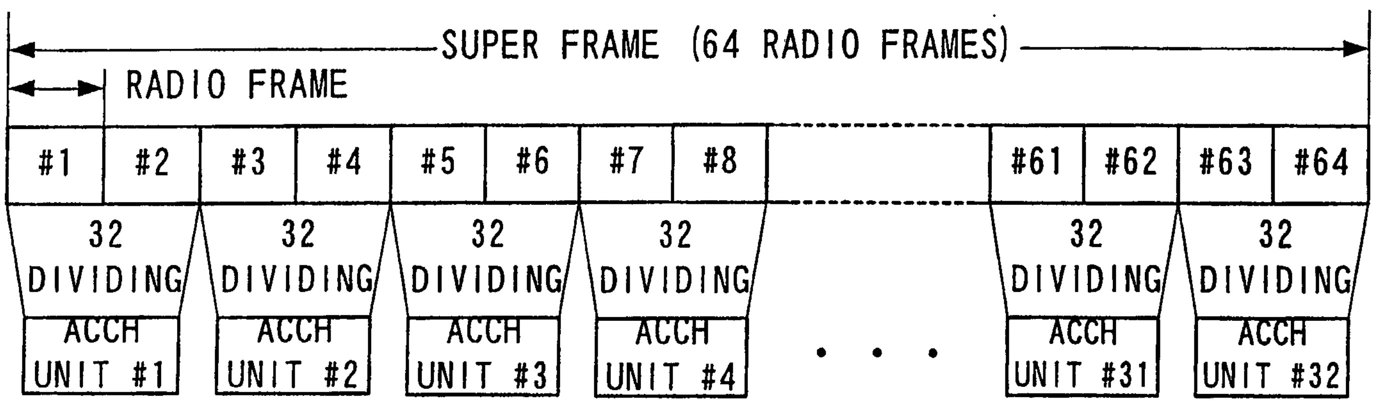


(b) MAPPING TO 128 ksps DEDICATED PHYSICAL CHANNEL

ONTINUANCE OF FIG. 15

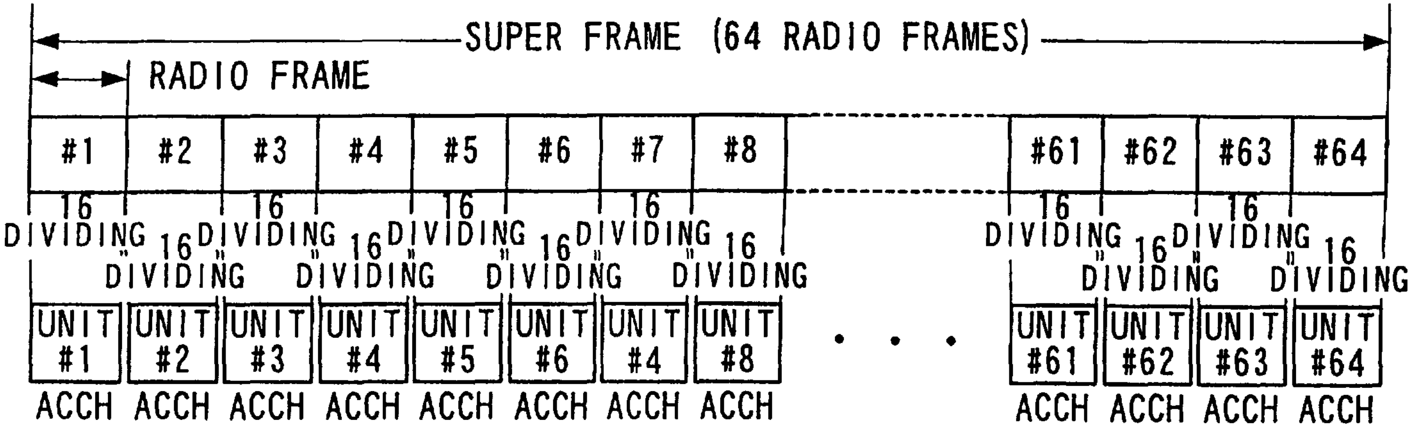


(c) MAPPING TO 256 ksps DEDICATED PHYSICAL CHANNEL

FIG. 16

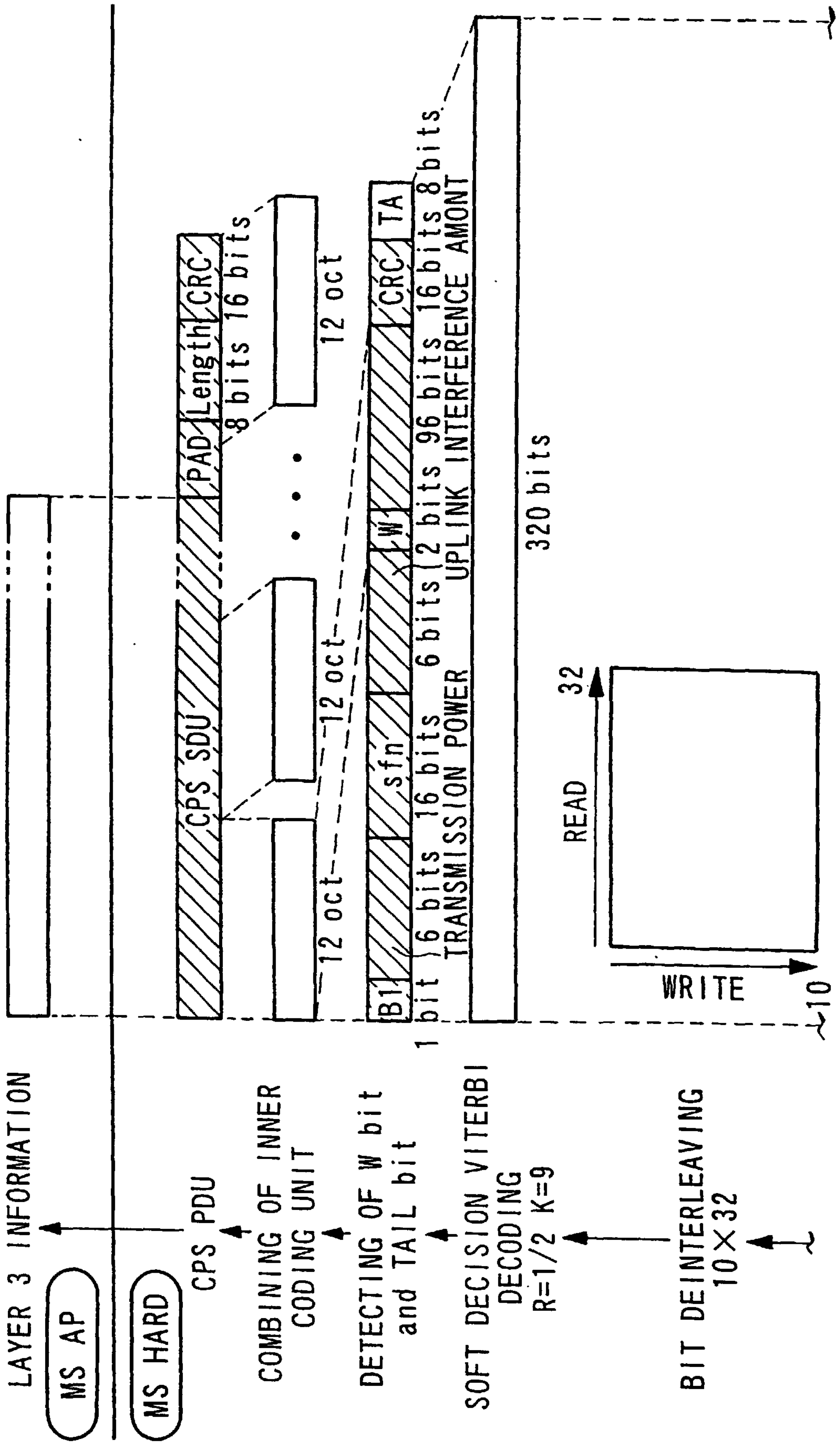
MS AP
MS HARD
LAYER 3 INFORMATION
CPS PDU
COMBINING OF INNER CODING UNIT
DETECTING OF W bit and TAIL bit
SOFT DECISION VITERBI DECODING R=1/2 K=9
BIT DEINTERLEAVING 10×32
CPS SDU
PAD
Length
CRC
8 bits
16 bits
12 oct
12 oct
12 oct
B1
sfn
W
CRC
TA
1 bit
6 bits
16 bits
6 bits
2 bits
6 bits
96 bits
16 bits
8 bits
TRANSMISSION POWER
UPLINK INTERFERENCE AMONT
320 bits
READ
WRITE
32
10

CONTINUANCE OF FIG. 16

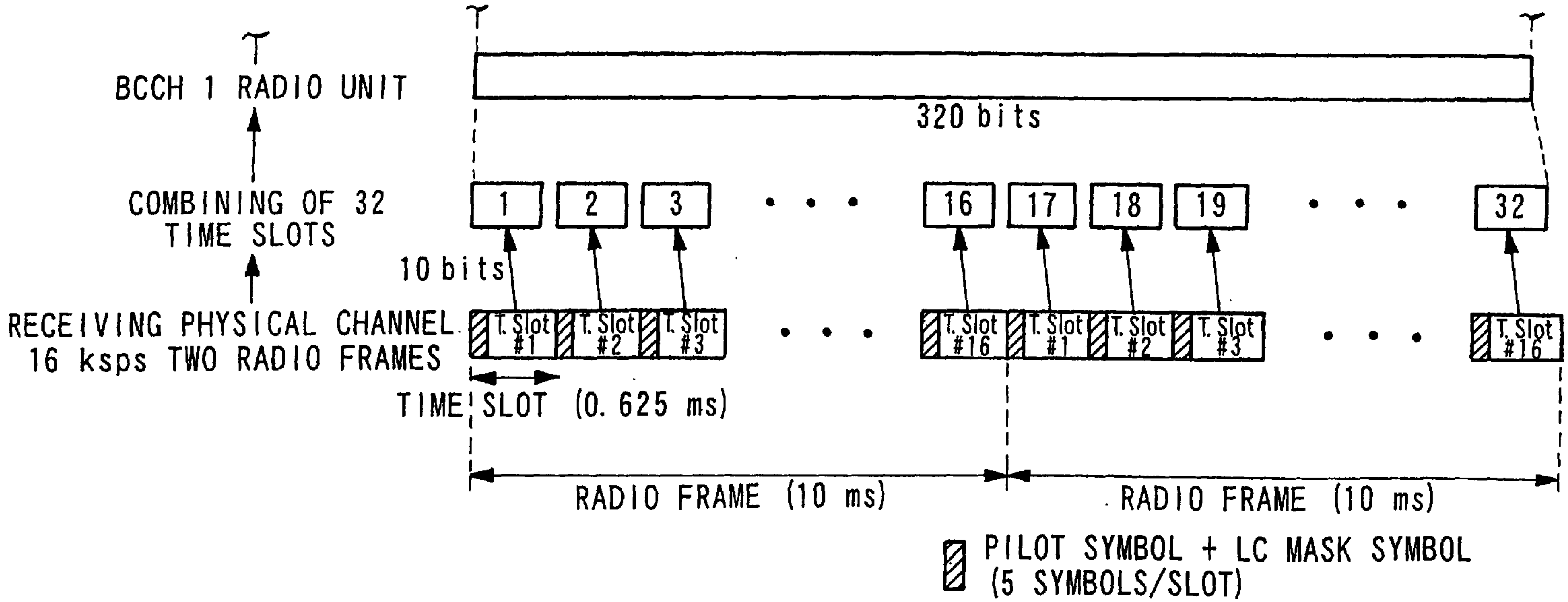

FIG. 17

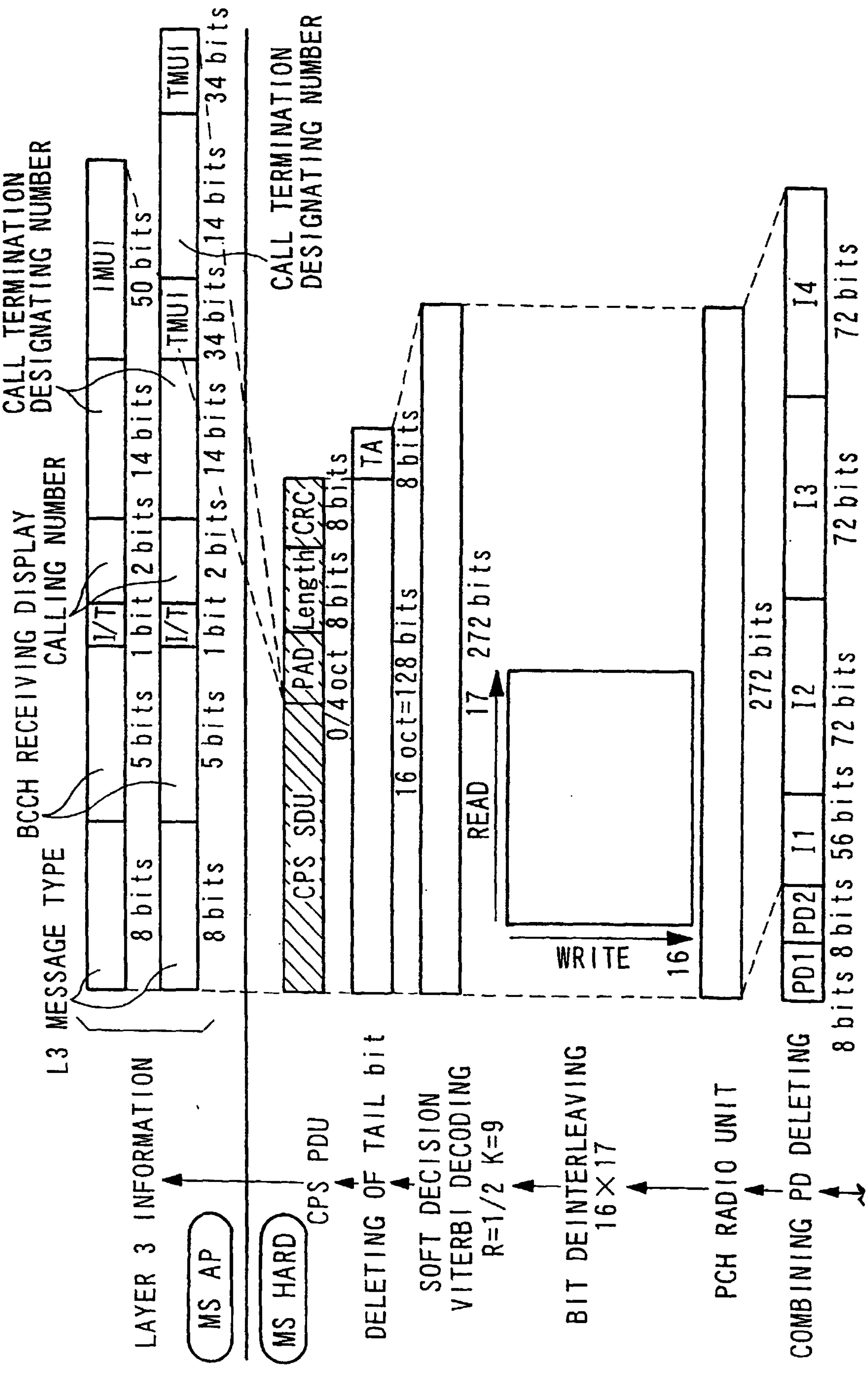
BCCH RECEIVING DISPLAY
CALLING NUMBER
CALL TERMINATION
DESIGNATING NUMBER
L3 MESSAGE TYPE
I/T
IMUI
TMUI
8 bits 5 bits 1 bit 2 bits 14 bits 50 bits
8 bits 5 bits 1 bit 2 bits 14 bits 34 bits 14 bits 34 bits
LAYER 3 INFORMATION
MS AP
MS HARD
CPS PDU
CPS SDU
PAD
Length
CRC
0/4 oct 8 bits 8 bits
DELETING OF TAIL bit
TA
16 oct=128 bits
8 bits
SOFT DECISION
VITERBI DECODING
R=1/2 K=9
READ
17
272 bits
WRITE
16
BIT DEINTERLEAVING
16×17
PCH RADIO UNIT
272 bits
COMBINING PD DELETING
PD1
PD2
I1
I2
I3
I4
8 bits 8 bits 56 bits 72 bits 72 bits 72 bits

CONTINUANCE OF FIG. 17

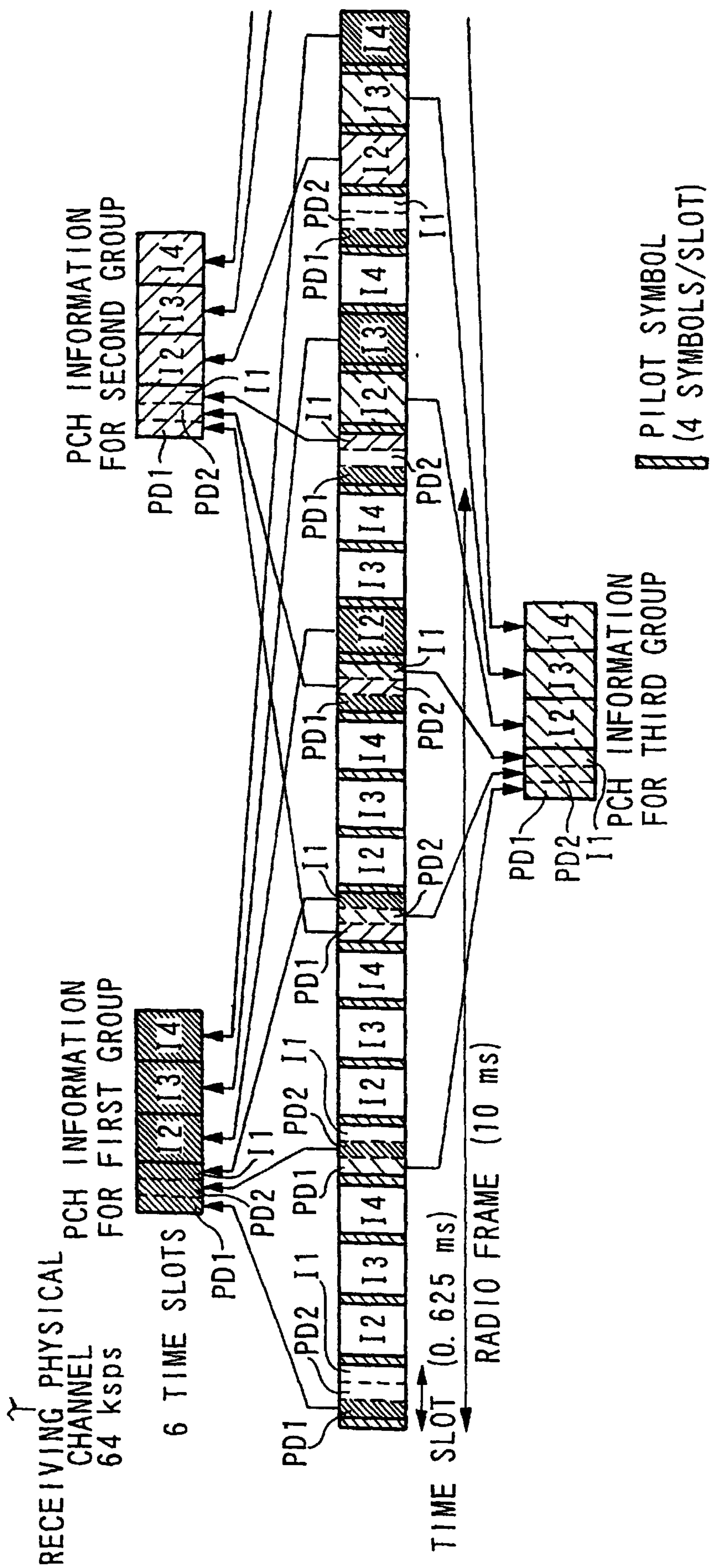

FIG. 18

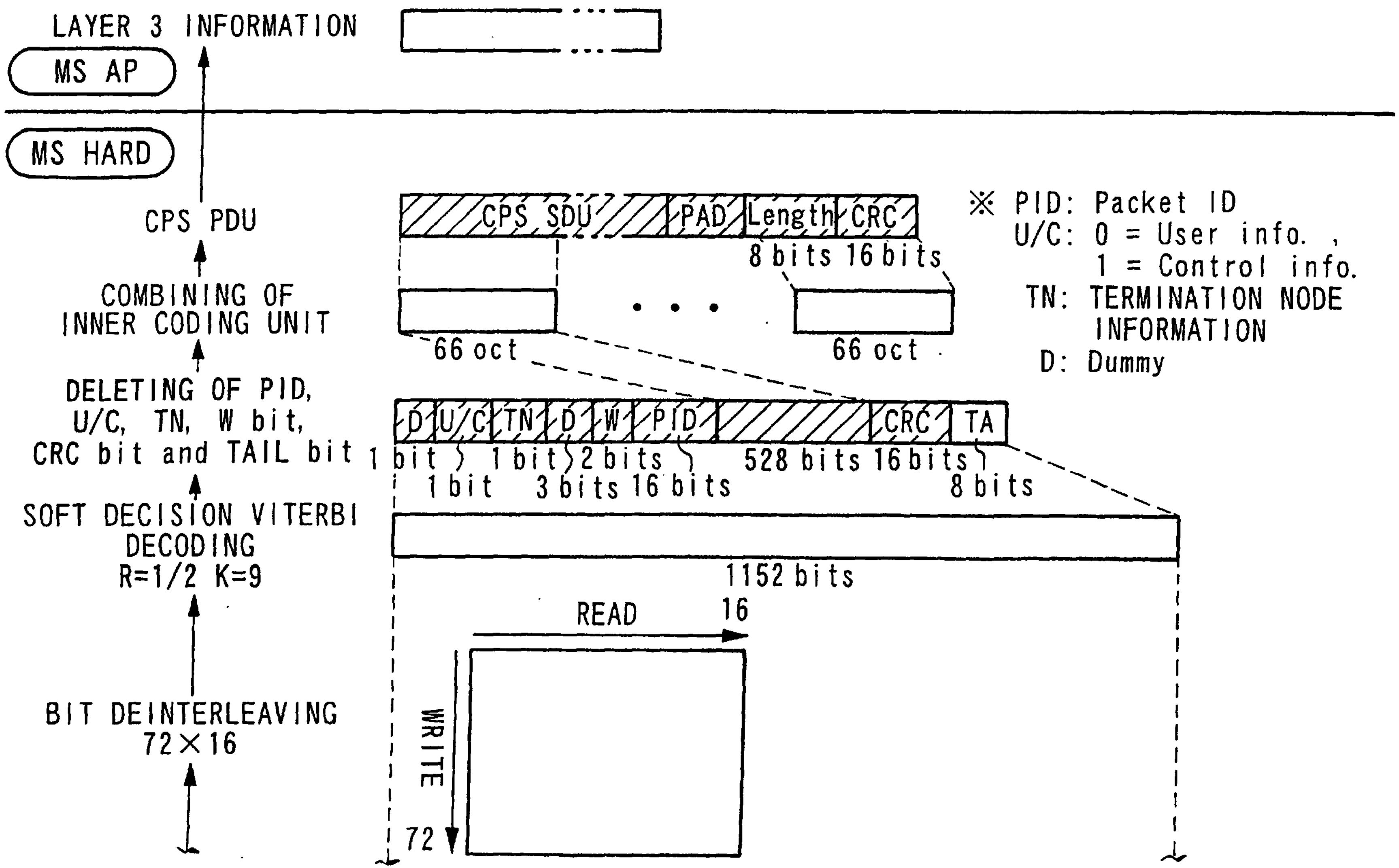
LAYER 3 INFORMATION
MS AP
MS HARD
CPS PDU
COMBINING OF INNER CODING UNIT
DELETING OF PID, U/C, TN, W bit, CRC bit and TAIL bit
SOFT DECISION VITERBI DECODING R=1/2 K=9
BIT DEINTERLEAVING 72×16
CPS SDU
PAD
Length
CRC
8 bits 16 bits
66 oct
66 oct
D
U/C
TN
D
W
PID
CRC
TA
1 bit
1 bit
1 bit
3 bits
2 bits
16 bits
528 bits
16 bits
8 bits
1152 bits
READ
16
WRITE
72
※ PID: Packet ID
U/C: 0 = User info. ,
1 = Control info.
TN: TERMINATION NODE INFORMATION
D: Dummy

CONTINUANCE OF FIG. 18

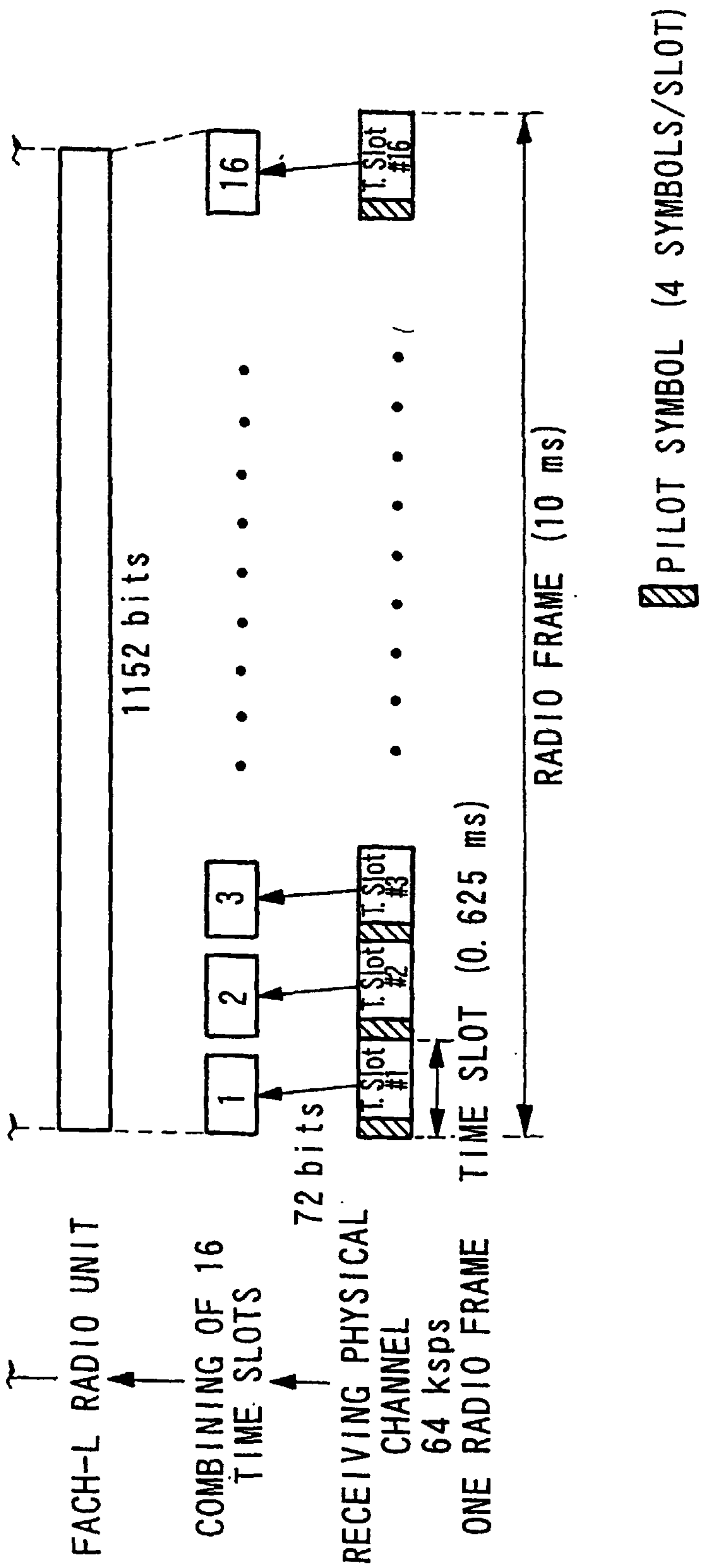

FIG. 19

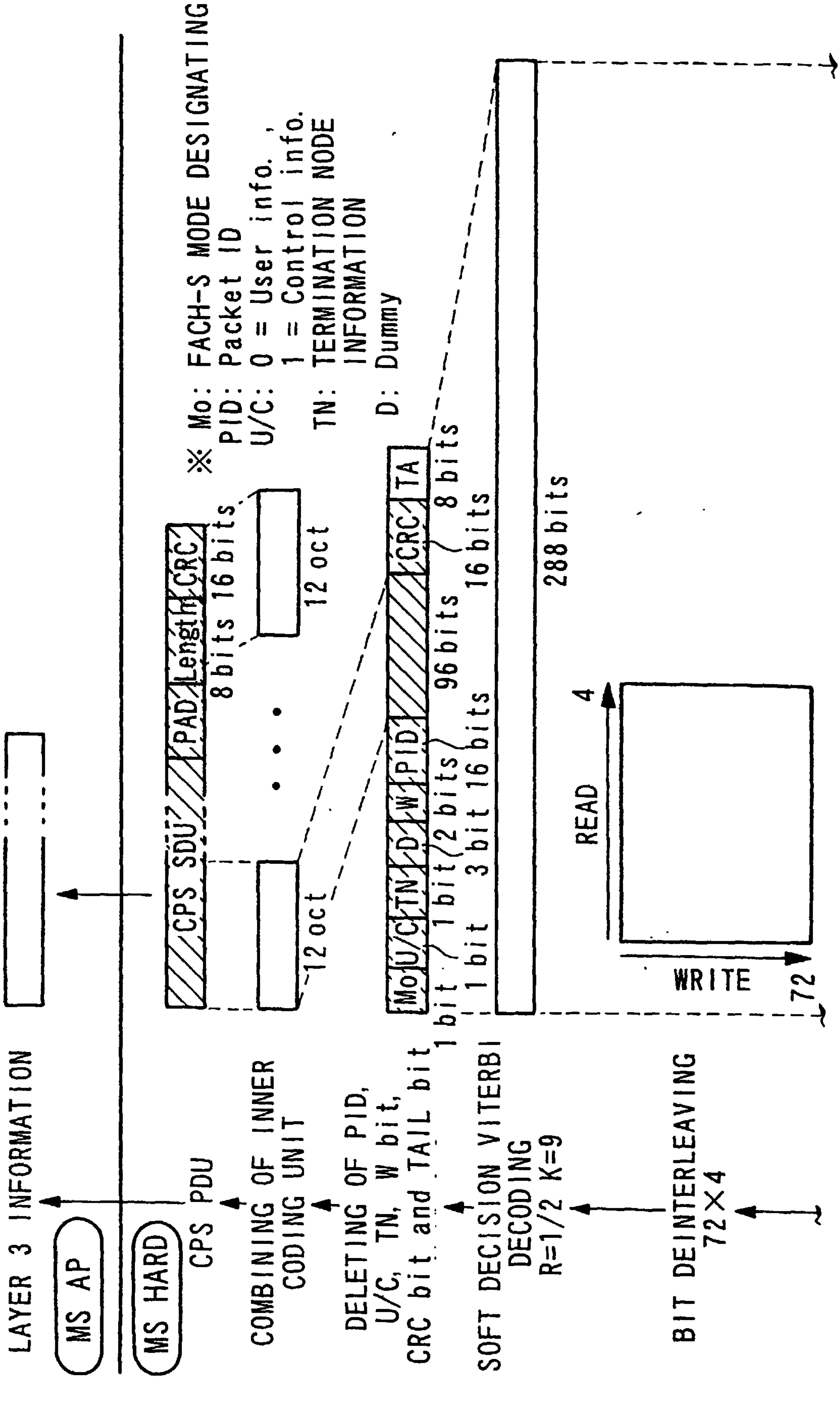
LAYER 3 INFORMATION
MS AP
MS HARD
CPS PDU
COMBINING OF INNER CODING UNIT
DELETING OF PID, U/C, TN, W bit, CRC bit and TAIL bit
SOFT DECISION VITERBI DECODING R=1/2 K=9
BIT DEINTERLEAVING 72×4
CPS SDU
PAD
Length
CRC
8 bits 16 bits
12 oct
12 oct
Mo
U/C
TN
D
W
PID
CRC
TA
1 bit 1 bit 1 bit 2 bits 96 bits 8 bits
1 bit 3 bit 16 bits 16 bits
288 bits
READ
WRITE
4
72
※ Mo: FACH-S MODE DESIGNATING
PID: Packet ID
U/C: 0 = User info.,
1 = Control info.
TN: TERMINATION NODE INFORMATION
D: Dummy

CONTINUANCE OF FIG. 19

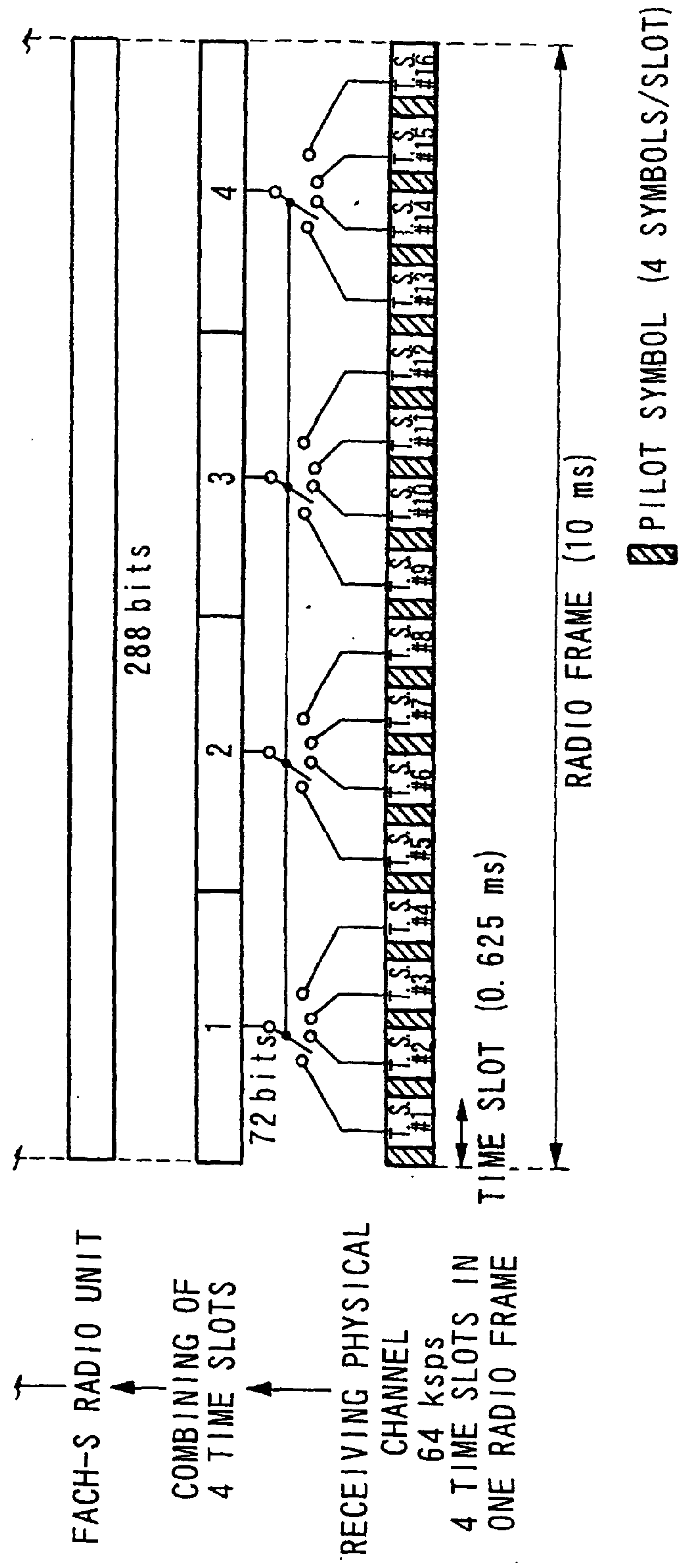

FIG. 20

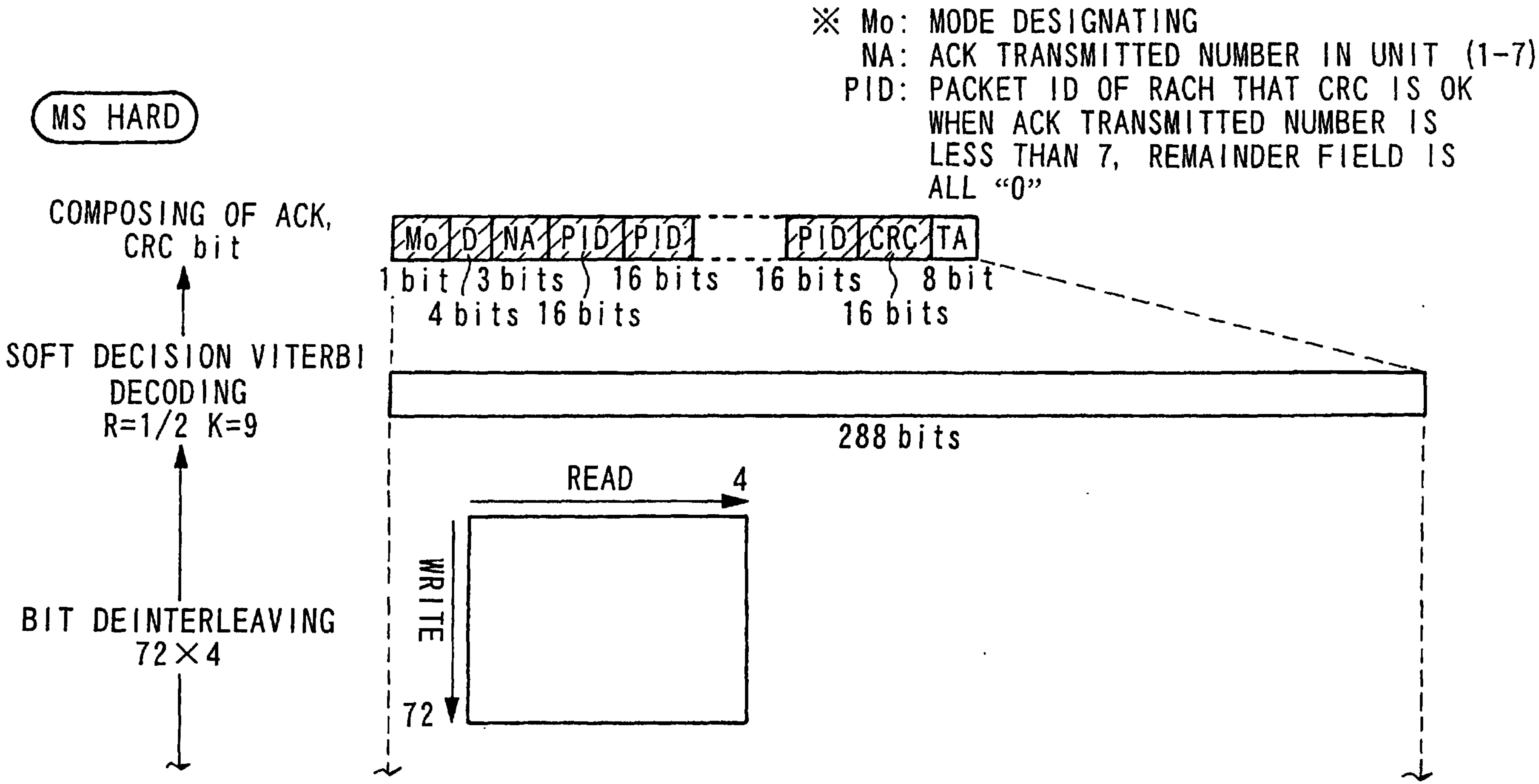
MS HARD
※ Mo: MODE DESIGNATING
NA: ACK TRANSMITTED NUMBER IN UNIT (1-7)
PID: PACKET ID OF RACH THAT CRC IS OK
WHEN ACK TRANSMITTED NUMBER IS
LESS THAN 7, REMAINDER FIELD IS
ALL "0"
COMPOSING OF ACK, CRC bit
Mo D NA PID PID PID CRC TA
1 bit 3 bits 16 bits 16 bits 8 bit
4 bits 16 bits 16 bits
SOFT DECISION VITERBI DECODING R=1/2 K=9
288 bits
READ 4
WRITE 72
BIT DEINTERLEAVING 72×4

# CONTINUANCE OF FIG. 20

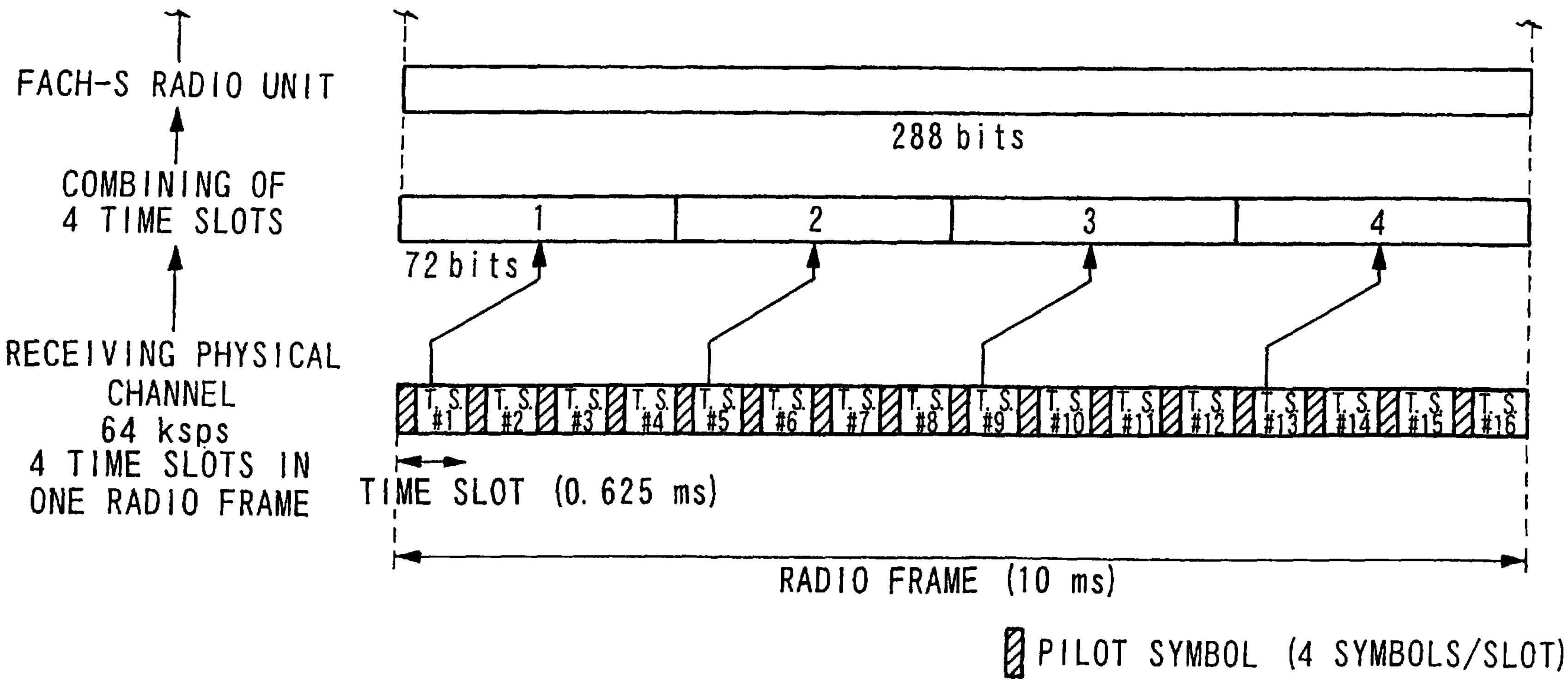

FIG. 21

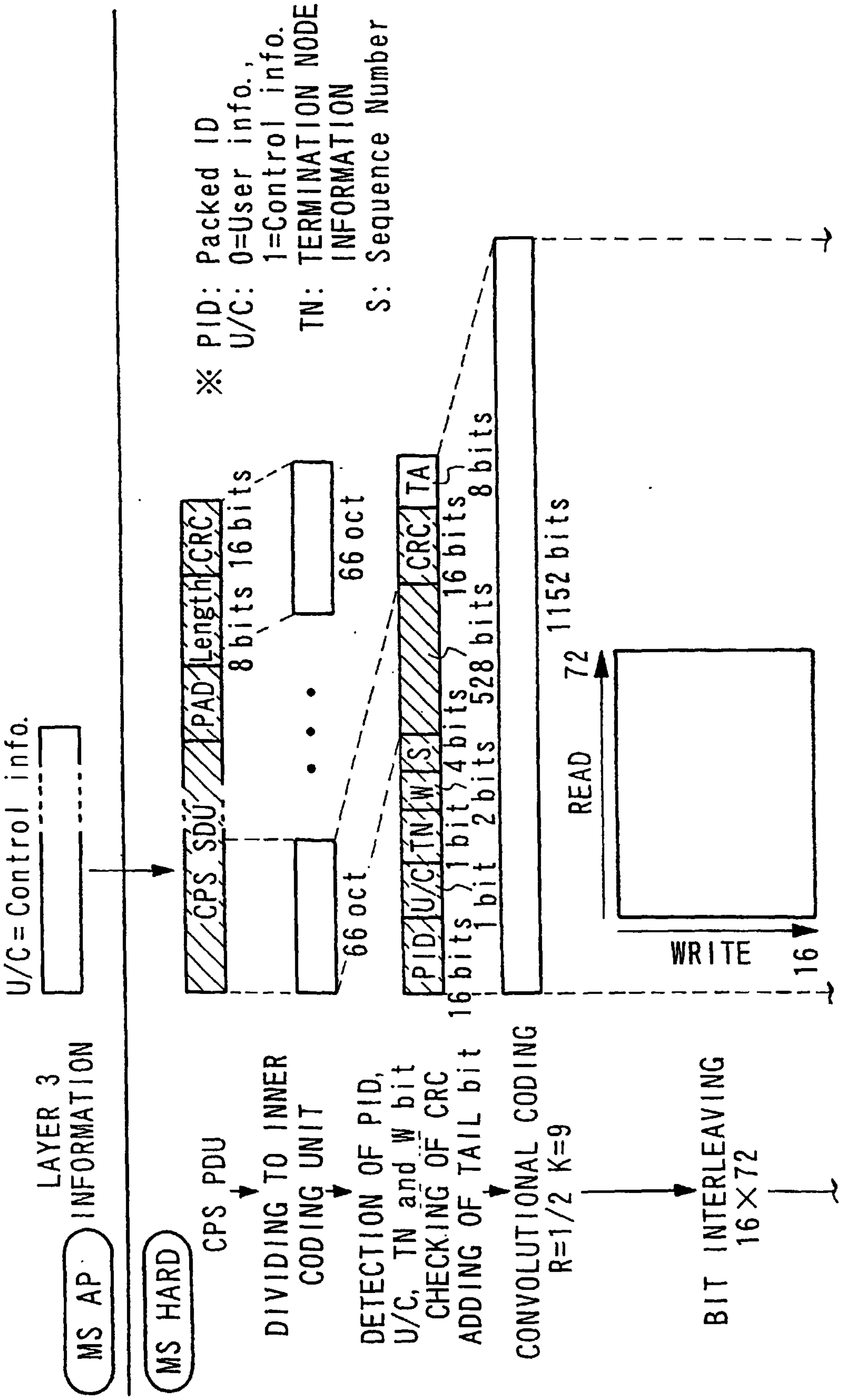
MS AP
LAYER 3 INFORMATION
U/C=Control info.
MS HARD
CPS PDU
CPS SDU
PAD
Length
CRC
8 bits 16 bits
DIVIDING TO INNER CODING UNIT
66 oct
66 oct
DETECTION OF PID, U/C, TN and W bit
CHECKING OF CRC
ADDING OF TAIL bit
PID
U/C
TN
W
S
CRC
TA
16 bits
1 bit
1 bit
2 bits
4 bits
528 bits
16 bits
8 bits
CONVOLUTIONAL CODING R=1/2 K=9
1152 bits
BIT INTERLEAVING 16×72
WRITE
READ
16
72
※ PID: Packed ID
U/C: 0=User info., 1=Control info.
TN: TERMINATION NODE INFORMATION
S: Sequence Number

CONTINUANCE OF FIG. 21

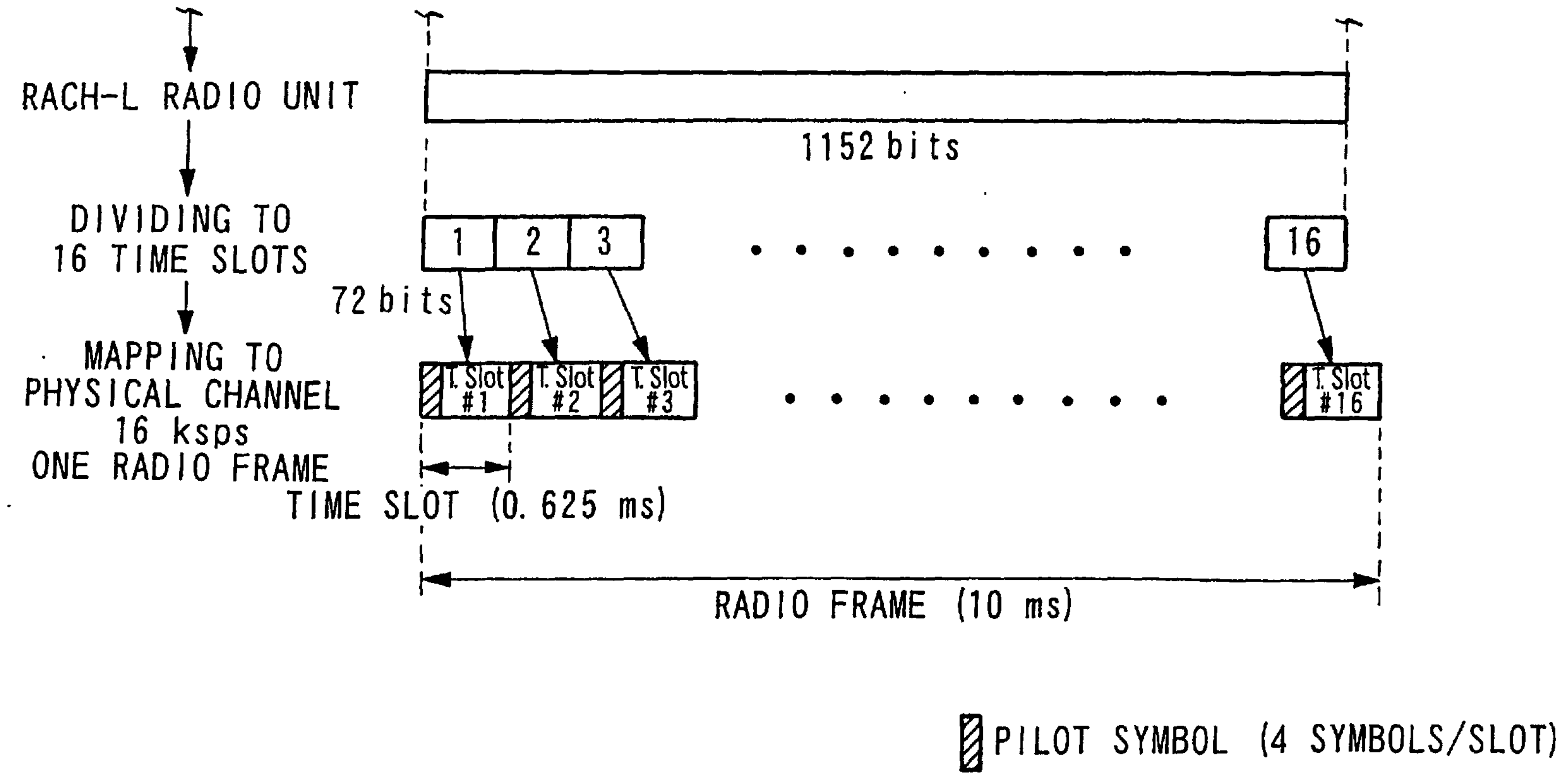

FIG. 22

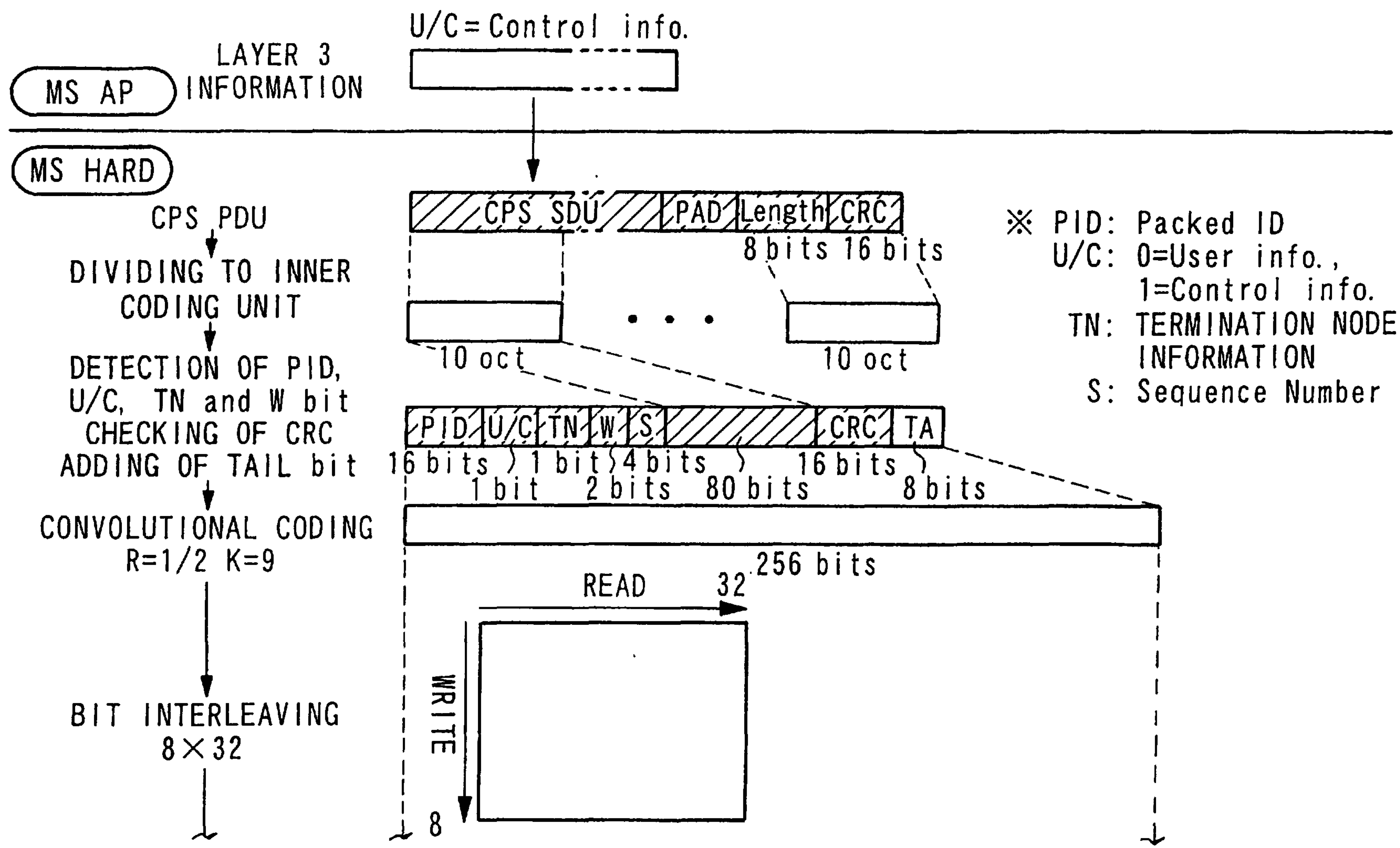
MS AP
LAYER 3 INFORMATION
U/C=Control info.
MS HARD
CPS PDU
DIVIDING TO INNER CODING UNIT
DETECTION OF PID, U/C, TN and W bit CHECKING OF CRC ADDING OF TAIL bit
CONVOLUTIONAL CODING R=1/2 K=9
BIT INTERLEAVING 8×32
CPS SDU
PAD
Length
CRC
8 bits
16 bits
10 oct
10 oct
PID
U/C
TN
W
S
CRC
TA
16 bits
1 bit
1 bit
2 bits
4 bits
80 bits
16 bits
8 bits
256 bits
READ
32
WRITE
8
※ PID: Packed ID
U/C: 0=User info., 1=Control info.
TN: TERMINATION NODE INFORMATION
S: Sequence Number

CONTINUANCE OF FIG. 22

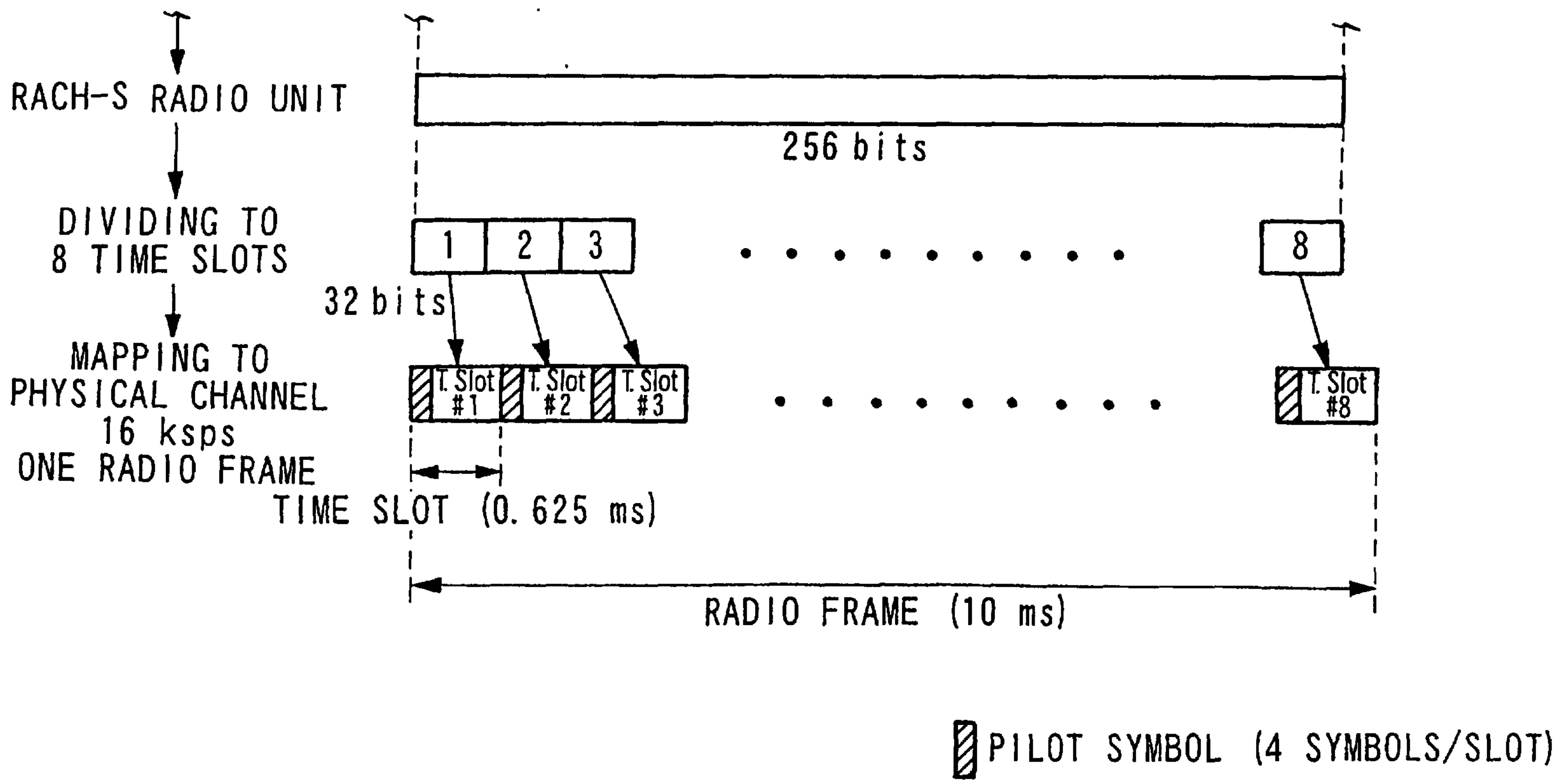

FIG. 23

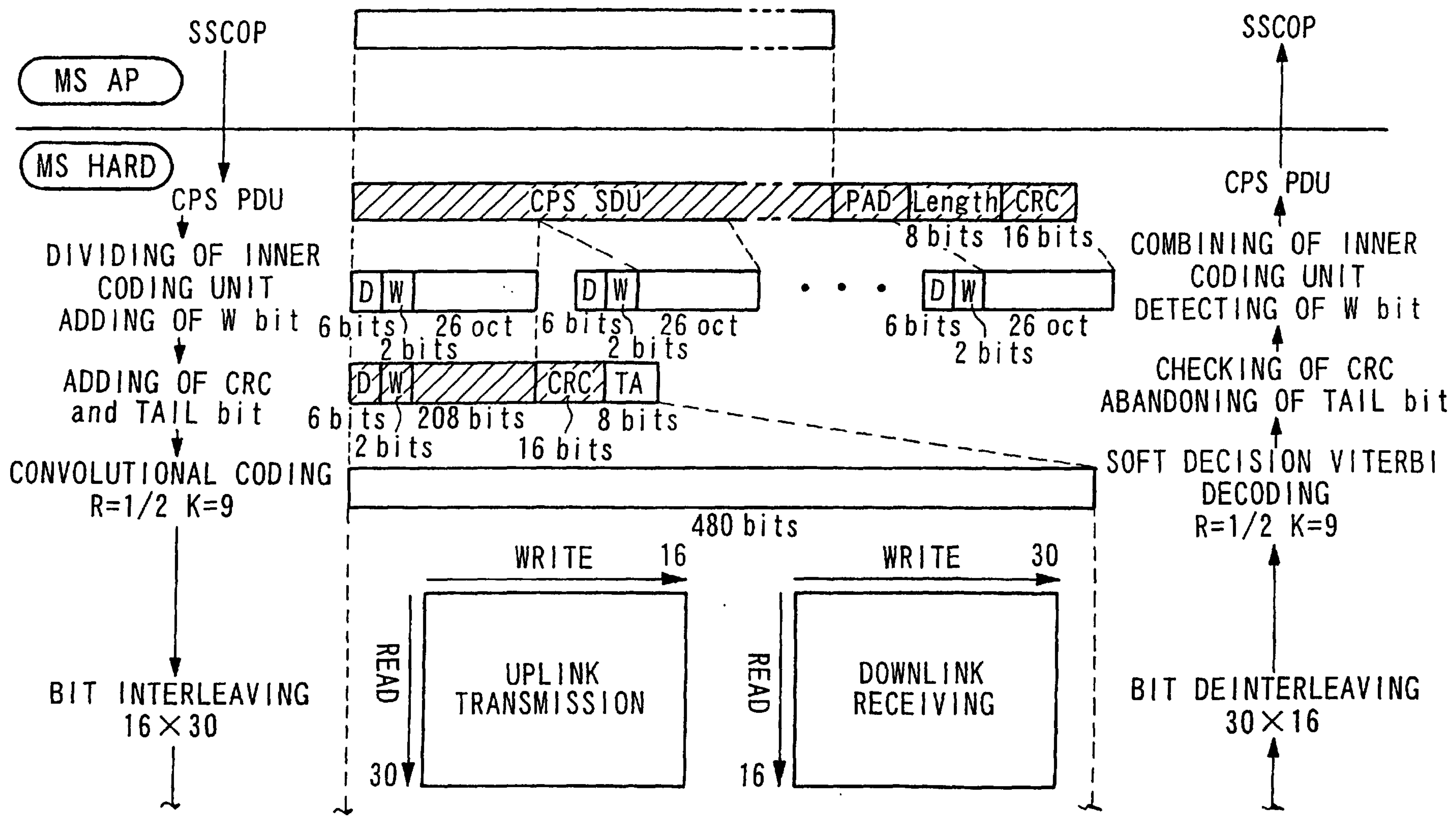
SSCOP
MS AP
MS HARD
CPS PDU
DIVIDING OF INNER CODING UNIT
ADDING OF W bit
ADDING OF CRC and TAIL bit
CONVOLUTIONAL CODING R=1/2 K=9
BIT INTERLEAVING 16×30
CPS SDU
PAD
Length
CRC
8 bits
16 bits
D
W
6 bits
2 bits
26 oct
208 bits
TA
480 bits
WRITE
READ
16
30
UPLINK TRANSMISSION
DOWNLINK RECEIVING
SSCOP
CPS PDU
COMBINING OF INNER CODING UNIT
DETECTING OF W bit
CHECKING OF CRC
ABANDONING OF TAIL bit
SOFT DECISION VITERBI DECODING R=1/2 K=9
BIT DEINTERLEAVING 30×16

CONTINUANCE OF FIG. 23

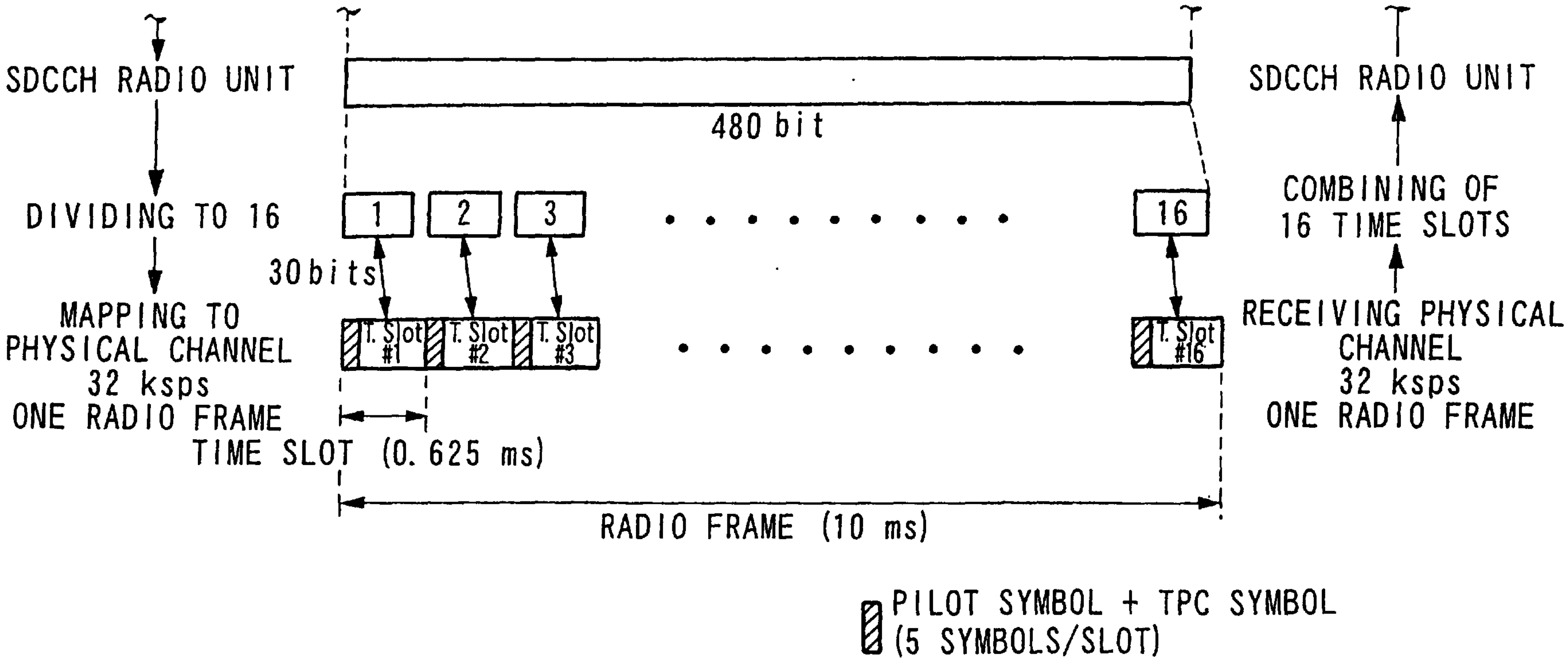

FIG. 24

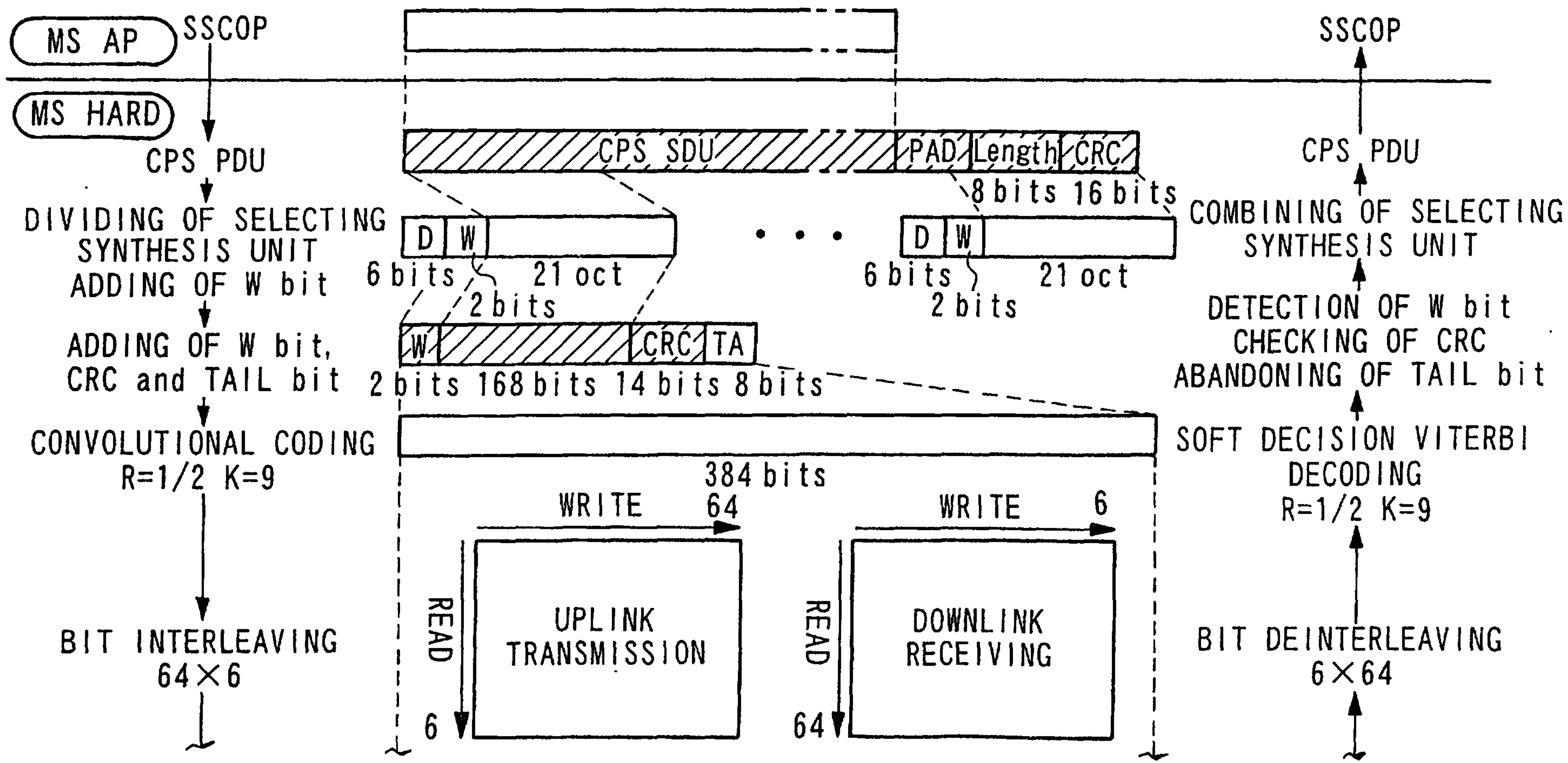
MS AP
SSCOP
MS HARD
CPS PDU
DIVIDING OF SELECTING SYNTHESIS UNIT ADDING OF W bit
ADDING OF W bit, CRC and TAIL bit
CONVOLUTIONAL CODING R=1/2 K=9
BIT INTERLEAVING 64×6
CPS SDU
PAD
Length
CRC
8 bits 16 bits
D
W
6 bits
2 bits
21 oct
CRC
TA
2 bits 168 bits 14 bits 8 bits
384 bits
WRITE
64
READ
6
UPLINK TRANSMISSION
WRITE
6
READ
64
DOWNLINK RECEIVING
SSCOP
CPS PDU
COMBINING OF SELECTING SYNTHESIS UNIT
DETECTION OF W bit CHECKING OF CRC ABANDONING OF TAIL bit
SOFT DECISION VITERBI DECODING R=1/2 K=9
BIT DEINTERLEAVING 6×64

# CONTINUANCE OF FIG. 24

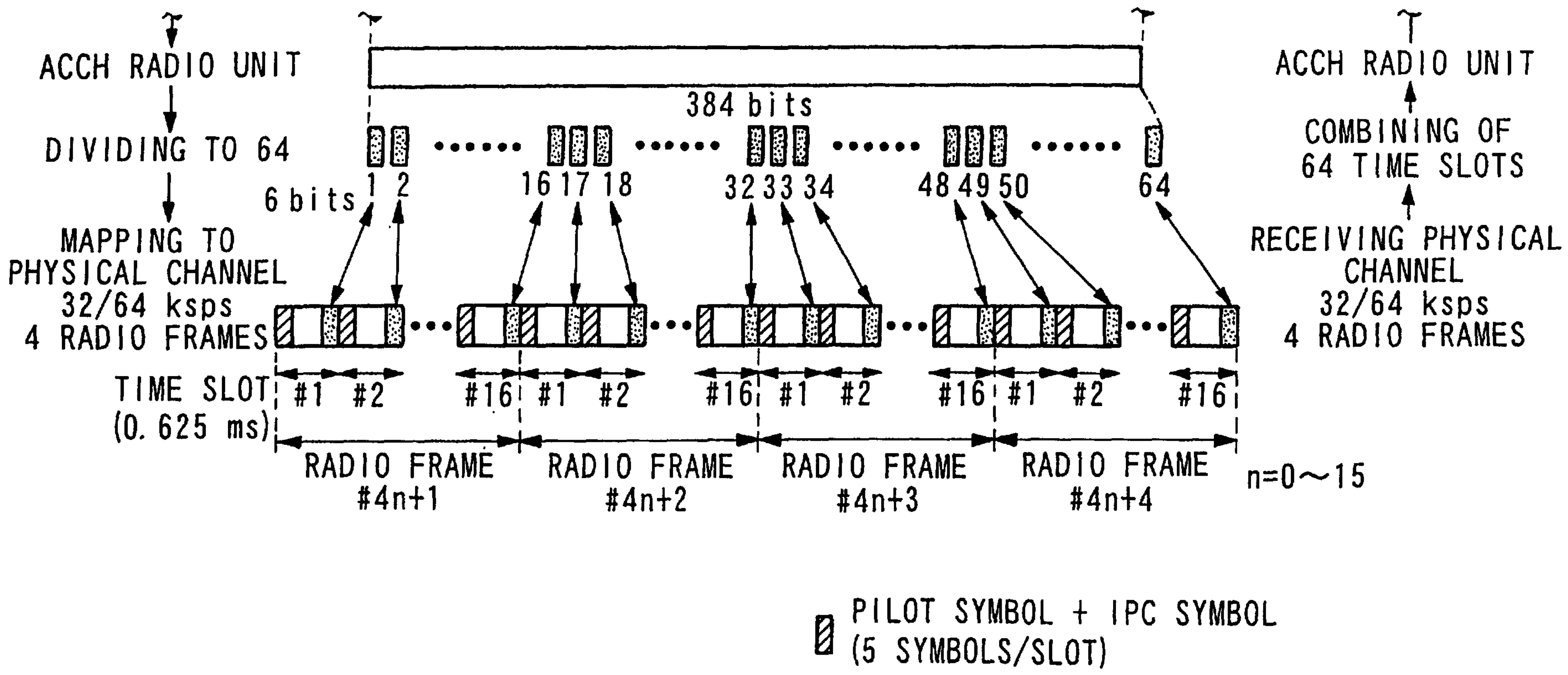

FIG. 25

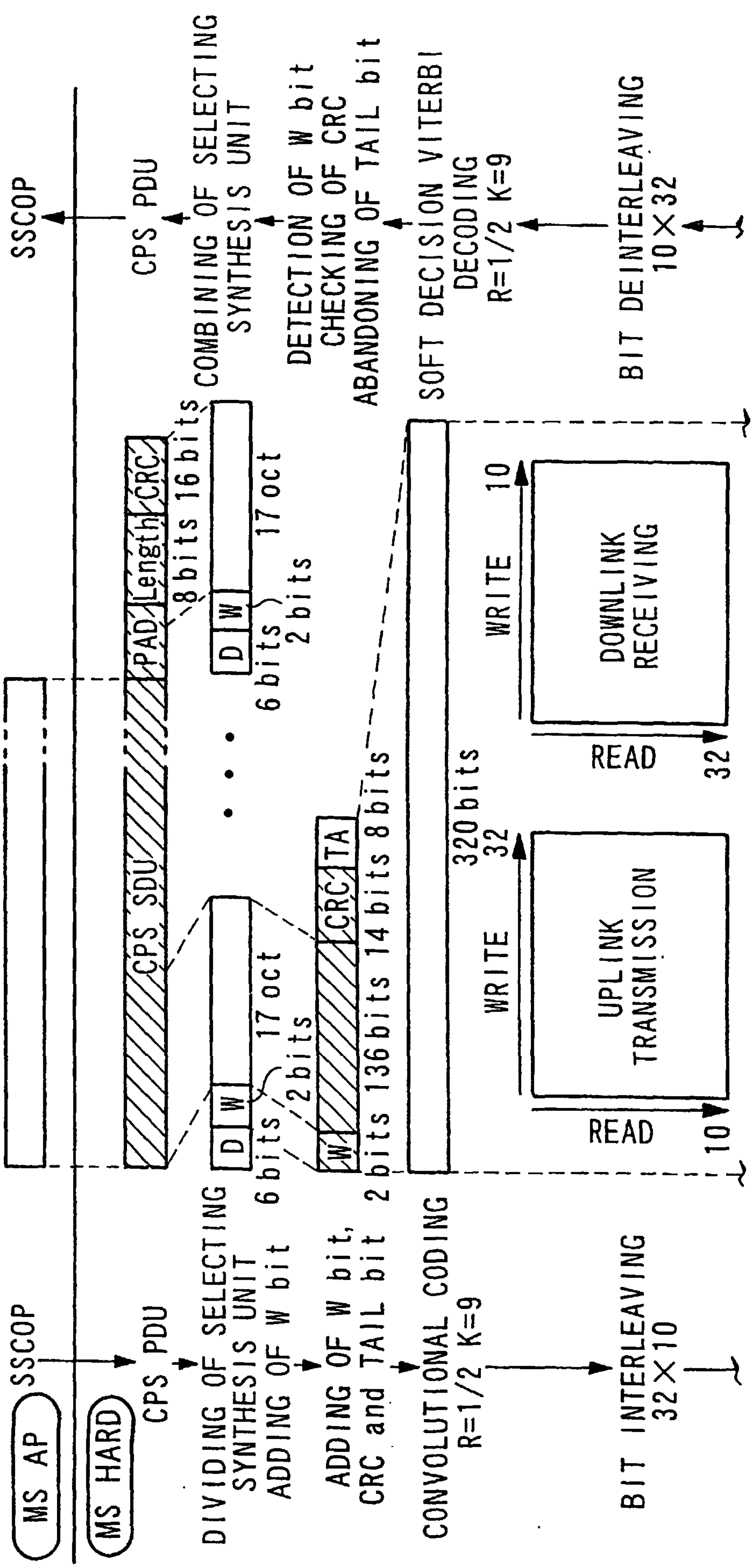
MS AP
MS HARD
SSCOP
CPS PDU
DIVIDING OF SELECTING SYNTHESIS UNIT
ADDING OF W bit
ADDING OF W bit, CRC and TAIL bit
CONVOLUTIONAL CODING R=1/2 K=9
BIT INTERLEAVING 32×10
CPS SDU
PAD
Length
CRC
8 bits 16 bits
D
W
6 bits
2 bits
17 oct
W
CRC
TA
2 bits 136 bits 14 bits 8 bits
320 bits
WRITE
READ
UPLINK TRANSMISSION
DOWNLINK RECEIVING
10
32
SSCOP
CPS PDU
COMBINING OF SELECTING SYNTHESIS UNIT
DETECTION OF W bit
CHECKING OF CRC
ABANDONING OF TAIL bit
SOFT DECISION VITERBI DECODING R=1/2 K=9
BIT DEINTERLEAVING 10×32

# CONTINUANCE OF FIG. 25

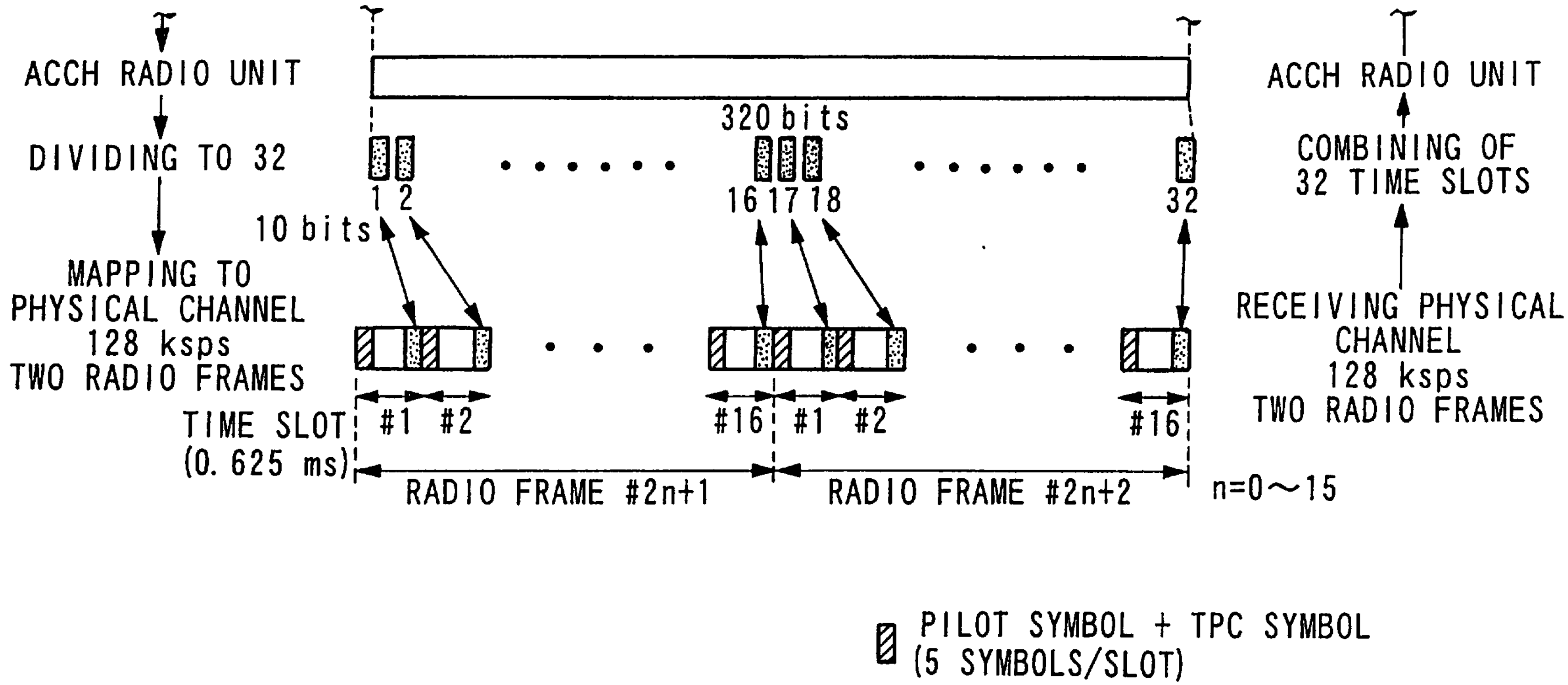

FIG. 26

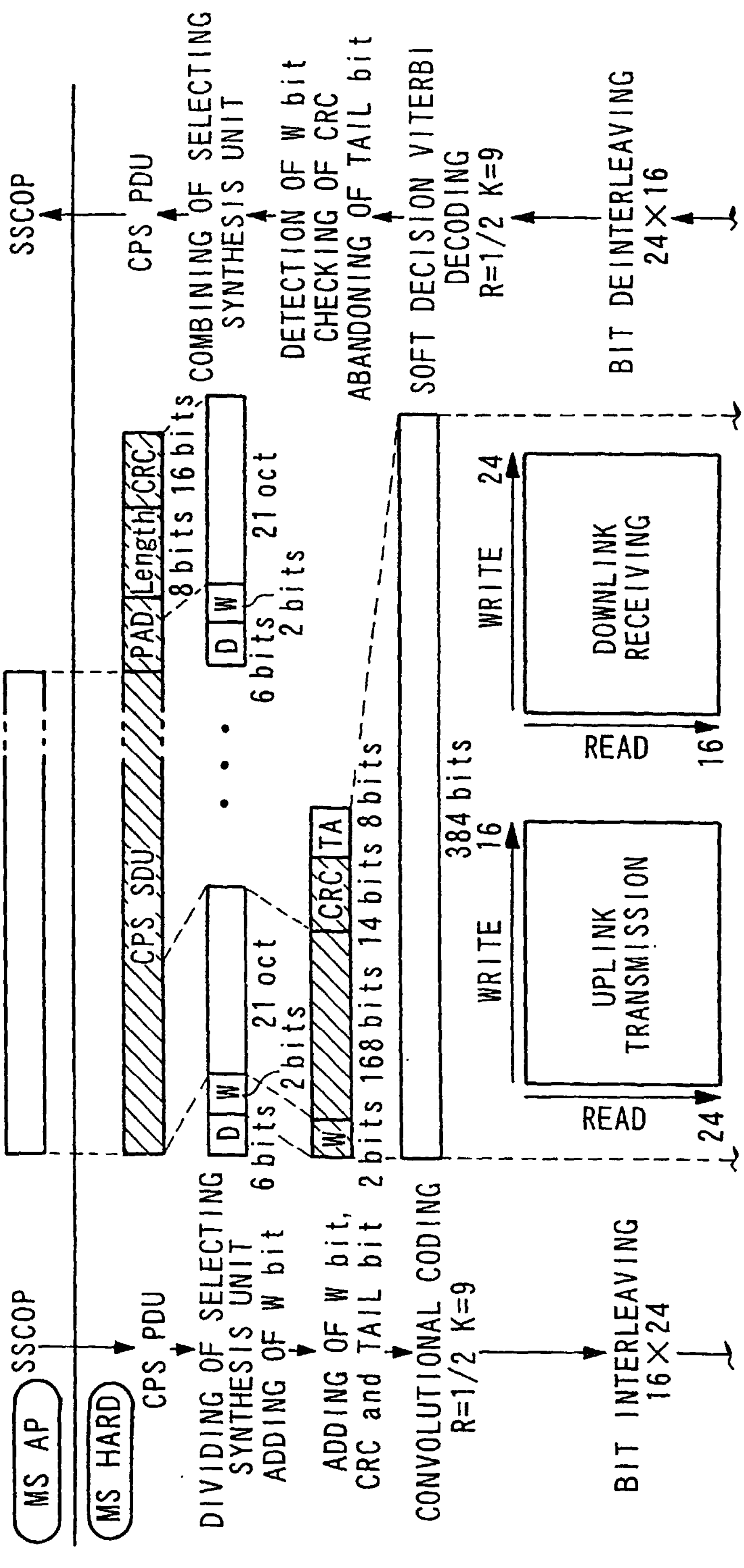
MS AP
MS HARD
SSCOP
CPS PDU
DIVIDING OF SELECTING SYNTHESIS UNIT
ADDING OF W bit
ADDING OF W bit, CRC and TAIL bit
CONVOLUTIONAL CODING
R=1/2 K=9
BIT INTERLEAVING
16×24
CPS SDU
PAD
Length
CRC
8 bits 16 bits
D
W
6 bits
2 bits
21 oct
D
W
6 bits
2 bits
21 oct
W
CRC
TA
2 bits 168 bits 14 bits 8 bits
384 bits
WRITE 16
READ 24
UPLINK TRANSMISSION
WRITE 24
READ 16
DOWNLINK RECEIVING
SSCOP
CPS PDU
COMBINING OF SELECTING SYNTHESIS UNIT
DETECTION OF W bit
CHECKING OF CRC
ABANDONING OF TAIL bit
SOFT DECISION VITERBI DECODING
R=1/2 K=9
BIT DEINTERLEAVING
24×16

# CONTINUANCE OF FIG. 26

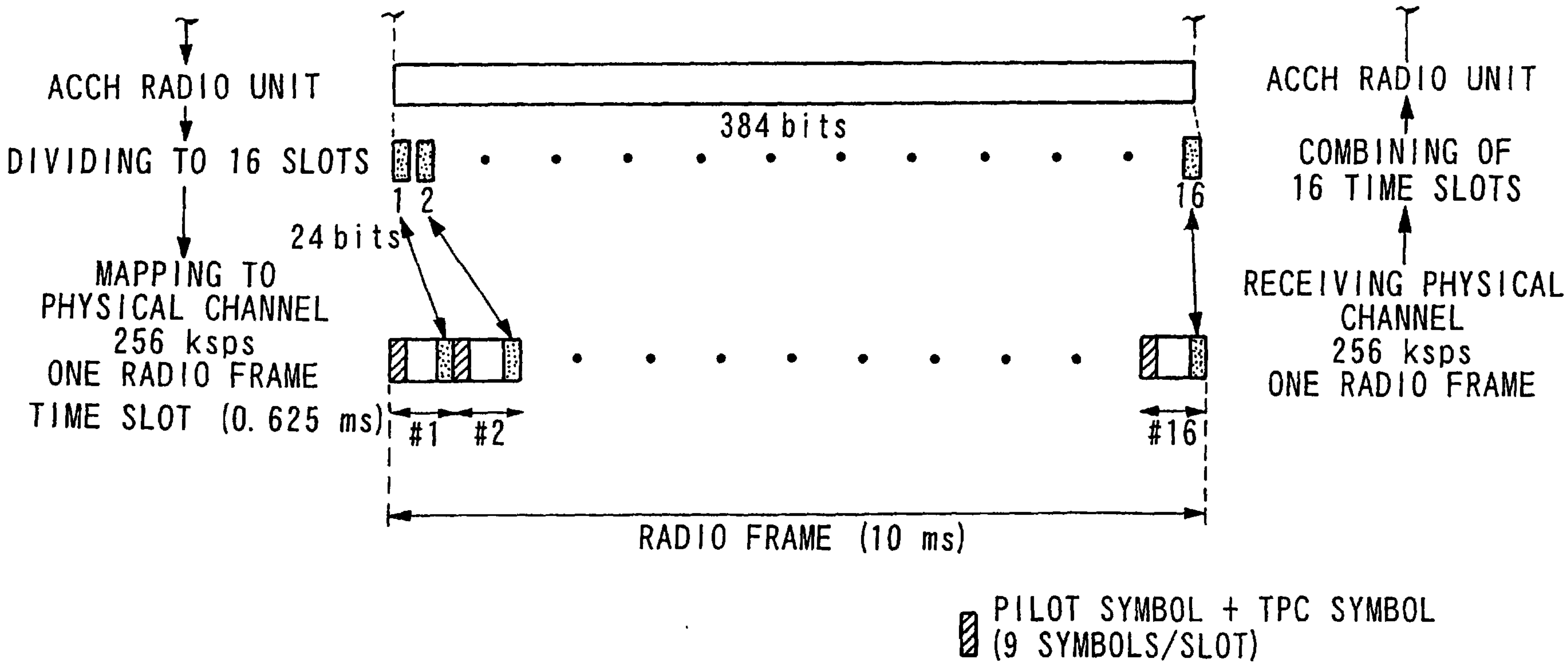

FIG. 27

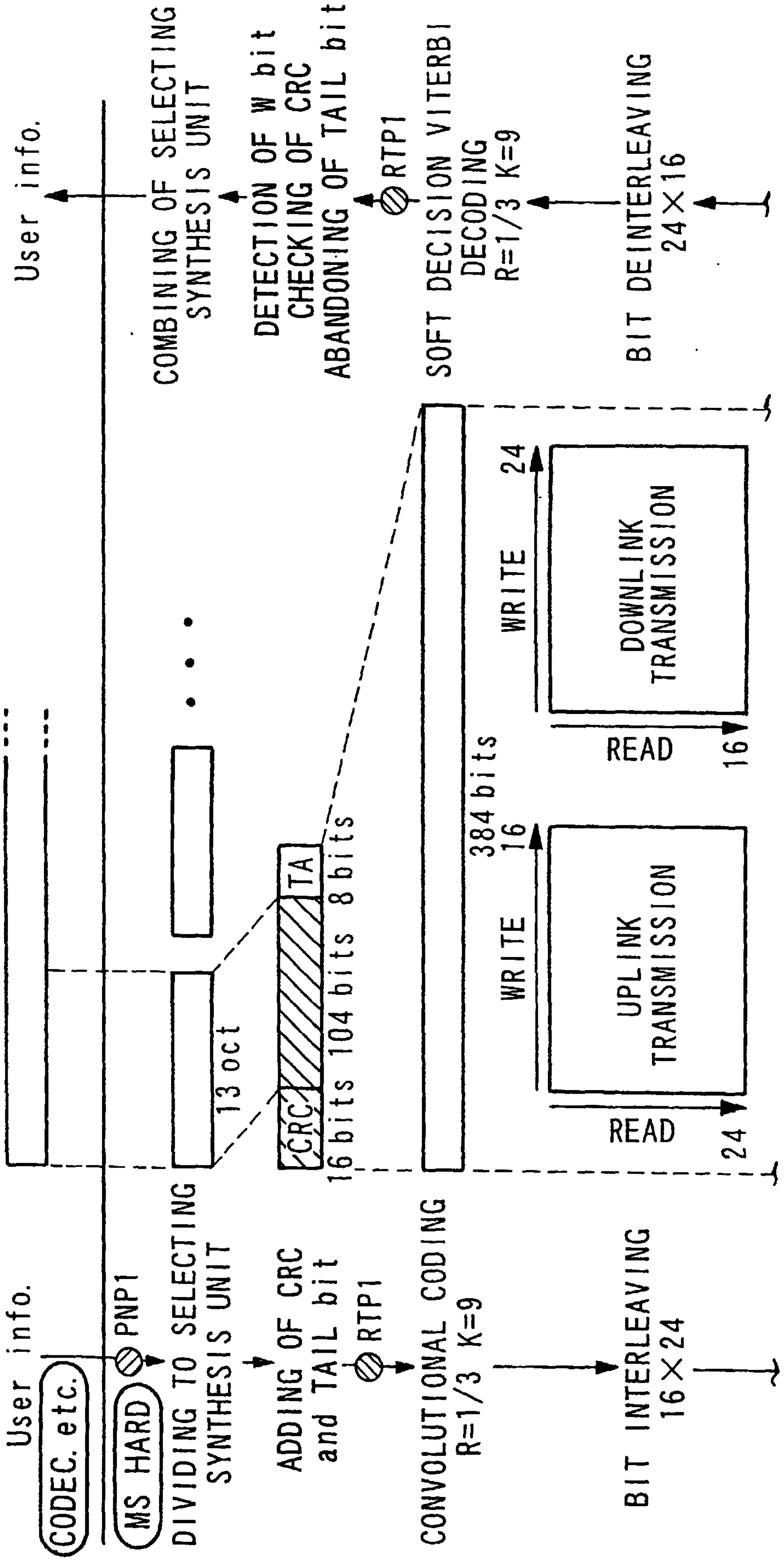

User info.
CODEC. etc.
MS HARD
PNP1
DIVIDING TO SELECTING SYNTHESIS UNIT
ADDING OF CRC and TAIL bit
RTP1
CONVOLUTIONAL CODING R=1/3 K=9
BIT INTERLEAVING 16×24
13 oct
CRC
TA
16 bits 104 bits 8 bits
384 bits
WRITE
16
READ
24
UPLINK TRANSMISSION
WRITE
24
READ
16
DOWNLINK TRANSMISSION
User info.
COMBINING OF SELECTING SYNTHESIS UNIT
DETECTION OF W bit
CHECKING OF CRC
ABANDONING OF TAIL bit
RTP1
SOFT DECISION VITERBI DECODING R=1/3 K=9
BIT DEINTERLEAVING 24×16

CONTINUANCE OF FIG. 27

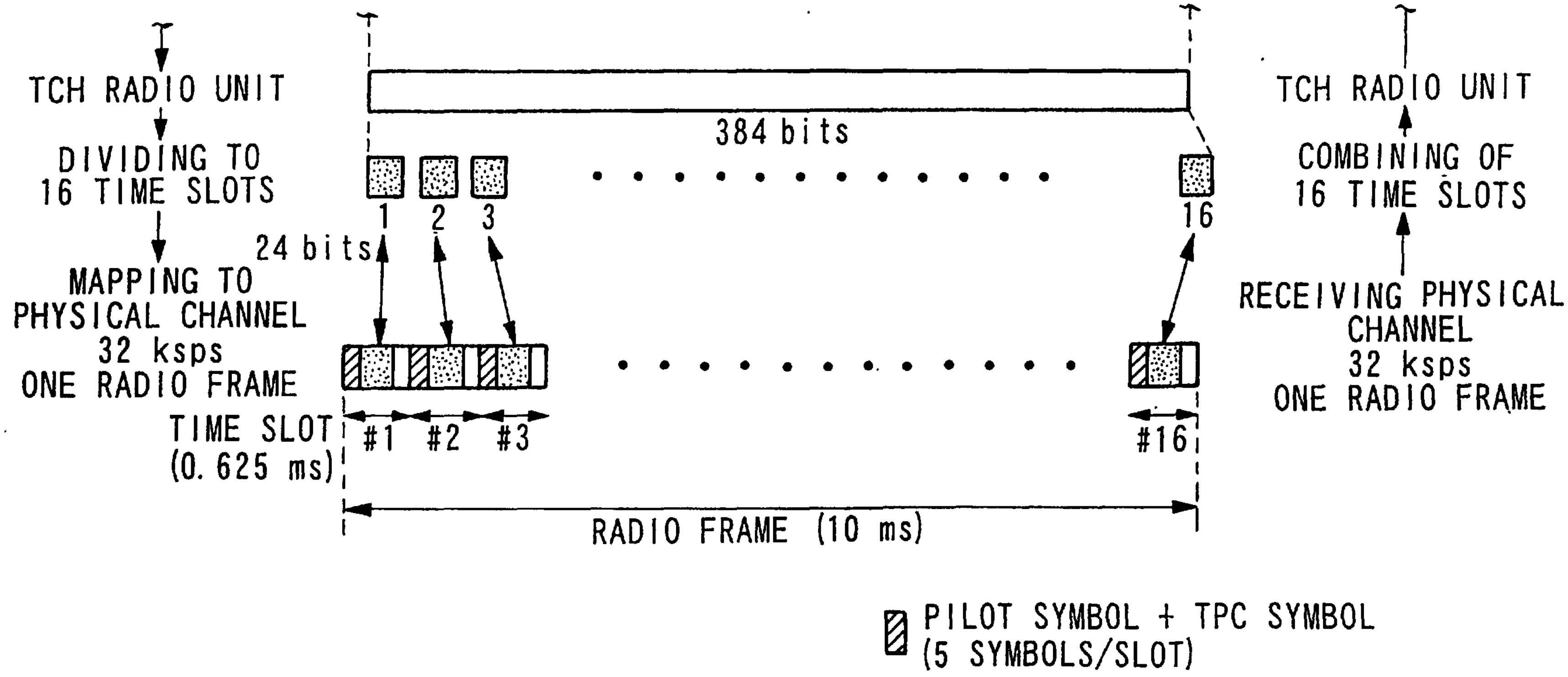

FIG. 28

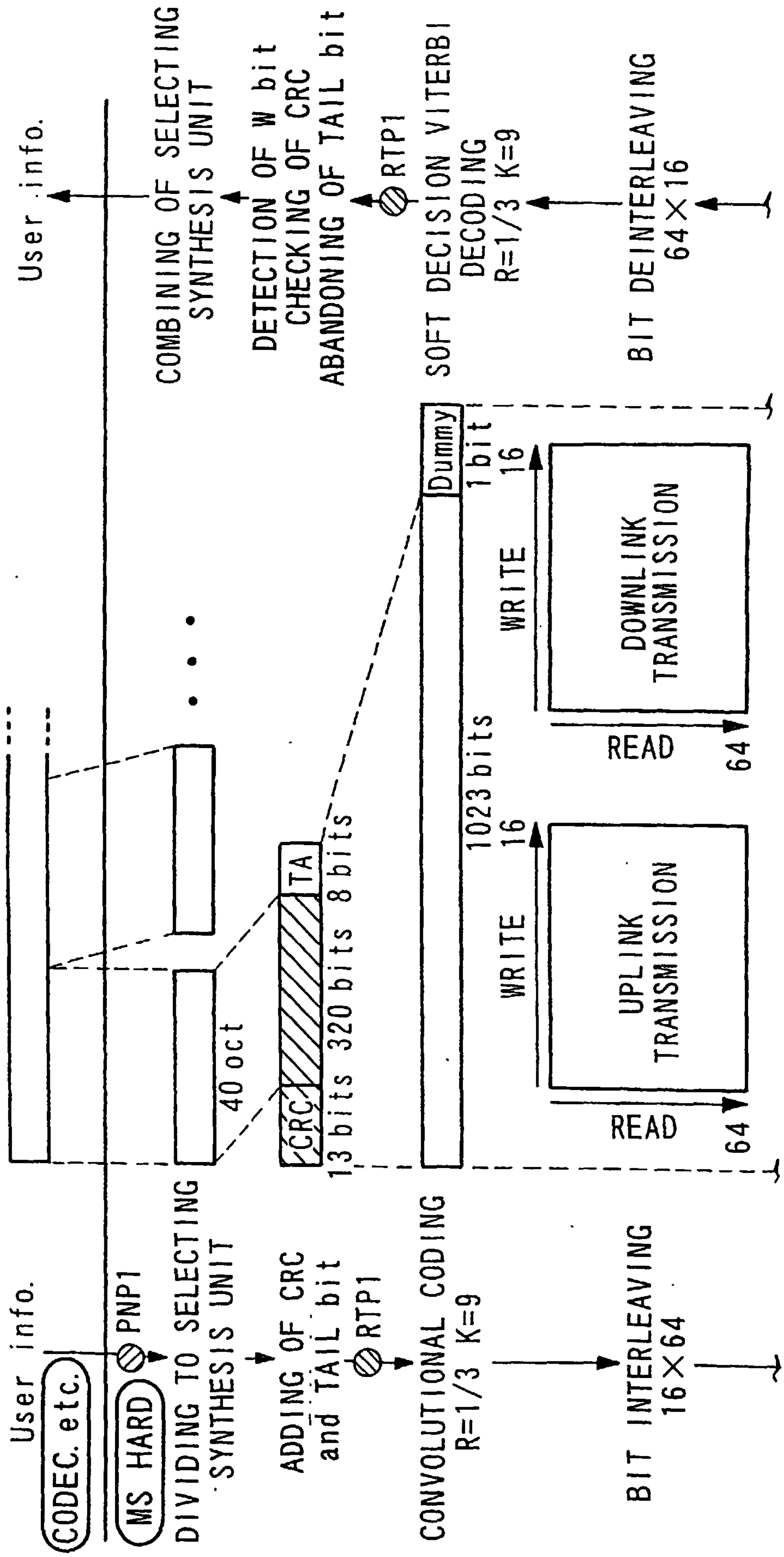
User info.
CODEC. etc.
MS HARD
PNP1
DIVIDING TO SELECTING SYNTHESIS UNIT
ADDING OF CRC and TAIL bit
RTP1
CONVOLUTIONAL CODING R=1/3 K=9
BIT INTERLEAVING 16×64
40 oct
CRC
TA
13 bits 320 bits 8 bits
1023 bits
Dummy
1 bit
WRITE
16
READ
64
UPLINK TRANSMISSION
WRITE
16
READ
64
DOWNLINK TRANSMISSION
User info.
COMBINING OF SELECTING SYNTHESIS UNIT
DETECTION OF W bit
CHECKING OF CRC
ABANDONING OF TAIL bit
RTP1
SOFT DECISION VITERBI DECODING
R=1/3 K=9
BIT DEINTERLEAVING 64×16

CONTINUANCE OF FIG. 28

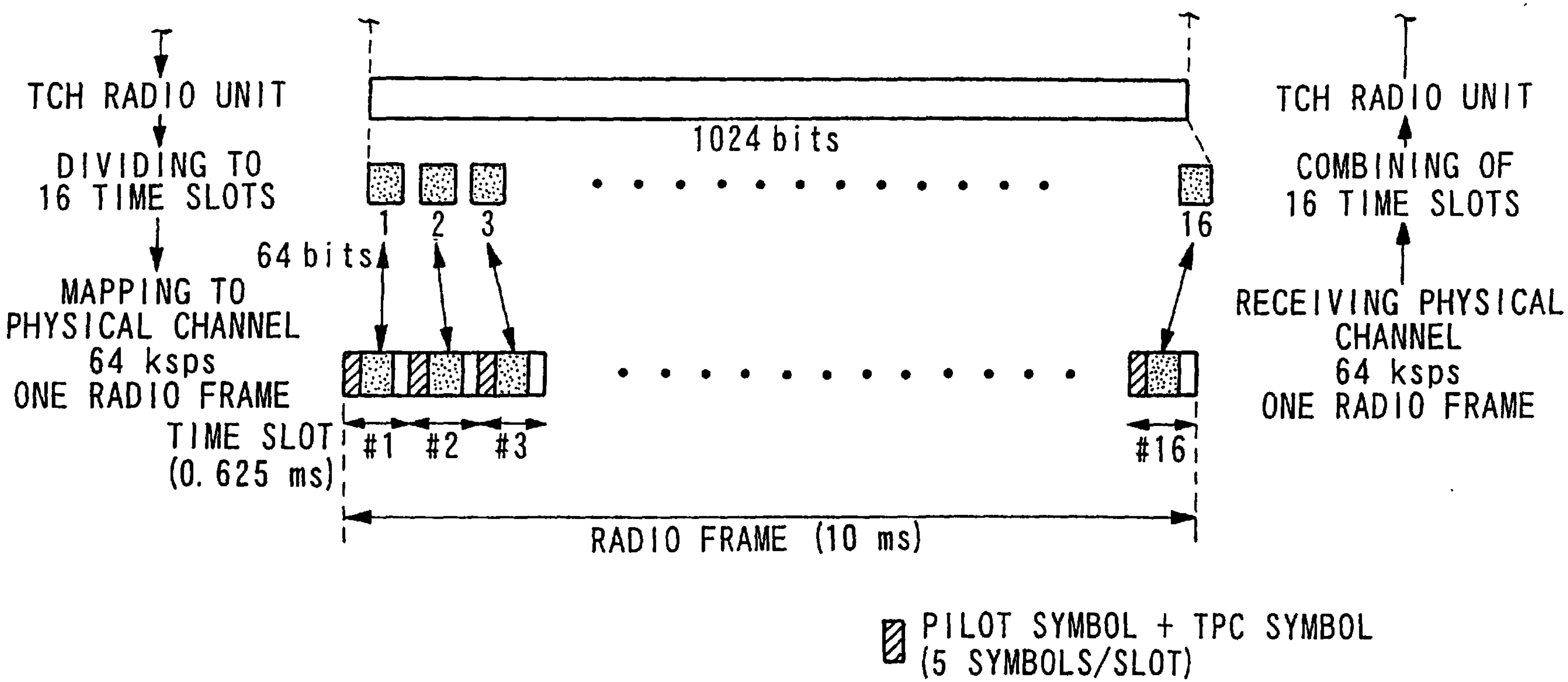

FIG. 29

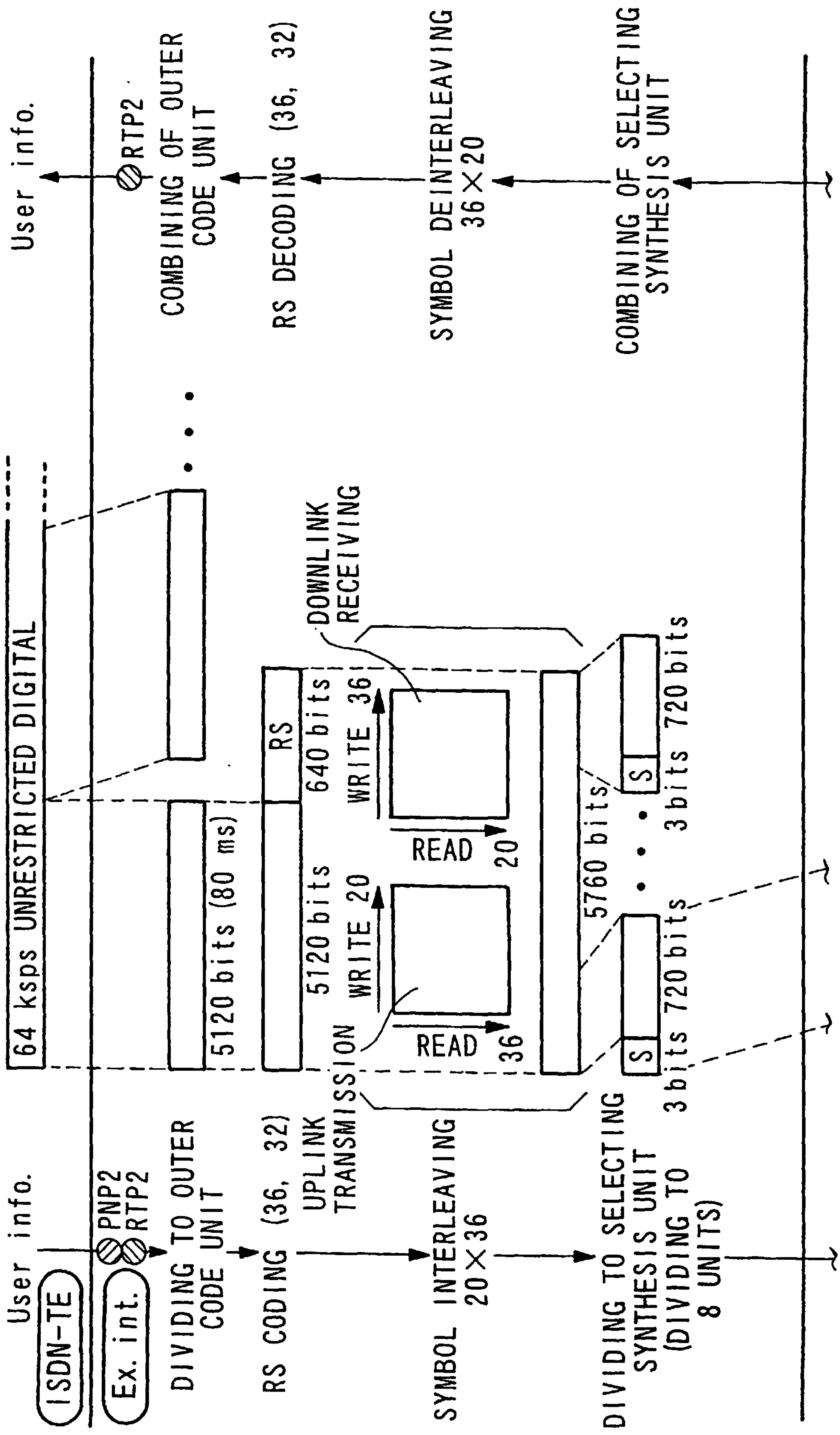
64 ksps UNRESTRICTED DIGITAL
ISDN-TE
User info.
Ex. int.
PNP2
RTP2
DIVIDING TO OUTER CODE UNIT
5120 bits (80 ms)
RS CODING (36, 32)
5120 bits
640 bits
RS
UPLINK TRANSMISSION
WRITE 20
READ 36
WRITE 36
READ 20
DOWNLINK RECEIVING
SYMBOL INTERLEAVING 20×36
5760 bits
DIVIDING TO SELECTING SYNTHESIS UNIT (DIVIDING TO 8 UNITS)
S
3 bits
720 bits
User info.
RTP2
COMBINING OF OUTER CODE UNIT
RS DECODING (36, 32)
SYMBOL DEINTERLEAVING 36×20
COMBINING OF SELECTING SYNTHESIS UNIT

CONTINUANCE OF FIG. 29

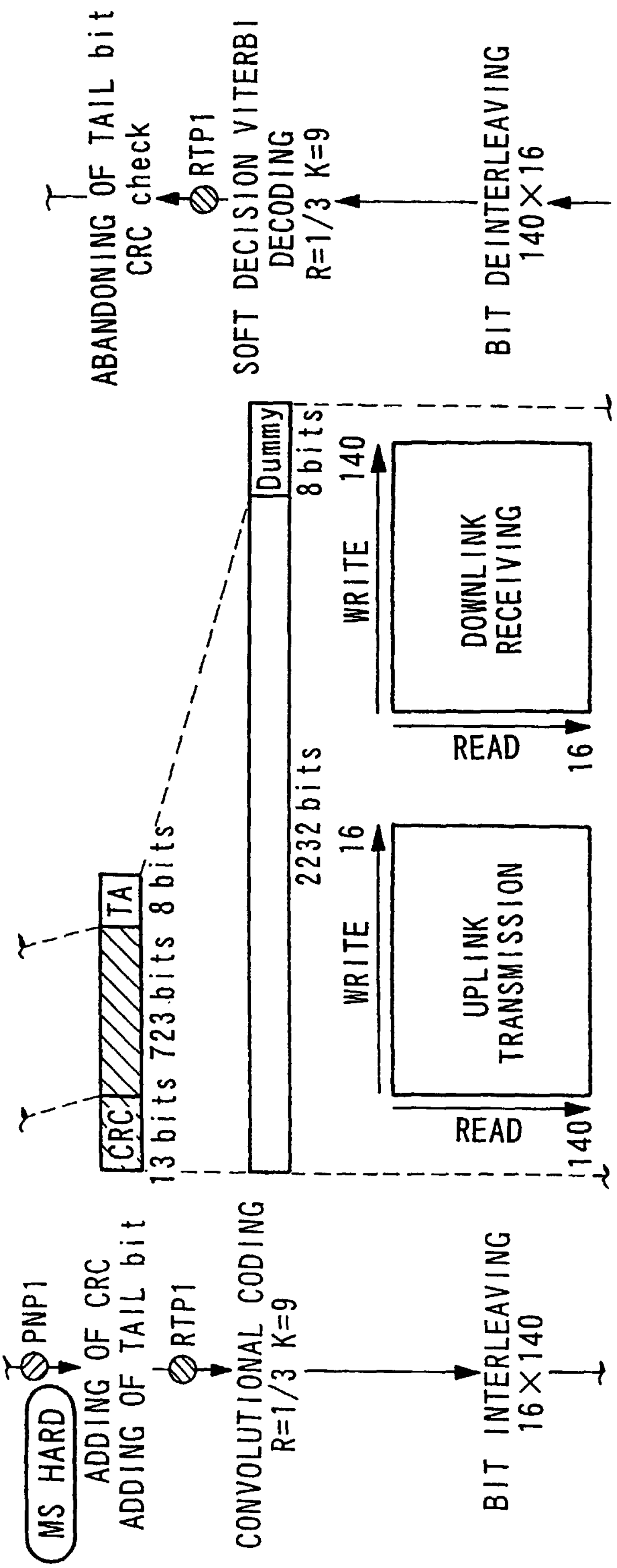

CONTINUANCE OF FIG. 29

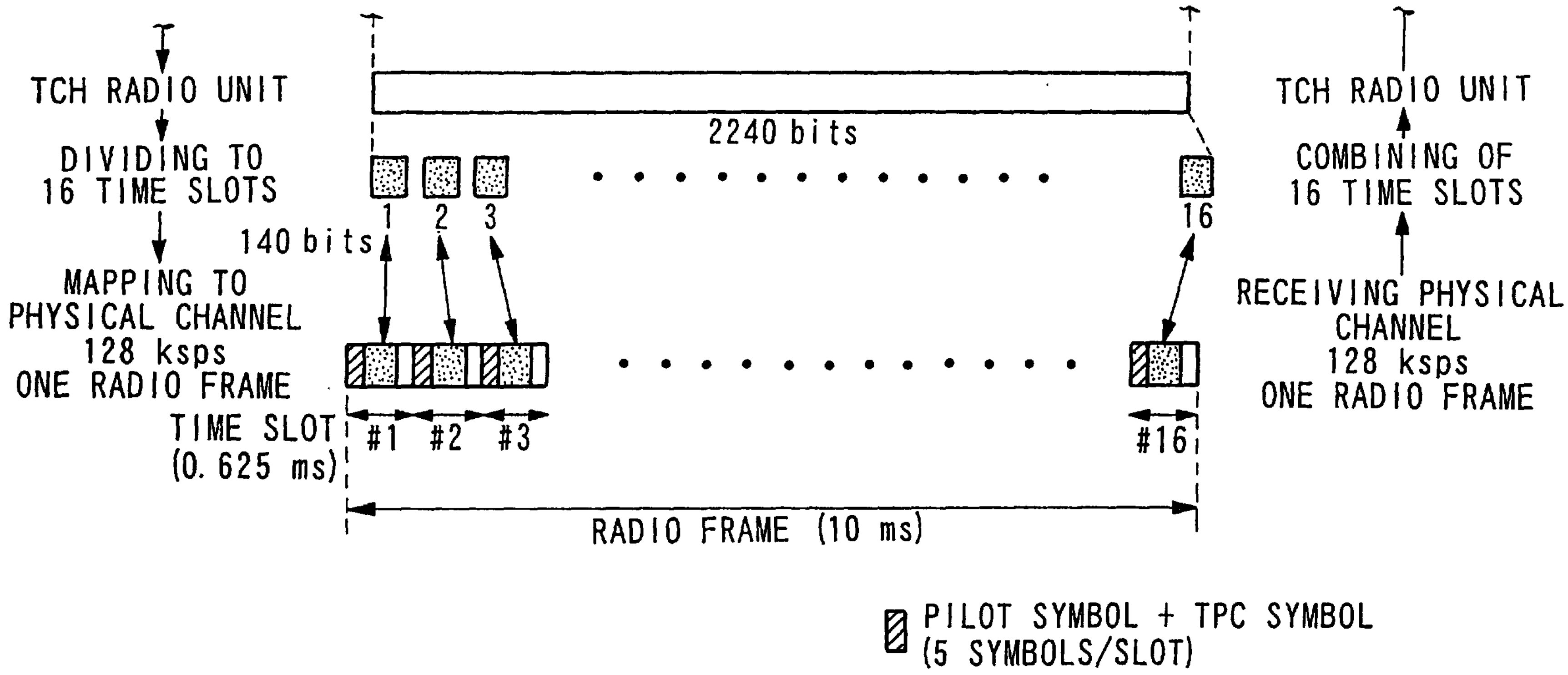

FIG. 30

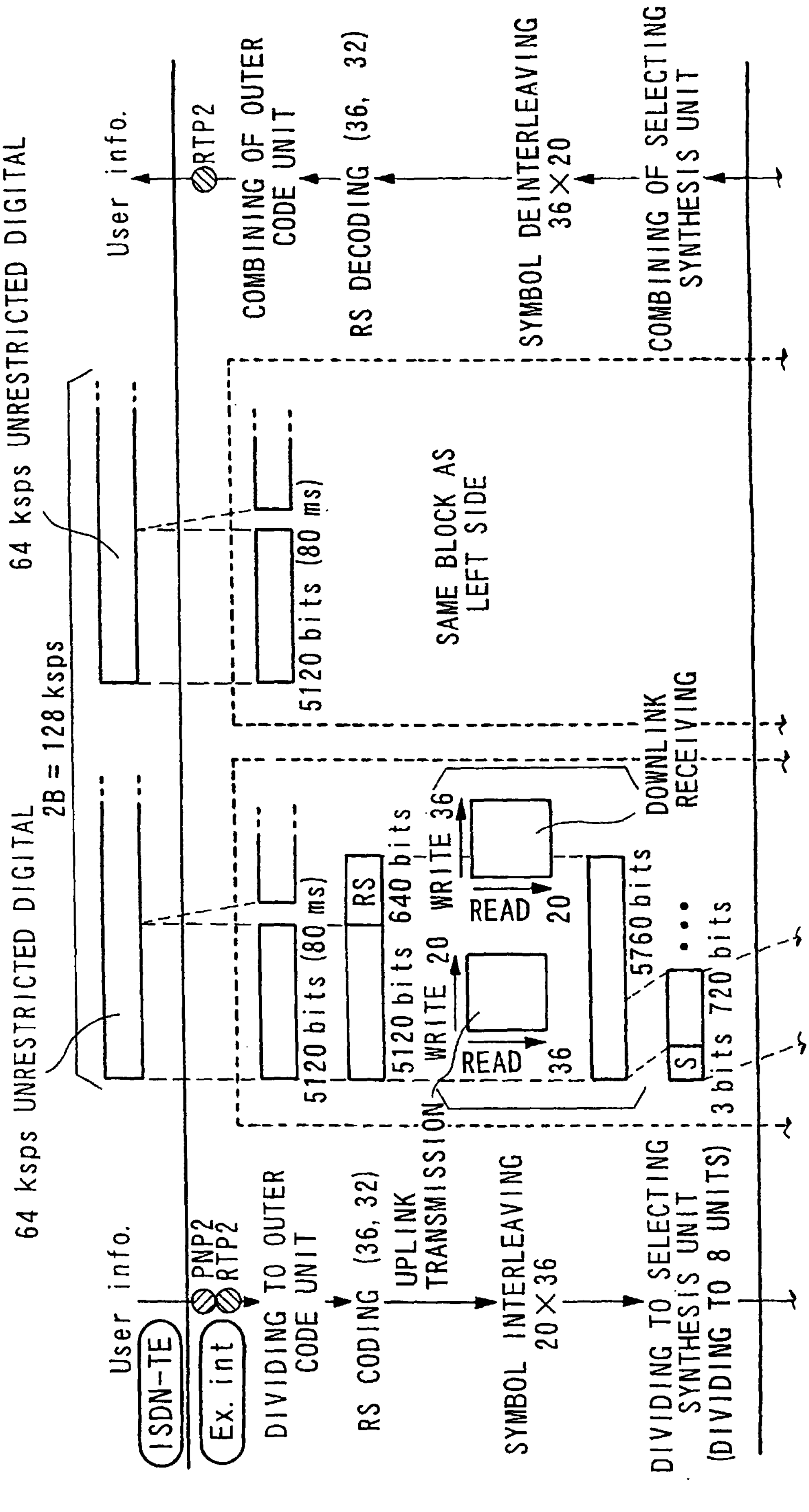

64 ksps UNRESTRICTED DIGITAL
2B = 128 ksps
64 ksps UNRESTRICTED DIGITAL
User info.
ISDN-TE
Ex. int
PNP2
RTP2
DIVIDING TO OUTER CODE UNIT
RS CODING (36, 32)
UPLINK TRANSMISSION
SYMBOL INTERLEAVING 20×36
DIVIDING TO SELECTING SYNTHESIS UNIT (DIVIDING TO 8 UNITS)
5120 bits (80 ms)
5120 bits
RS
640 bits
WRITE 20
READ
36
WRITE 36
READ
20
5760 bits
S
3 bits
720 bits
DOWNLINK RECEIVING
SAME BLOCK AS LEFT SIDE
5120 bits (80 ms)
User info.
RTP2
COMBINING OF OUTER CODE UNIT
RS DECODING (36, 32)
SYMBOL DEINTERLEAVING 36×20
COMBINING OF SELECTING SYNTHESIS UNIT

CONTINUANCE OF FIG. 30

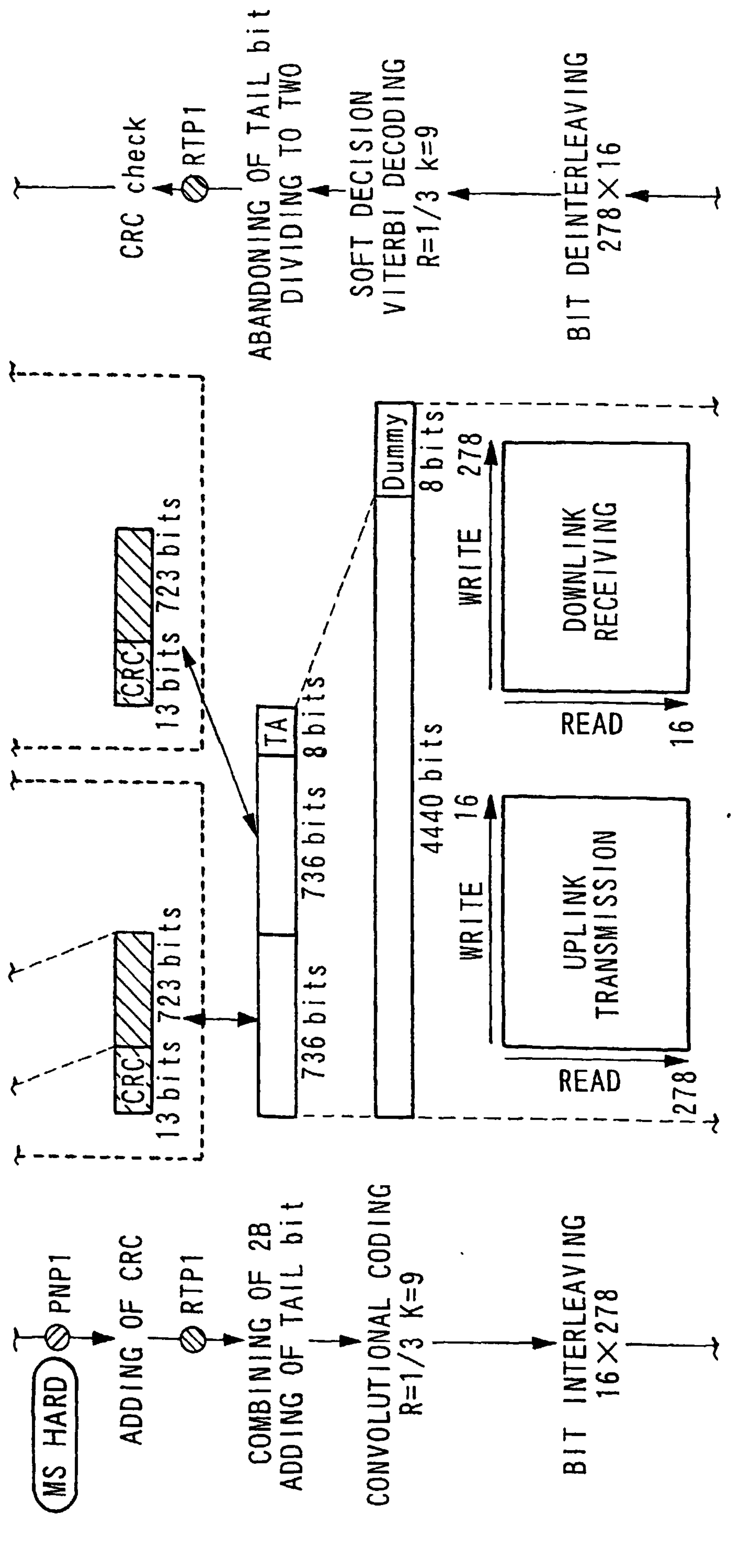

# CONTINUANCE OF FIG. 30

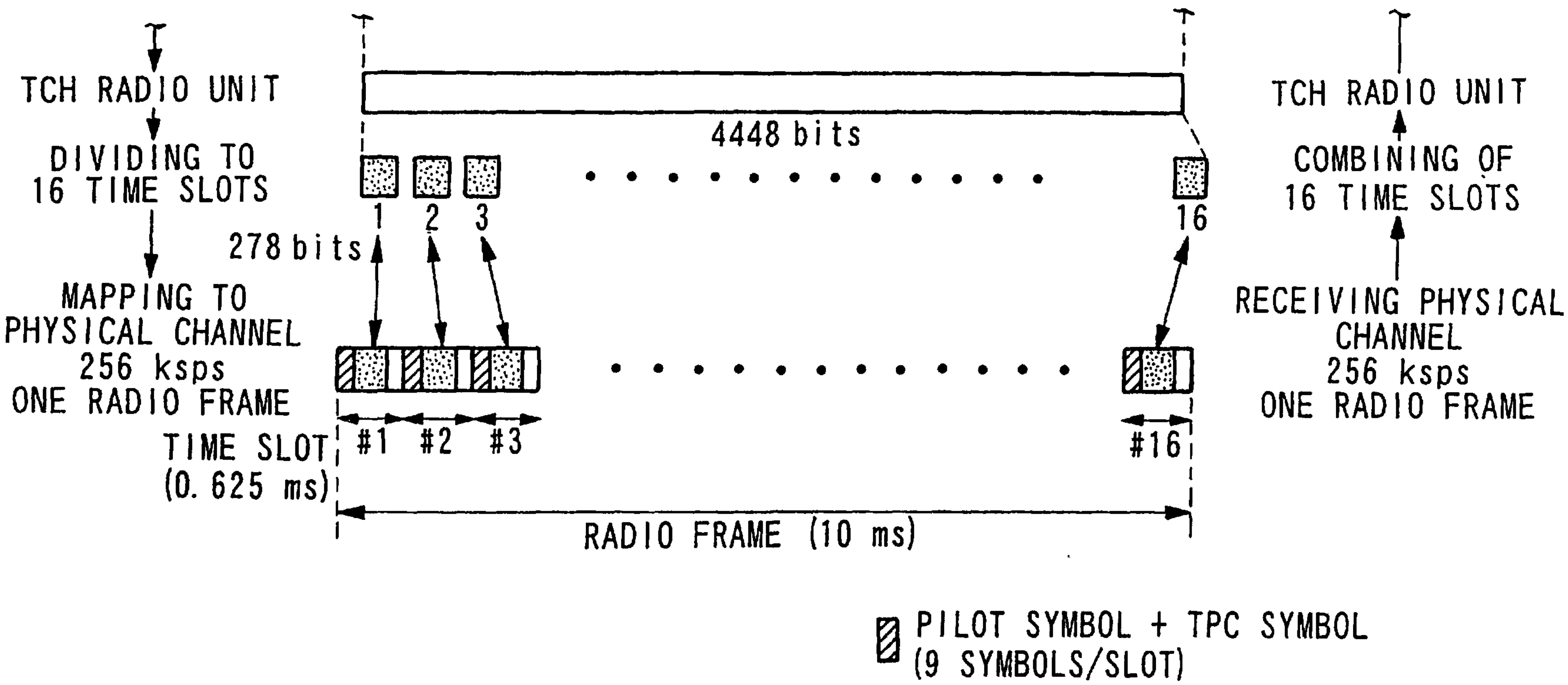

FIG. 31

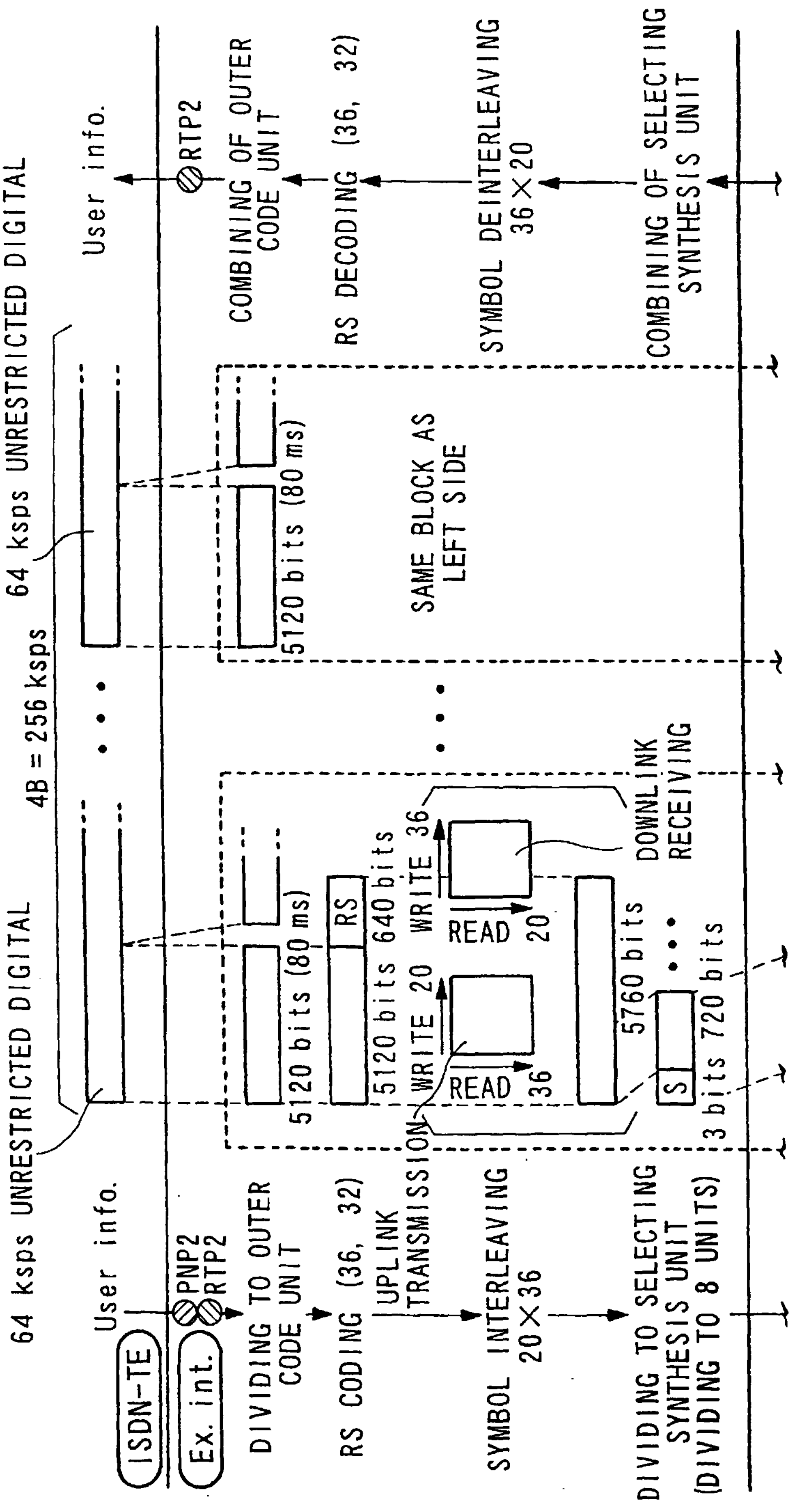

4B = 256 ksps
64 ksps UNRESTRICTED DIGITAL
64 ksps UNRESTRICTED DIGITAL
ISDN-TE
Ex. int.
User info.
PNP2
RTP2
DIVIDING TO OUTER CODE UNIT
RS CODING (36, 32)
UPLINK TRANSMISSION
SYMBOL INTERLEAVING 20×36
DIVIDING TO SELECTING SYNTHESIS UNIT (DIVIDING TO 8 UNITS)
5120 bits (80 ms)
RS
5120 bits 640 bits
WRITE 20
READ
36
WRITE 36
READ
20
DOWNLINK RECEIVING
5760 bits
S
3 bits 720 bits
SAME BLOCK AS LEFT SIDE
5120 bits (80 ms)
User info.
RTP2
COMBINING OF OUTER CODE UNIT
RS DECODING (36, 32)
SYMBOL DEINTERLEAVING 36×20
COMBINING OF SELECTING SYNTHESIS UNIT

CONTINUANCE OF FIG. 31

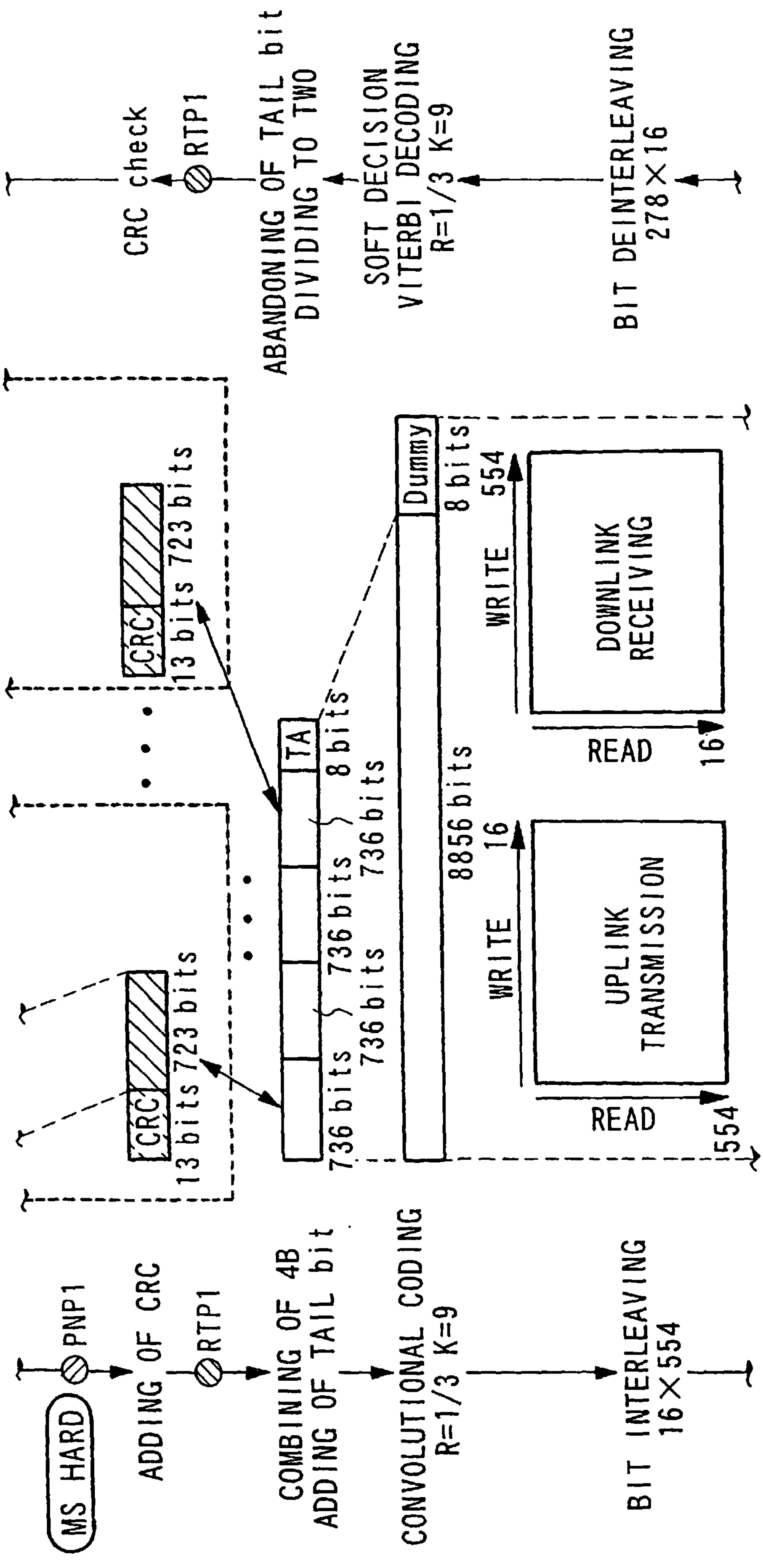

CONTINUANCE OF FIG. 31

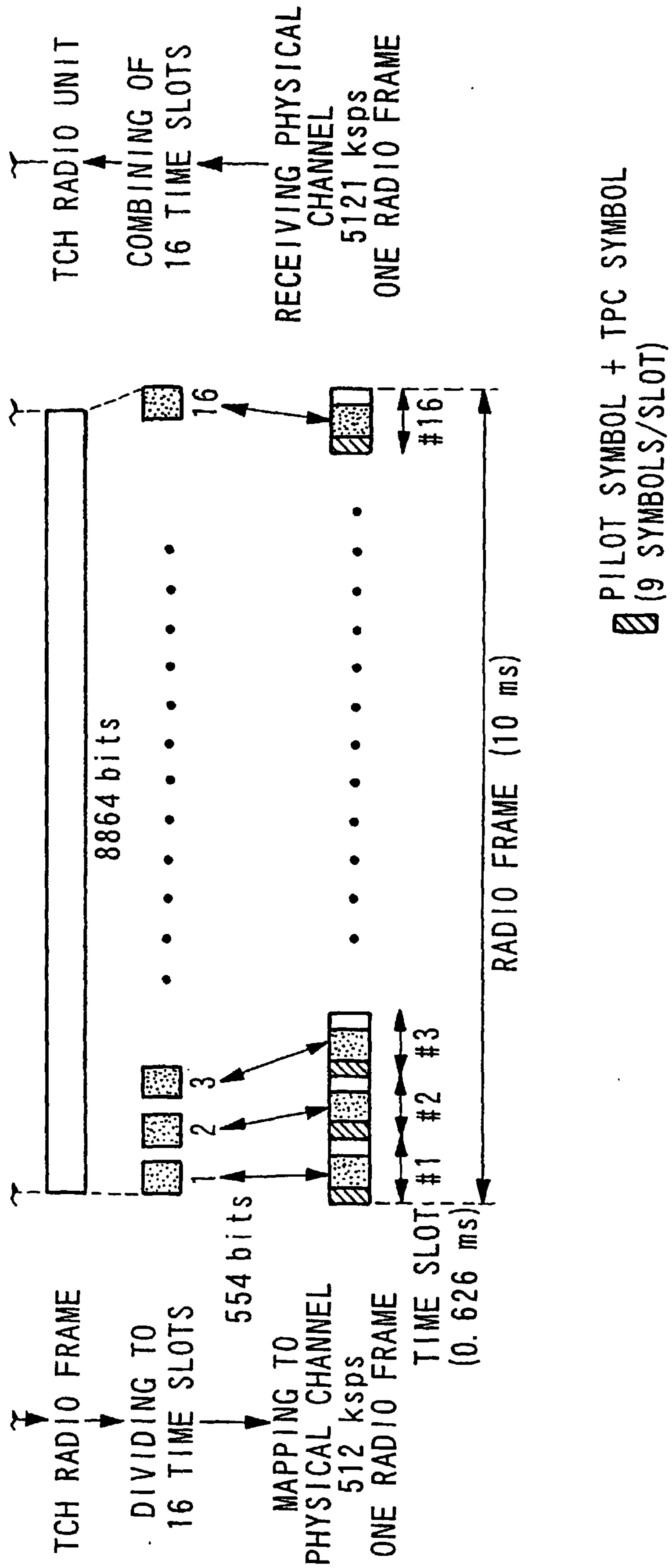

FIG. 32

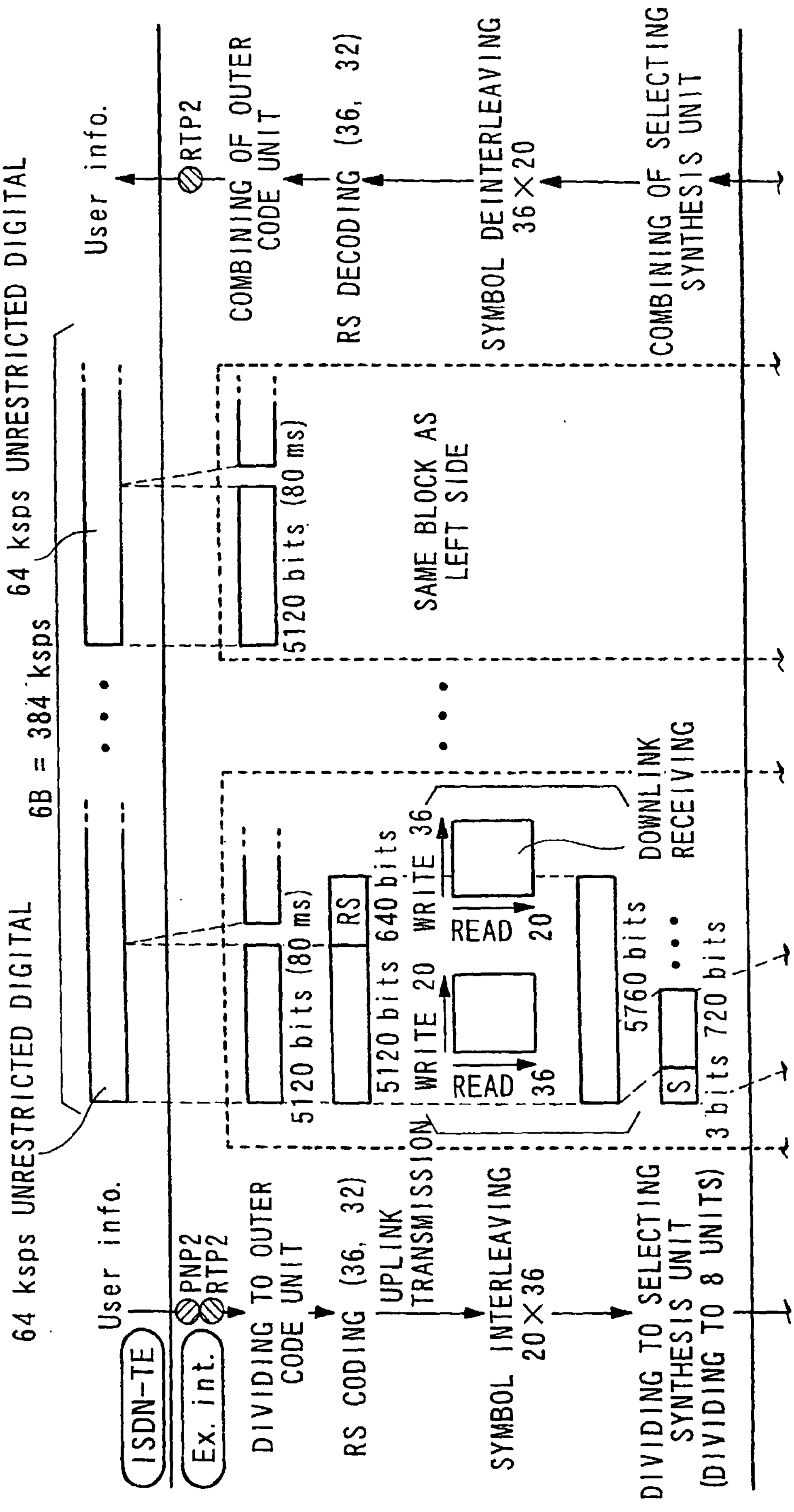
64 ksps UNRESTRICTED DIGITAL
6B = 384 ksps
64 ksps UNRESTRICTED DIGITAL
ISDN-TE
Ex. int.
User info.
PNP2
RTP2
DIVIDING TO OUTER CODE UNIT
RS CODING (36, 32)
UPLINK TRANSMISSION
SYMBOL INTERLEAVING 20×36
DIVIDING TO SELECTING SYNTHESIS UNIT (DIVIDING TO 8 UNITS)
5120 bits (80 ms)
5120 bits 640 bits
RS
WRITE 20
READ 36
WRITE 36
READ 20
5760 bits
S
3 bits 720 bits
DOWNLINK RECEIVING
SAME BLOCK AS LEFT SIDE
5120 bits (80 ms)
User info.
RTP2
COMBINING OF OUTER CODE UNIT
RS DECODING (36, 32)
SYMBOL DEINTERLEAVING 36×20
COMBINING OF SELECTING SYNTHESIS UNIT

# CONTINUANCE OF FIG. 32

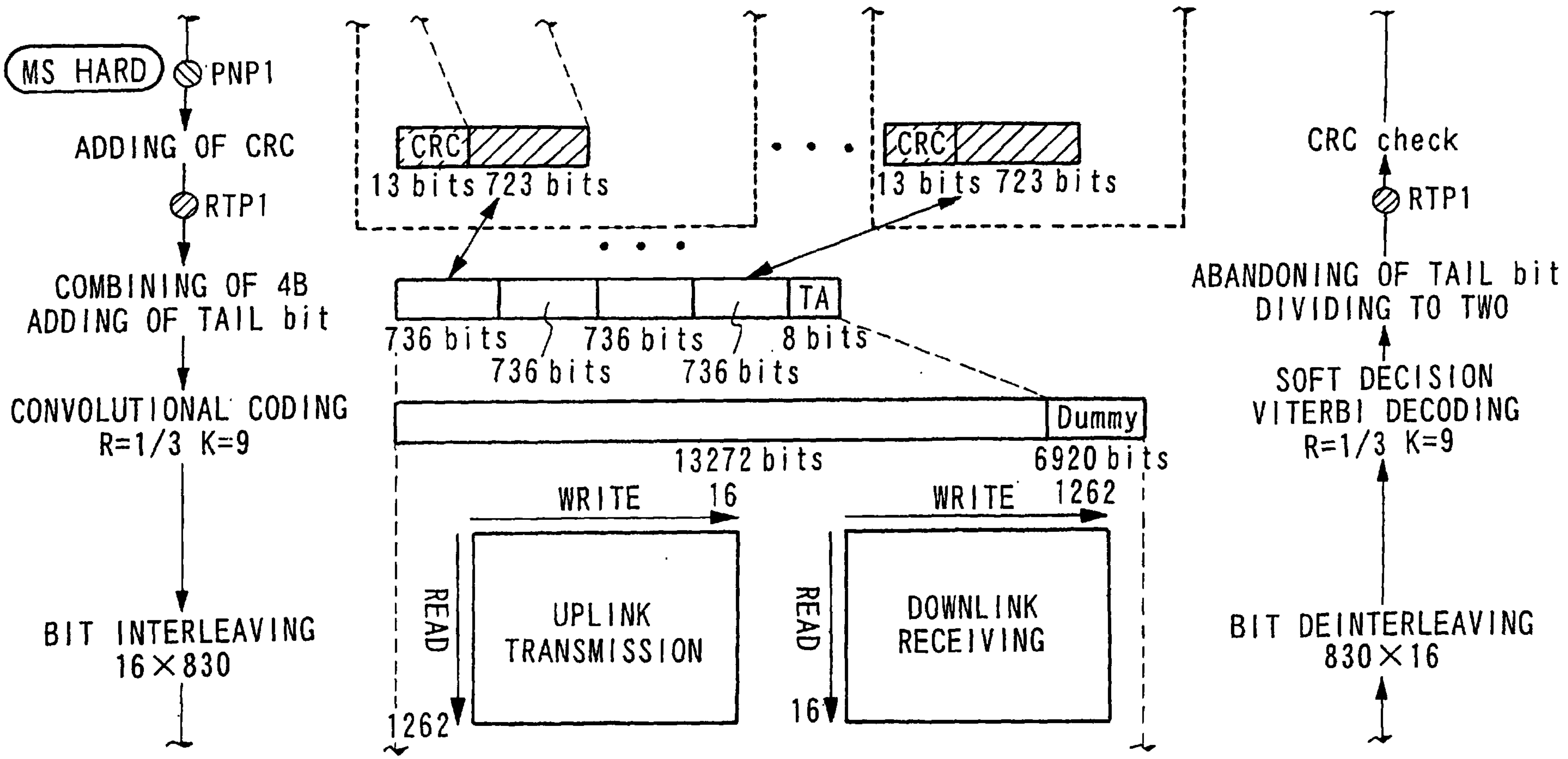

CONTINUANCE OF FIG. 32

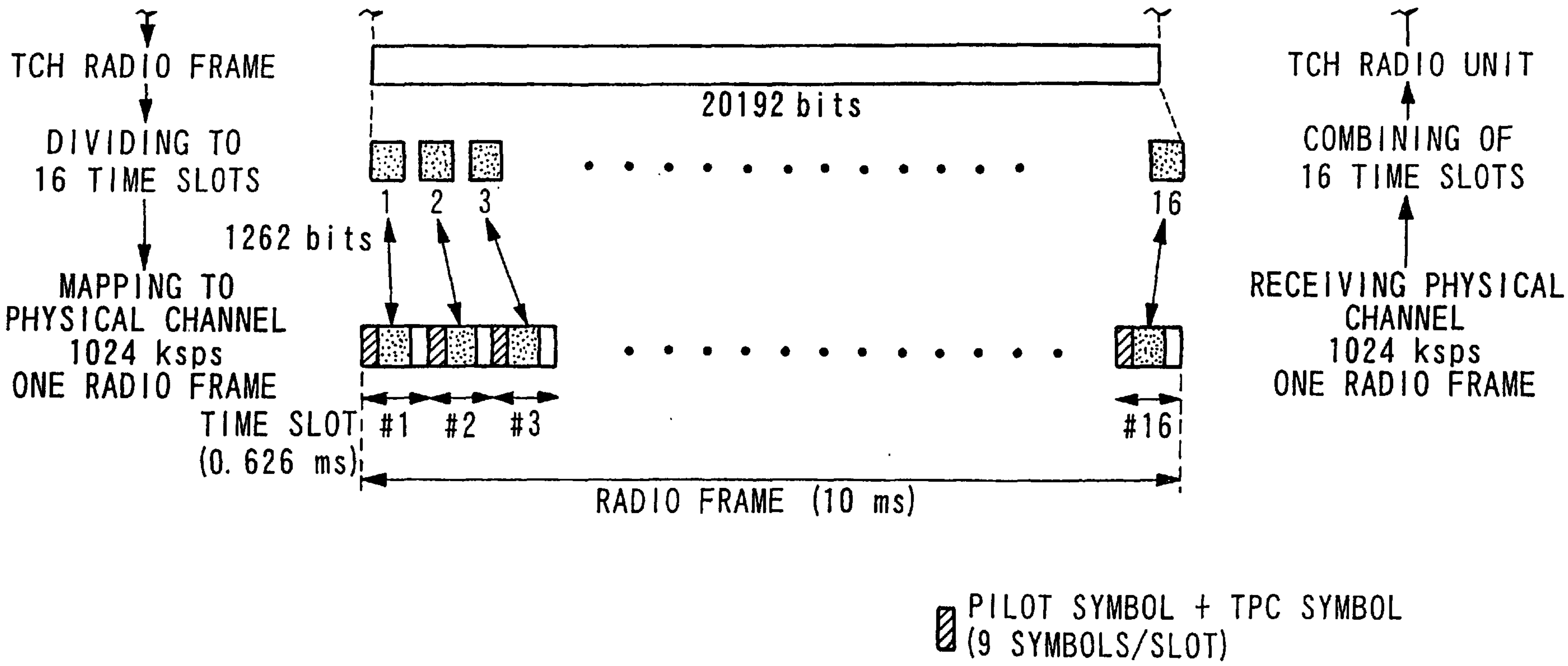

FIG. 33

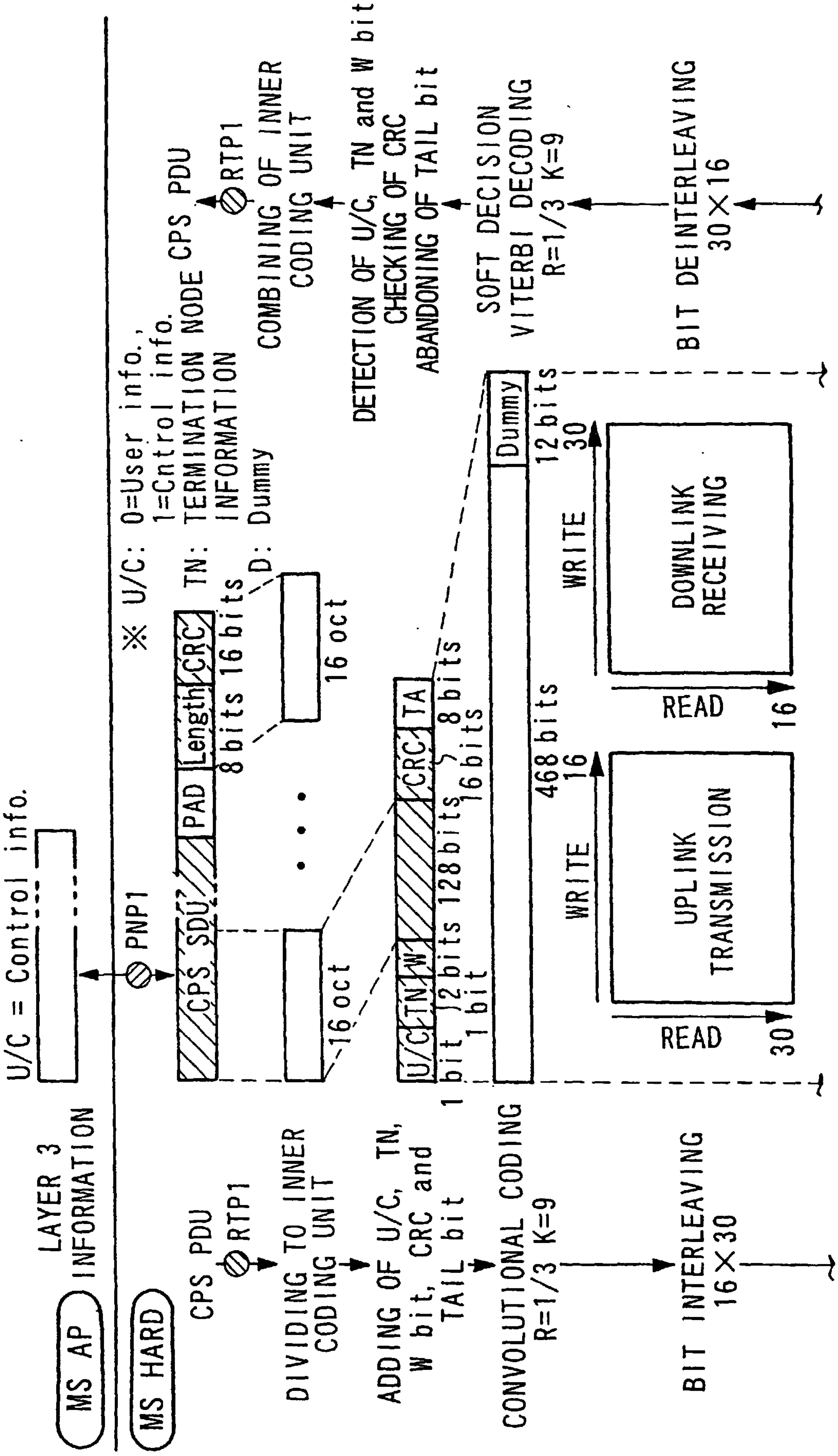
MS AP
LAYER 3 INFORMATION
U/C = Control info.
PNP1
MS HARD
CPS PDU
RTP1
DIVIDING TO INNER CODING UNIT
ADDING OF U/C, TN, W bit, CRC and TAIL bit
CONVOLUTIONAL CODING R=1/3 K=9
BIT INTERLEAVING 16×30
CPS SDU
PAD
Length
CRC
8 bits 16 bits
16 oct
16 oct
U/C
TN
W
CRC
TA
1 bit
2 bits
1 bit
128 bits
16 bits
8 bits
1 bit
468 bits
12 bits
Dummy
※ U/C: 0=User info., 1=Cntrol info.
TN: TERMINATION NODE INFORMATION
D: Dummy
WRITE
READ
UPLINK TRANSMISSION
DOWNLINK RECEIVING
16
30
CPS PDU
RTP1
COMBINING OF INNER CODING UNIT
DETECTION OF U/C, TN and W bit
CHECKING OF CRC
ABANDONING OF TAIL bit
SOFT DECISION VITERBI DECODING R=1/3 K=9
BIT DEINTERLEAVING 30×16

CONTINUANCE OF FIG. 33

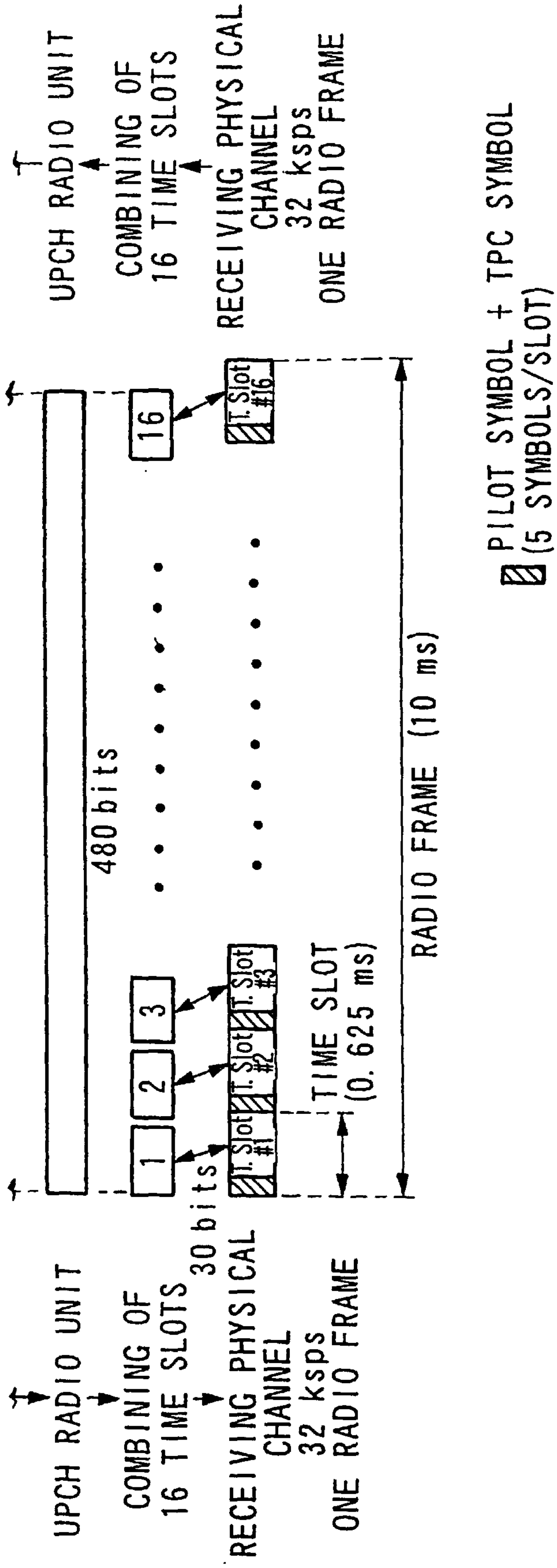

FIG. 34

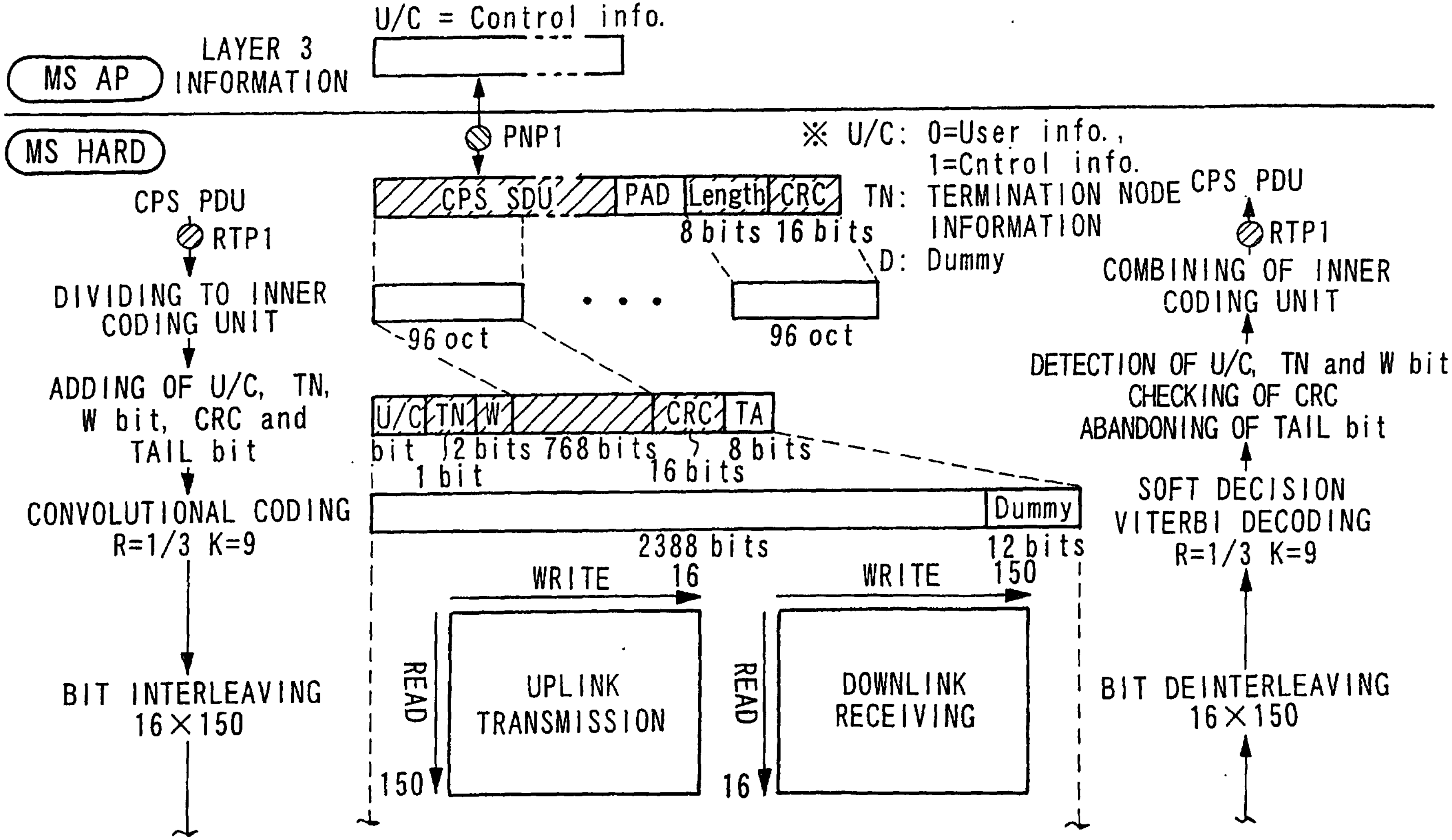
MS AP
LAYER 3 INFORMATION
U/C = Control info.
MS HARD
PNP1
※ U/C: 0=User info.,
1=Cntrol info.
TN: TERMINATION NODE INFORMATION
D: Dummy
CPS PDU
RTP1
DIVIDING TO INNER CODING UNIT
ADDING OF U/C, TN, W bit, CRC and TAIL bit
CONVOLUTIONAL CODING R=1/3 K=9
BIT INTERLEAVING 16×150
CPS SDU
PAD
Length
CRC
8 bits 16 bits
96 oct
96 oct
U/C
TN
W
CRC
TA
bit
1 bit
2 bits 768 bits
16 bits
8 bits
Dummy
2388 bits
12 bits
WRITE
16
WRITE
150
READ
150
READ
16
UPLINK TRANSMISSION
DOWNLINK RECEIVING
CPS PDU
RTP1
COMBINING OF INNER CODING UNIT
DETECTION OF U/C, TN and W bit
CHECKING OF CRC
ABANDONING OF TAIL bit
SOFT DECISION VITERBI DECODING R=1/3 K=9
BIT DEINTERLEAVING 16×150

CONTINUANCE OF FIG. 34

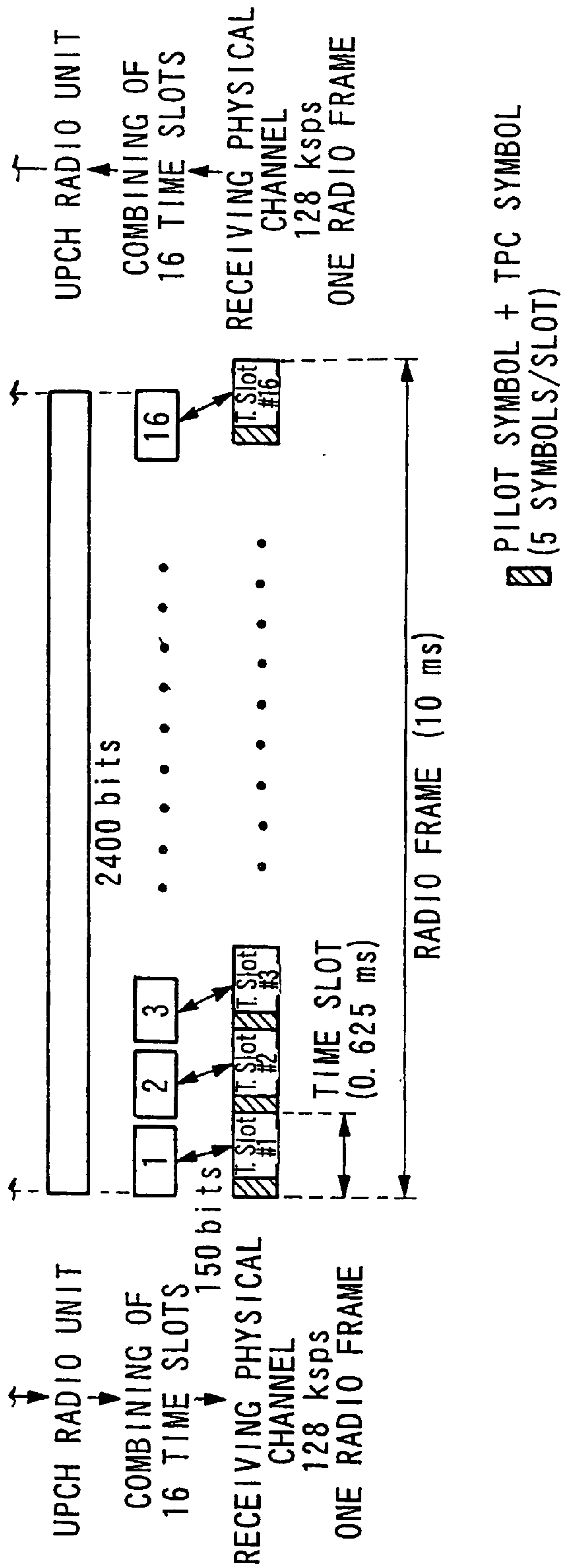

FIG. 35

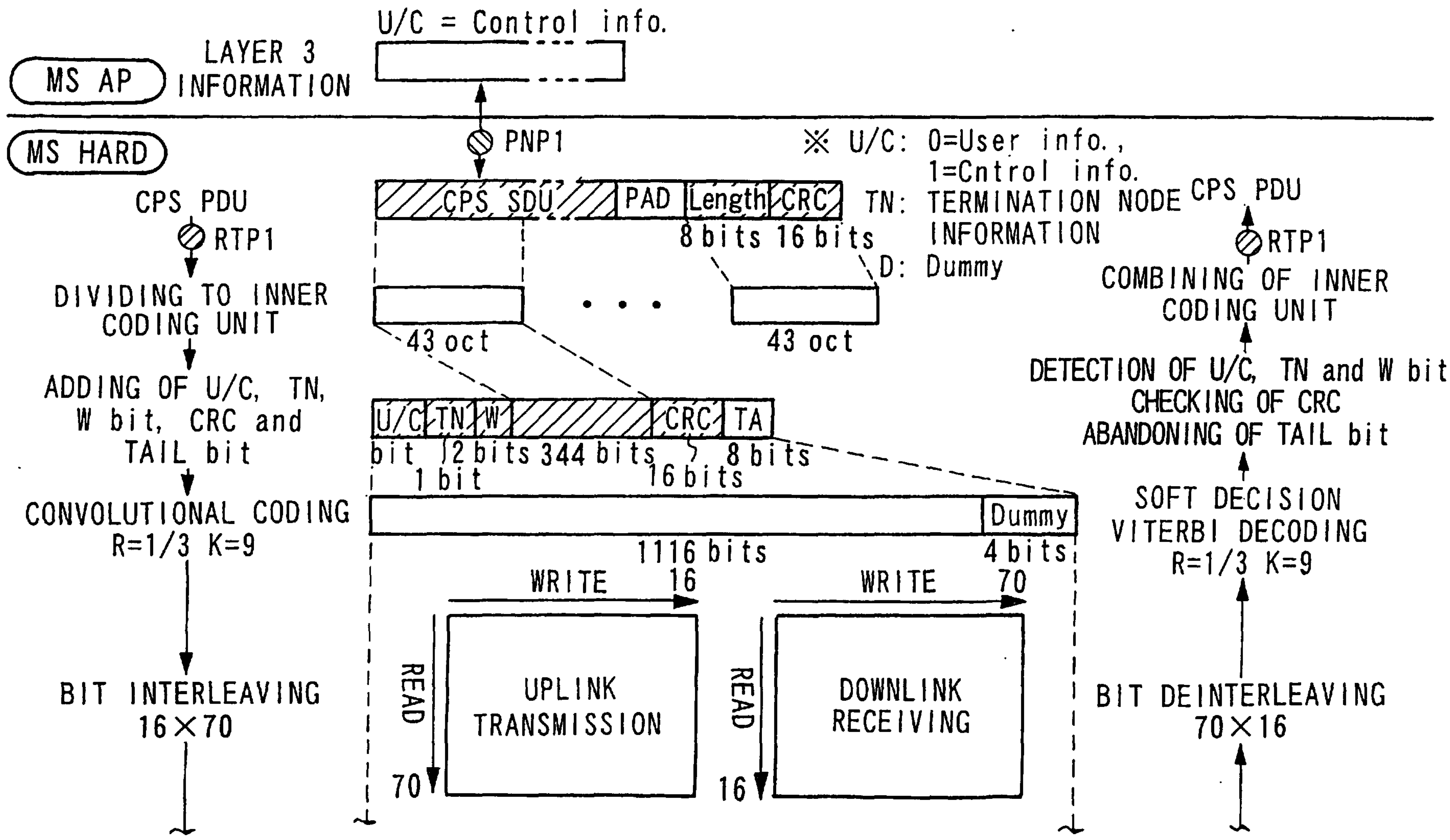
U/C = Control info.
MS AP
LAYER 3
INFORMATION
MS HARD
PNP1
※ U/C: 0=User info., 1=Cntrol info.
TN: TERMINATION NODE INFORMATION
D: Dummy
CPS PDU
RTP1
DIVIDING TO INNER CODING UNIT
ADDING OF U/C, TN, W bit, CRC and TAIL bit
CONVOLUTIONAL CODING R=1/3 K=9
BIT INTERLEAVING 16×70
CPS SDU
PAD
Length
CRC
8 bits 16 bits
43 oct
43 oct
U/C
TN
W
CRC
TA
bit
1 bit
2 bits
344 bits
16 bits
8 bits
Dummy
1116 bits
4 bits
WRITE
16
READ
70
UPLINK TRANSMISSION
WRITE
70
READ
16
DOWNLINK RECEIVING
CPS PDU
RTP1
COMBINING OF INNER CODING UNIT
DETECTION OF U/C, TN and W bit
CHECKING OF CRC
ABANDONING OF TAIL bit
SOFT DECISION VITERBI DECODING R=1/3 K=9
BIT DEINTERLEAVING 70×16

CONTINUANCE OF FIG. 35

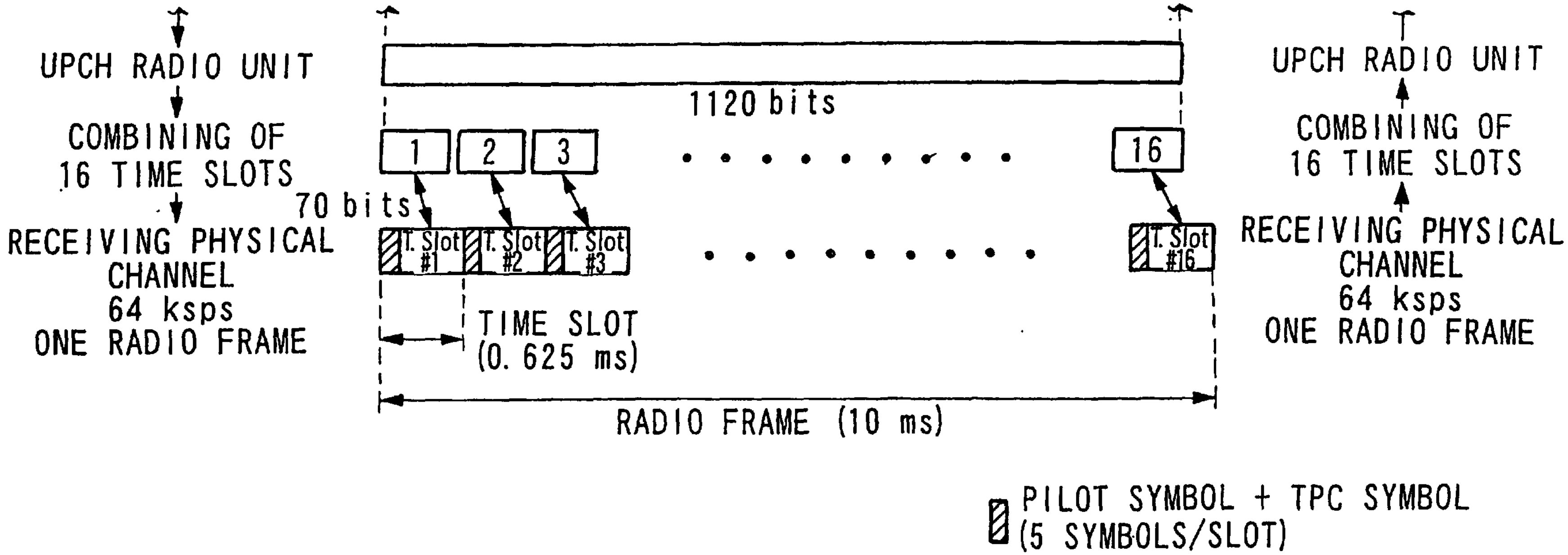

FIG. 36

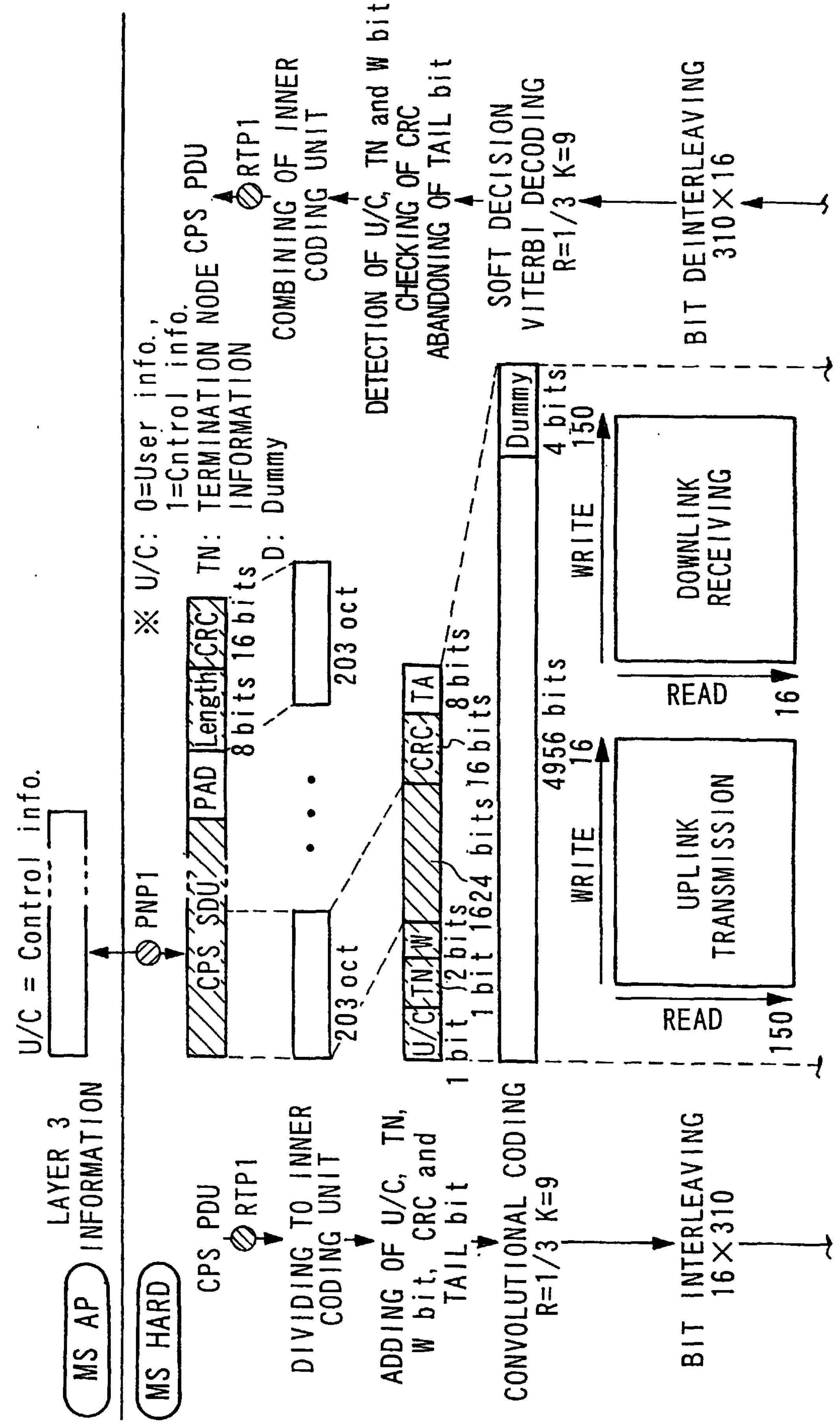

MS AP
LAYER 3 INFORMATION
U/C = Control info.
PNP1
MS HARD
CPS PDU
RTP1
DIVIDING TO INNER CODING UNIT
ADDING OF U/C, TN, W bit, CRC and TAIL bit
CONVOLUTIONAL CODING R=1/3 K=9
BIT INTERLEAVING 16×310
CPS SDU
PAD
Length
CRC
8 bits 16 bits
203 oct
203 oct
U/C
TN
W
CRC
TA
1 bit
2 bits
1 bit 1624 bits 16 bits 8 bits
Dummy
4956 bits
4 bits
16
150
WRITE
READ
UPLINK TRANSMISSION
DOWNLINK RECEIVING
※ U/C: 0=User info., 1=Cntrol info.
TN: TERMINATION NODE INFORMATION
D: Dummy
CPS PDU
RTP1
COMBINING OF INNER CODING UNIT
DETECTION OF U/C, TN and W bit
CHECKING OF CRC
ABANDONING OF TAIL bit
SOFT DECISION VITERBI DECODING R=1/3 K=9
BIT DEINTERLEAVING 310×16

CONTINUANCE OF FIG. 36

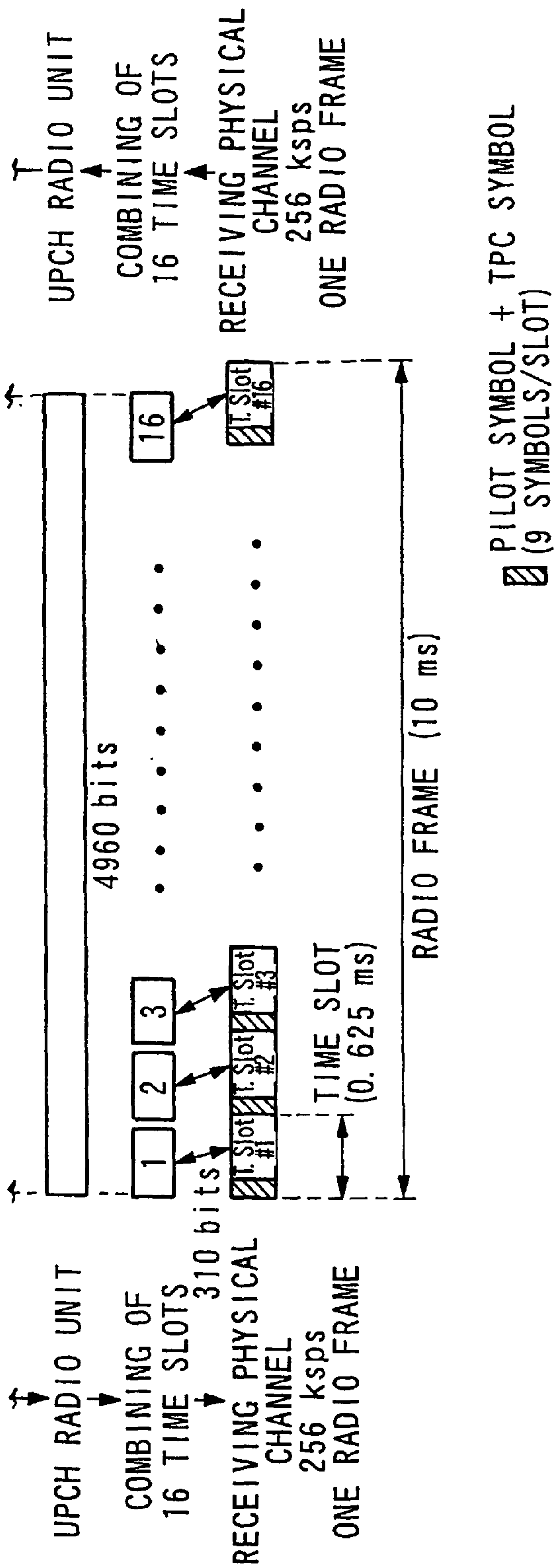

FIG. 37

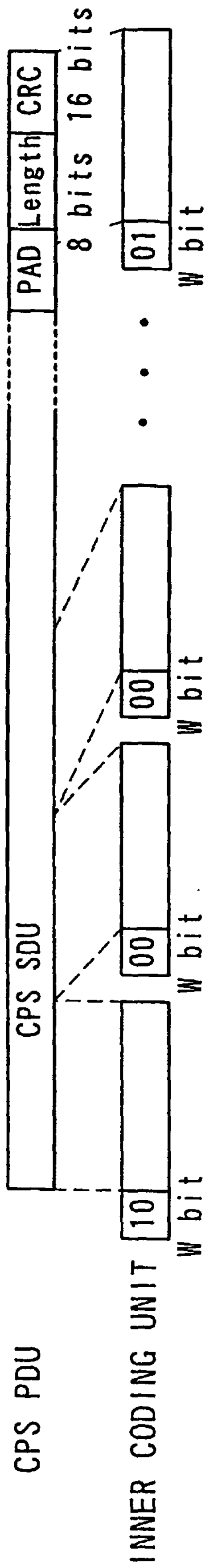
CPS PDU
INNER CODING UNIT
CPS SDU
PAD
Length
CRC
8 bits
16 bits
10
00
00
01
W bit
W bit
W bit
W bit

FIG. 38

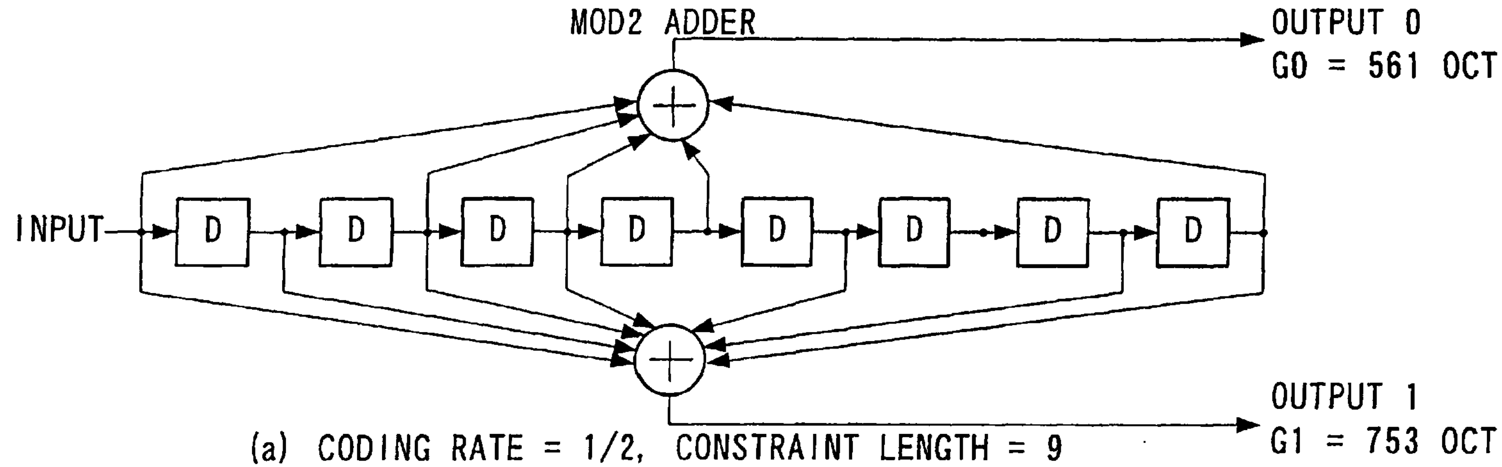


(a) CODING RATE = 1/2, CONSTRAINT LENGTH = 9

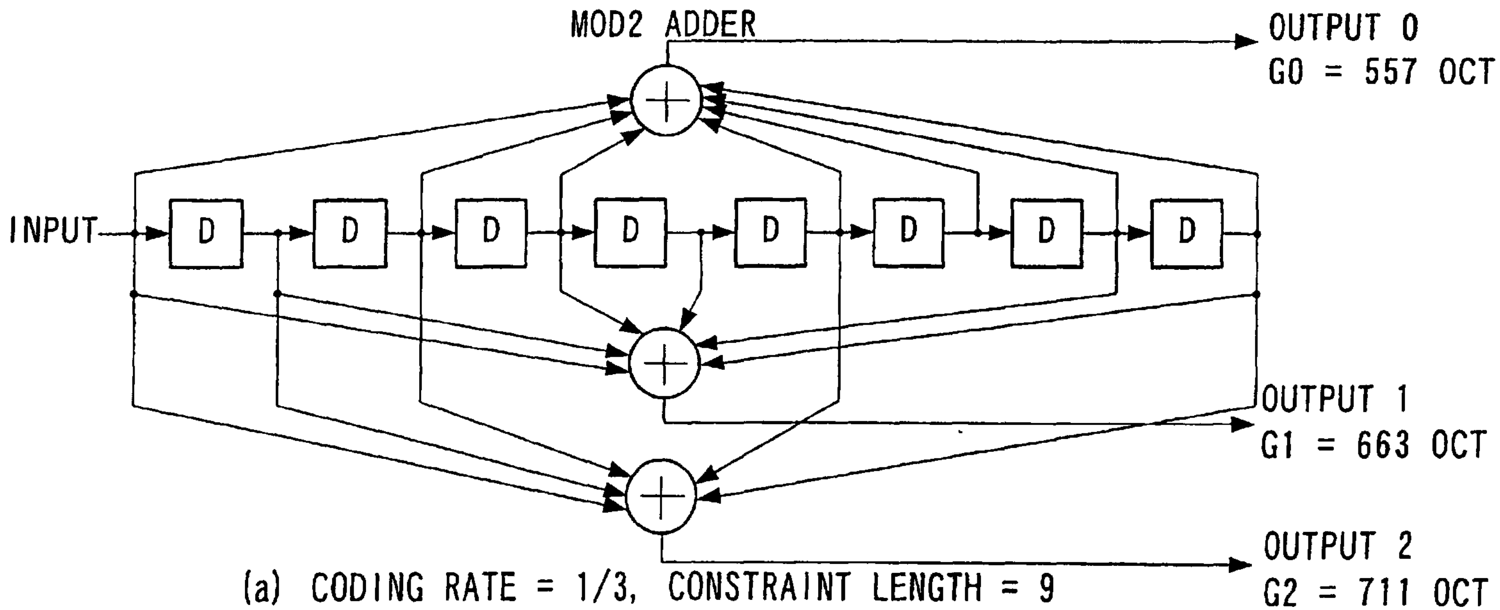


(a) CODING RATE = 1/3, CONSTRAINT LENGTH = 9

FIG. 39

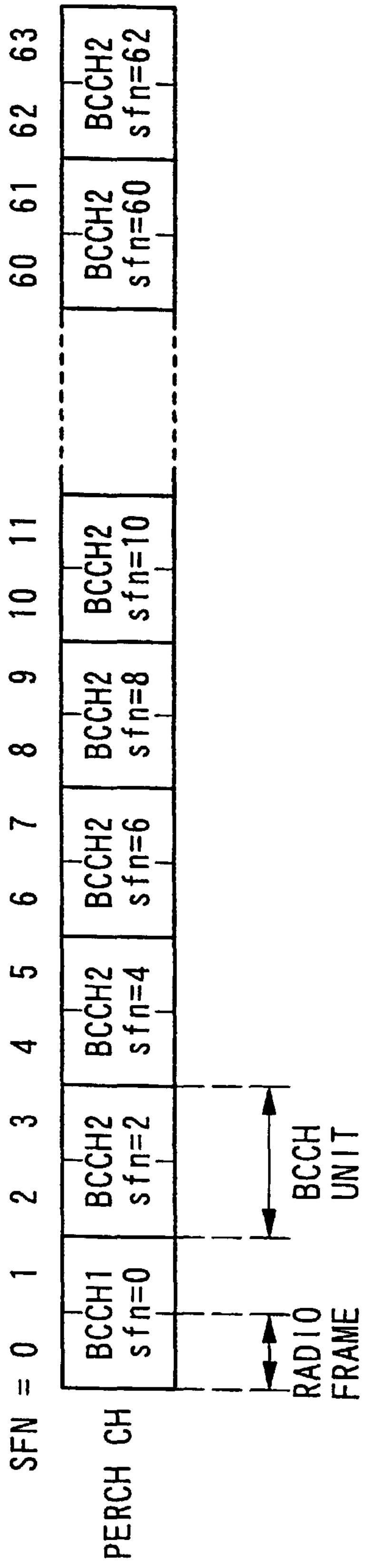
SFN = 0
1
2
3
4
5
6
7
8
9
10
11
60
61
62
63
PERCH CH
BCCH1 sfn=0
BCCH2 sfn=2
BCCH2 sfn=4
BCCH2 sfn=6
BCCH2 sfn=8
BCCH2 sfn=10
BCCH2 sfn=60
BCCH2 sfn=62
RADIO FRAME
BCCH UNIT

FIG. 40

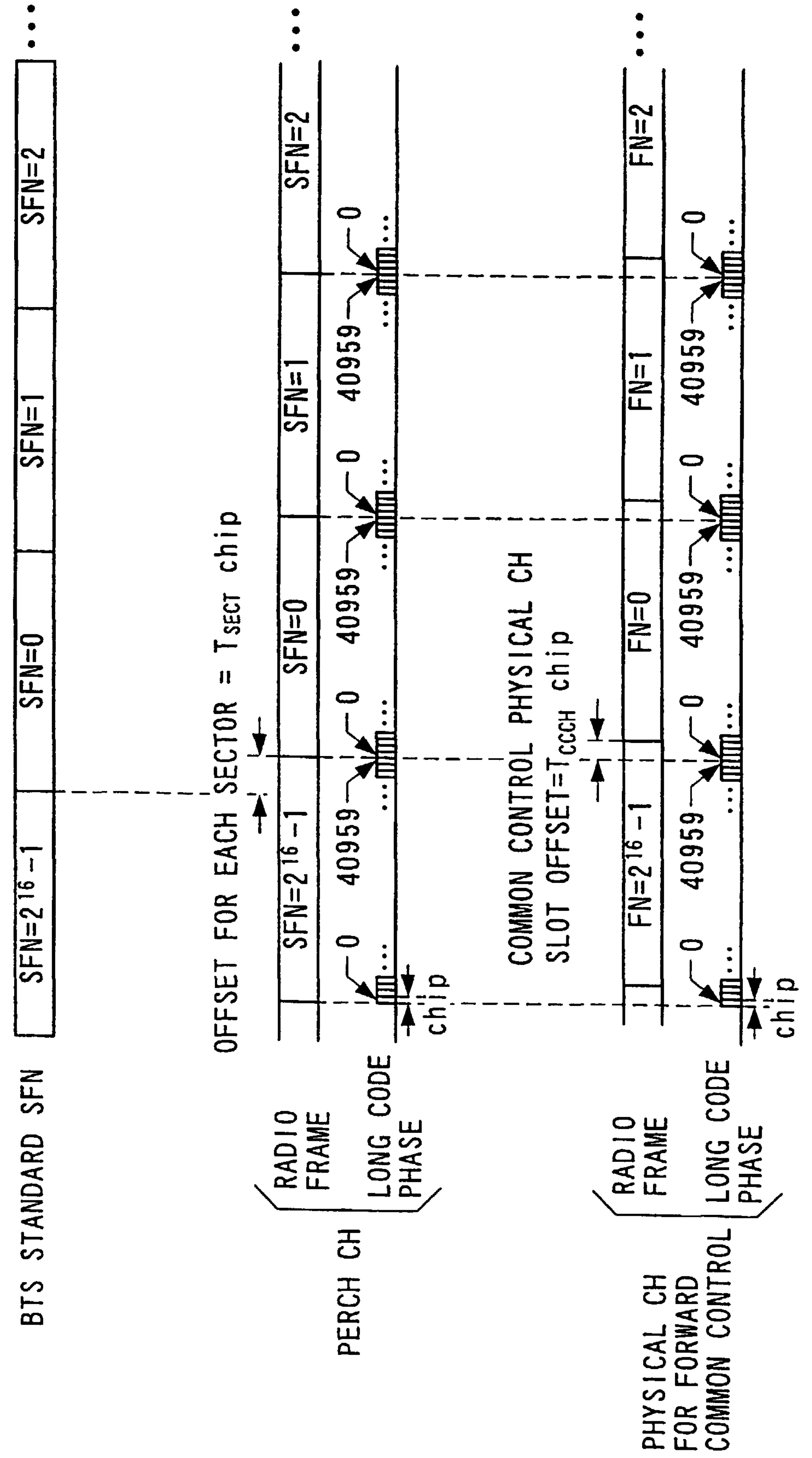

BTS STANDARD SFN
SFN=2^16 -1
SFN=0
SFN=1
SFN=2
OFFSET FOR EACH SECTOR = T_SECT chip
PERCH CH
RADIO FRAME
LONG CODE PHASE
SFN=2^16 -1
SFN=0
SFN=1
SFN=2
0
40959
chip
COMMON CONTROL PHYSICAL CH SLOT OFFSET=T_CCCH chip
PHYSICAL CH FOR FORWARD COMMON CONTROL
RADIO FRAME
LONG CODE PHASE
FN=2^16 -1
FN=0
FN=1
FN=2
0
40959
chip

FIG. 41

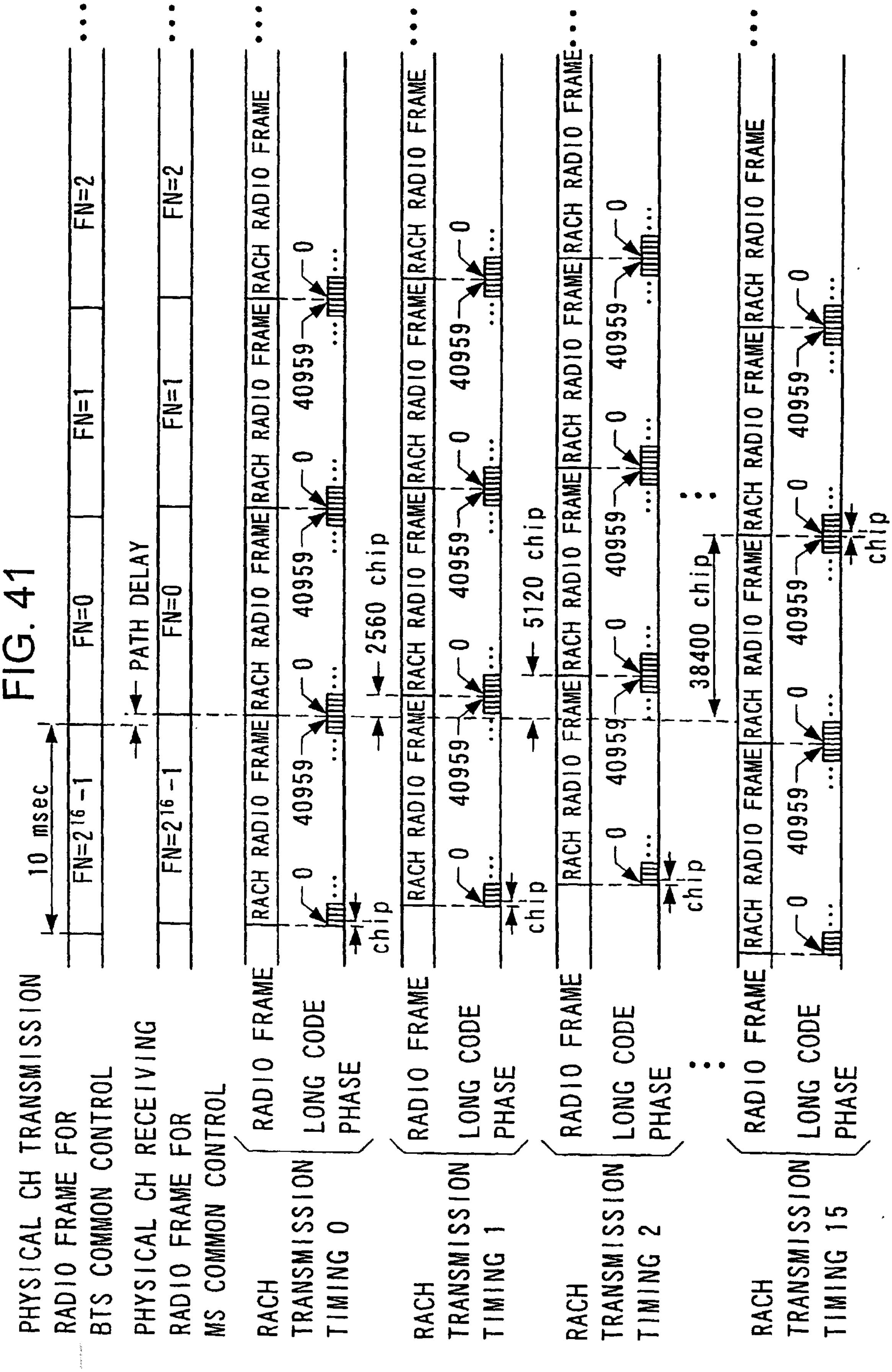
PHYSICAL CH TRANSMISSION RADIO FRAME FOR BTS COMMON CONTROL
PHYSICAL CH RECEIVING RADIO FRAME FOR MS COMMON CONTROL
RACH TRANSMISSION TIMING 0
RACH TRANSMISSION TIMING 1
RACH TRANSMISSION TIMING 2
RACH TRANSMISSION TIMING 15
RADIO FRAME
LONG CODE PHASE
10 msec
FN=2^16 -1
FN=0
FN=1
FN=2
PATH DELAY
RACH RADIO FRAME
40959
0
chip
2560 chip
5120 chip
38400 chip

FIG. 42

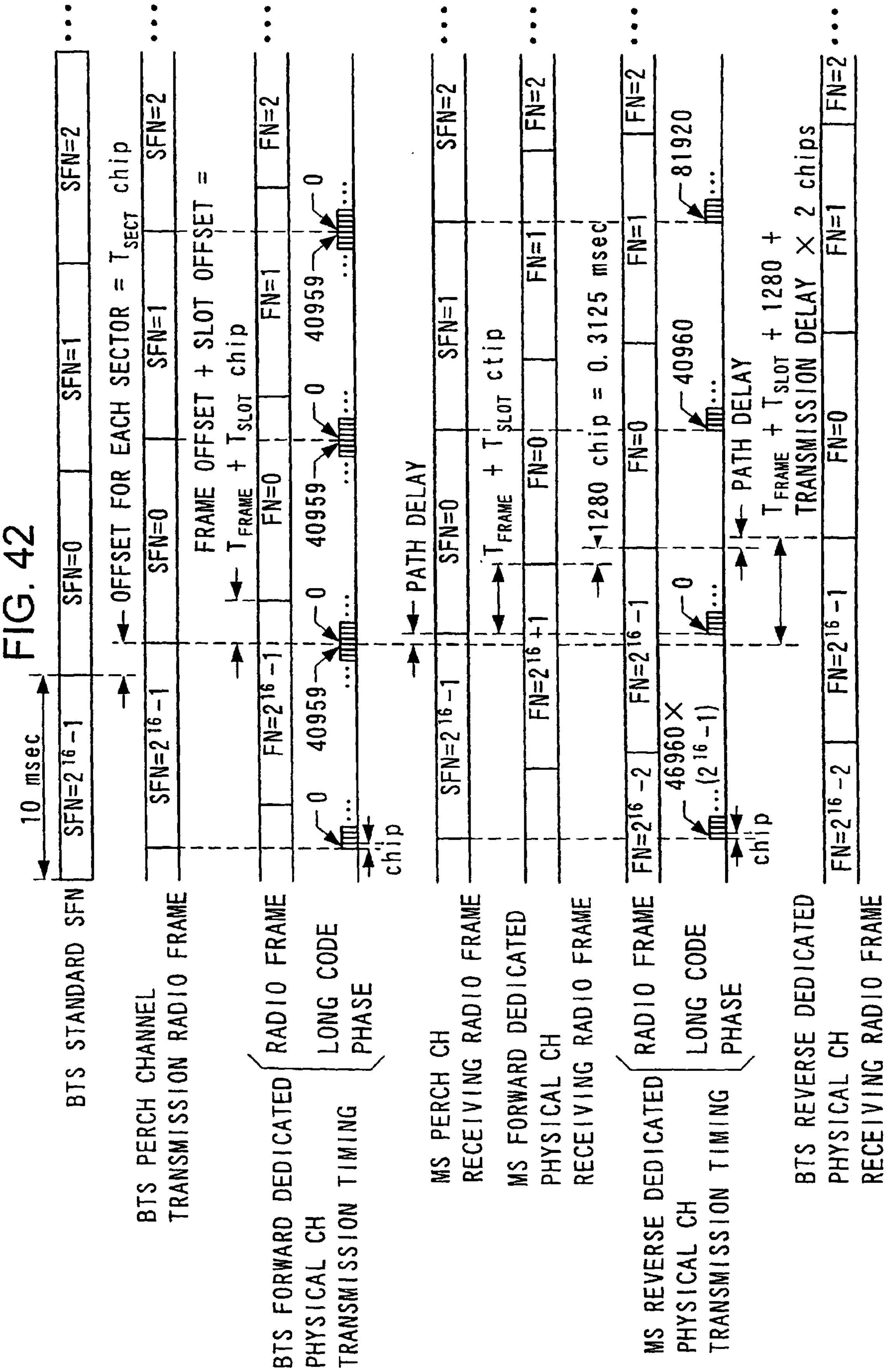

10 msec
BTS STANDARD SFN
SFN=2^16 -1
SFN=0
SFN=1
SFN=2
OFFSET FOR EACH SECTOR = T SECT chip
BTS PERCH CHANNEL TRANSMISSION RADIO FRAME
FRAME OFFSET + SLOT OFFSET = T FRAME + T SLOT chip
BTS FORWARD DEDICATED PHYSICAL CH TRANSMISSION TIMING
RADIO FRAME
LONG CODE PHASE
FN=2^16 -1
FN=0
FN=1
FN=2
40959
0
chip
PATH DELAY
MS PERCH CH RECEIVING RADIO FRAME
T FRAME + T SLOT ctip
MS FORWARD DEDICATED PHYSICAL CH RECEIVING RADIO FRAME
FN=2^16 +1
1280 chip = 0. 3125 msec
MS REVERSE DEDICATED PHYSICAL CH TRANSMISSION TIMING
FN=2^16 -2
46960×(2^16 -1)
40960
81920
T FRAME + T SLOT + 1280 + TRANSMISSION DELAY × 2 chips
BTS REVERSE DEDICATED PHYSICAL CH RECEIVING RADIO FRAME

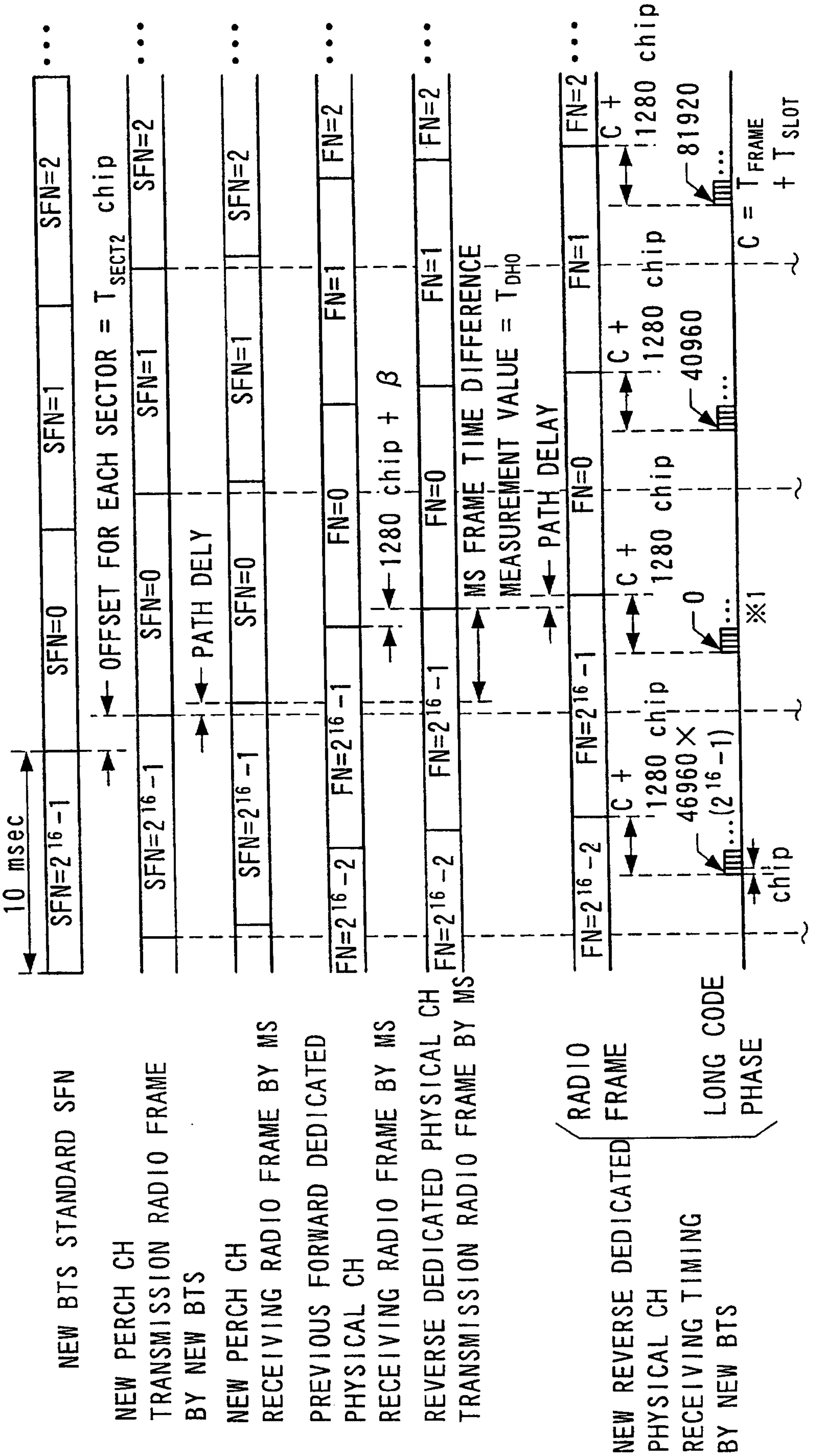
NEW BTS STANDARD SFN
NEW PERCH CH TRANSMISSION RADIO FRAME BY NEW BTS
NEW PERCH CH RECEIVING RADIO FRAME BY MS
PREVIOUS FORWARD DEDICATED PHYSICAL CH RECEIVING RADIO FRAME BY MS
REVERSE DEDICATED PHYSICAL CH TRANSMISSION RADIO FRAME BY MS
NEW REVERSE DEDICATED PHYSICAL CH RECEIVING TIMING BY NEW BTS
RADIO FRAME
LONG CODE PHASE
10 msec
SFN=2^16 -1
SFN=0
SFN=1
SFN=2
OFFSET FOR EACH SECTOR = T SECT2 chip
PATH DELY
FN=2^16 -2
FN=2^16 -1
FN=0
FN=1
FN=2
1280 chip + β
MS FRAME TIME DIFFERENCE MEASUREMENT VALUE = T DHO
PATH DELAY
C + 1280 chip
46960×(2^16 -1)
0
40960
81920
※1
chip
C = T FRAME + T SLOT

FIG. 43

ONTINUANCE OF FIG. 43

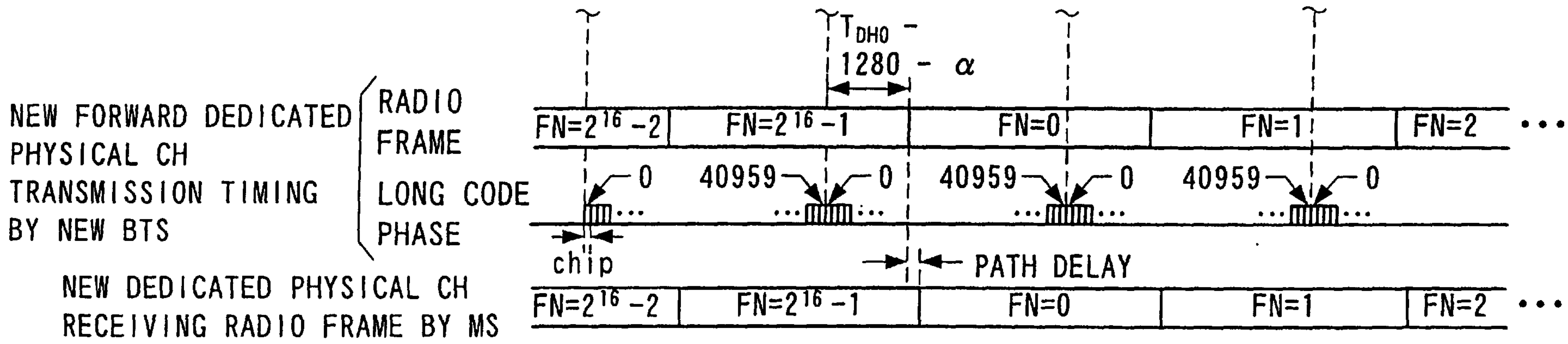

FIG. 44

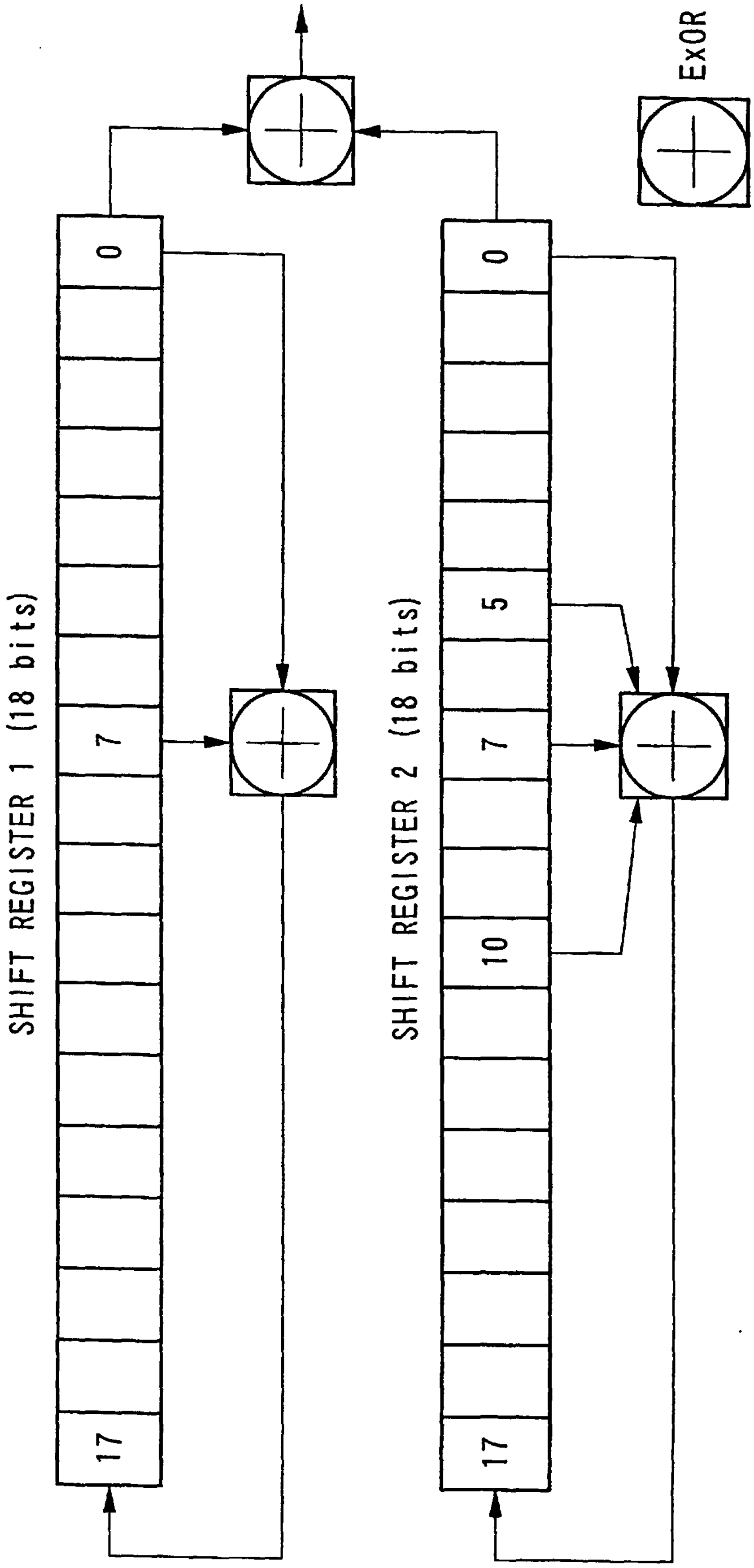
SHIFT REGISTER 1 (18 bits)
SHIFT REGISTER 2 (18 bits)
0
7
17
0
5
7
10
17
ExOR

FIG. 45

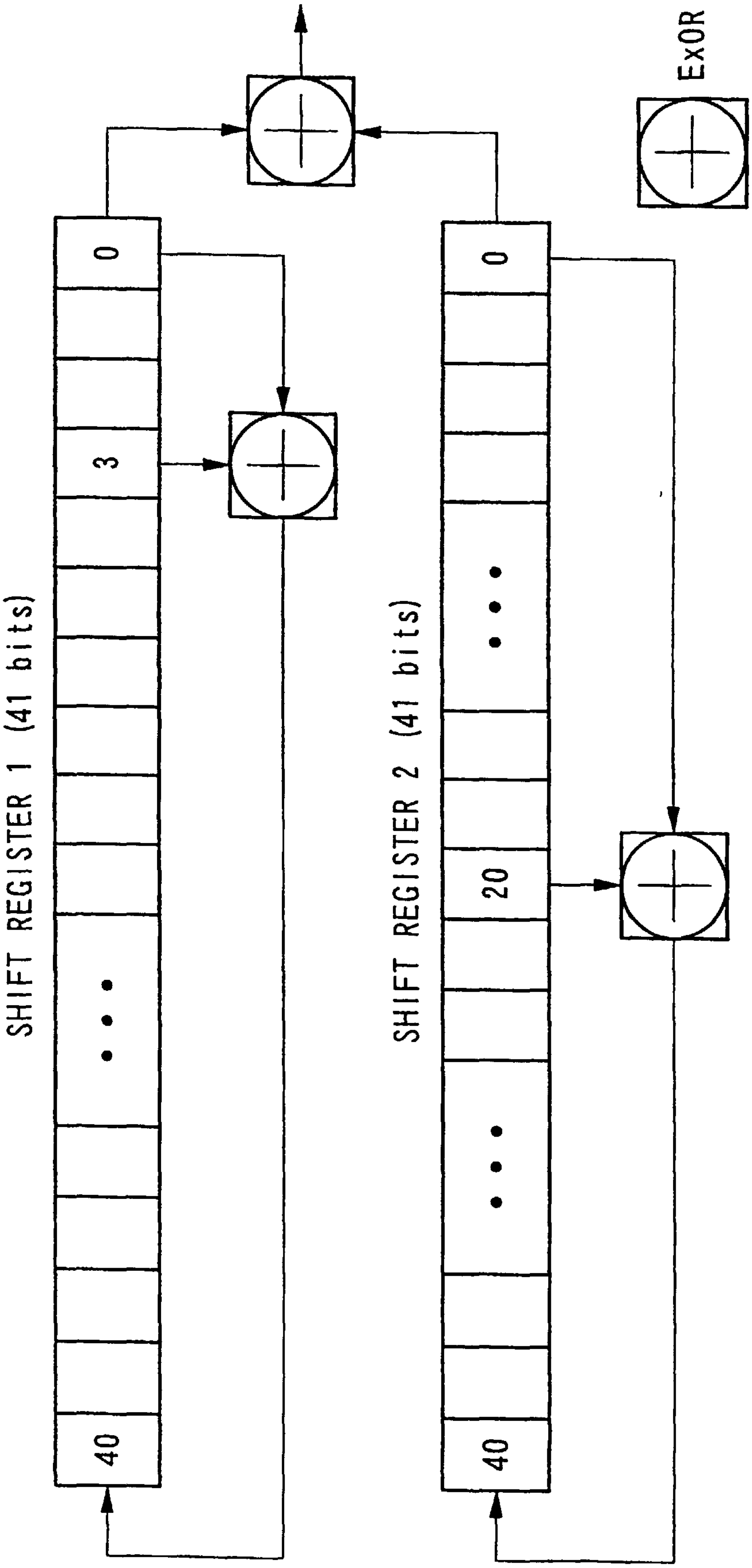
ExOR
SHIFT REGISTER 1 (41 bits)
0
3
40
SHIFT REGISTER 2 (41 bits)
0
20
40

# FIG. 46

$$C_0(0)=1$$

$$\begin{bmatrix} C_1(0) \\ C_1(1) \end{bmatrix} = \begin{bmatrix} C_0(0) & C_0(0) \\ C_0(0) & \overline{C_0(0)} \end{bmatrix} = \begin{bmatrix} 1 & 1 \\ 1 & 0 \end{bmatrix}$$

$$\begin{bmatrix} C_2(0) \\ C_2(1) \\ C_2(2) \\ C_2(3) \end{bmatrix} = \begin{bmatrix} C_1(0) & C_1(0) \\ C_1(0) & \overline{C_1(0)} \\ C_1(1) & C_1(1) \\ C_1(1) & \overline{C_1(1)} \end{bmatrix} = \begin{bmatrix} 1 & 1 & 1 & 1 \\ 1 & 1 & 0 & 0 \\ 1 & 0 & 1 & 0 \\ 1 & 0 & 1 & 1 \end{bmatrix}$$

•
•
•

$$\begin{bmatrix} C_{n+1}(0) \\ C_{n+1}(1) \\ C_{n+1}(2) \\ C_{n+1}(3) \\ \vdots \\ C_{n+1}(2^{n+1}-2) \\ C_{n+1}(2^{n+1}-1) \end{bmatrix} = \begin{bmatrix} C_n(0) & C_n(0) \\ C_n(0) & \overline{C_n(0)} \\ C_n(1) & C_n(1) \\ C_n(1) & \overline{C_n(1)} \\ \vdots & \vdots \\ C_n(2^n-1) & C_n(2^n-1) \\ C_n(2^n-1) & \overline{C_n(2^n-1)} \end{bmatrix}$$

FIG. 47

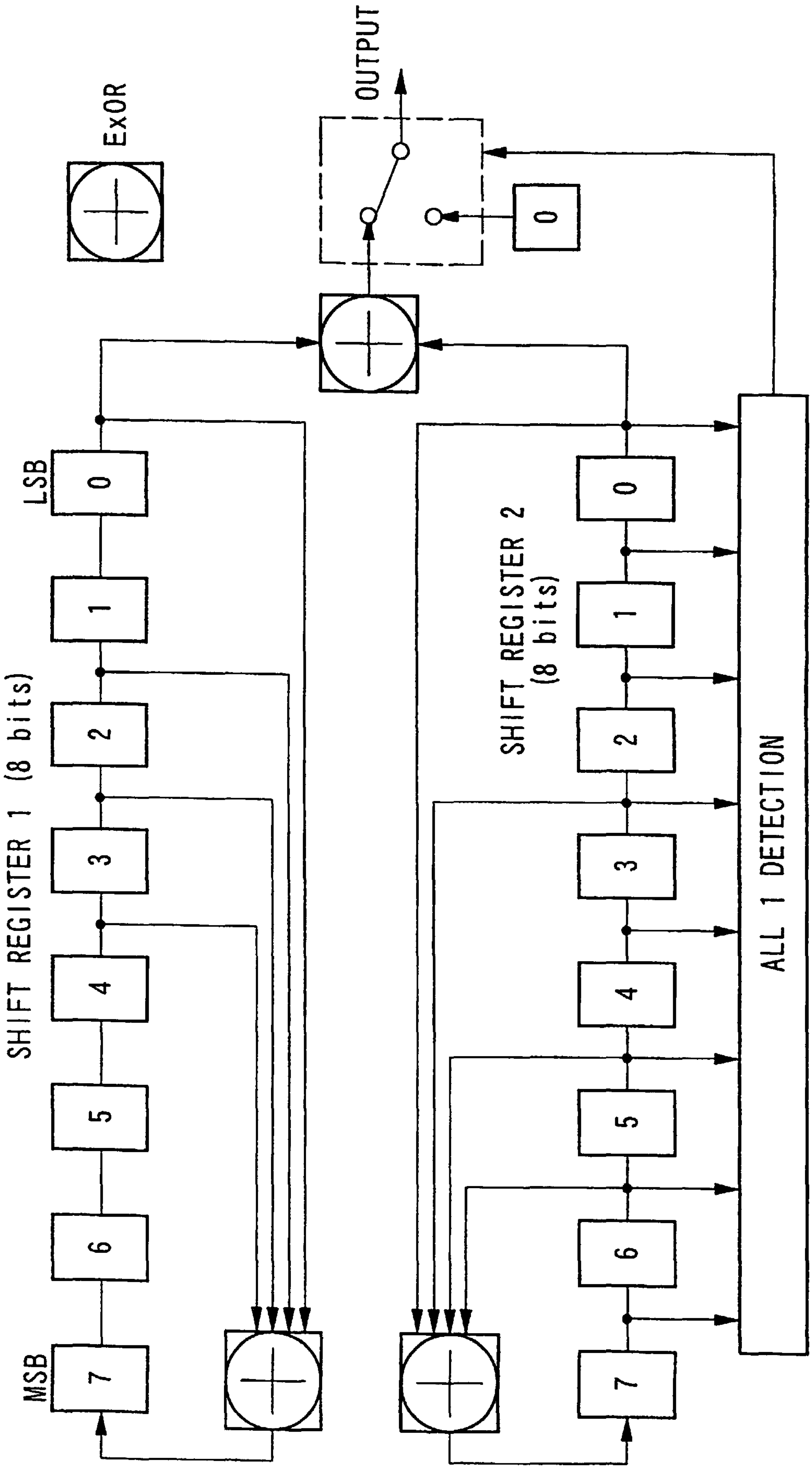

SHIFT REGISTER 1 (8 bits)
MSB
7
6
5
4
3
2
1
0
LSB
ExOR
OUTPUT
0
SHIFT REGISTER 2
(8 bits)
7
6
5
4
3
2
1
0
ALL 1 DETECTION

FIG. 48

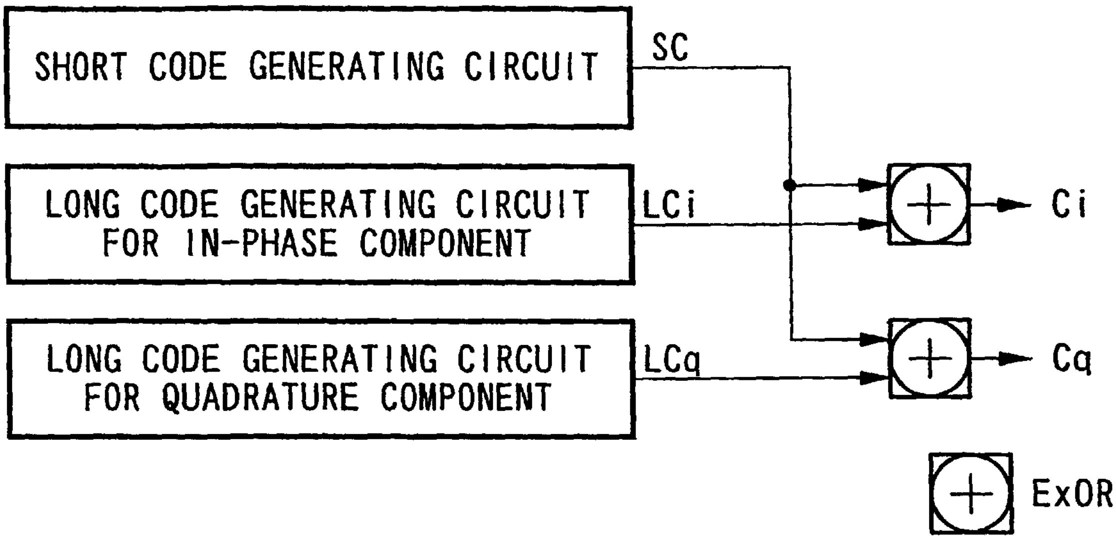
SHORT CODE GENERATING CIRCUIT
SC
LONG CODE GENERATING CIRCUIT FOR IN-PHASE COMPONENT
LCi
Ci
LONG CODE GENERATING CIRCUIT FOR QUADRATURE COMPONENT
LCq
Cq
ExOR

FIG. 49

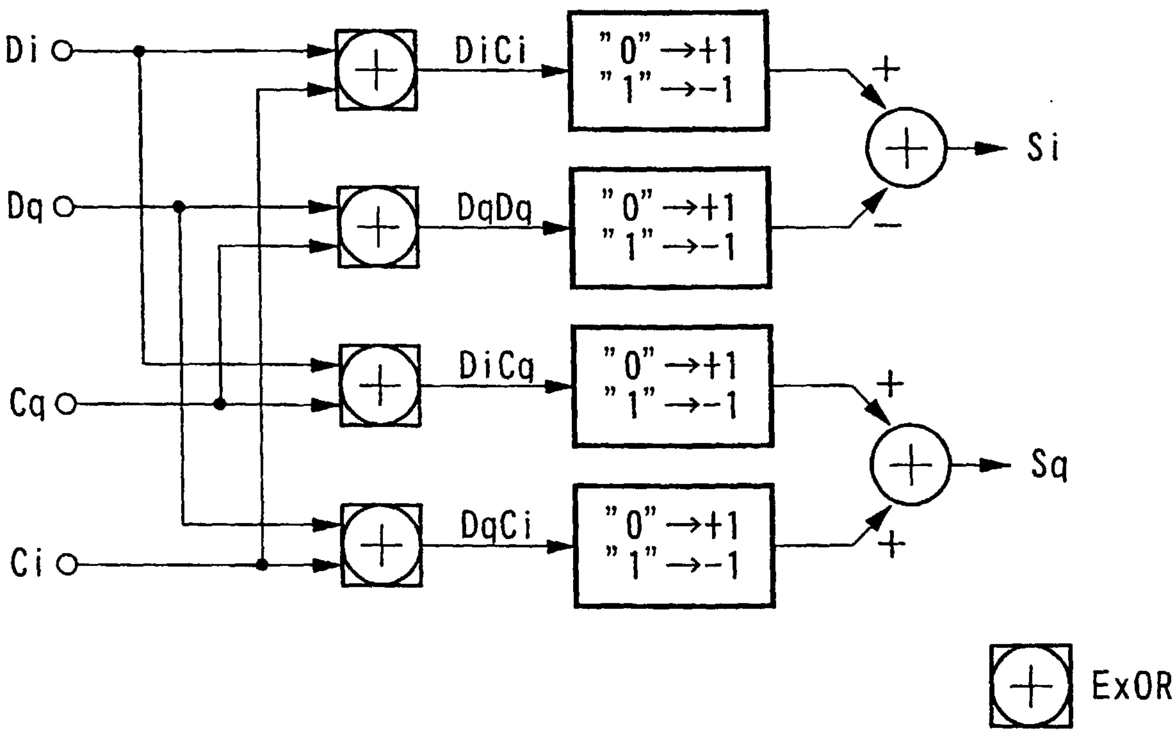
Di
Dq
Cq
Ci
DiCi
DqDq
DiCq
DqCi
"0"→+1
"1"→-1
+
-
Si
Sq
ExOR

FIG. 50

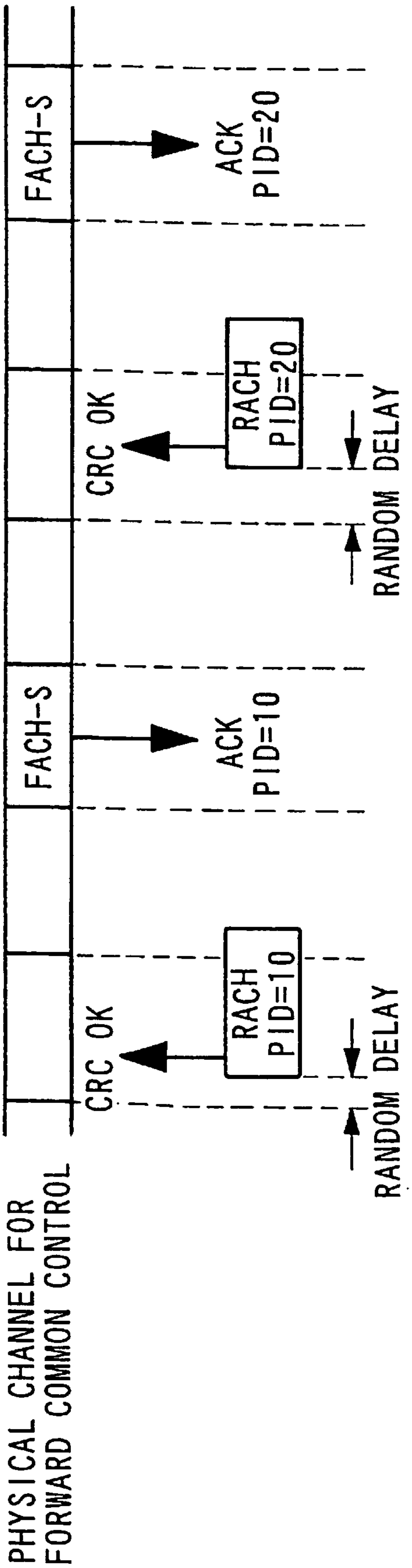
PHYSICAL CHANNEL FOR
FORWARD COMMON CONTROL
CRC OK
RACH
PID=10
RANDOM DELAY
FACH-S
ACK
PID=10
CRC OK
RACH
PID=20
RANDOM DELAY
FACH-S
ACK
PID=20

FIG. 51

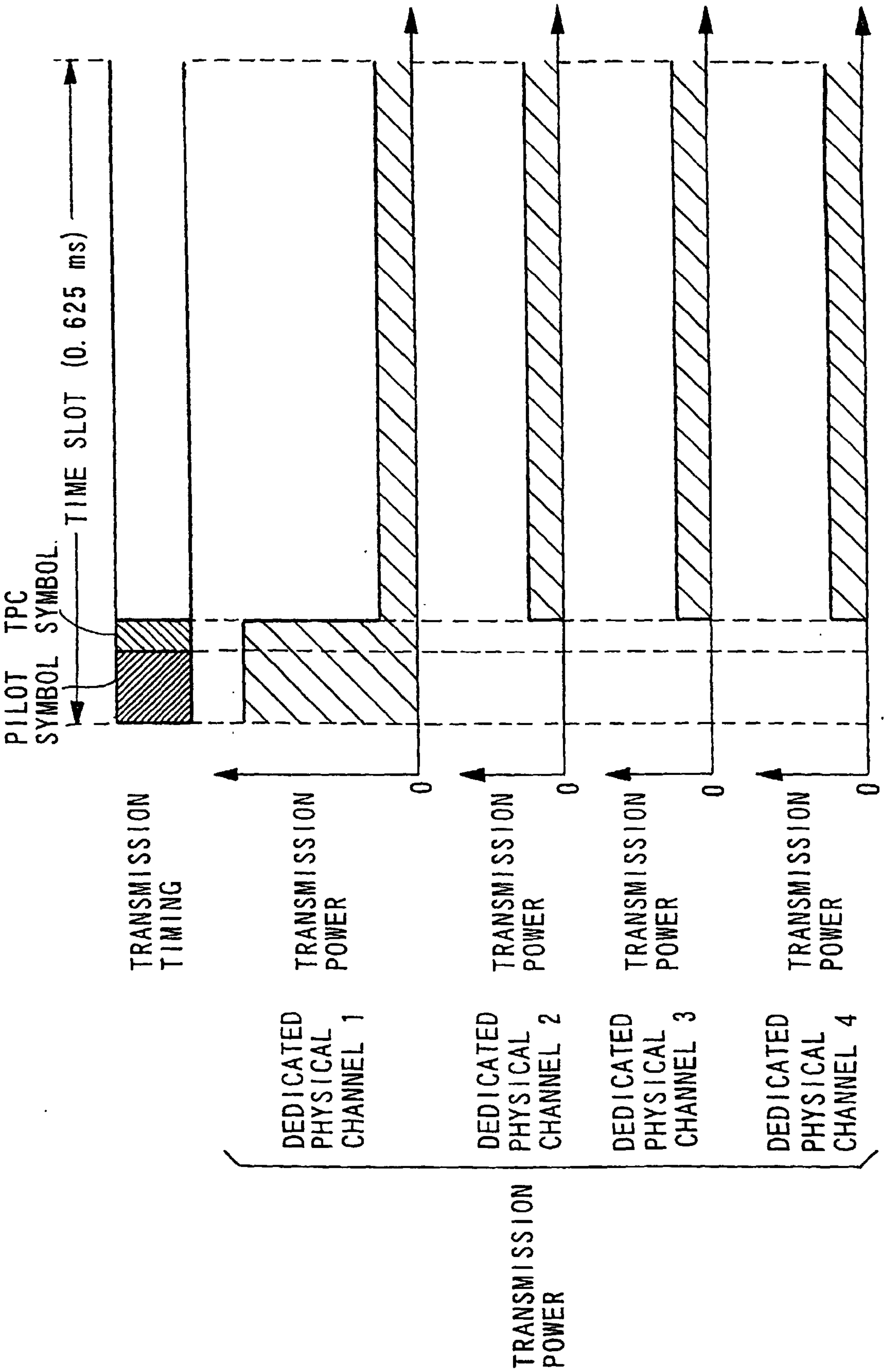
PILOT SYMBOL
TPC SYMBOL
TIME SLOT (0. 625 ms)
TRANSMISSION TIMING
TRANSMISSION POWER
0
TRANSMISSION POWER
0
TRANSMISSION POWER
0
TRANSMISSION POWER
0
DEDICATED PHYSICAL CHANNEL 1
DEDICATED PHYSICAL CHANNEL 2
DEDICATED PHYSICAL CHANNEL 3
DEDICATED PHYSICAL CHANNEL 4
TRANSMISSION POWER

FIG. 52

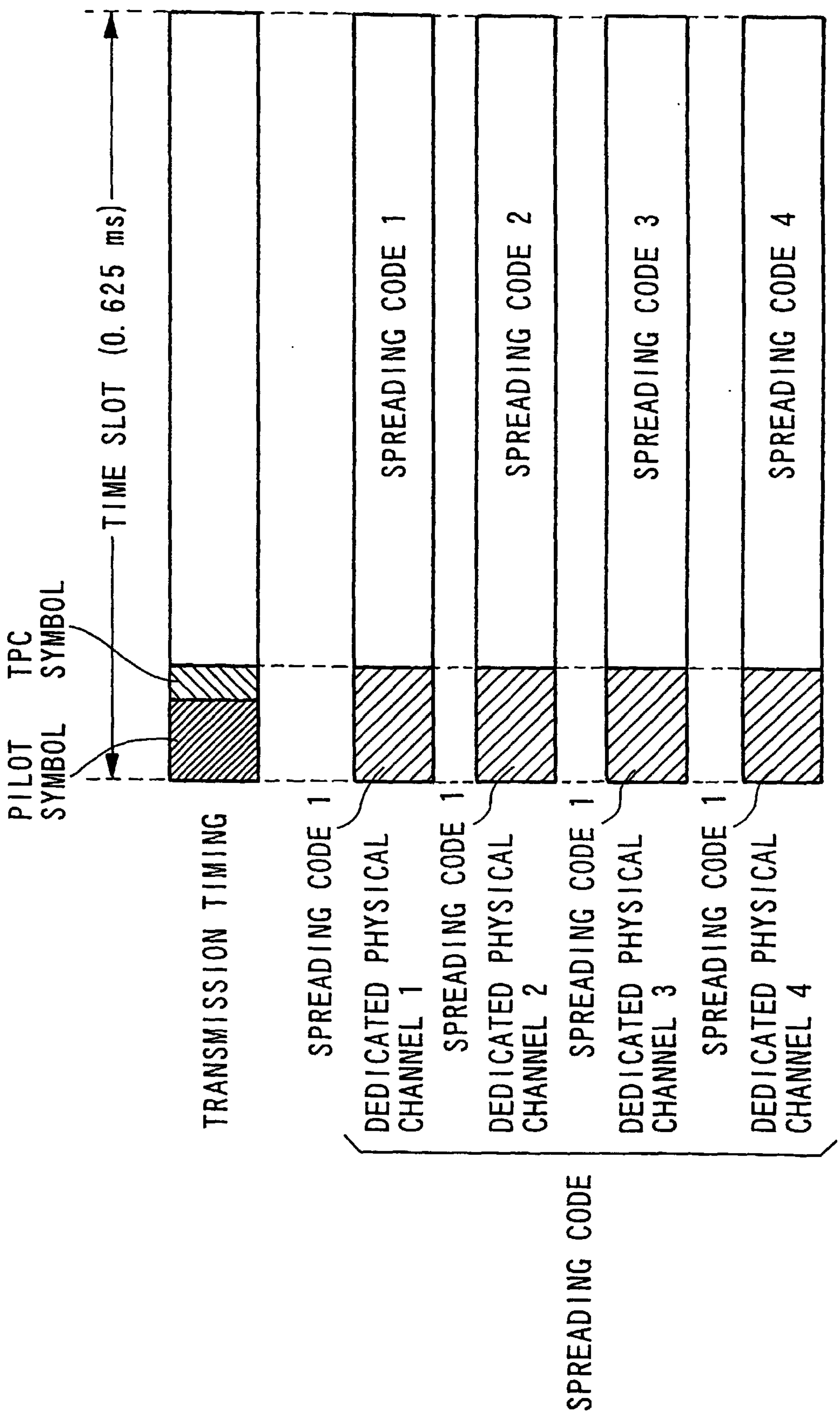
PILOT SYMBOL
TPC SYMBOL
TIME SLOT (0. 625 ms)
TRANSMISSION TIMING
SPREADING CODE 1
DEDICATED PHYSICAL CHANNEL 1
SPREADING CODE 1
DEDICATED PHYSICAL CHANNEL 2
SPREADING CODE 1
DEDICATED PHYSICAL CHANNEL 3
SPREADING CODE 1
DEDICATED PHYSICAL CHANNEL 4
SPREADING CODE 1
SPREADING CODE 2
SPREADING CODE 3
SPREADING CODE 4
SPREADING CODE

FIG. 53

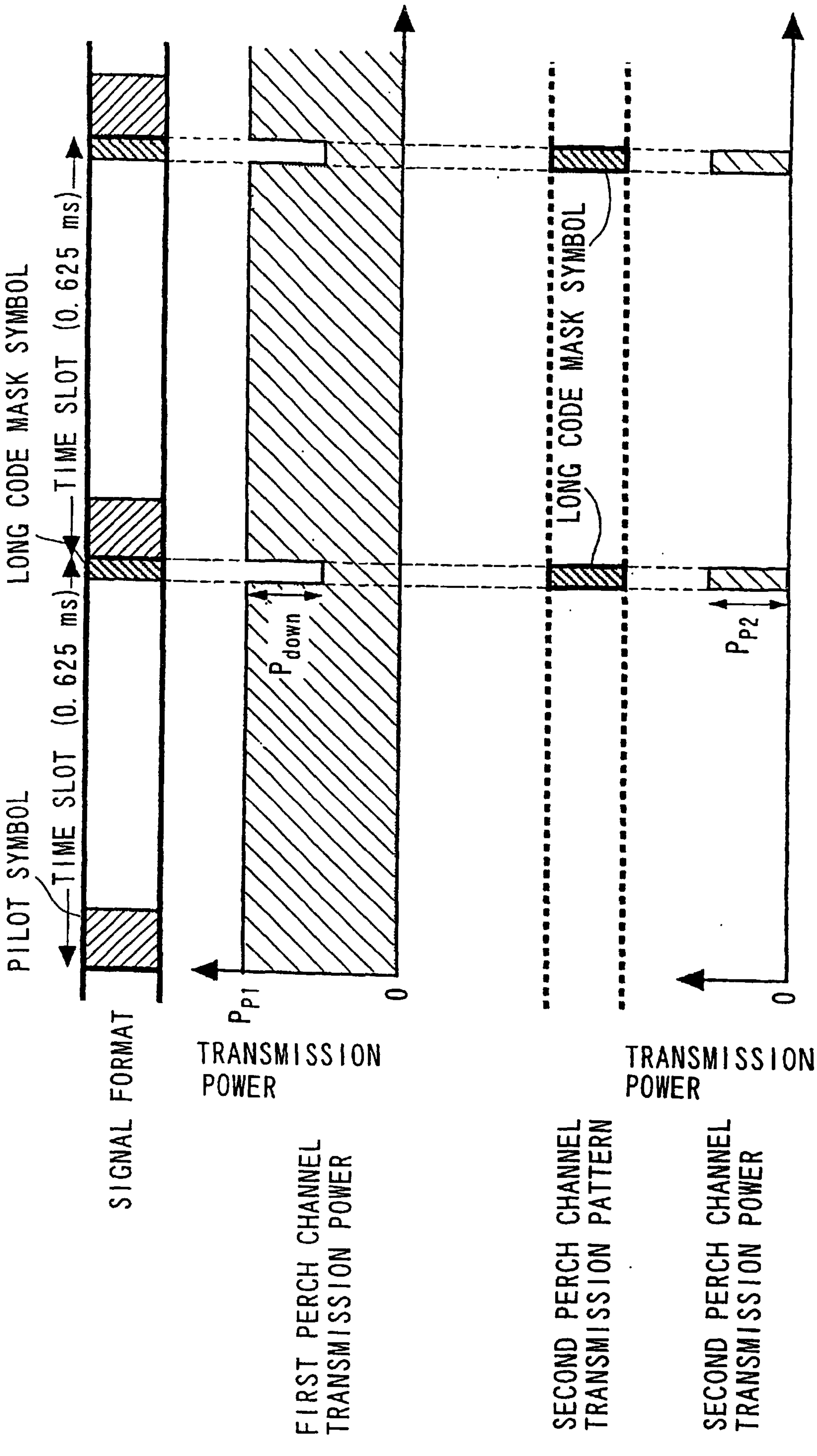
PILOT SYMBOL
TIME SLOT
TIME SLOT (0.625 ms)
LONG CODE MASK SYMBOL
TIME SLOT (0.625 ms)
SIGNAL FORMAT
TRANSMISSION POWER
$P_{P1}$
0
$P_{down}$
FIRST PERCH CHANNEL TRANSMISSION POWER
LONG CODE MASK SYMBOL
LONG CODE MASK SYMBOL
SECOND PERCH CHANNEL TRANSMISSION PATTERN
TRANSMISSION POWER
$P_{P2}$
0
SECOND PERCH CHANNEL TRANSMISSION POWER

FIG. 54

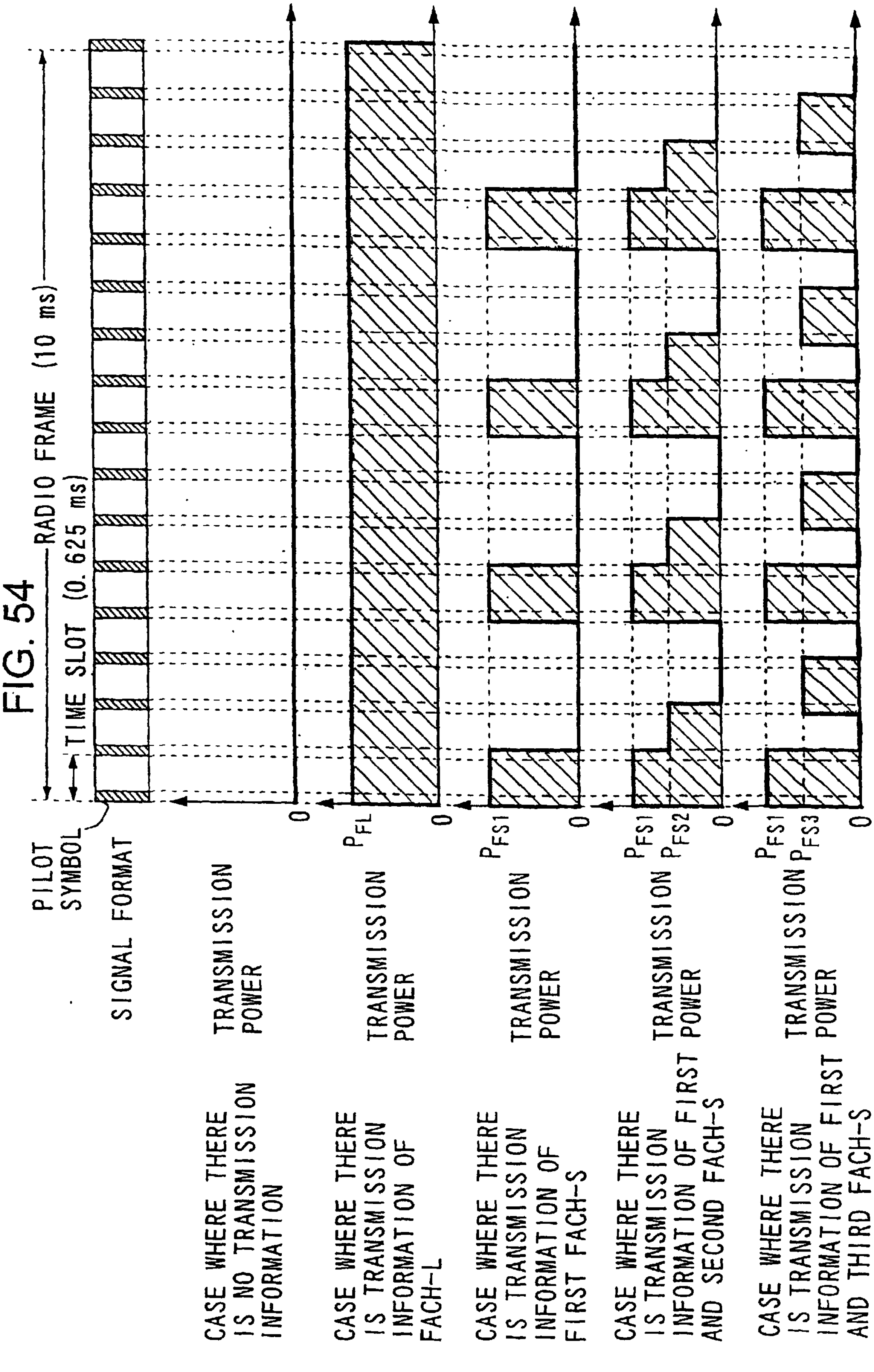
TIME SLOT (0.625 ms)
RADIO FRAME (10 ms)
PILOT SYMBOL
SIGNAL FORMAT
CASE WHERE THERE IS NO TRANSMISSION INFORMATION
TRANSMISSION POWER
0
CASE WHERE THERE IS TRANSMISSION INFORMATION OF FACH-L
TRANSMISSION POWER
$P_{FL}$
0
CASE WHERE THERE IS TRANSMISSION INFORMATION OF FIRST FACH-S
TRANSMISSION POWER
$P_{FS1}$
0
CASE WHERE THERE IS TRANSMISSION INFORMATION OF FIRST AND SECOND FACH-S
TRANSMISSION POWER
$P_{FS1}$
$P_{FS2}$
0
CASE WHERE THERE IS TRANSMISSION INFORMATION OF FIRST AND THIRD FACH-S
TRANSMISSION POWER
$P_{FS1}$
$P_{FS3}$
0

FIG. 55

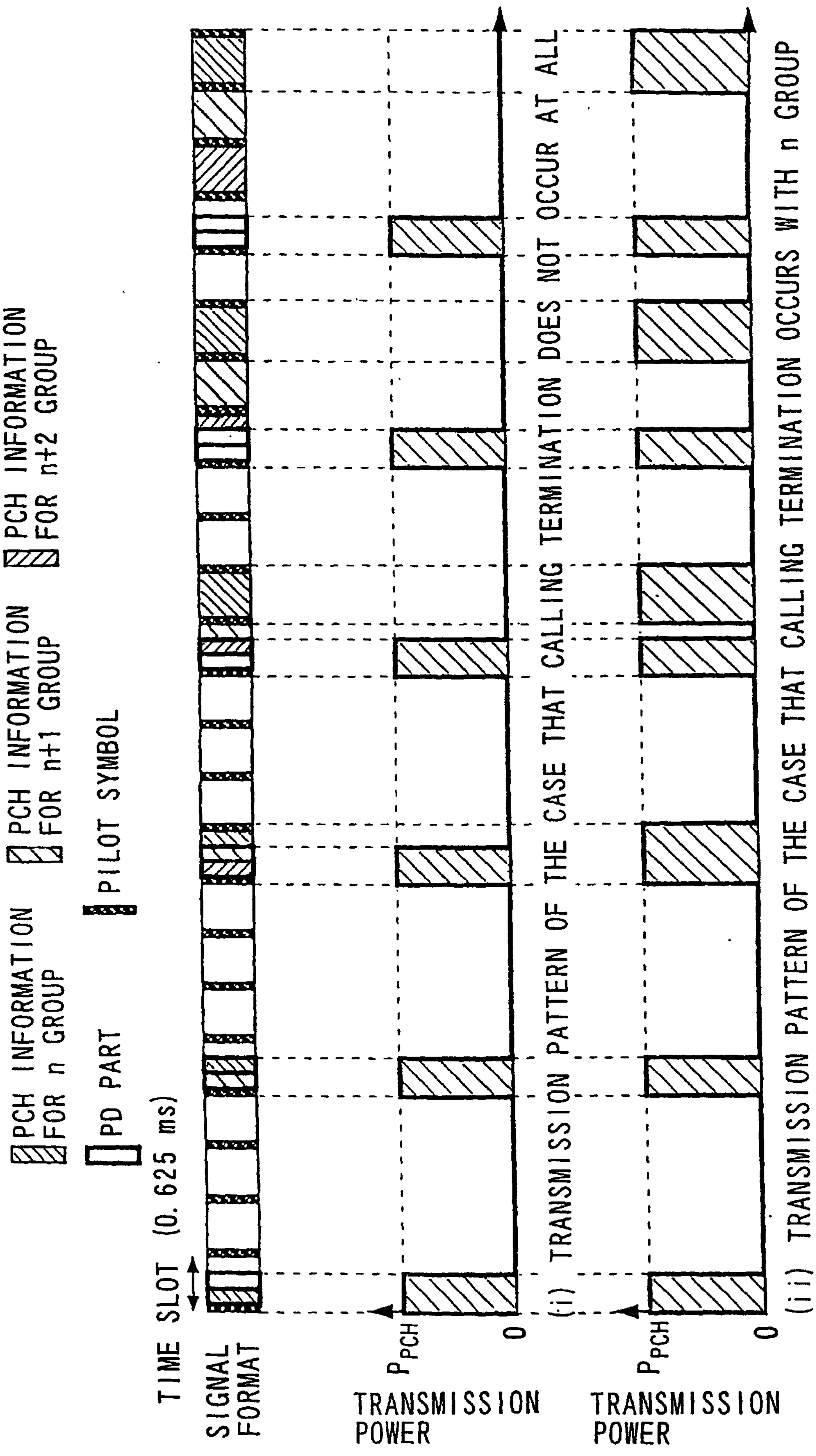
PCH INFORMATION FOR n GROUP
PCH INFORMATION FOR n+1 GROUP
PCH INFORMATION FOR n+2 GROUP
PD PART
PILOT SYMBOL
TIME SLOT (0.625 ms)
SIGNAL FORMAT
TRANSMISSION POWER
$P_{PCH}$
0
(i) TRANSMISSION PATTERN OF THE CASE THAT CALLING TERMINATION DOES NOT OCCUR AT ALL
TRANSMISSION POWER
$P_{PCH}$
0
(ii) TRANSMISSION PATTERN OF THE CASE THAT CALLING TERMINATION OCCURS WITH n GROUP

FIG. 56

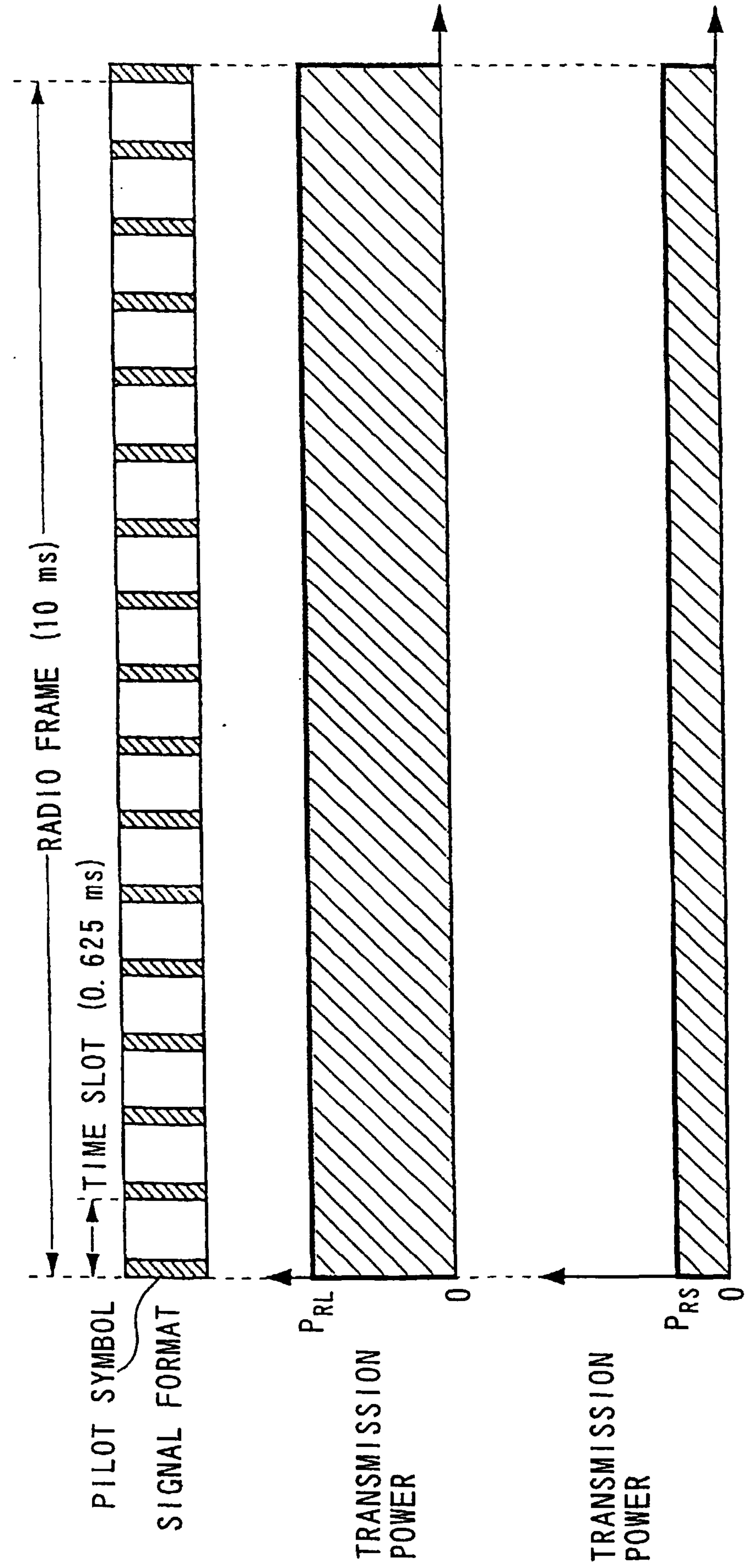
RADIO FRAME (10 ms)
TIME SLOT (0.625 ms)
PILOT SYMBOL
SIGNAL FORMAT
$P_{RL}$
0
TRANSMISSION POWER
$P_{RS}$
0
TRANSMISSION POWER

FIG. 57

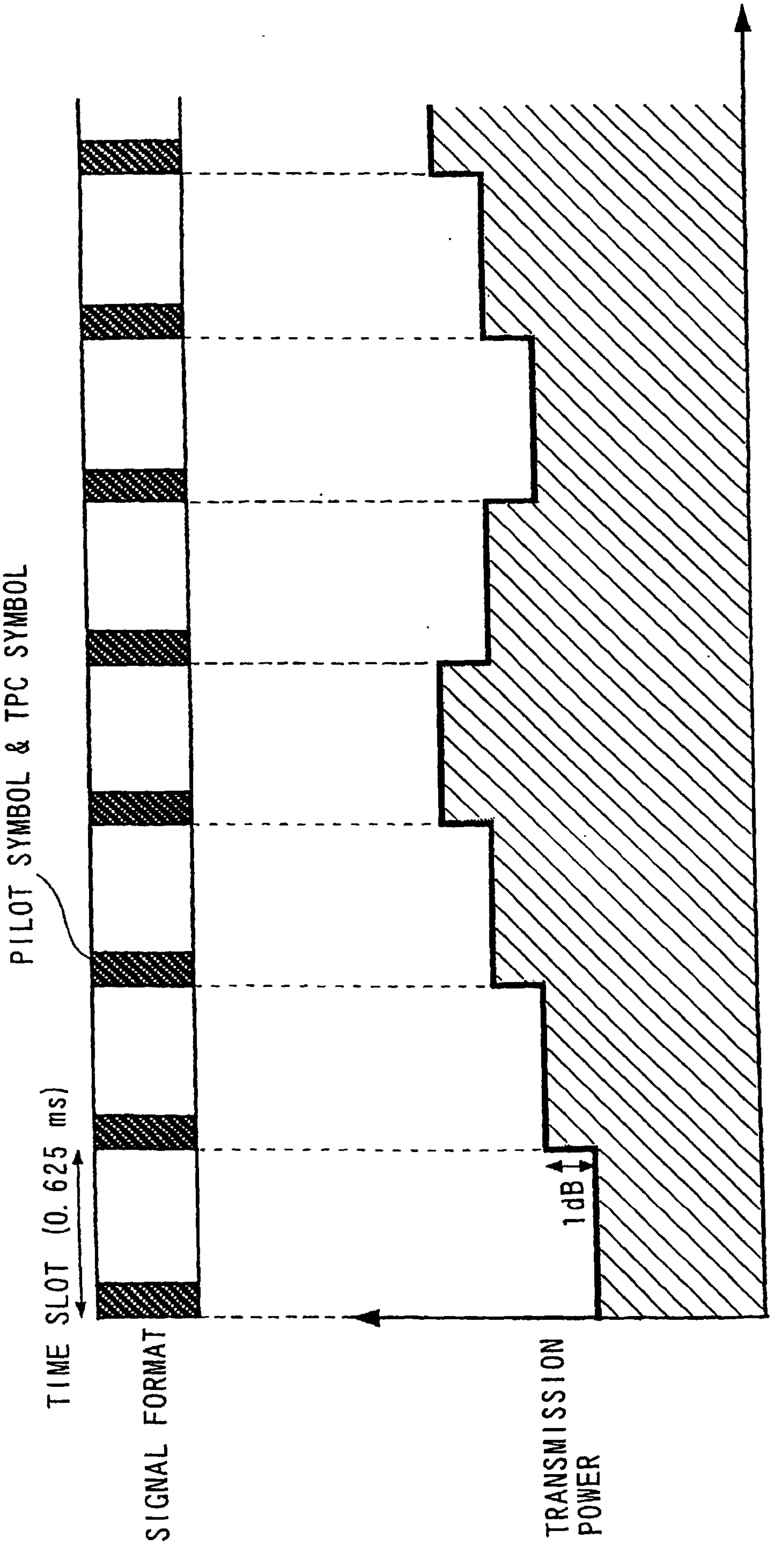
PILOT SYMBOL & TPC SYMBOL
TIME SLOT (0. 625 ms)
SIGNAL FORMAT
1dB
TRANSMISSION
POWER

FIG. 58

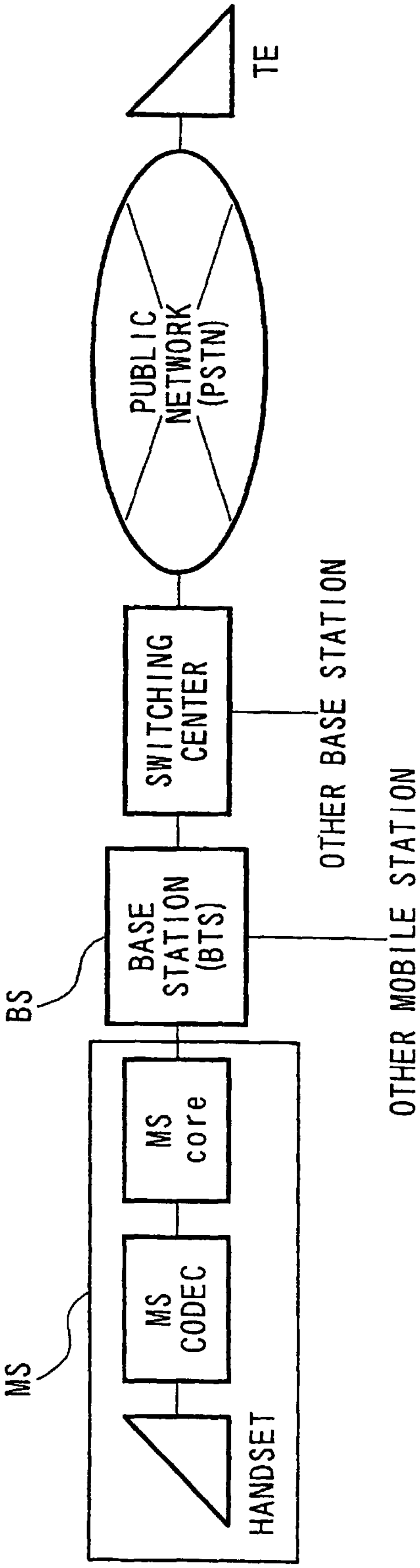
TE
PUBLIC NETWORK (PSTN)
SWITCHING CENTER
OTHER BASE STATION
BASE STATION (BTS)
OTHER MOBILE STATION
BS
MS core
MS CODEC
MS
HANDSET

FIG. 59

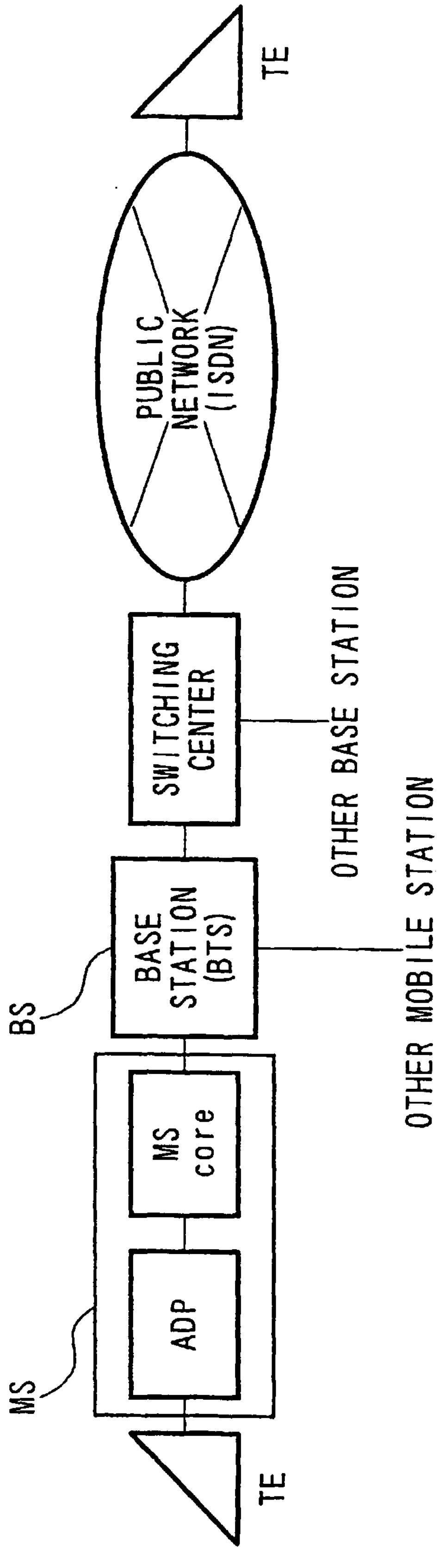
TE
PUBLIC NETWORK (ISDN)
SWITCHING CENTER
OTHER BASE STATION
BASE STATION (BTS)
OTHER MOBILE STATION
BS
MS core
ADP
MS
TE

FIG. 60

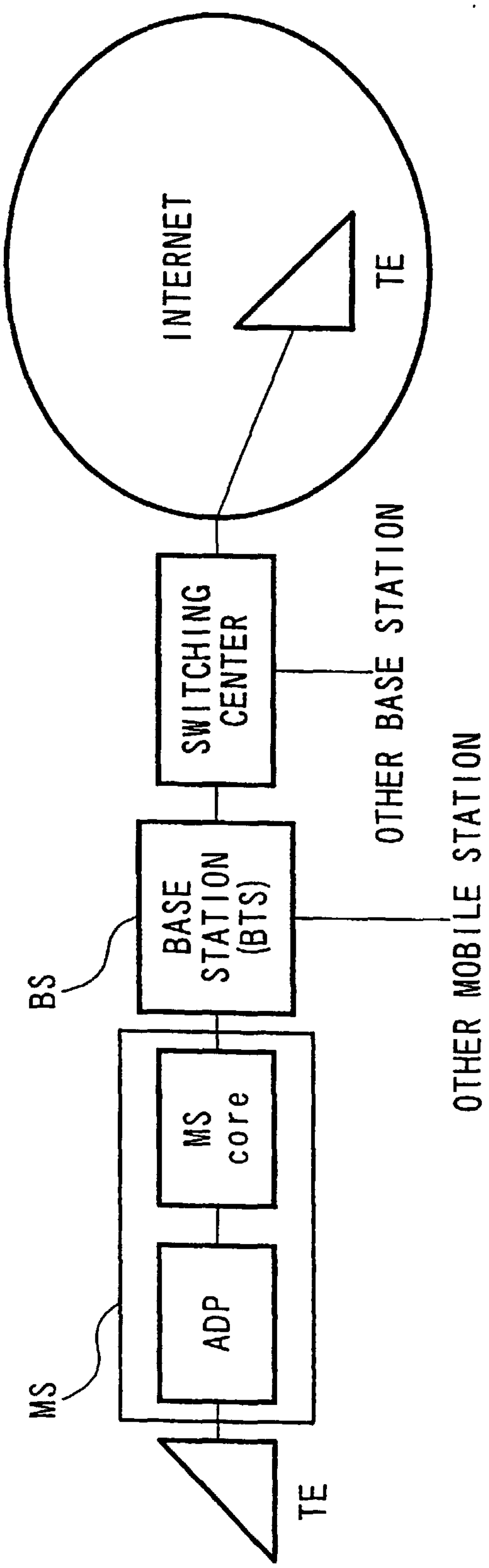
INTERNET
TE
SWITCHING CENTER
OTHER BASE STATION
BASE STATION (BTS)
BS
OTHER MOBILE STATION
MS core
ADP
MS
TE

FIG. 61

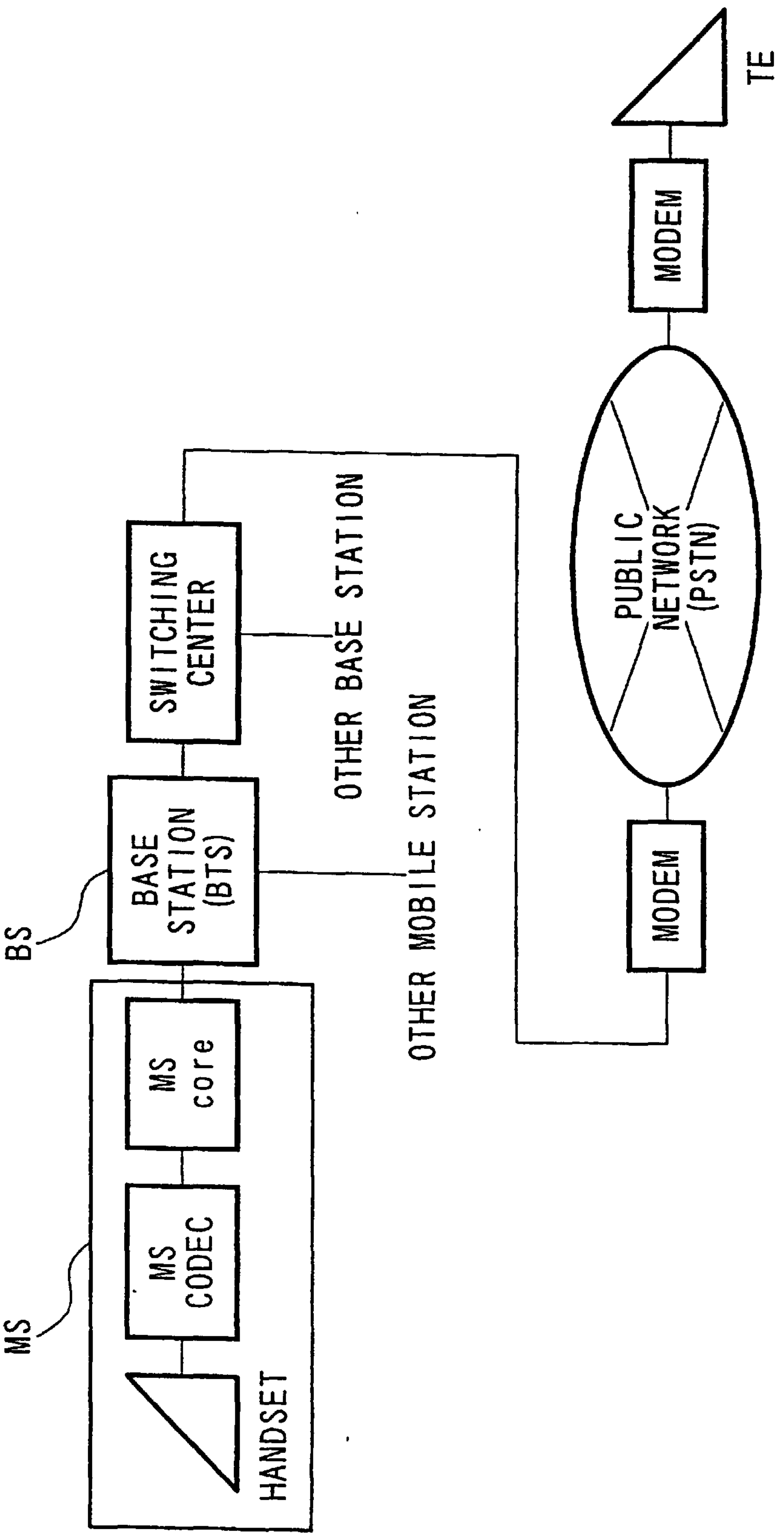
MS
HANDSET
MS CODEC
MS core
BS
BASE STATION (BTS)
SWITCHING CENTER
OTHER BASE STATION
OTHER MOBILE STATION
MODEM
PUBLIC NETWORK (PSTN)
MODEM
TE

FIG. 62

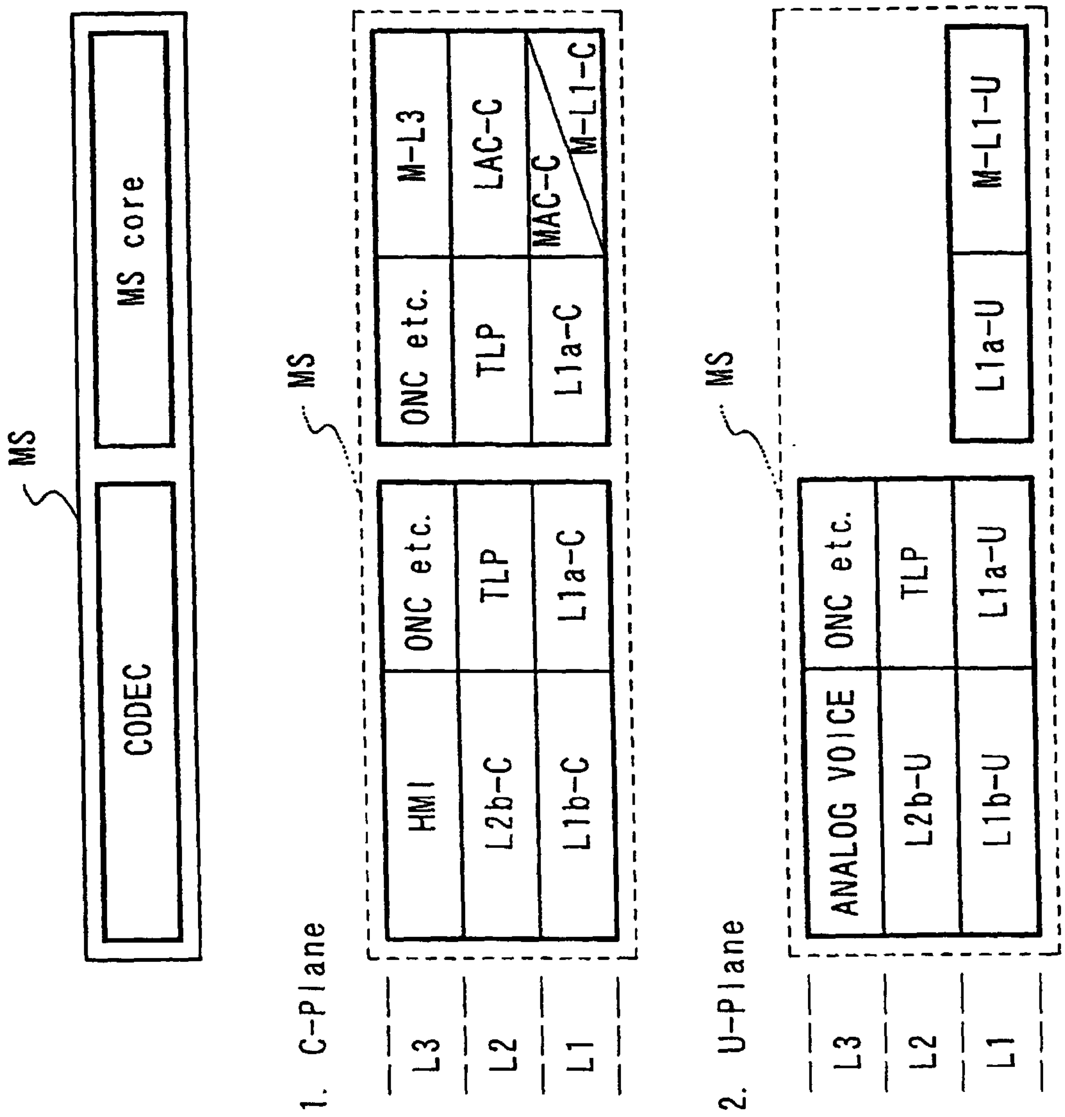
MS
CODEC
MS core
1. C-Plane
L3
L2
L1
MS
HMI
ONC etc.
L2b-C
TLP
L1b-C
L1a-C
ONC etc.
M-L3
TLP
LAC-C
L1a-C
MAC-C
M-L1-C
2. U-Plane
L3
L2
L1
MS
ANALOG VOICE
ONC etc.
L2b-U
TLP
L1b-U
L1a-U
L1a-U
M-L1-U

FIG. 63

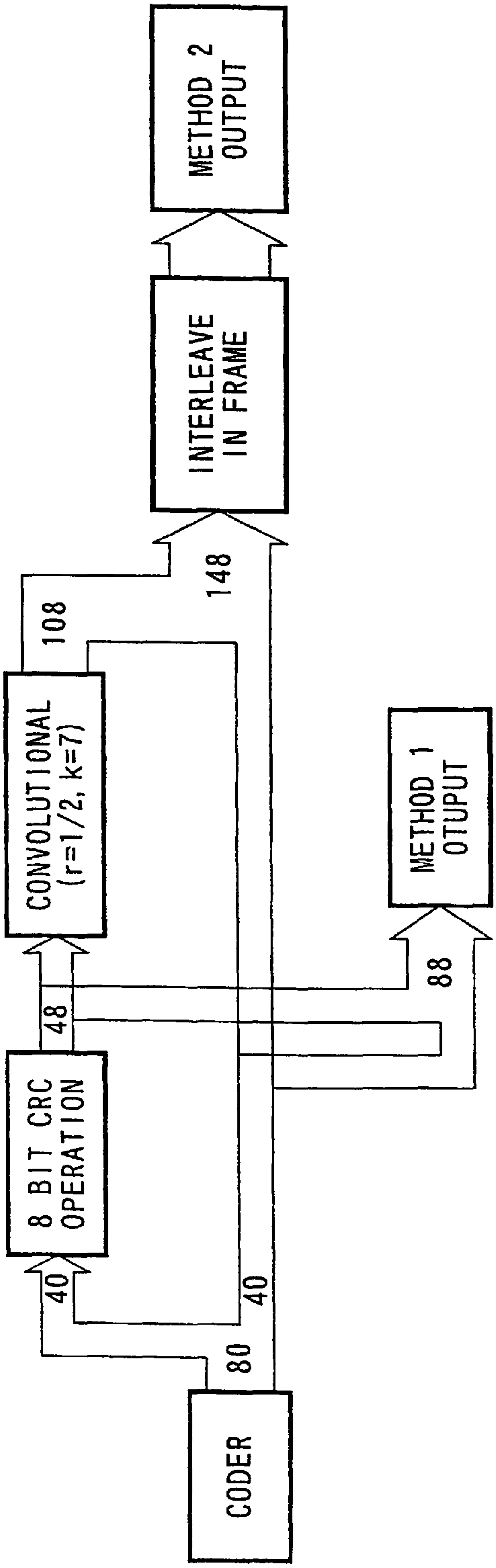
CODER
80
40
40
8 BIT CRC OPERATION
48
CONVOLUTIONAL (r=1/2, k=7)
108
148
INTERLEAVE IN FRAME
METHOD 2 OUTPUT
88
METHOD 1 OTUPUT

FIG. 64

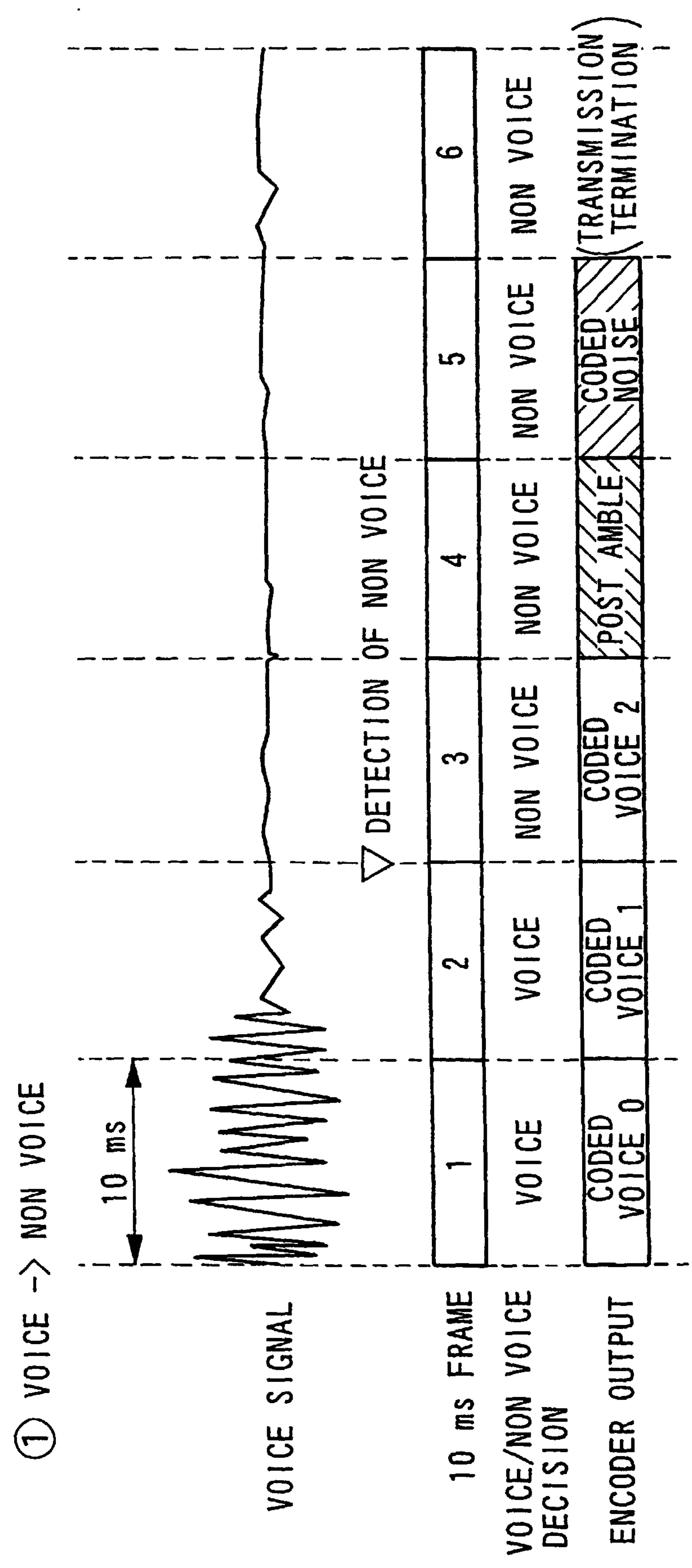

① VOICE -> NON VOICE
VOICE SIGNAL
10 ms
10 ms FRAME
1
2
3
4
5
6
VOICE/NON VOICE DECISION
VOICE
VOICE
NON VOICE
NON VOICE
NON VOICE
NON VOICE
DETECTION OF NON VOICE
ENCODER OUTPUT
CODED VOICE 0
CODED VOICE 1
CODED VOICE 2
POST AMBLE
CODED NOISE
(TRANSMISSION TERMINATION)

CONTINUANCE OF FIG. 64

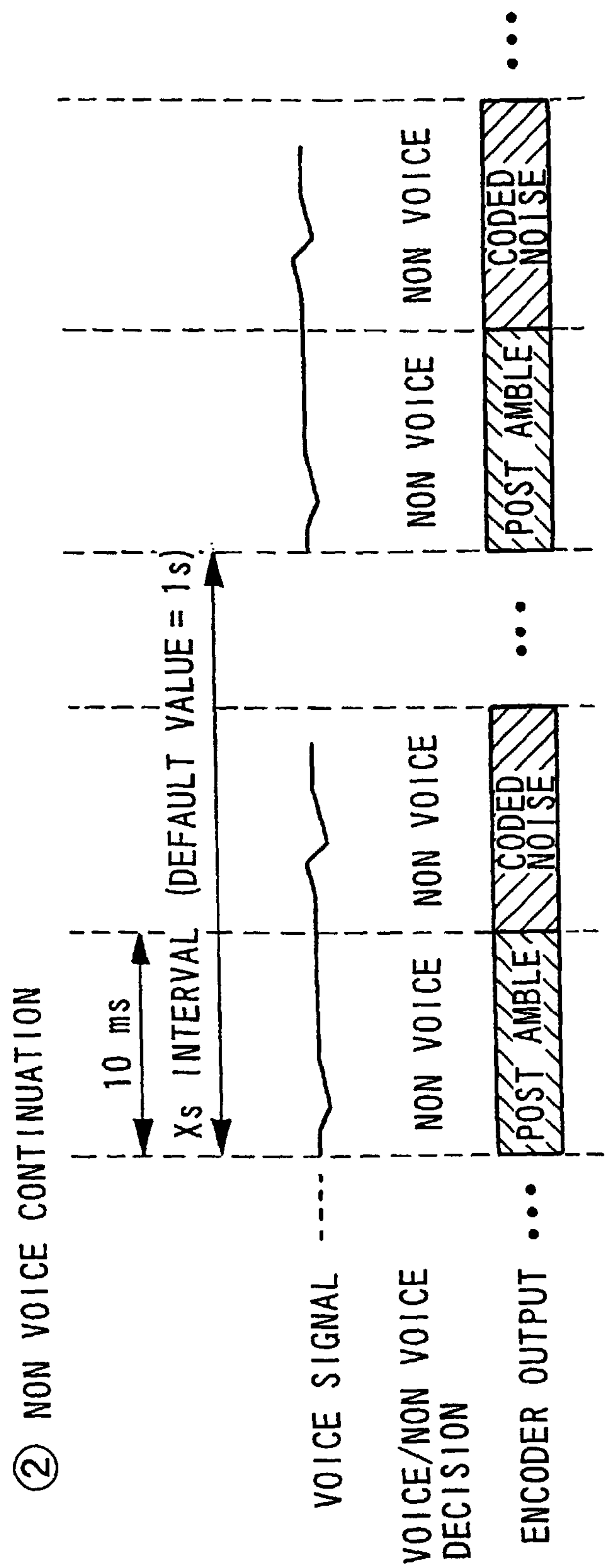

CONTINUANCE OF FIG. 64

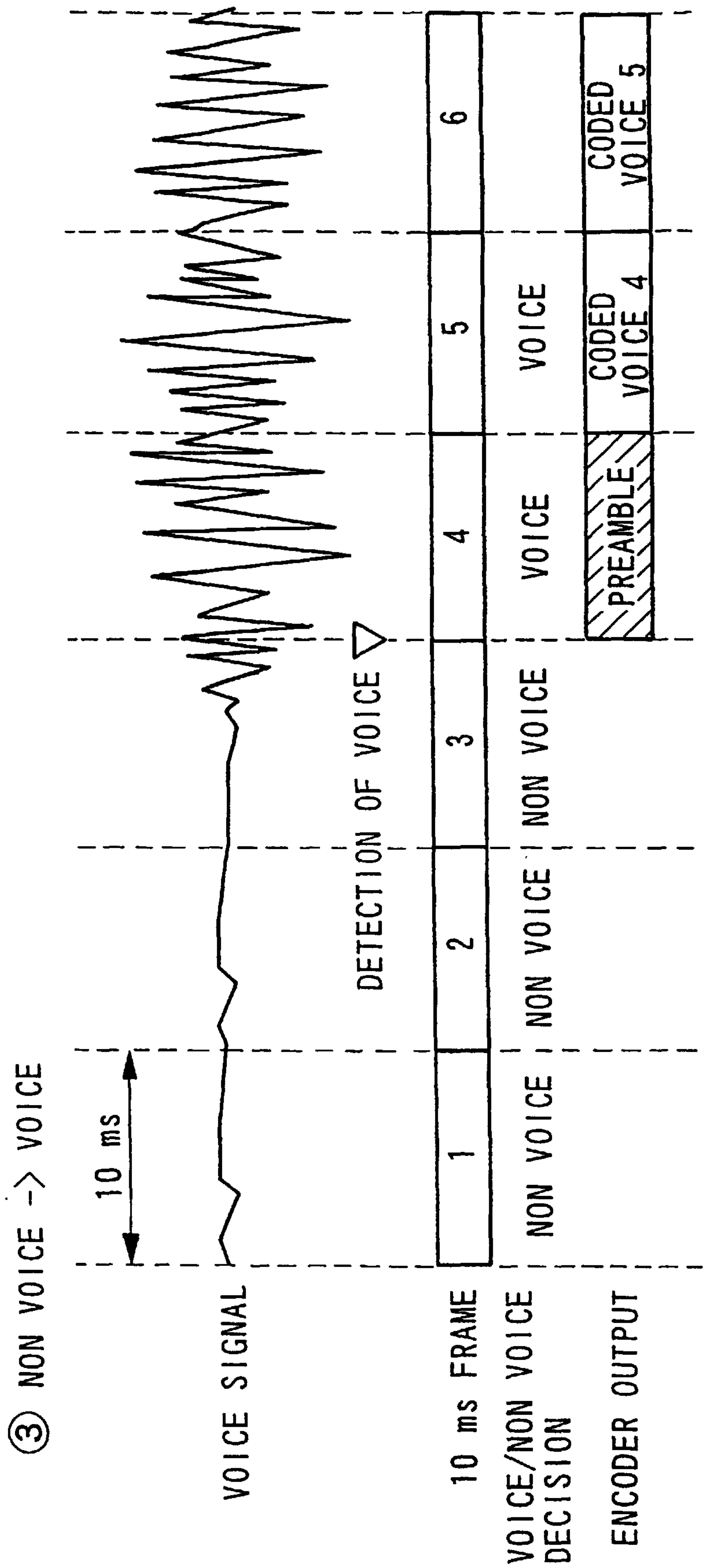

FIG. 65

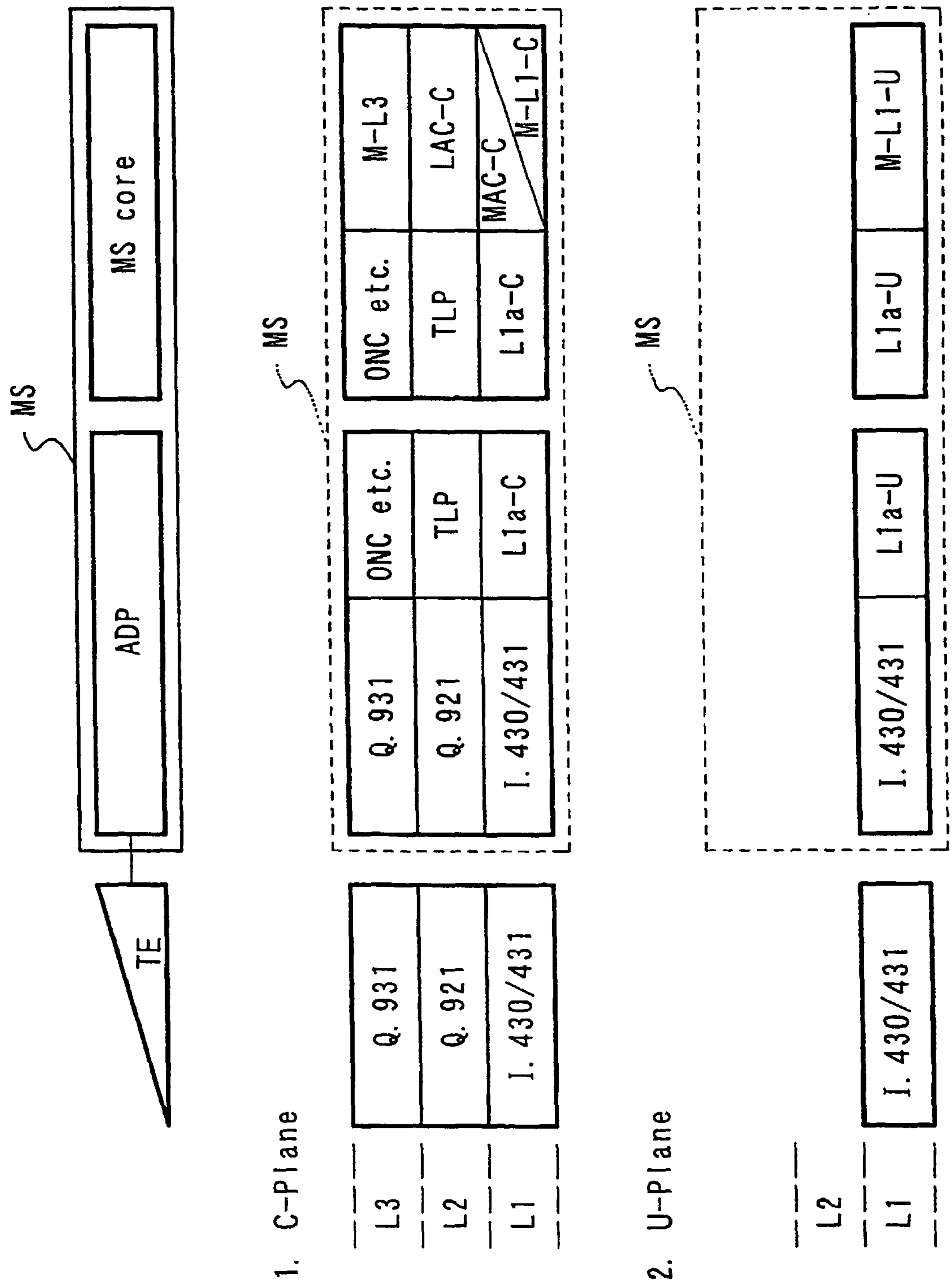

MS
TE
ADP
MS core
1. C-Plane
L3
L2
L1
Q. 931
Q. 921
I. 430/431
ONC etc.
TLP
L1a-C
M-L3
LAC-C
MAC-C
M-L1-C
2. U-Plane
L1a-U
M-L1-U

FIG. 66

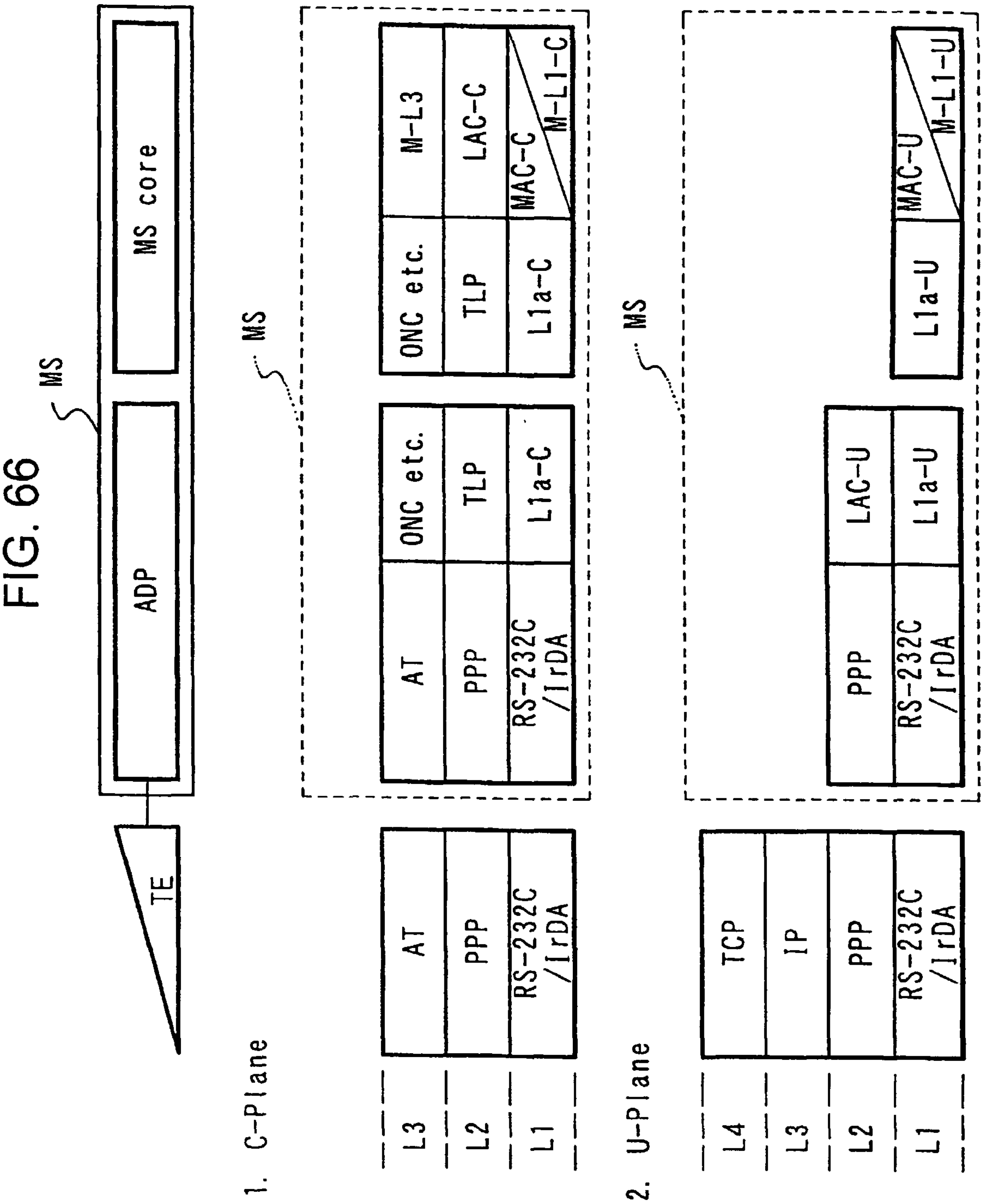
MS
TE
ADP
MS core
1. C-Plane
L3
L2
L1
AT
PPP
RS-232C /IrDA
MS
AT
PPP
RS-232C /IrDA
ONC etc.
TLP
L1a-C
ONC etc.
TLP
L1a-C
M-L3
LAC-C
MAC-C
M-L1-C
2. U-Plane
L4
L3
L2
L1
TCP
IP
PPP
RS-232C /IrDA
MS
PPP
RS-232C /IrDA
LAC-U
L1a-U
L1a-U
MAC-U
M-L1-U

FIG. 67

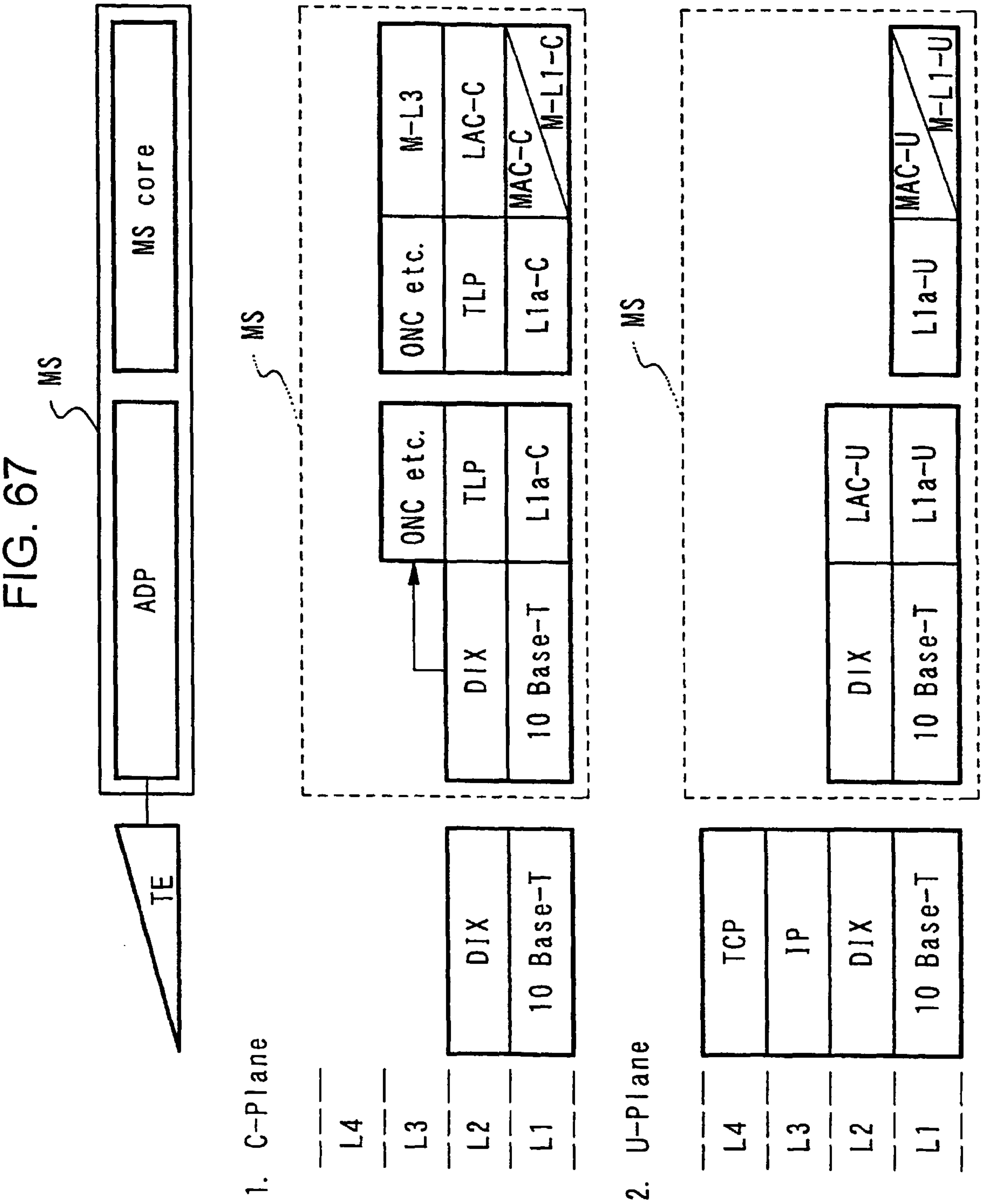
MS
ADP
MS core
TE
1. C-Plane
L4
L3
L2
L1
DIX
10 Base-T
MS
DIX
10 Base-T
ONC etc.
TLP
L1a-C
ONC etc.
TLP
L1a-C
M-L3
LAC-C
MAC-C
M-L1-C
2. U-Plane
L4
L3
L2
L1
TCP
IP
DIX
10 Base-T
MS
DIX
10 Base-T
LAC-U
L1a-U
L1a-U
MAC-U
M-L1-U

FIG. 68

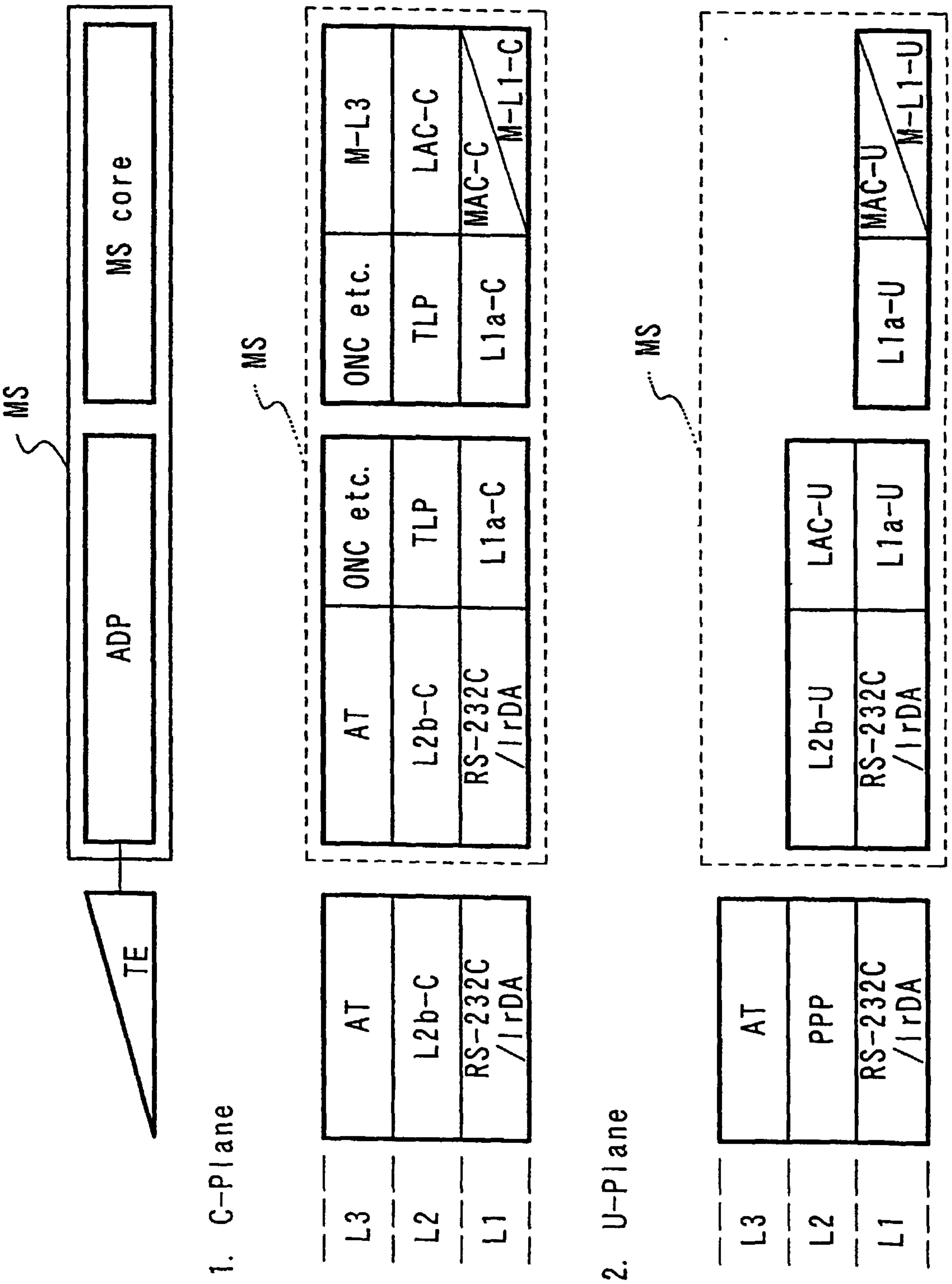
MS
TE
ADP
MS core
1. C-Plane
L3
L2
L1
AT
L2b-C
RS-232C /IrDA
MS
AT
ONC etc.
L2b-C
TLP
RS-232C /IrDA
L1a-C
ONC etc.
M-L3
TLP
LAC-C
L1a-C
MAC-C
M-L1-C
2. U-Plane
AT
PPP
RS-232C /IrDA
MS
L2b-U
LAC-U
RS-232C /IrDA
L1a-U
L1a-U
MAC-U
M-L1-U

FIG. 69

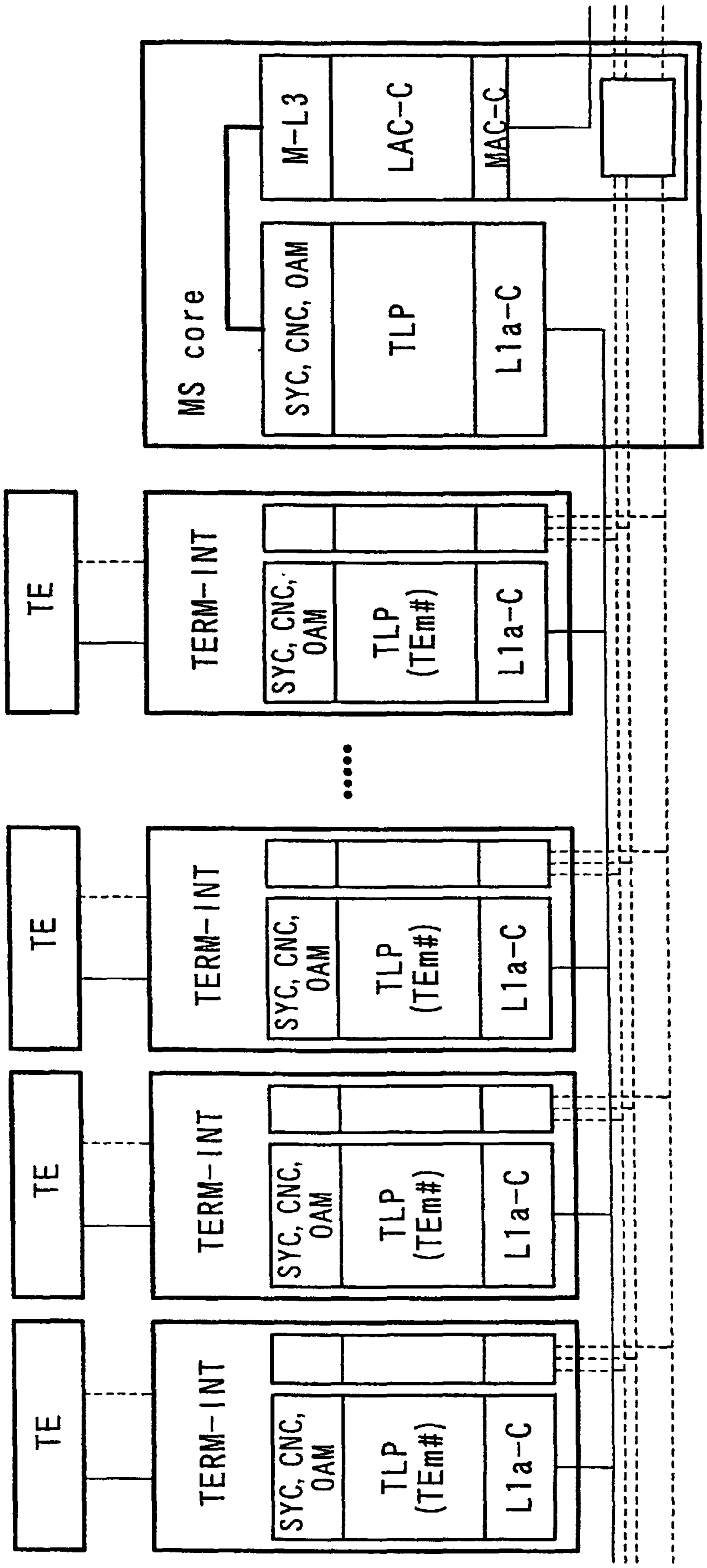
MS core
SYC, CNC, OAM
TLP
L1a-C
M-L3
LAC-C
MAC-C
TE
TERM-INT
SYC, CNC, OAM
TLP (TEm#)
L1a-C
TE
TERM-INT
SYC, CNC, OAM
TLP (TEm#)
L1a-C
TE
TERM-INT
SYC, CNC, OAM
TLP (TEm#)
L1a-C
TE
TERM-INT
SYC, CNC, OAM
TLP (TEm#)
L1a-C

FIG. 70

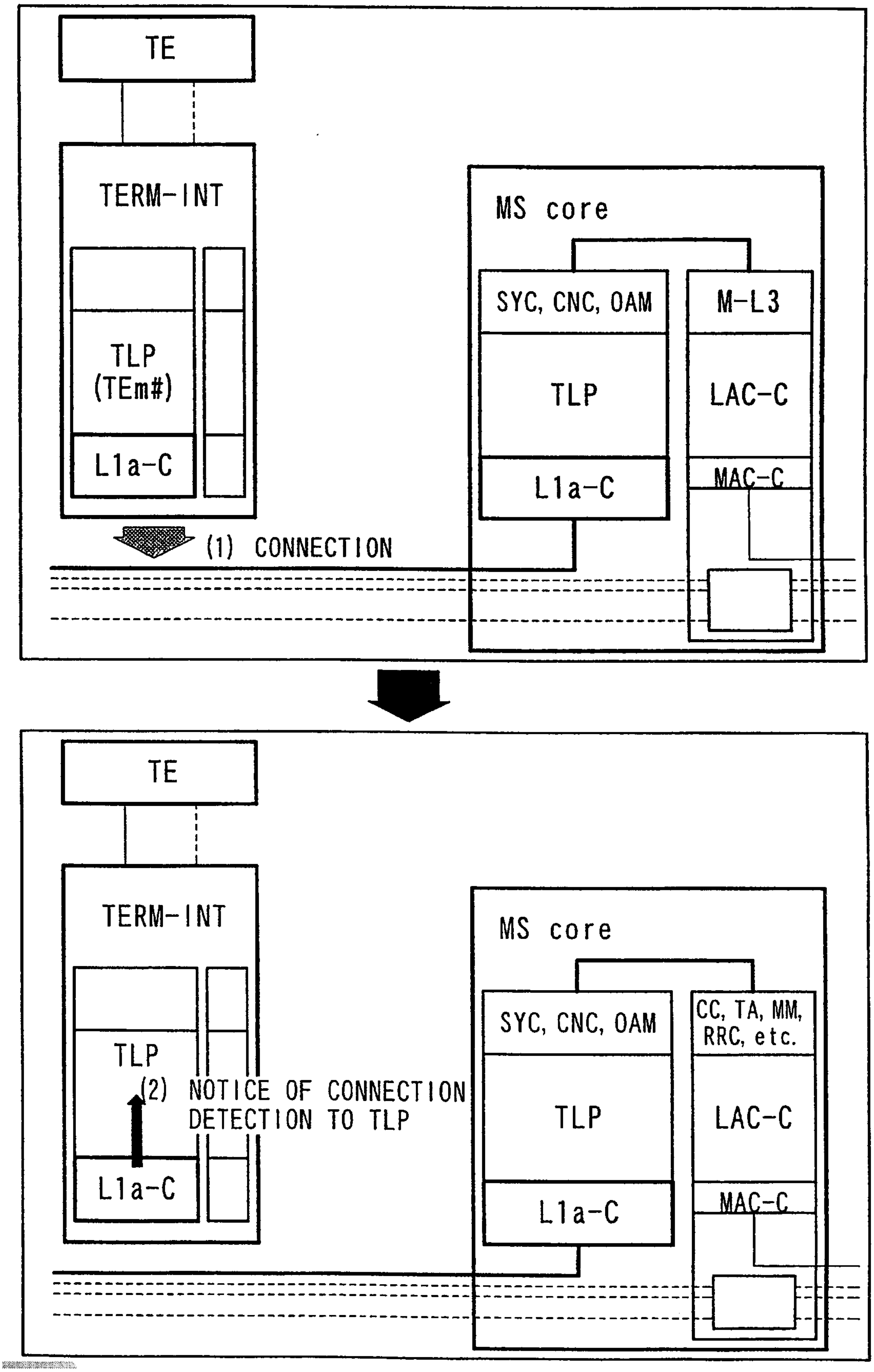
TE
TERM-INT
TLP
(TEm#)
L1a-C
MS core
SYC, CNC, OAM
M-L3
TLP
LAC-C
L1a-C
MAC-C
(1) CONNECTION
TE
TERM-INT
TLP
(2) NOTICE OF CONNECTION DETECTION TO TLP
L1a-C
MS core
SYC, CNC, OAM
CC, TA, MM, RRC, etc.
TLP
LAC-C
L1a-C
MAC-C

FIG. 71

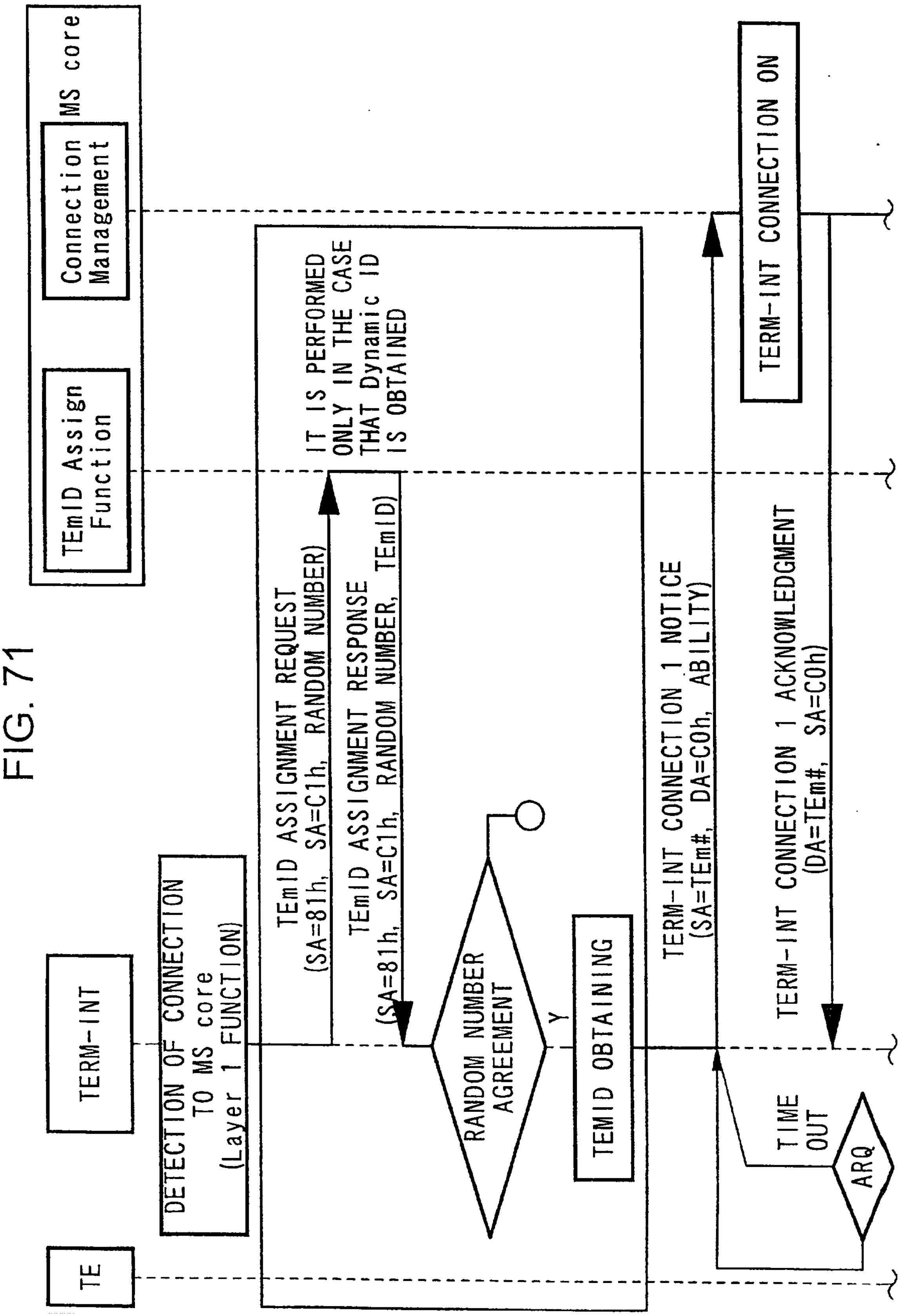

TE
TERM-INT
TEmID Assign Function
Connection Management
MS core
DETECTION OF CONNECTION TO MS core (Layer 1 FUNCTION)
TEmID ASSIGNMENT REQUEST (SA=81h, SA=C1h, RANDOM NUMBER)
TEmID ASSIGNMENT RESPONSE (SA=81h, SA=C1h, RANDOM NUMBER, TEmID)
IT IS PERFORMED ONLY IN THE CASE THAT Dynamic ID IS OBTAINED
RANDOM NUMBER AGREEMENT
Y
TEMID OBTAINING
TERM-INT CONNECTION 1 NOTICE (SA=TEm#, DA=C0h, ABILITY)
TERM-INT CONNECTION 1 ACKNOWLEDGMENT (DA=TEm#, SA=C0h)
TERM-INT CONNECTION ON
TIME OUT
ARQ

CONTINUANCE OF FIG. 71

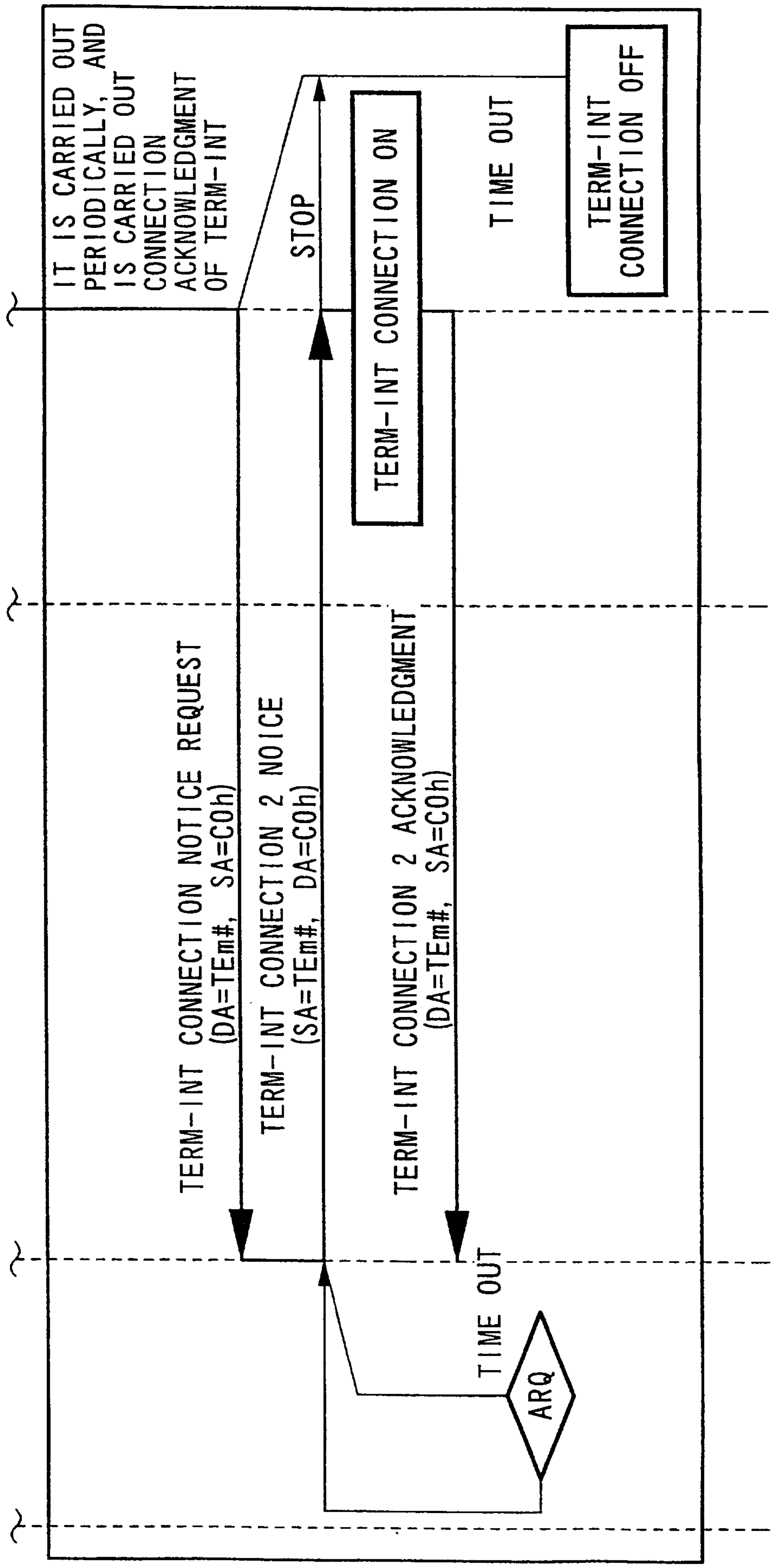

FIG. 72

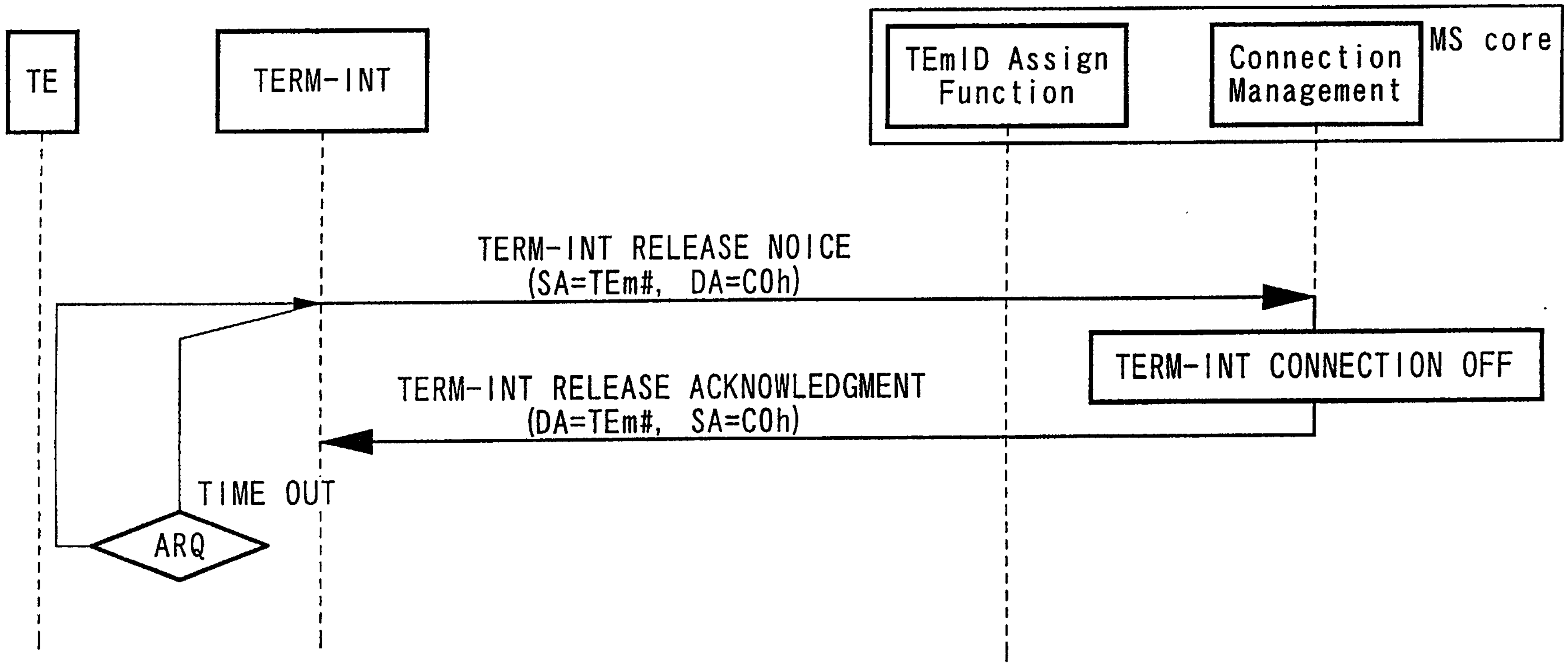
TE
TERM-INT
TEmID Assign Function
Connection Management
MS core
TERM-INT RELEASE NOICE
(SA=TEm#, DA=C0h)
TERM-INT CONNECTION OFF
TERM-INT RELEASE ACKNOWLEDGMENT
(DA=TEm#, SA=C0h)
TIME OUT
ARQ

FIG. 73

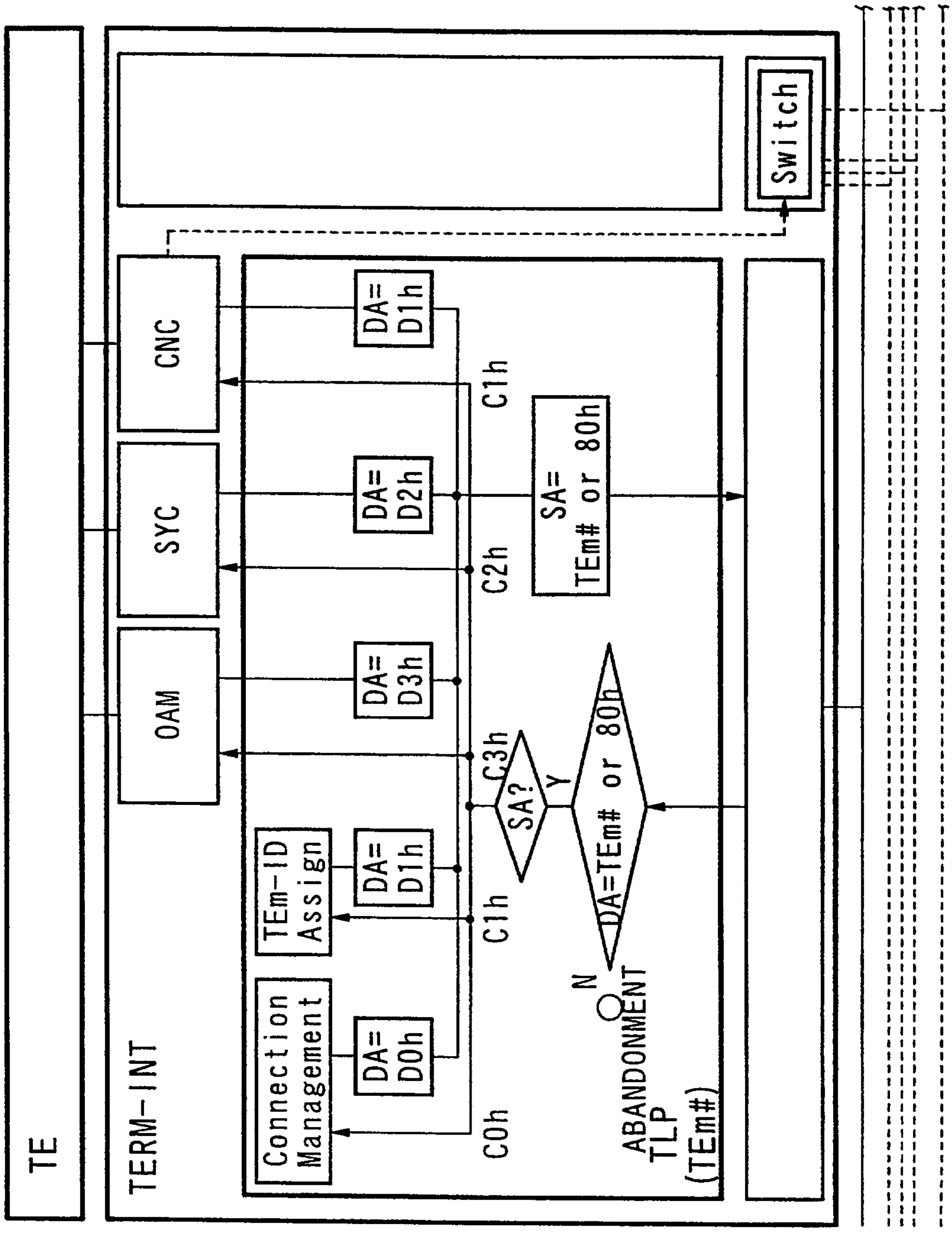
TE
TERM-INT
OAM
SYC
CNC
Switch
Connection Management
TEm-ID Assign
DA= D0h
DA= D1h
DA= D3h
DA= D2h
DA= D1h
C0h
C1h
C3h
C2h
C1h
SA?
Y
N
DA=TEm# or 80h
SA= TEm# or 80h
ABANDONMENT
TLP (TEm#)

CONTINUANCE OF FIG. 73

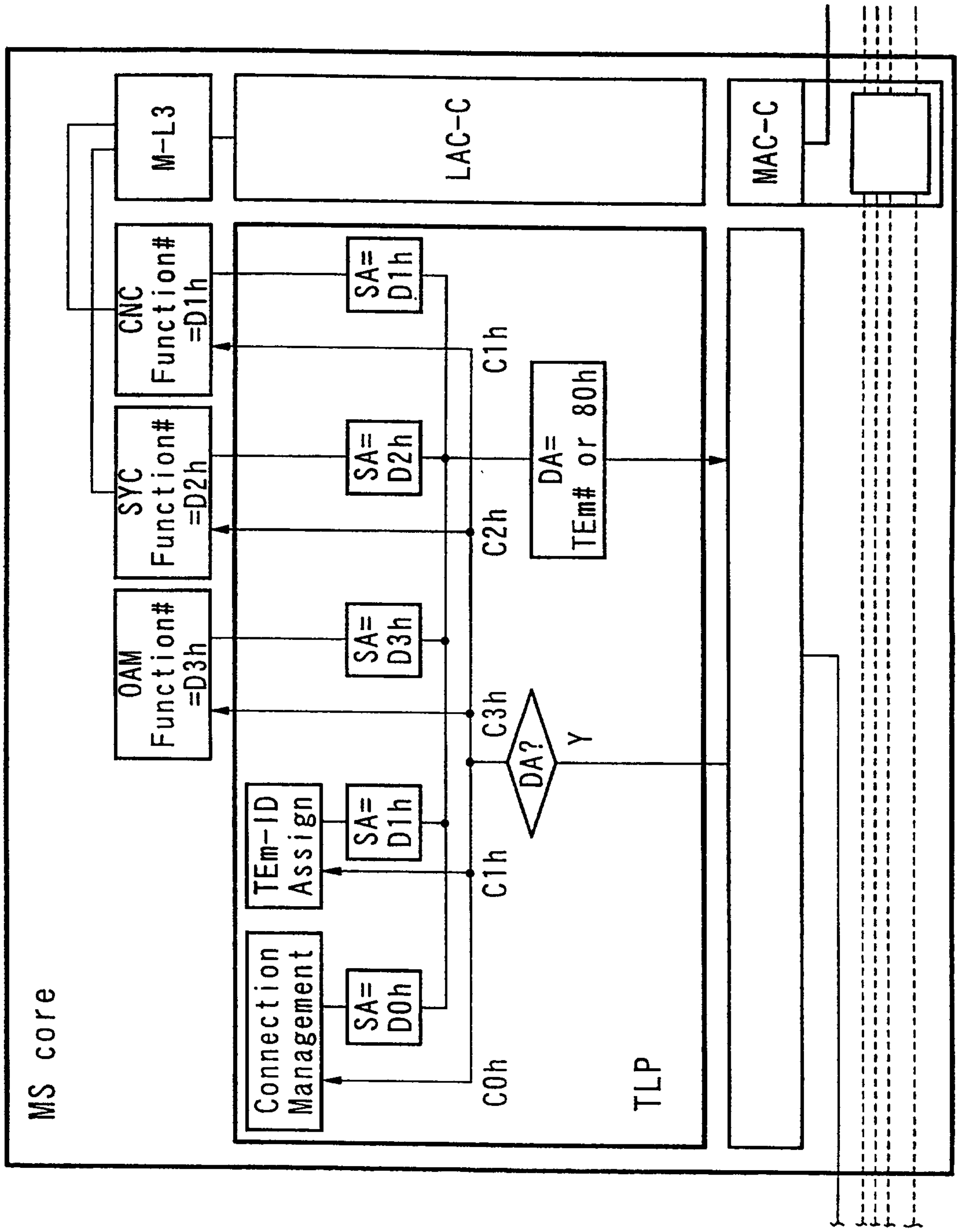

FIG. 74

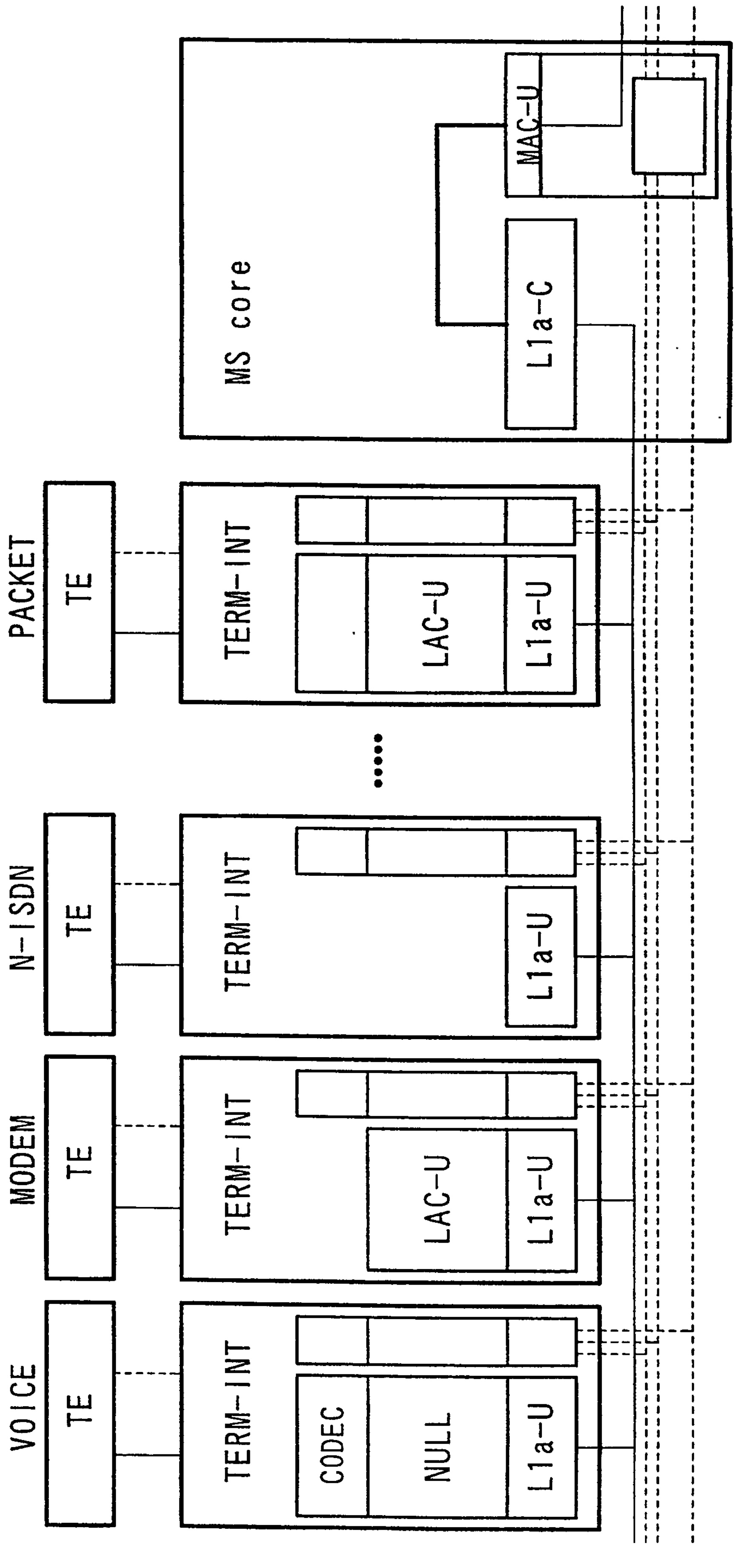

VOICE
TE
TERM-INT
CODEC
NULL
L1a-U
MODEM
TE
TERM-INT
LAC-U
L1a-U
N-ISDN
TE
TERM-INT
L1a-U
PACKET
TE
TERM-INT
LAC-U
L1a-U
MS core
L1a-C
MAC-U

FIG. 75

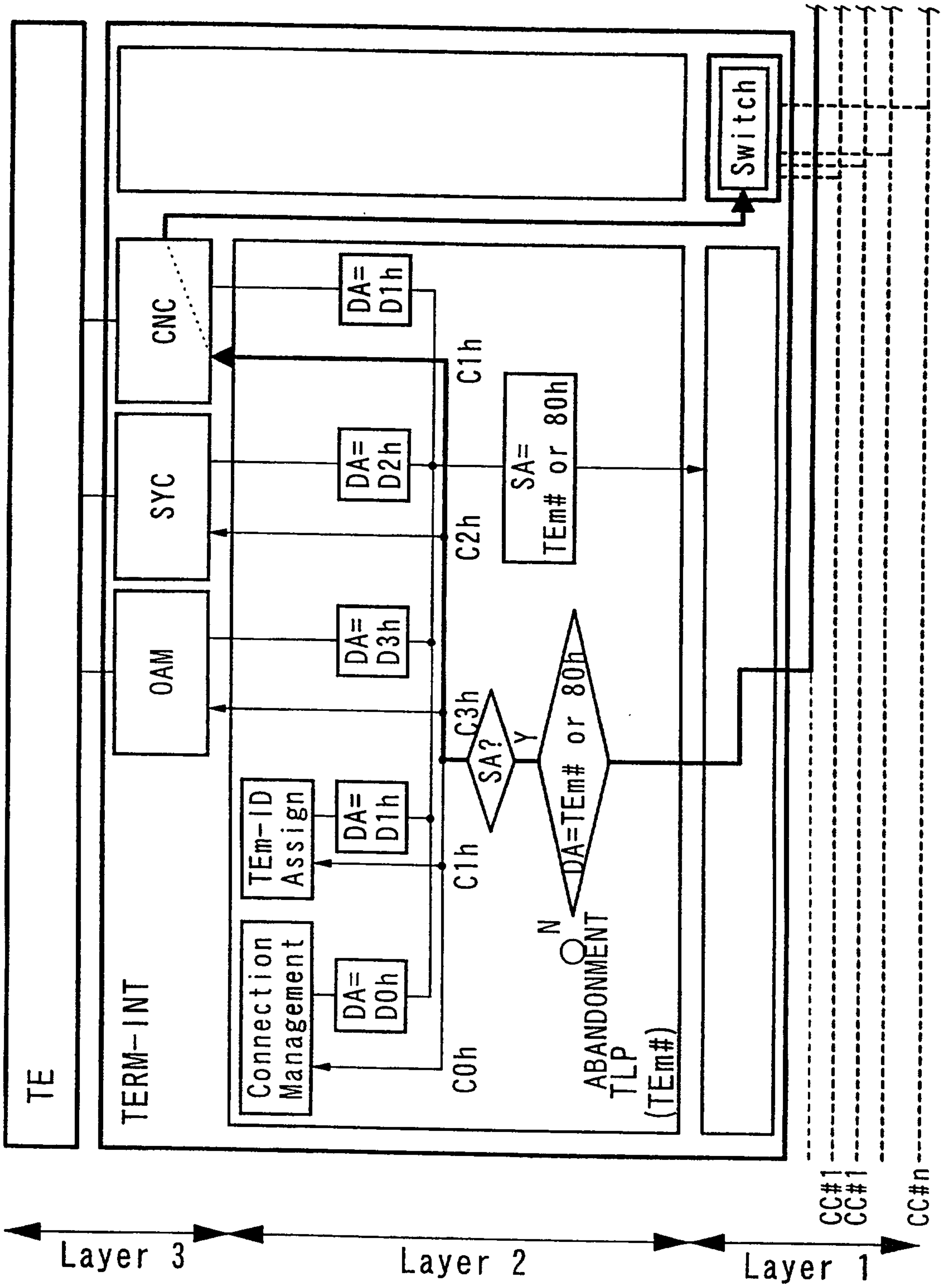
TE
TERM-INT
OAM
SYC
CNC
Switch
Connection Management
TEm-ID Assign
DA=D0h
DA=D1h
DA=D3h
DA=D2h
DA=D1h
C0h
C1h
C3h
C2h
C1h
SA?
Y
N
DA=TEm# or 80h
SA= TEm# or 80h
ABANDONMENT TLP (TEm#)
CC#1
CC#1
CC#n
Layer 3
Layer 2
Layer 1

CONTINUANCE OF FIG. 75

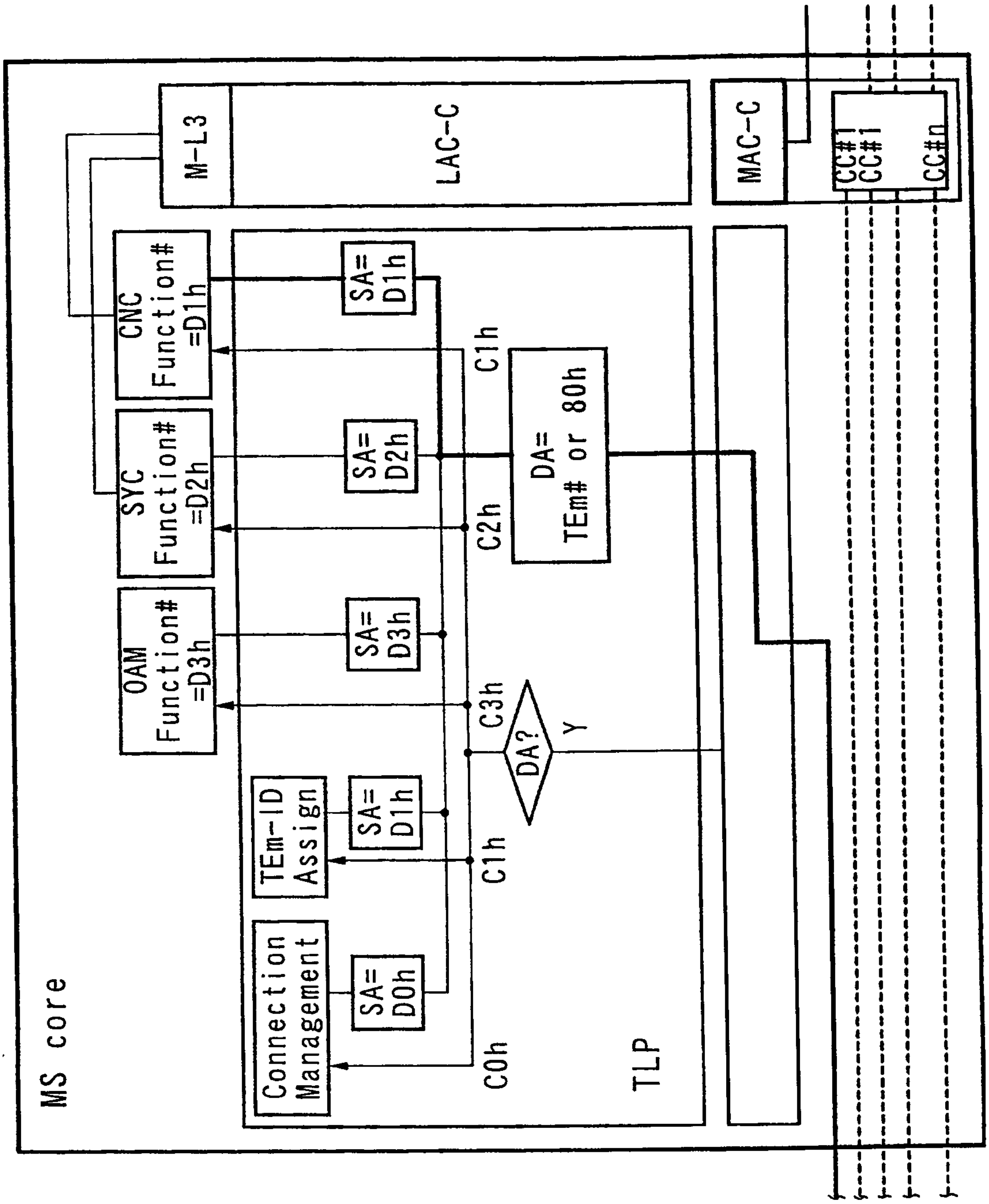

FIG. 76

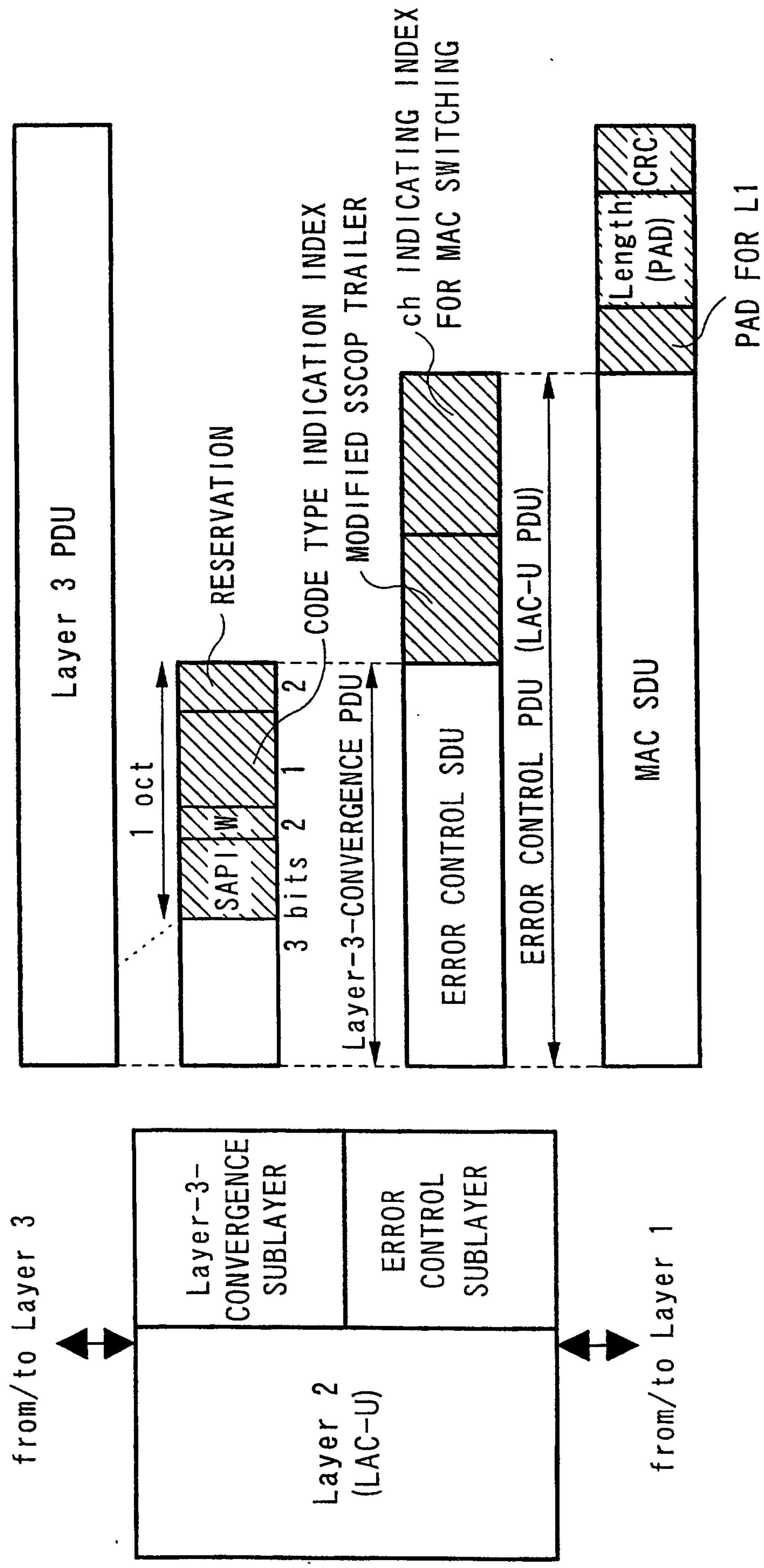
Layer 3 PDU
RESERVATION
CODE TYPE INDICATION INDEX
MODIFIED SSCOP TRAILER
ch INDICATING INDEX
FOR MAC SWITCHING
1 oct
SAPI
W
3 bits 2 1 2
Layer-3-CONVERGENCE PDU
ERROR CONTROL SDU
ERROR CONTROL PDU (LAC-U PDU)
MAC SDU
Length
(PAD)
CRC
PAD FOR L1
from/to Layer 3
Layer 2
(LAC-U)
Layer-3-
CONVERGENCE
SUBLAYER
ERROR
CONTROL
SUBLAYER
from/to Layer 1

## FIG. 77

| oct | bit 8 7 6 5 4 3 2 1 | |
|---|---|---|
| 1<br>• | Information<br>(k octets MAX) | |
| N−1 | N(S) | |
| N | Rsvd | PDU Type |

SAPI, W-bit, Indicator, Rsvd

Modified SSCOP Trailer

## FIG. 78

| oct | bit 8 7 6 5 4 3 2 1 | |
|---|---|---|
| 1 | N(PS) | |
| 2 | N(S) | |
| 3 | Rsvd | PDU Type |

Modified SSCOP Trailer

## FIG. 79

| oct | bit 8 7 6 5 4 3 2 1 | |
|---|---|---|
| 1 | List element 1<br>(a SD PDU N(S)) | |
| 2 | List element 2 | |
| • | • | |
| L | List element L | |
| L+1 | N(PS) | |
| L+2 | N(MR) | |
| L+3 | N(R) | |
| L+4 | Rsvd | PDU Type |

Modified SSCOP Trailer

FIG. 80

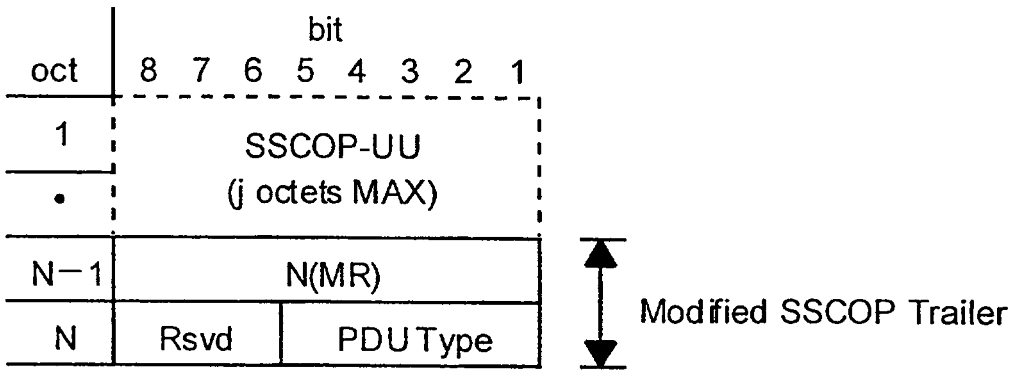


FIG. 81

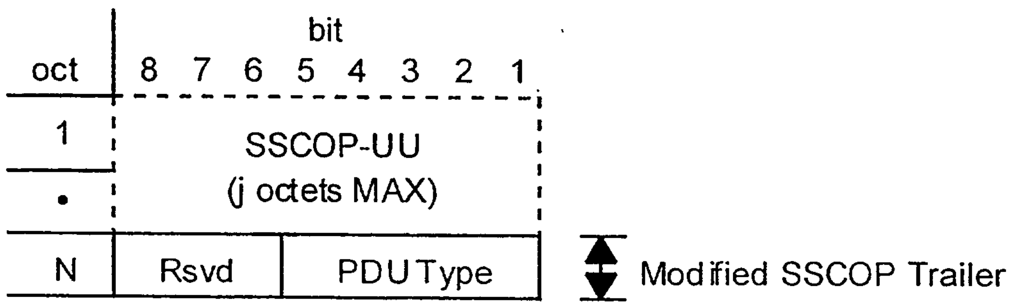


FIG. 82

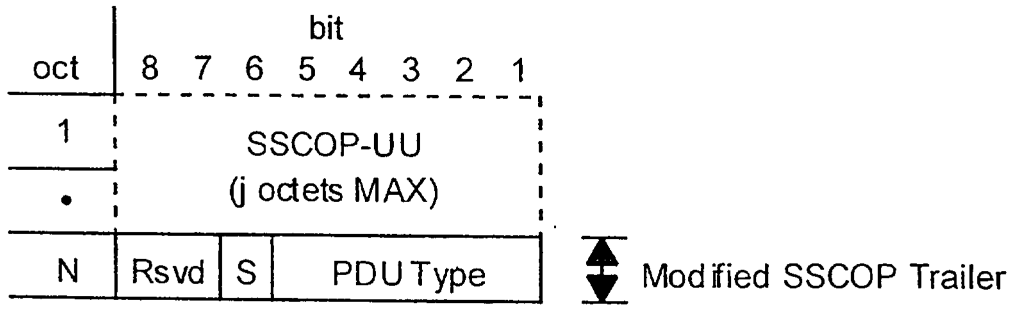


FIG. 83

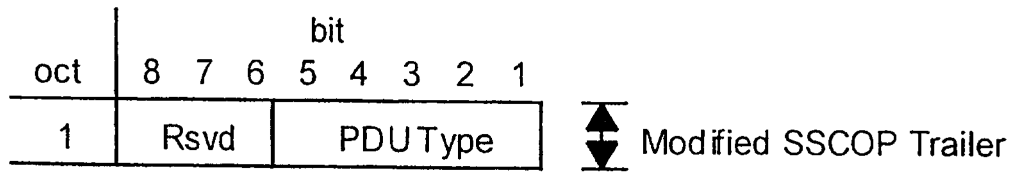

FIG. 84

| oct | bit 8 7 6 5 4 3 2 1 | | |
|---|---|---|---|
| 1 | List element 1 (a SD PDU N(S)) | | |
| 2 | List element 2 | | |
| 3 | N(MR) | | Modified SSCOP Trailer (octets 3–5) |
| 4 | N(R) | | |
| 5 | Rsvd | PDU Type | |

FIG. 85

| oct | bit 8 7 6 5 4 3 2 1 | | |
|---|---|---|---|
| 1 | Information (k octets MAX) | | |
| • | | | SAPI, W-bit, Indicator, Rsvd |
| N | Rsvd | PDU Type | Modified SSCOP Trailer |

FIG. 86

| oct | bit 8 7 6 5 4 3 2 1 | | |
|---|---|---|---|
| 1 | SSCOP-UU (j octets MAX) | | |
| • | | | |
| N−2 | N(SQ) | | Modified SSCOP Trailer (octets N−2 to N) |
| N−1 | N(MR) | | |
| N | Rsvd | PDU Type | |

FIG. 87

| oct | bit 8 7 6 5 4 3 2 1 | |
|---|---|---|
| 1 | SSCOP-UU (j octets MAX) | |
| • | | |
| N−2 | N(SQ) | |
| N−1 | N(MR) | |
| N | Rsvd | PDU Type |

Modified SSCOP Trailer

FIG. 88

| oct | bit 8 7 6 5 4 3 2 1 | |
|---|---|---|
| 1 | N(MR) | |
| 2 | Rsvd | PDU Type |

Modified SSCOP Trailer

FIG. 89

| oct | bit 8 7 6 5 4 3 2 1 | |
|---|---|---|
| 1 | N(SQ) | |
| 2 | N(MR) | |
| 3 | Rsvd | PDU Type |

Modified SSCOP Trailer

FIG. 90

| oct | bit 8 7 6 5 4 3 2 1 | |
|---|---|---|
| 1 | N(MR) | |
| 2 | Rsvd | PDU Type |

Modified SSCOP Trailer

FIG. 91

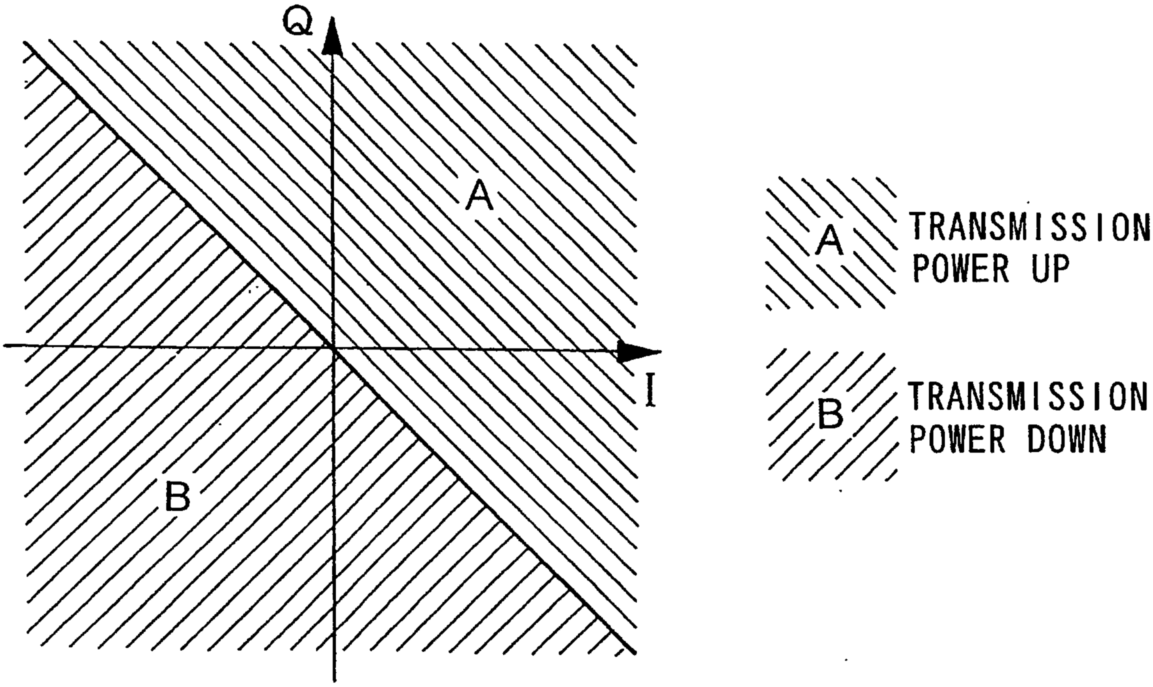

FIG. 92

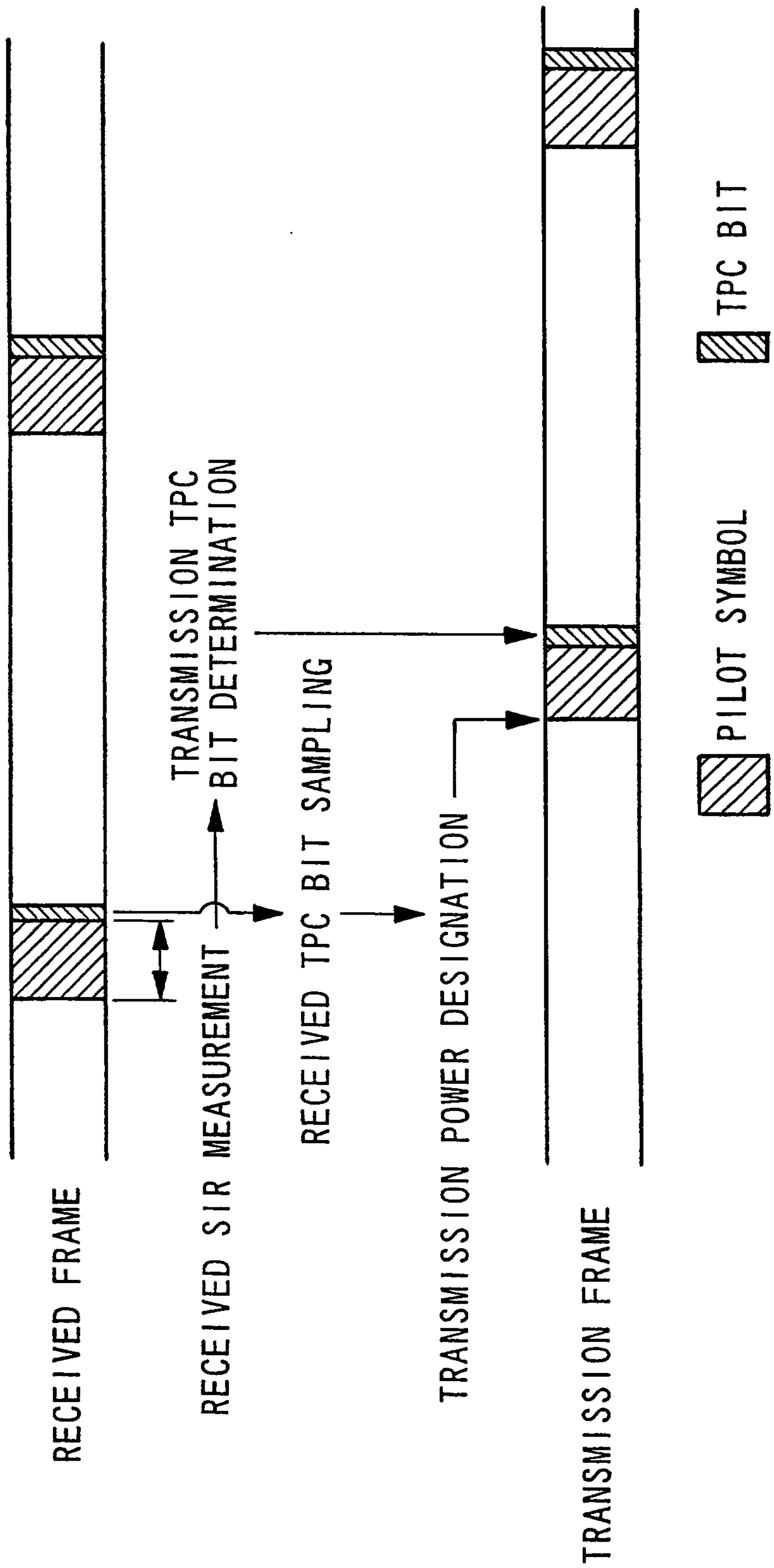
RECEIVED FRAME
RECEIVED SIR MEASUREMENT
TRANSMISSION TPC
BIT DETERMINATION
RECEIVED TPC BIT SAMPLING
TRANSMISSION POWER DESIGNATION
TRANSMISSION FRAME
PILOT SYMBOL
TPC BIT

FIG. 93

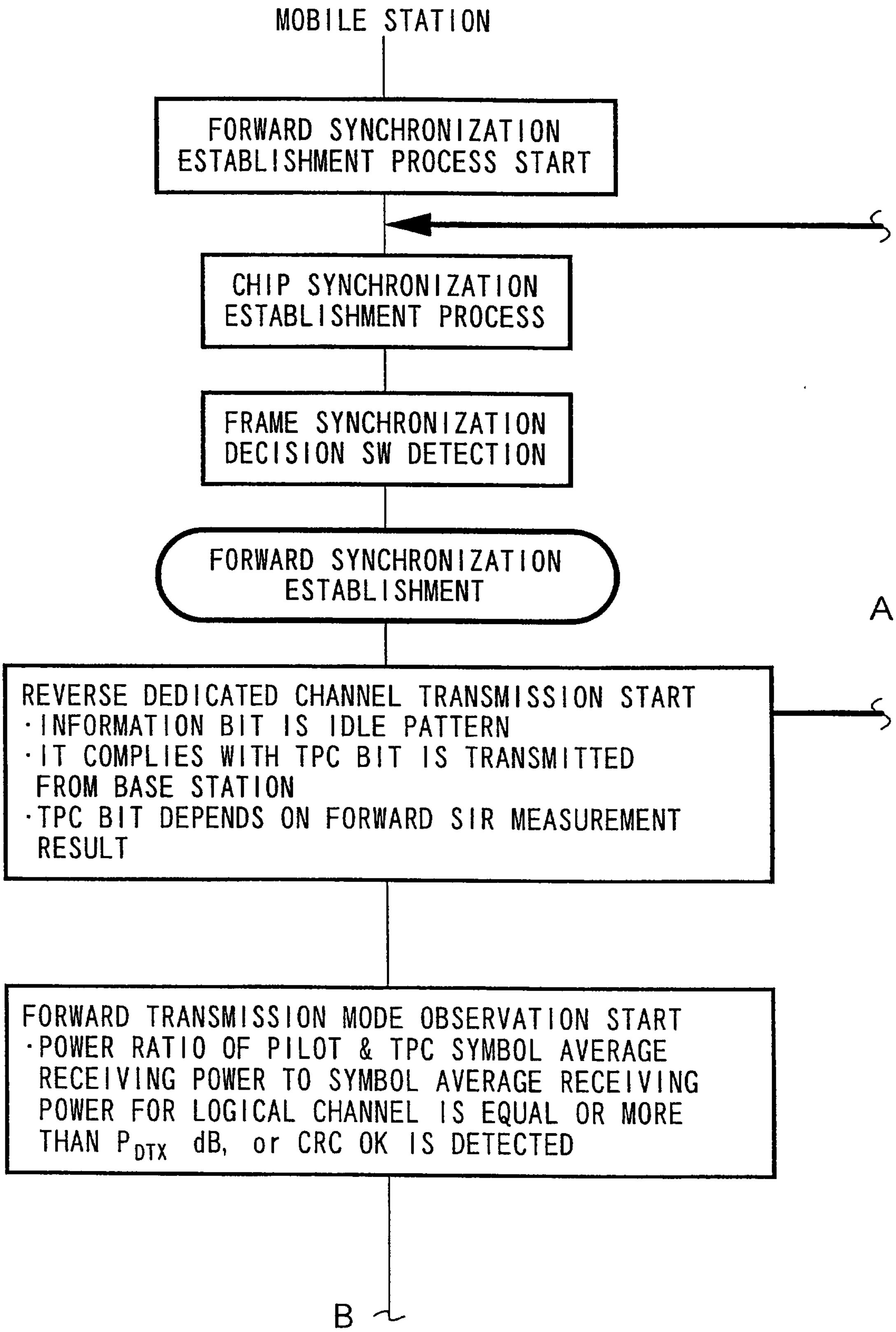
MOBILE STATION
FORWARD SYNCHRONIZATION ESTABLISHMENT PROCESS START
CHIP SYNCHRONIZATION ESTABLISHMENT PROCESS
FRAME SYNCHRONIZATION DECISION SW DETECTION
FORWARD SYNCHRONIZATION ESTABLISHMENT
A
REVERSE DEDICATED CHANNEL TRANSMISSION START
·INFORMATION BIT IS IDLE PATTERN
·IT COMPLIES WITH TPC BIT IS TRANSMITTED FROM BASE STATION
·TPC BIT DEPENDS ON FORWARD SIR MEASUREMENT RESULT
FORWARD TRANSMISSION MODE OBSERVATION START
·POWER RATIO OF PILOT & TPC SYMBOL AVERAGE RECEIVING POWER TO SYMBOL AVERAGE RECEIVING POWER FOR LOGICAL CHANNEL IS EQUAL OR MORE THAN $P_{DTX}$ dB, or CRC OK IS DETECTED
B

CONTINUANCE OF FIG. 93

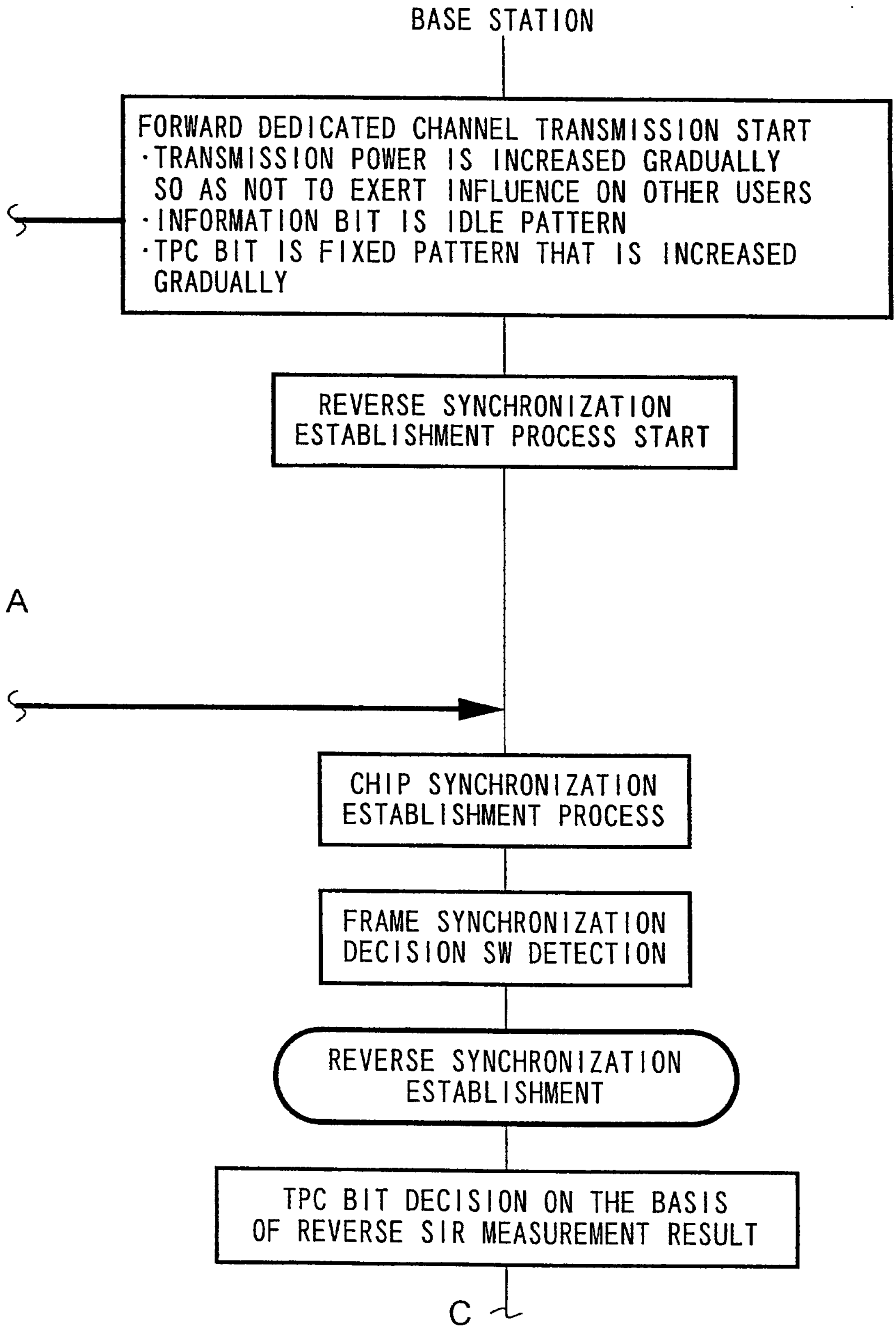

CONTINUANCE OF FIG. 93

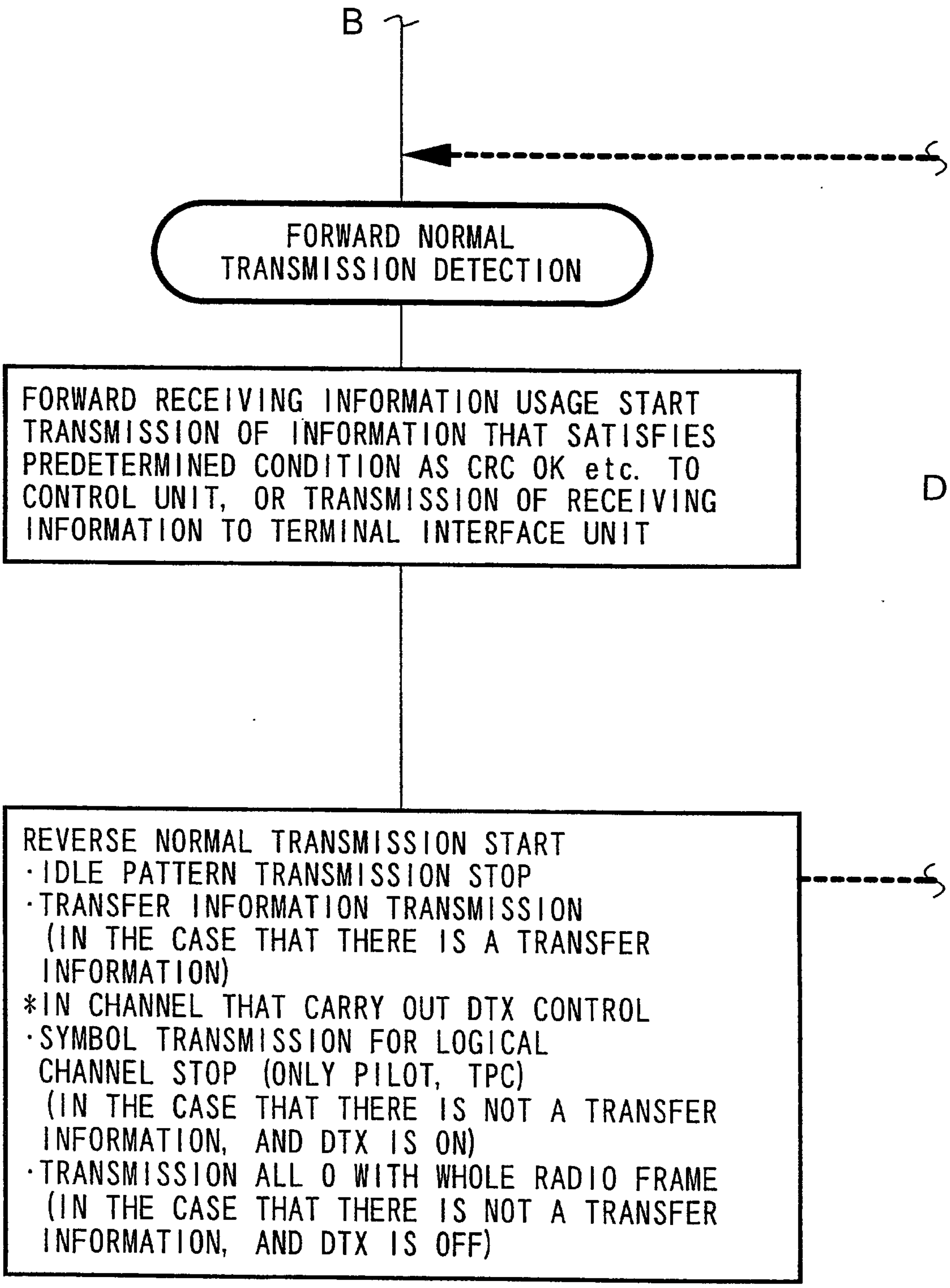

CONTINUANCE OF FIG. 93

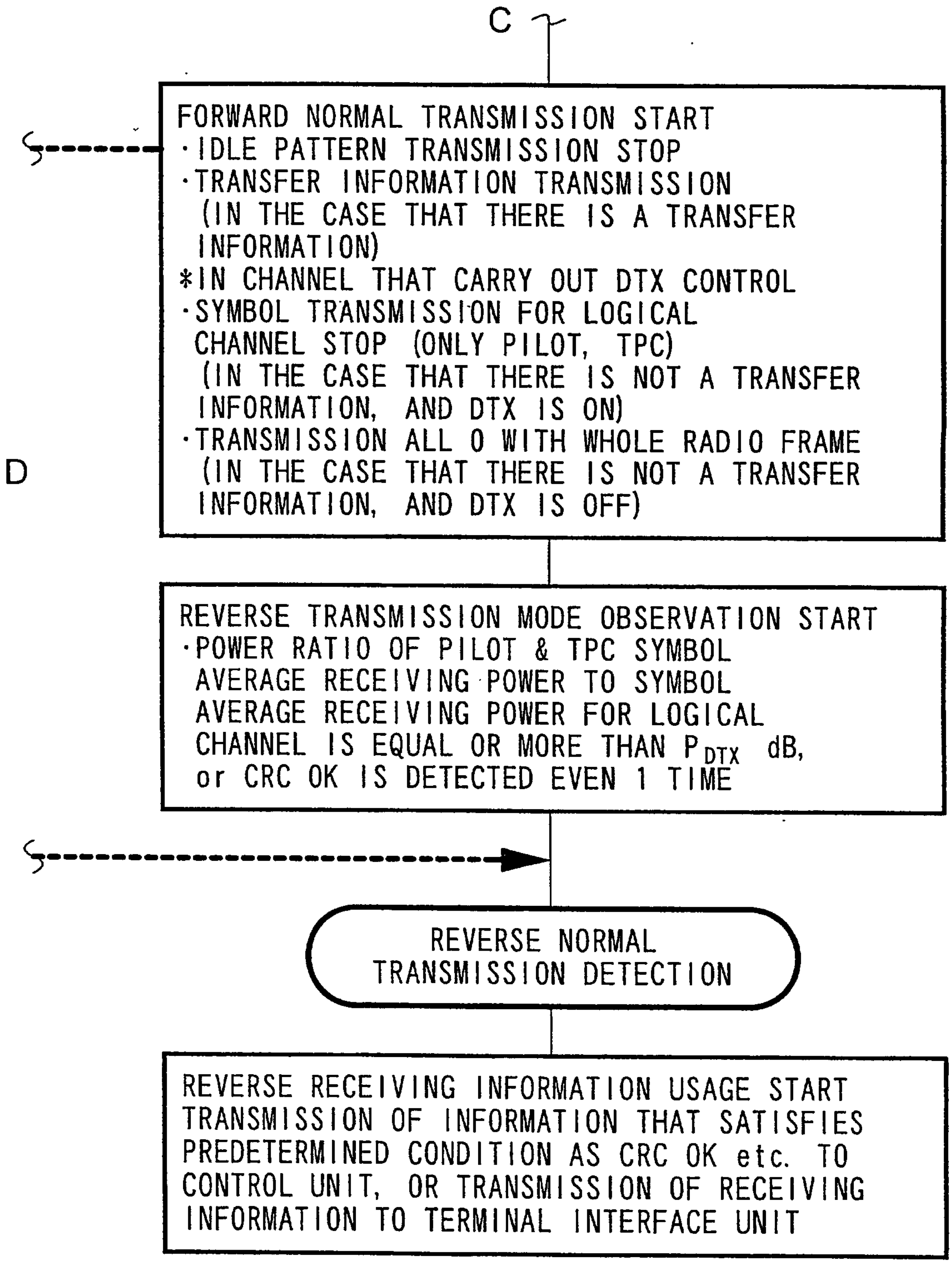

FIG. 94

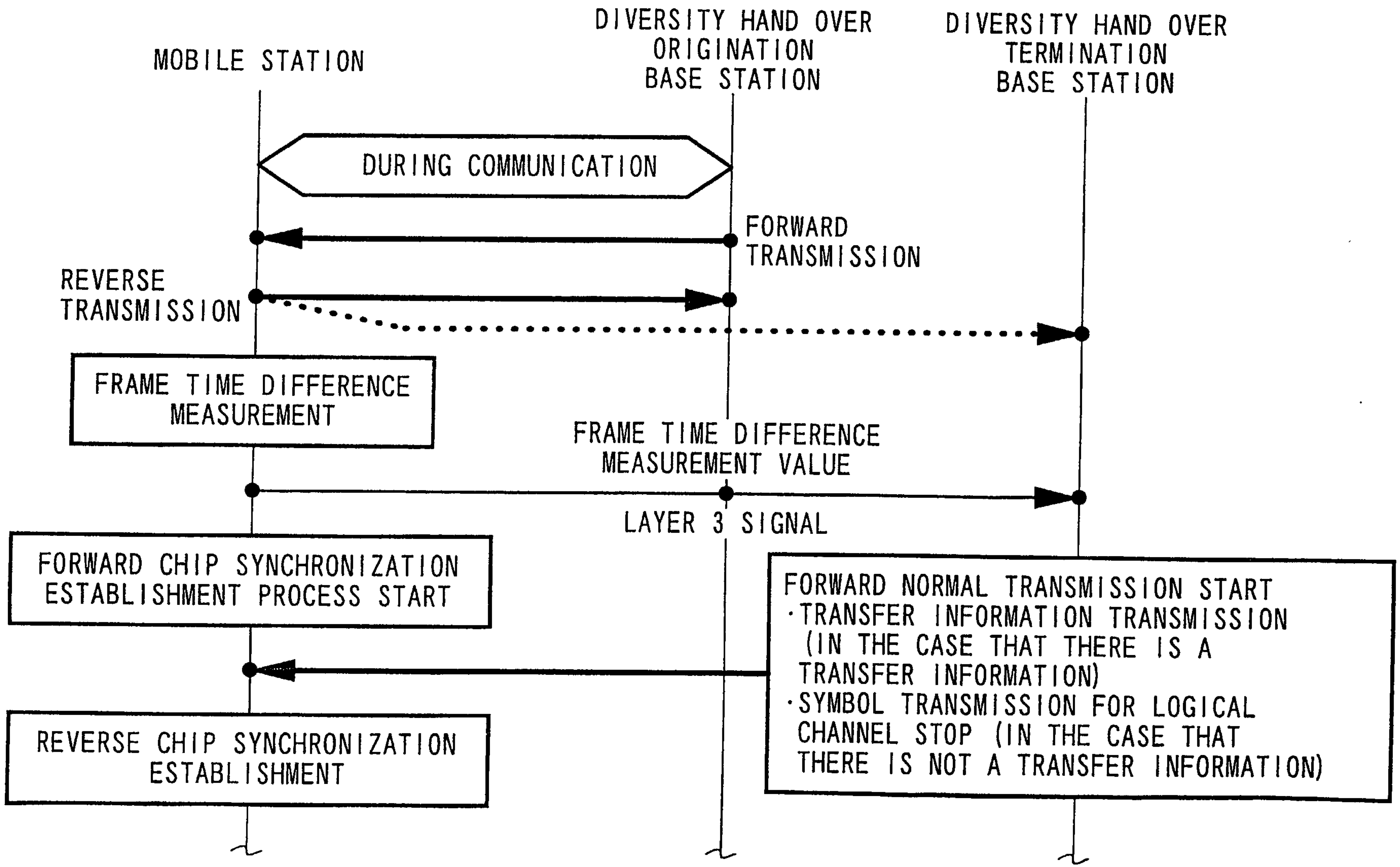
MOBILE STATION
DIVERSITY HAND OVER ORIGINATION BASE STATION
DIVERSITY HAND OVER TERMINATION BASE STATION
DURING COMMUNICATION
FORWARD TRANSMISSION
REVERSE TRANSMISSION
FRAME TIME DIFFERENCE MEASUREMENT
FRAME TIME DIFFERENCE MEASUREMENT VALUE
LAYER 3 SIGNAL
FORWARD CHIP SYNCHRONIZATION ESTABLISHMENT PROCESS START
FORWARD NORMAL TRANSMISSION START
·TRANSFER INFORMATION TRANSMISSION (IN THE CASE THAT THERE IS A TRANSFER INFORMATION)
·SYMBOL TRANSMISSION FOR LOGICAL CHANNEL STOP (IN THE CASE THAT THERE IS NOT A TRANSFER INFORMATION)
REVERSE CHIP SYNCHRONIZATION ESTABLISHMENT

CONTINUANCE OF FIG. 94

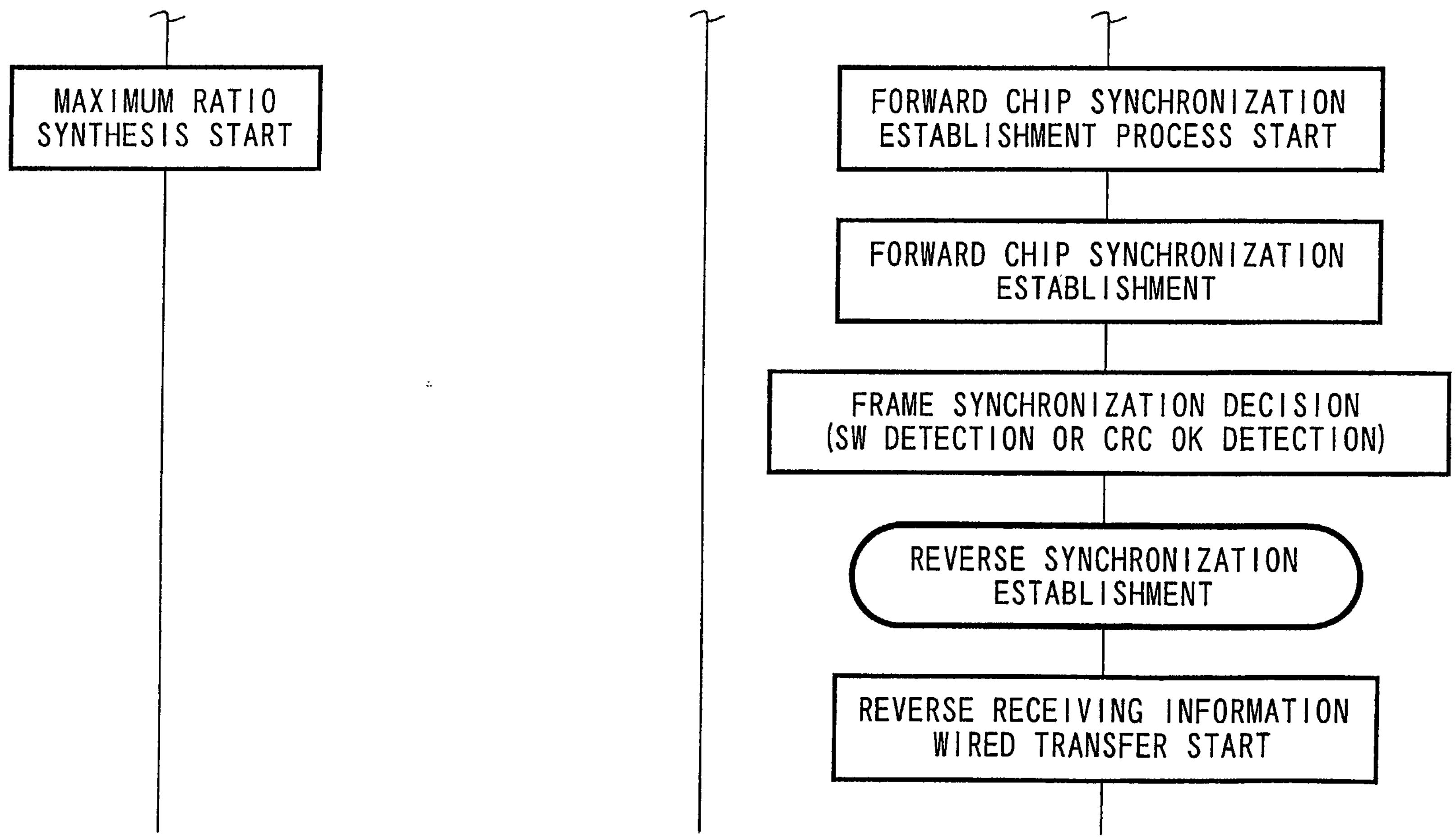

FIG. 95

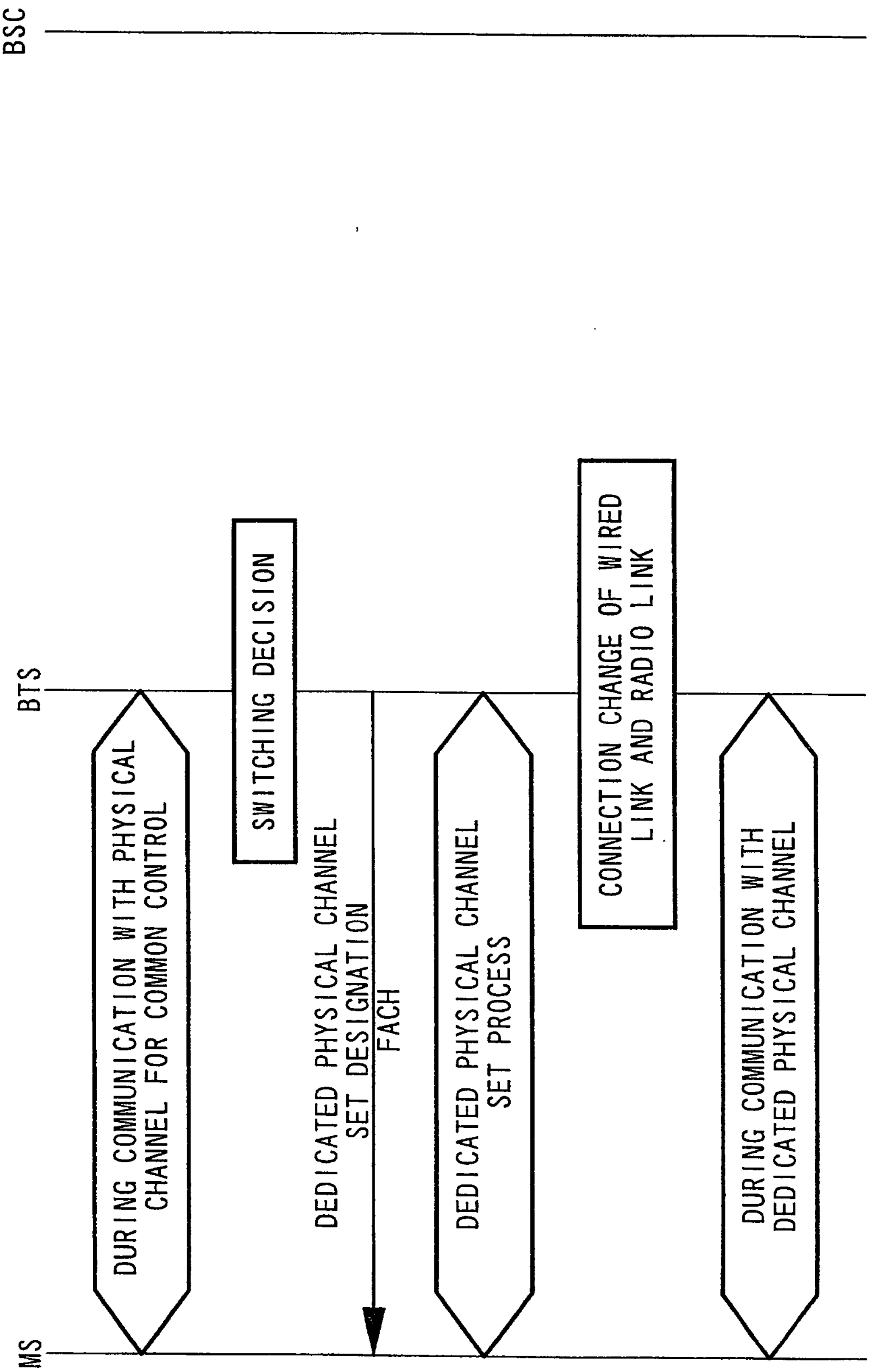


(a) PHYSICAL CHANNEL FOR COMMON CONTROL -> DEDICATED PHYSICAL CHANNEL

CONTINUANCE OF FIG. 95

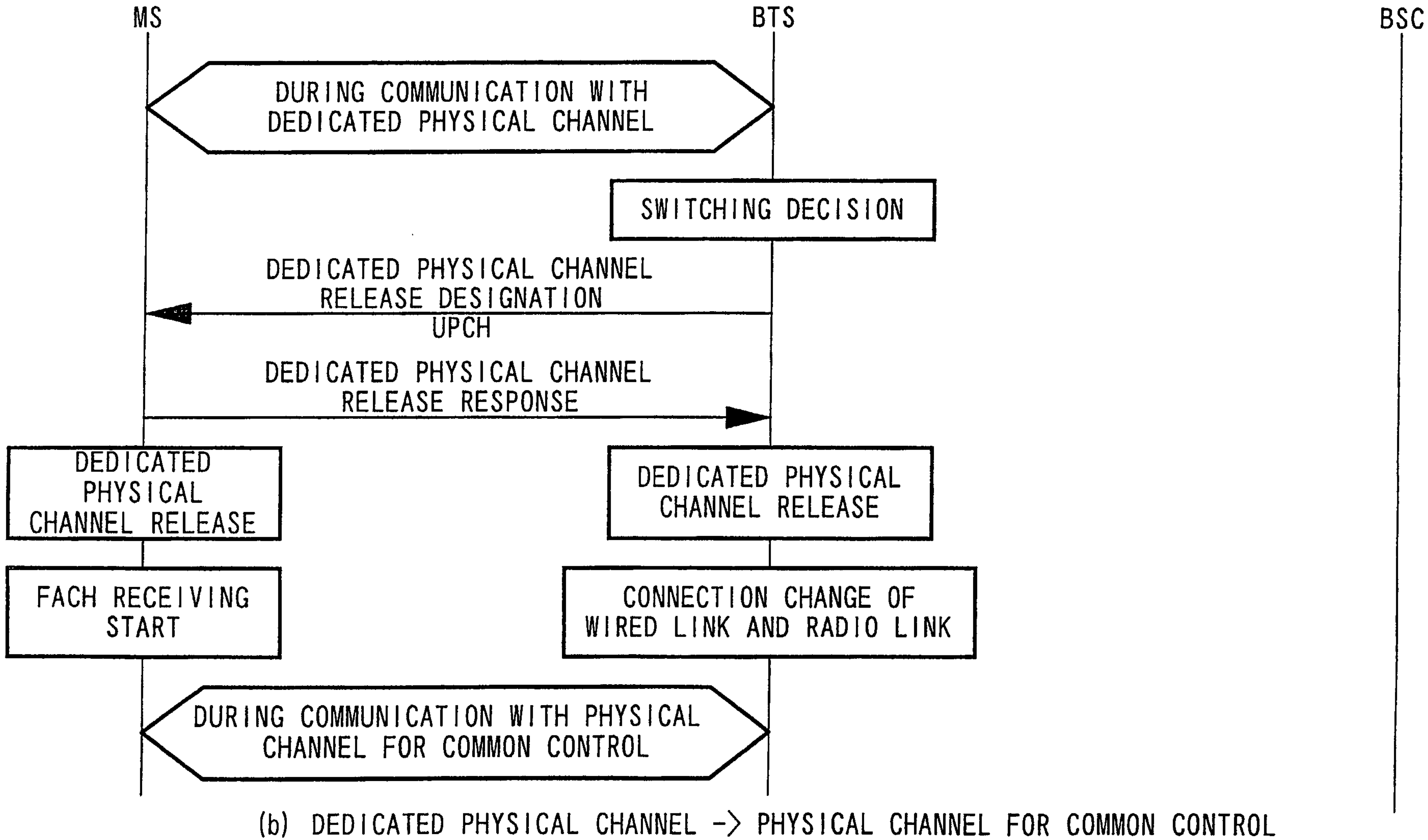


(b) DEDICATED PHYSICAL CHANNEL -> PHYSICAL CHANNEL FOR COMMON CONTROL

FIG. 96

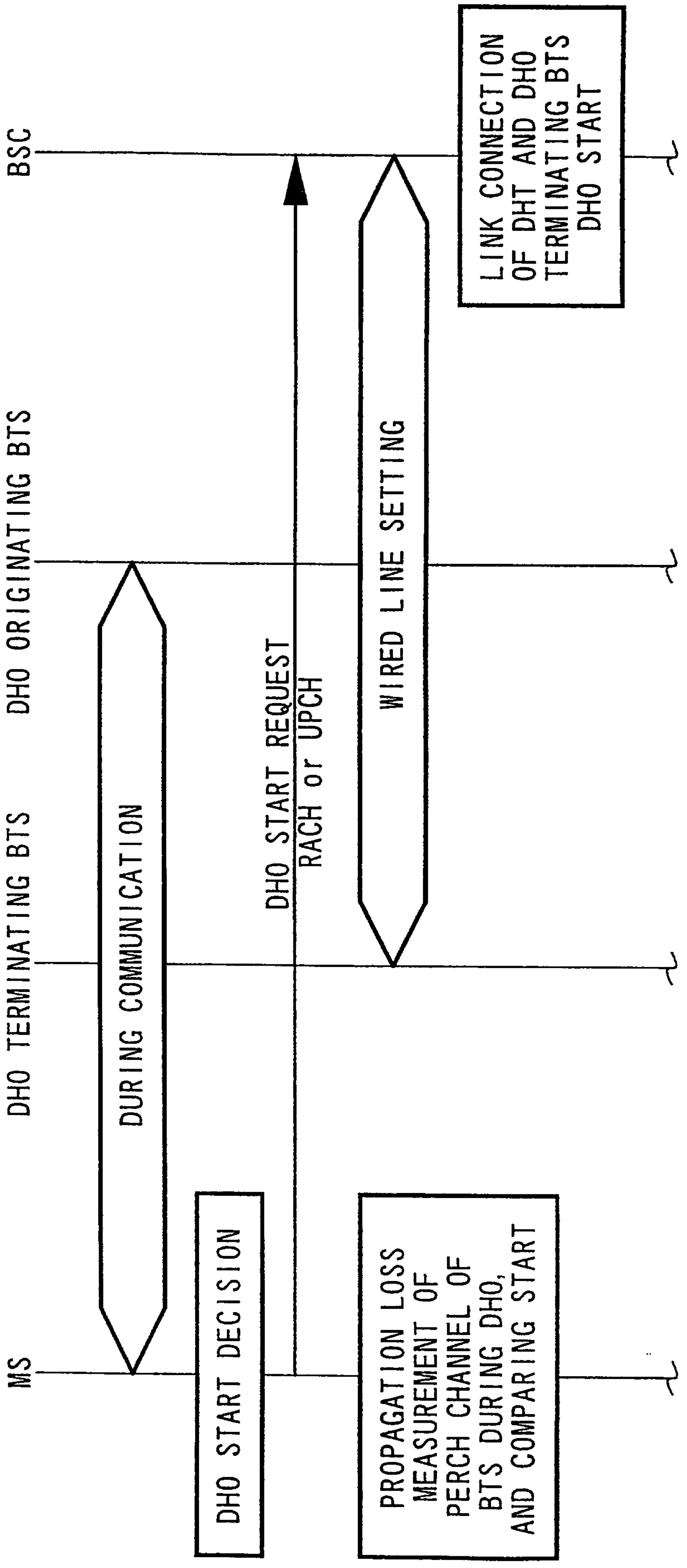
MS
DHO TERMINATING BTS
DHO ORIGINATING BTS
BSC
DURING COMMUNICATION
DHO START DECISION
DHO START REQUEST
RACH or UPCH
WIRED LINE SETTING
PROPAGATION LOSS MEASUREMENT OF PERCH CHANNEL OF BTS DURING DHO, AND COMPARING START
LINK CONNECTION OF DHT AND DHO TERMINATING BTS DHO START

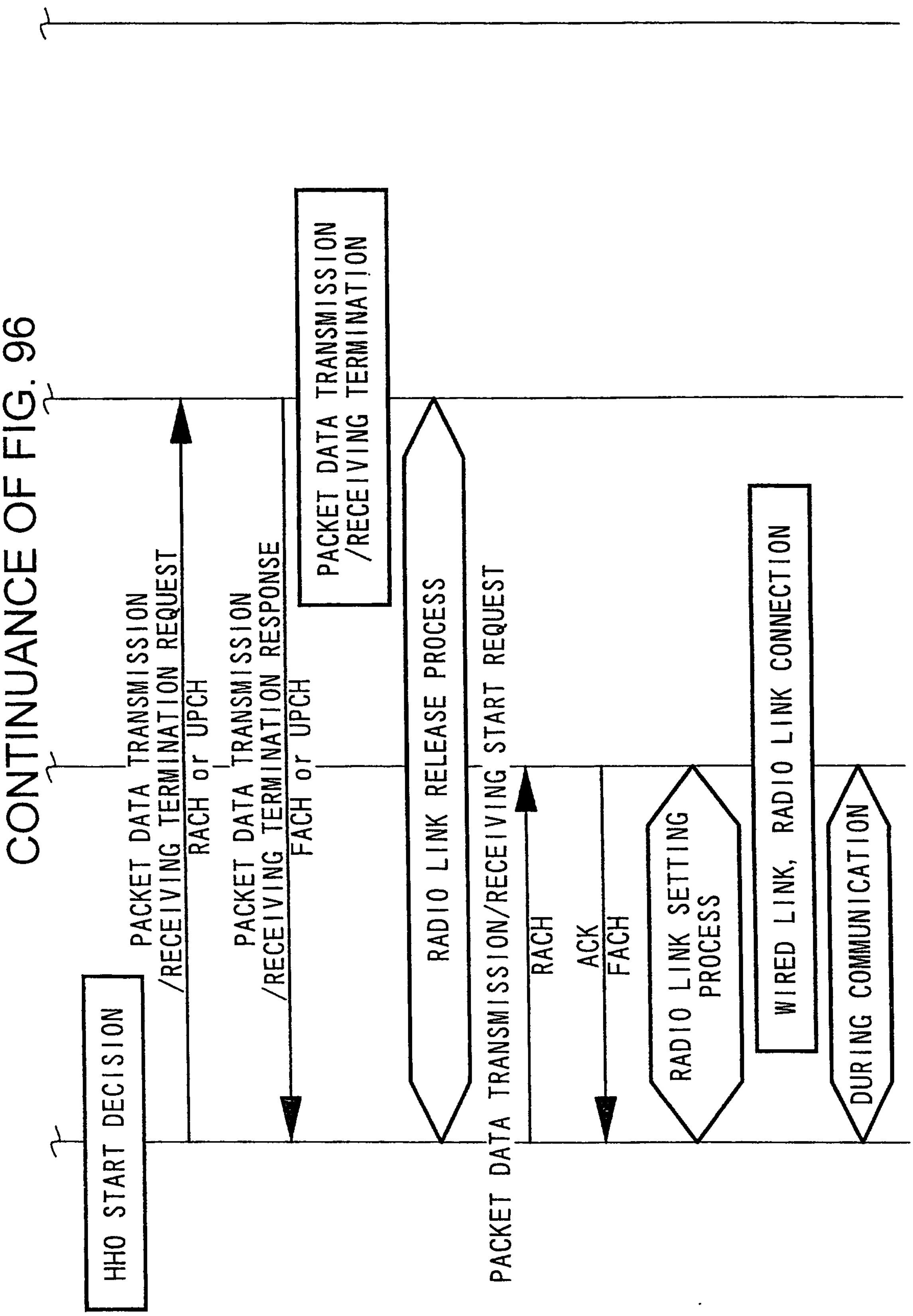
CONTINUANCE OF FIG. 96
HHO START DECISION
PACKET DATA TRANSMISSION /RECEIVING TERMINATION REQUEST
RACH or UPCH
PACKET DATA TRANSMISSION /RECEIVING TERMINATION RESPONSE
FACH or UPCH
PACKET DATA TRANSMISSION /RECEIVING TERMINATION
RADIO LINK RELEASE PROCESS
PACKET DATA TRANSMISSION/RECEIVING START REQUEST
RACH
ACK
FACH
RADIO LINK SETTING PROCESS
WIRED LINK, RADIO LINK CONNECTION
DURING COMMUNICATION

FIG. 97

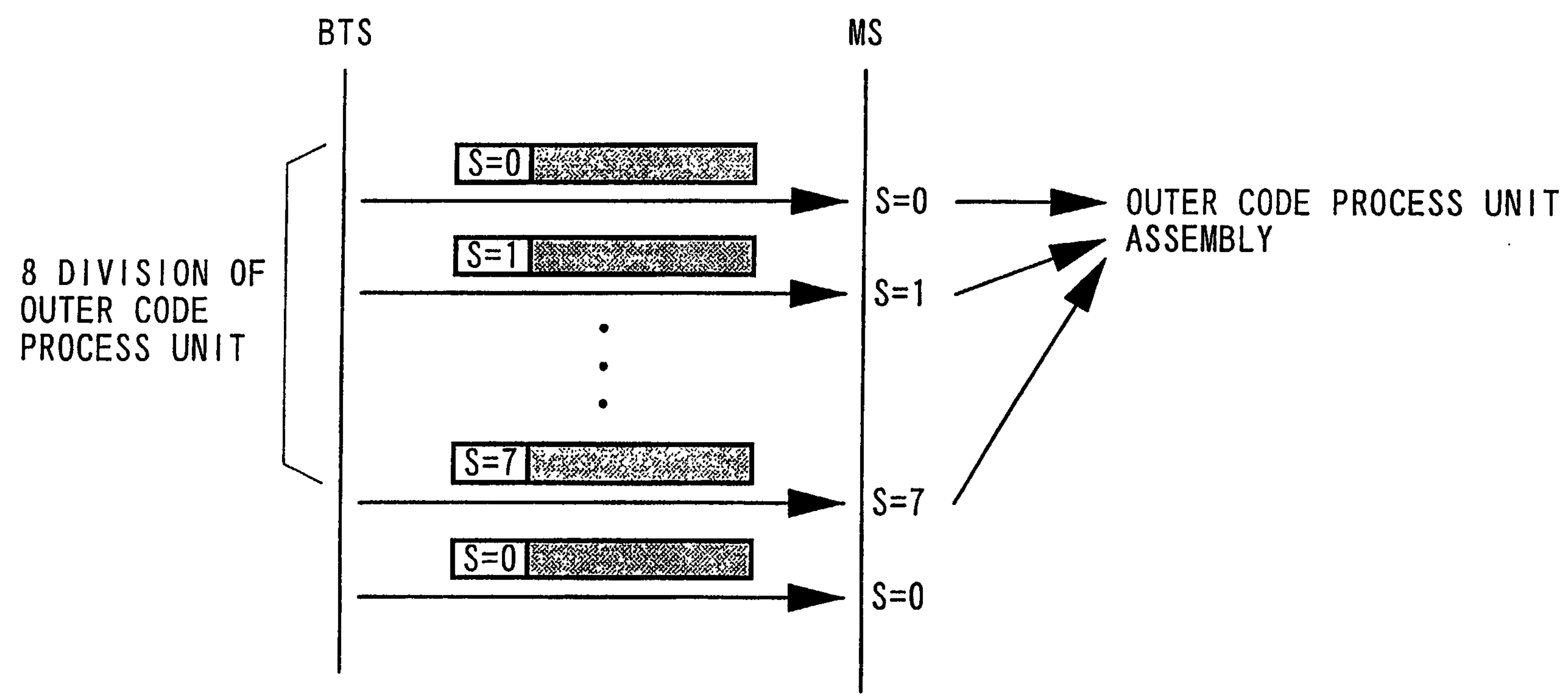
BTS
MS
S=0
S=1
S=7
S=0
8 DIVISION OF
OUTER CODE
PROCESS UNIT
OUTER CODE PROCESS UNIT
ASSEMBLY

FIG. 98

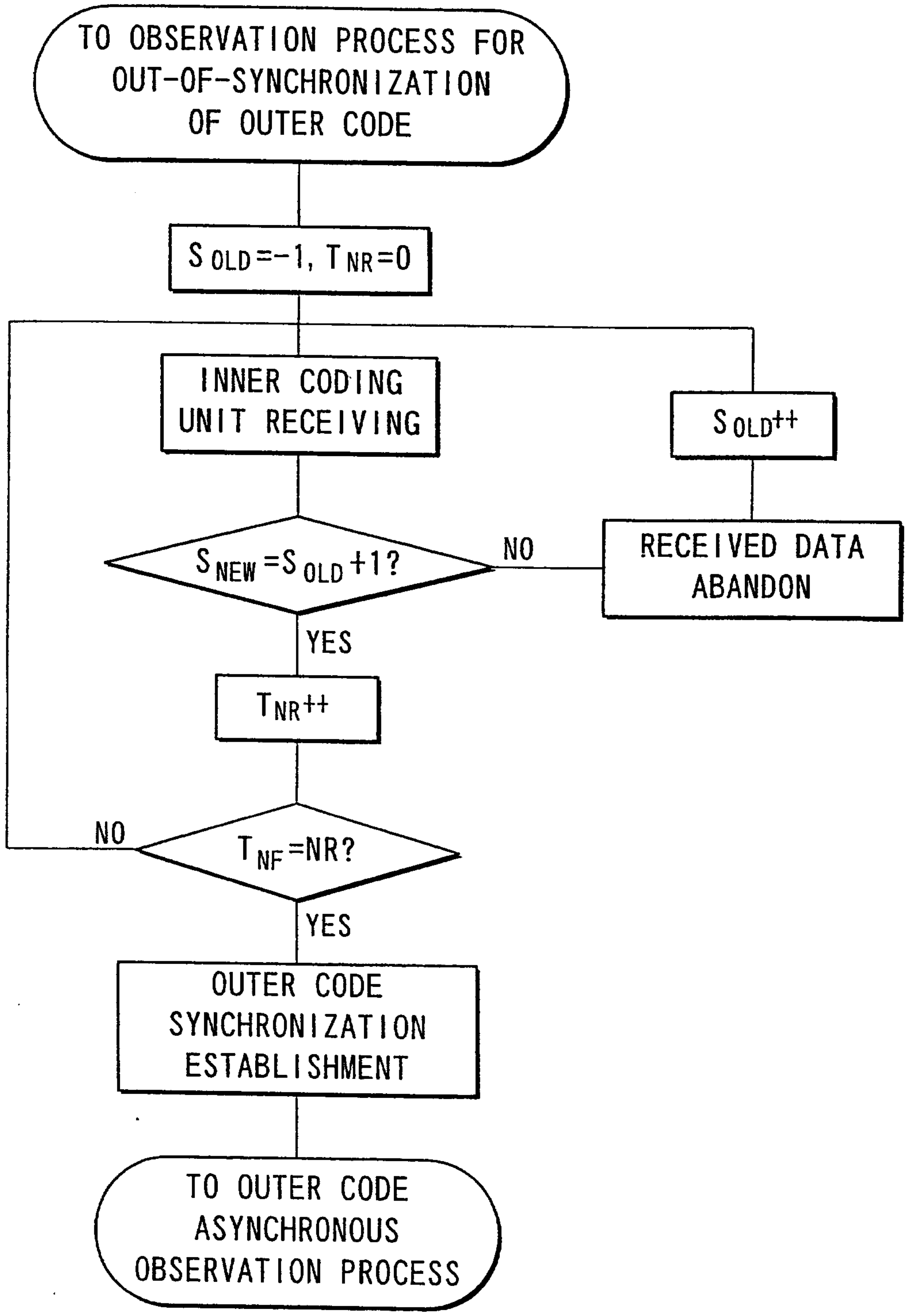


$S_{OLD}$: S THAT RECEIVED AT LAST TIME
$S_{NEW}$: S THAT RECEIVED AT THIS TIME
$T_{NR}$ : OBSERVATION COUNTER FOR SYNCHRONIZATION ESTABLISHMENT
NR: BACKWARD PROTECTION STEP

FIG. 99

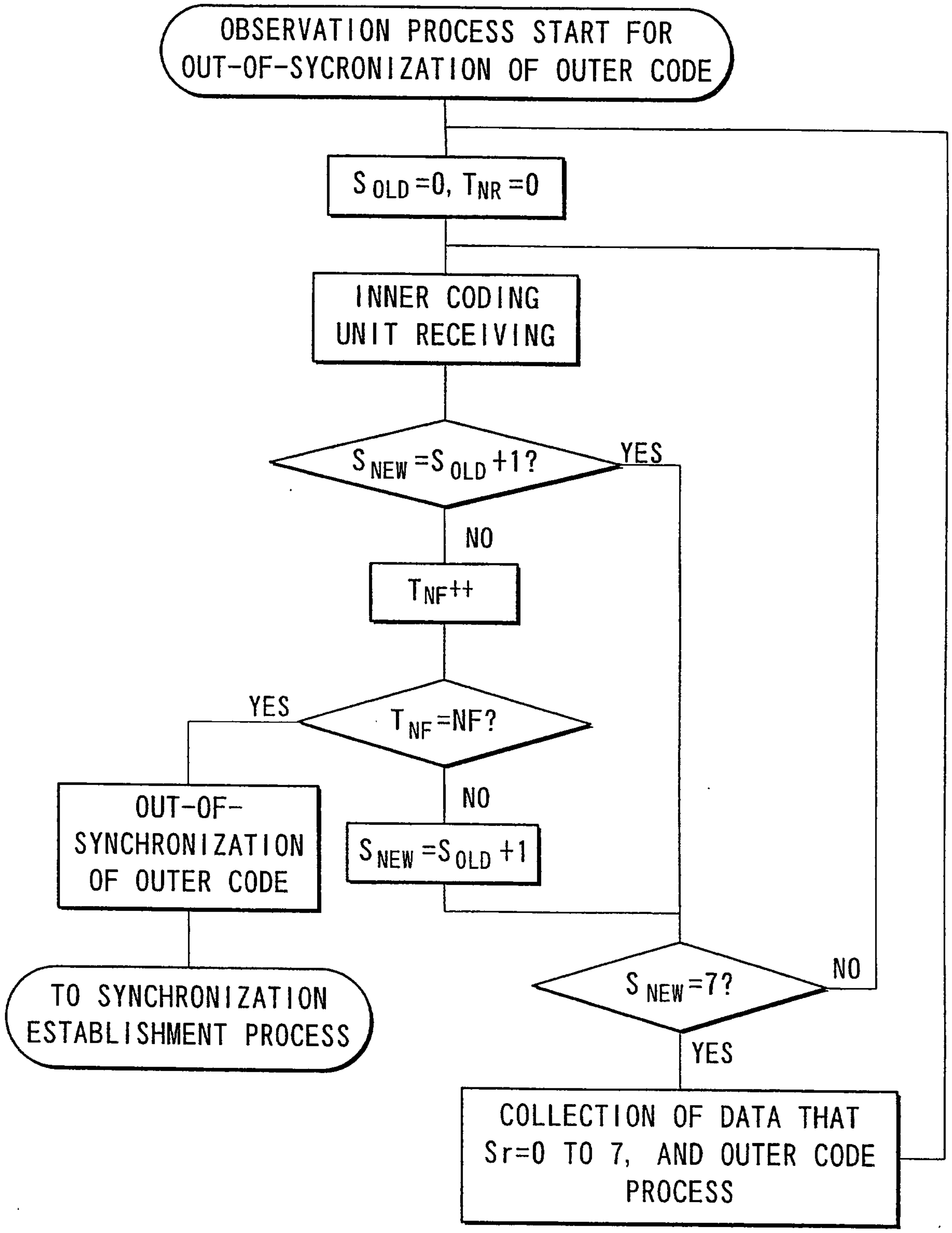


$S_{OLD}$: S THAT RECEIVED AT LAST TIME
$S_{NEW}$: S THAT RECEIVED AT THIS TIME
$T_{NF}$: OBSERVATION COUNTER FOR OUT-OF-SYNCHRONIZATION
NF: FORWARD PROTECTION STEP

FIG. 100

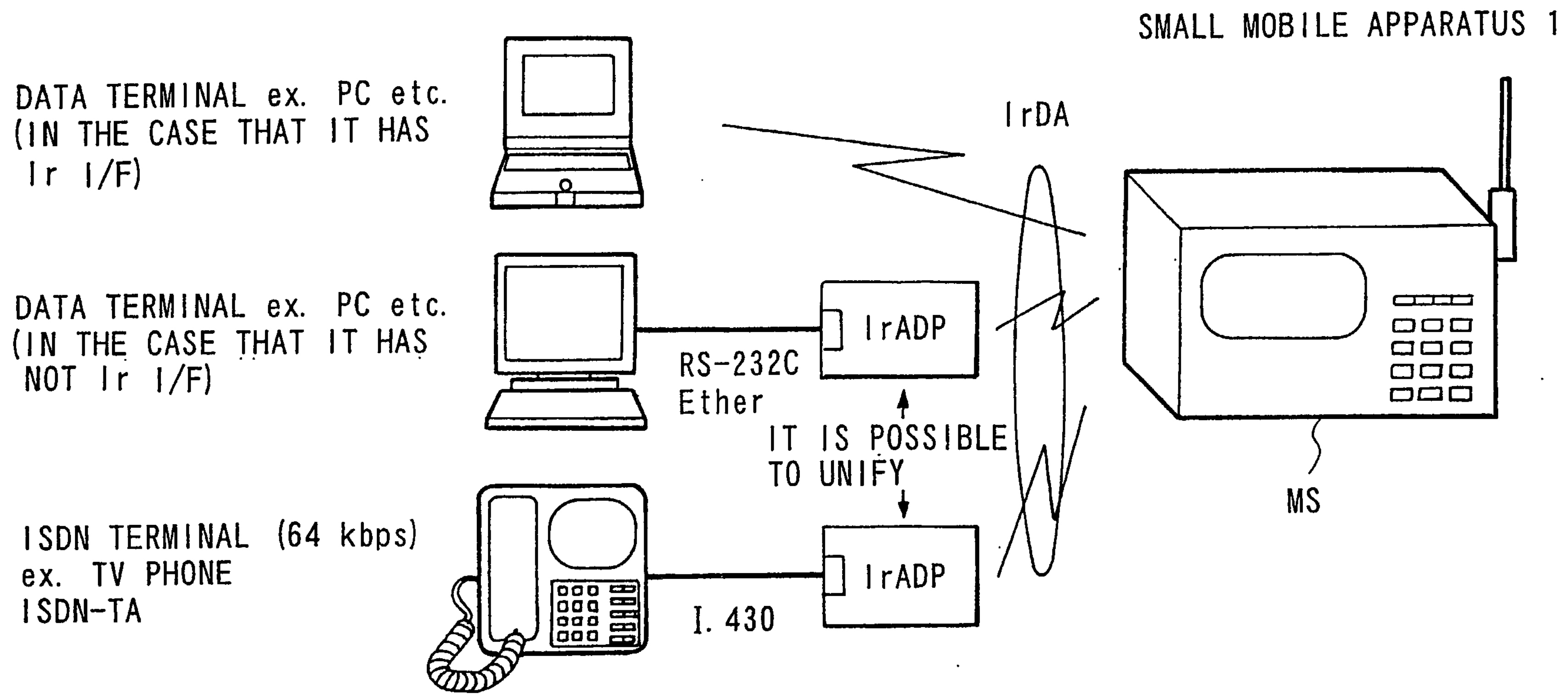
SMALL MOBILE APPARATUS 1
DATA TERMINAL ex. PC etc.
(IN THE CASE THAT IT HAS
Ir I/F)
IrDA
DATA TERMINAL ex. PC etc.
(IN THE CASE THAT IT HAS
NOT Ir I/F)
IrADP
RS-232C
Ether
IT IS POSSIBLE
TO UNIFY
MS
ISDN TERMINAL (64 kbps)
ex. TV PHONE
ISDN-TA
IrADP
I. 430

## INTERNATIONAL SEARCH REPORT

International application No.
PCT/JP98/01717

**A. CLASSIFICATION OF SUBJECT MATTER**
Int.Cl[6] H04J13/00

According to International Patent Classification (IPC) or to both national classification and IPC

**B. FIELDS SEARCHED**

Minimum documentation searched (classification system followed by classification symbols)
Int.Cl[6] H04J13/00

Documentation searched other than minimum documentation to the extent that such documents are included in the fields searched
Jitsuyo Shinan Koho (Y1, Y2) 1926-1998 Toroku Jitsuyo Shinan Koho (U) 1994-1998
Kokai Jitsuyo Shinan Koho (U) 1971-1998 Jitsuyo Shinan Toroku Koho (Y2) 1996-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 6-501349, A (Qualcomm Inc.), February 10, 1994 (10. 02. 94), Fig. 4a, 4b & WO, 92/00639, A1 | 1, 2 |
| X | JP, 6-204980, A (Hitachi, Ltd.), July 22, 1994 (22. 07. 94), Fig. 1 (Family: none) | 4, 5, 6 |
| A | JP, 7-312783, A (NTT Mobile Communications Network Inc.), November 28, 1995 (28. 11. 95), Fig. 1 & US, 5,586,113, A | 1-7 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 6, 1998 (06. 07. 98) | July 14, 1998 (14. 07. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)